# EUROPEAN PATENT APPLICATION

(11) **EP 4 633 121 A1**
(43) Date of publication of application: **15.10.2025**
(21) Application number: 24766482.4
(22) Date of filing: 06.03.2024
(51) Int. Cl.: H04M 1/02

(54) **SATELLITE COMMUNICATION METHOD AND SYSTEM, AND RELATED APPARATUS**

(30) Priority: 08.03.2023 CN 202310267699; 24.07.2023 CN 202310916951
(71) Applicant: Huawei Technologies Co., Ltd., Shenzhen, Guangdong 518129 (CN)
(72) Inventor: WEI, Yuanyou, Shenzhen, Guangdong 518129 (CN); HU, Yingfeng, Shenzhen, Guangdong 518129 (CN); DUAN, Shuangyang, Shenzhen, Guangdong 518129 (CN); YE, Jianbo, Shenzhen, Guangdong 518129 (CN); LI, Shiwei, Shenzhen, Guangdong 518129 (CN); LI, Tao, Shenzhen, Guangdong 518129 (CN); CHENG, Hailiang, Shenzhen, Guangdong 518129 (CN)
(74) Representative: Maiwald GmbH
(86) International application number: PCT/CN2024/080385
(87) International publication number: WO 2024/183767

(57) **Abstract**

This application discloses a satellite communication method and system, and a related apparatus. A first electronic device receives a dialing operation performed by a user to make a call to a first contact, where the first electronic device does not camp on a cellular network, and the first electronic device establishes a satellite communication connection to a satellite; and the first electronic device displays an in-call screen with the first contact in response to the dialing operation, where the in-call screen includes a first indicator, related information of the first contact, and a hang-up control, and the first indicator indicates satellite signal strength and a status of the connection between the first electronic device and the satellite. In this way, if there is no cellular network, the first electronic device can make a call to a second electronic device through the satellite communication connection.

## Description

This application claims priority to Chinese Patent Application No. 202310267699.7, filed with the China National Intellectual Property Administration on March 8, 2023 and entitled "SATELLITE COMMUNICATION METHOD AND APPARATUS FOR ELECTRONIC DEVICE", and to Chinese Patent Application No. 202310916951.2, filed with the China National Intellectual Property Administration on July 24, 2023 and entitled "SATELLITE COMMUNICATION METHOD AND SYSTEM, AND RELATED APPARATUS", both of which are incorporated herein by reference in their entireties.

### TECHNICAL FIELD

This application relates to the field of communication technologies, and in particular, to a satellite communication method and system, and a related apparatus.

### BACKGROUND

With development of communication technologies, a user often uses an electronic device such as a mobile phone to perform communication in daily life. The electronic device such as the mobile phone can implement a communication function through a cellular network. However, the cellular network cannot cover all areas. For example, there are areas in forests, deserts, mountainous areas, cities, and villages that are not covered by the cellular network.

When the user is in an area that is not covered by the cellular network, the electronic device such as the mobile phone carried by the user cannot provide a communication service because there is no signal, causing inconvenience to the user, and even damaging life and property safety of the user in emergency.

### SUMMARY

This application provides a satellite communication method and system, and a related apparatus, to make or answer a call by using a satellite and receive and send information by using the satellite.

According to a first aspect, this application provides a satellite communication method. The method may include: A first electronic device receives a dialing operation performed by a user to make a call to a first contact, where the first electronic device does not camp on a cellular network, and the first electronic device establishes a satellite communication connection to a satellite; and the first electronic device displays an in-call screen with the first contact in response to the dialing operation, where the in-call screen includes a first indicator, related information of the first contact, and a hang-up control, the first indicator indicates satellite signal strength and a status of the connection between the first electronic device and the satellite, the related information of the first contact includes one or more of the following: a name of the first contact, a phone number of the first contact, and a home position of the phone number of the first contact, and the hang-up control is configured to end the call between the first electronic device and a second electronic device of the first contact.

In this way, according to the method provided in the first aspect, if there is no cellular network, the first electronic device can make the call to the second electronic device through the satellite communication connection. In this way, when the user is in an area that is not covered by the cellular network, the user of the electronic device can still contact another user. When the user is in a dangerous area, it is also convenient for the user to seek help from the another user through the satellite communication connection.

In a possible implementation, the in-call screen further includes a position sending control, and the position sending control may be configured to send position information of the first electronic device to the second electronic device. In this way, when the user of the first electronic device makes the call to the first contact, the position information may be sent to the second electronic device, so that a second contact learns of the position information of the user.

In a possible implementation, the in-call screen includes a first card or a first capsule, the first card includes the first indicator and first prompt information, and the first prompt information may prompt the user to maintain or adjust a current posture of holding the first electronic device. The first capsule includes the first indicator. In this way, the first card or the first capsule can prompt the user with current satellite signal strength, and/or prompt the user to maintain or adjust the current posture of holding the first electronic device.

In a possible implementation, the in-call screen does not display a video call control configured to request a video call. In this way, the user can be prompted that the video call is not supported.

In a possible implementation, the first prompt information may include a first text prompt and a first graphic prompt. The first text prompt may include text information prompting the user to maintain or adjust the current posture of holding the first electronic device, and/or text information indicating a current status of the connection between the first electronic device and the satellite. The first graphic prompt may include one or more of the following: an azimuth angle guide icon, an azimuth angle sector area, a pitch angle guide icon, and a pitch angle circular area. The azimuth angle guide icon and the azimuth angle sector area may indicate the user to maintain or adjust a current azimuth angle at which the first electronic device is held. The pitch angle guide icon and the pitch angle circular area indicate the user to maintain and adjust a current pitch angle at which the first electronic device is held. In this way, the user can be prompted, by using text and a graphic and from a plurality of dimensions, to maintain or adjust the current posture of holding the first electronic device, and indicate the user to adjust an azimuth angle and a pitch angle of the electronic device.

In a possible implementation, the method may further include: When the first card is displayed on the in-call screen, the first electronic device receives an operation for the first card, and the first electronic device displays the first capsule and stops displaying the first card. In this way, the card on the in-call screen can be switched to the capsule, to prevent the card from covering content of the in-call screen.

In a possible implementation, when the first capsule is displayed on the in-call screen, the first electronic device receives an operation for the first capsule, and the first electronic device displays the first card and stops displaying the first capsule. In this way, the capsule on the in-call screen can be switched to the card. In this way, the card can prompt, by using the text and the graphic and from a plurality of dimensions, the user to maintain or adjust the current posture of holding the first electronic device, and indicate the user to adjust the azimuth angle and the pitch angle of the electronic device.

In a possible implementation, the in-call screen may further include first information, and the first information may prompt the user that the first electronic device makes the call to the second electronic device through the satellite communication connection. In this way, the user can be prompted to make the call to the second electronic device through the satellite connection currently.

In a possible implementation, after the first electronic device displays the in-call screen with the first contact, the method further includes: The first electronic device receives an operation for the position sending control; the electronic device displays a first pop-up box, where the first pop-up box includes the position information of the first electronic device and the sending control; the first electronic device receives the operation for the sending control; and the first electronic device sends the position information to the second electronic device. In this way, the user can send the position information of the user during the call.

In a possible implementation, before the first electronic device receives the dialing operation performed by the user to make the call to the first contact, the method may further include: The first electronic device displays the first dialing interface, where the first dialing interface includes the first card or the first capsule, and the first dialing interface further includes the first dialing control. That the first electronic device receives a dialing operation performed by the user to make a call to a first contact includes: The first electronic device receives an operation for the first dialing control in the first dialing interface, or the first electronic device receives, in the first dialing interface, the dialing operation for making the call to the first contact. In this way, the user can select a contact in the dialing interface to make a call.

In a possible implementation, the first dialing control includes the satellite communication identifier, and the satellite communication identifier indicates that the first electronic device supports a call made through the satellite communication connection. In this way, the user can be prompted to make the call to the second electronic device through the satellite connection currently.

In a possible implementation, before the first electronic device displays the first dialing interface, the method may include: The first electronic device displays a second dialing interface, where the second dialing interface includes a second dialing control and a first prompt box, the second dialing control does not include the satellite communication identifier, the first prompt box prompts the user that a mobile network of the first electronic device is unavailable and establishment of the connection to the satellite for satellite communication is supported, the first prompt box includes a satellite communication setting control, and the first electronic device does not camp on the cellular network, and does not establish the communication connection to the satellite; and the first electronic device receives an operation for the satellite communication setting control, and the first electronic device displays a satellite communication setting interface, where the satellite communication setting interface includes a first switch, and the first switch is configured to enable a satellite communication function of the first electronic device. In this way, when the electronic device does not have the cellular network, the user can quickly enable the satellite communication function in the dialing interface, and make a call to another electronic device through the satellite connection.

In a possible implementation, after the first electronic device receives the operation for the satellite communication setting control, and the first electronic device displays the satellite communication setting interface, the method may further include: The first electronic device receives an operation for the first switch; the first electronic device displays a first page, where the first page includes first indication information, and the first indication information indicates the user to adjust a posture of holding the first electronic device; if a posture in which the user holds the first electronic device is aligned with the satellite, the first electronic device establishes the satellite communication connection to the satellite; and when the first electronic device establishes the communication connection to the satellite, the first electronic device displays a second page, where the second page indicates that the satellite communication connection has been established, the second page includes a strength indicator and second indication information, the strength indicator indicates strength of a satellite signal received by the first electronic device, and if the posture of the first electronic device is aligned with the satellite, the second indication information indicates the user to maintain the current posture of holding the first electronic device.

In this way, after the satellite communication connection is established, the user can be prompted to maintain the current posture of holding the first electronic device.

In a possible implementation, the method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and the first electronic device switches the third indication information back to the second indication information after it is detected that the first electronic device is re-aligned with the satellite.

In this way, when the position relationship between the first electronic device and the satellite changes, the indication information can be output to prompt the user to adjust the posture of holding the first electronic device, to prevent the first electronic device from being disconnected from the satellite.

In a possible implementation, the method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and when it is detected that duration in which the first electronic device is not aligned with the satellite reaches first duration, displaying an exit prompt, where the exit prompt prompts that the first electronic device is to exit the satellite communication mode.

In this way, the user can be prompted that the first electronic device is to exit the satellite communication mode.

In a possible implementation, the method further includes: receiving an operation for the second page, stopping displaying the second page, and displaying a first card. The first card includes the strength indicator and fourth indication information. The fourth indication information indicates whether a posture in which the user holds the first electronic device is aligned with the satellite. In a case of non-alignment, the fourth indication information further indicates an azimuth angle and a pitch angle of the first electronic device relative to the satellite.

In this way, switching between a satellite real-time page and a satellite real-time card can be implemented.

In a possible implementation, the second page further includes a phone application icon, and the phone application icon indicates that the first electronic device supports a call made through the satellite communication connection. After the first electronic device displays the second page when the first electronic device establishes the communication connection to the satellite, the method may further include: The first electronic device receives an operation for the phone application icon, and the first electronic device displays the first dialing interface. In this way, the user can quickly enter the dialing interface from the second page.

In a possible implementation, the phone application icon includes the satellite communication identifier. In this way, the user can be prompted to make the call to the second electronic device through the satellite connection currently.

In a possible implementation, the second page further includes an SMS application icon, and the SMS application icon indicates that the first electronic device supports sending and receiving of an SMS message through the satellite communication connection. In this way, the user can quickly enter, from the second page, an interface for sending and receiving an SMS message.

In a possible implementation, a drop-down status bar of a home screen of the first electronic device includes a satellite communication switch, and the satellite communication switch is configured to enable the satellite communication function of the first electronic device. In this way, the user can enable the satellite communication function of the electronic device from the drop-down bar of the home screen.

In a possible implementation, a setting interface of the first electronic device includes a control configured to enable the satellite communication function of the first electronic device. In this way, the user can enable the satellite communication function of the electronic device by using the control in the drop-down bar of the home screen.

In a possible implementation, the method may include: The first electronic device displays a first SMS session display interface. The first SMS session display interface includes the first indicator, a plurality of SMS messages sent by the first electronic device to the first contact, and sending statuses of the plurality of SMS messages. The plurality of SMS messages include a first SMS message and a second SMS message. The sending statuses of the plurality of SMS messages include a first state and a second state. The first state indicates that the first SMS message is being sent. The second state indicates that the second SMS message is waiting to be sent. In this way, the user can send the plurality of SMS messages through the satellite connection, and learn of a sending status of each SMS message.

In a possible implementation, the first SMS session display interface may further include the first card or the first capsule. In this way, the first card or the first capsule can prompt the user with current satellite signal strength, and/or prompt the user to maintain or adjust the current posture of holding the first electronic device.

In a possible implementation, the method may include: The first electronic device displays a second SMS session display interface, where the second SMS session display interface displays a plurality of received SMS messages that are sent by a third electronic device of the second contact and that include position information, and a track map control, the plurality of SMS messages including the position information include a third SMS message and a fourth SMS message, the third SMS message includes first position information, and the fourth SMS message includes second position information; the first electronic device receives an operation for the track map control; and the first electronic device displays a track map, where the track map is used to display a track of the third electronic device from a first position to a second position. In this way, it can be convenient for the user to see a movement track of the second contact.

In a possible implementation, the method may include: If the satellite communication connection is established, the first electronic device displays the home screen, where the home screen includes an icon of a first application, the first application is any one of the following: a call application, an SMS application, and an address book application, the icon of the first application displays the satellite communication identifier, and the satellite communication identifier indicates that the first application supports the satellite communication. In this way, the user can be prompted to make a call, answer a call, and receive and send an SMS message through the satellite connection.

In a possible implementation, the method may include: If the satellite communication connection is established, the first electronic device receives a call request initiated by the third electronic device; the first electronic device displays an incoming call screen in response to the call request, where the incoming call screen displays the first prompt information, a call answering control, and related information of the second contact, and the related information of the second contact includes one or more of the following: a name of the second contact, a phone number of the second contact, and a home position of the phone number of the second contact; and in response to an operation performed by the user on the call answering control, the first electronic device makes, through the satellite communication connection, a call to the third electronic device corresponding to the second contact. In this way, the user can answer a call through the satellite connection.

In a possible implementation, the call answering control includes the satellite communication identifier, and the satellite communication identifier indicates that the first electronic device supports receiving of the call request through the satellite communication connection. In this way, the user can be prompted that the electronic device supports answering of the call through the satellite communication connection.

In a possible implementation, the method may further include: When the first electronic device successfully establishes the satellite communication connection to the satellite, the first electronic device displays a first animation, and/or outputs first sound effect, and/or outputs a first vibration; and when the first electronic device disconnects the satellite communication connection from the satellite, the first electronic device displays a second animation, and/or outputs second sound effect, and/or outputs a second vibration. The first animation is different from the second animation, the first sound effect is different from the second sound effect, and a vibration frequency and/or a vibration loudness of the first vibration are/is different from a vibration frequency and/and a vibration loudness of the second vibration. In this way, the user can be prompted with the status of the connection between the electronic device and the satellite in a timely manner by using an animation, sound effect, or a vibration.

In a possible implementation, the method further includes: after the first electronic device establishes the satellite communication connection to the satellite, displaying a SIM card management interface, where the SIM card management interface includes a first SIM card control and a second SIM card control; and graying out the SIM card management interface, where the first SIM card control displays a satellite enabling prompt, and the satellite enabling prompt prompts the user that the first electronic device has established the satellite communication connection to the satellite by using the first SIM card corresponding to the first SIM card control.

In this way, after the satellite communication mode is enabled, a control corresponding to the SIM card for enabling the satellite communication mode can display a prompt, and the SIM card management interface is grayed out, to prompt the user that the SIM card management interface cannot be operated.

In a possible implementation, the first electronic device further includes the first SIM card and a second SIM card, and the method further includes: before the first electronic device establishes the communication connection to the satellite, displaying a SIM card management interface, where the SIM card management interface includes a first SIM card control and a second SIM card control, the first SIM card control displays a number of the first SIM card and a communication technology corresponding to the first SIM card, and the second SIM card control displays a number of the second SIM card and a communication technology corresponding to the second SIM card; and after the first electronic device establishes the satellite communication connection to the satellite by using the first SIM card, displaying the SIM card management interface, where the first SIM card control and the second SIM card control are in a grayed-out state, and in the grayed-out state, the first electronic device does not respond to an operation performed by the user on the first SIM card control or the second SIM card control.

In a possible implementation, after the first electronic device establishes the satellite communication connection to the satellite by using the first SIM card, the first SIM card control does not display the communication technology corresponding to the first SIM card, the first SIM card control displays a satellite communication prompt, and the satellite communication prompt prompts the user that the satellite communication mode has been enabled by using the first SIM card; and the second SIM card control does not display the communication technology corresponding to the second SIM card, the second SIM card control displays an unavailability prompt, and the unavailability prompt prompts the user that the second SIM card is unavailable.

According to a second aspect, a satellite communication method is provided. The method may include: After establishing a satellite communication connection, a first electronic device receives a call request initiated by a second electronic device, where the first electronic device does not camp on a cellular network; and the first electronic device displays an incoming call screen in response to the call request, where the incoming call screen displays an incoming call answering control, a first indicator, and related information of a second contact corresponding to the second electronic device, the incoming call answering control includes a satellite communication identifier, the satellite communication identifier indicates that the first electronic device supports a call made through the satellite communication connection, the first indicator indicates satellite signal strength and a status of the connection between the first electronic device and a satellite, and the related information of the second contact includes one or more of the following: a name of the second contact, a phone number of the second contact, and a home position of the phone number of the second contact. The first electronic device receives an operation performed by the user on the incoming call answering control, and the first electronic device makes a call to the second electronic device through the satellite communication connection.

In this way, according to the method provided in the second aspect, if there is no cellular network, the first electronic device can answer a call through the satellite communication connection. In this way, when the user is in an area that is not covered by the cellular network, the user of the electronic device can still contact another user. When the user is in a dangerous area, it is also convenient for the user to seek help from the another user through the satellite communication connection.

In a possible implementation, a call answering control includes the satellite communication identifier, and the satellite communication identifier indicates that the first electronic device supports receiving of the call request through the satellite communication connection. In this way, the user can be prompted to answer a call through the satellite communication connection.

In a possible implementation, the incoming call screen includes a first card or a first capsule, the first card includes the first indicator and first prompt information, the first prompt information prompts the user to maintain or adjust a current posture of holding the first electronic device, and the first capsule includes the first indicator. In this way, the first card or the first capsule can prompt the user with current satellite signal strength, and/or prompt the user to maintain or adjust the current posture of holding the first electronic device.

In a possible implementation, the method may further include: When the first card is displayed on the incoming call screen, the first electronic device receives an operation for the first card, and the first electronic device displays the first capsule and stops displaying the first card. In this way, the card on the incoming call screen can be switched to the capsule, to prevent the card from covering content of an in-call screen.

Alternatively, when the first capsule is displayed on the incoming call screen, the first electronic device receives an operation for the first capsule, and the first electronic device displays the first card and stops displaying the first capsule. In this way, the capsule on the incoming call screen can be switched to the card. In this way, the card can prompt, by using the text and the graphic and from a plurality of dimensions, the user to maintain or adjust the current posture of holding the first electronic device, and indicate the user to adjust the azimuth angle and the pitch angle of the electronic device.

In a possible implementation, the method may further include: The first electronic device receives a dialing operation performed by the user to make a call to a first contact, where the first electronic device does not camp on the cellular network, and the first electronic device establishes the satellite communication connection to the satellite; and the first electronic device displays an in-call screen with the first contact in response to the dialing operation, where the in-call screen includes the first indicator, related information of the first contact, and a hang-up control, the first indicator indicates the satellite signal strength and the status of the connection between the first electronic device and the satellite, the related information of the first contact includes one or more of the following: a name of the first contact, a phone number of the first contact, and a home position of the phone number of the first contact, and the hang-up control is configured to end the call between the first electronic device and the second electronic device of the first contact.

In this way, if there is no cellular network, the first electronic device can make the call to the second electronic device through the satellite communication connection. In this way, when the user is in an area that is not covered by the cellular network, the user of the electronic device can still contact another user. When the user is in a dangerous area, it is also convenient for the user to seek help from the another user through the satellite communication connection.

In a possible implementation, the in-call screen further includes a position sending control, and the position sending control may be configured to send position information of the first electronic device to the second electronic device. In this way, when the user of the first electronic device makes the call to the first contact, the position information may be sent to the second electronic device, so that a second contact learns of the position information of the user.

In a possible implementation, the in-call screen includes a first card or a first capsule, the first card includes the first indicator and first prompt information, and the first prompt information may prompt the user to maintain or adjust a current posture of holding the first electronic device. The first capsule includes the first indicator. In this way, the first card or the first capsule can prompt the user with current satellite signal strength, and/or prompt the user to maintain or adjust the current posture of holding the first electronic device.

In a possible implementation, the in-call screen does not display a video call control configured to request a video call. In this way, the user can be prompted that the video call is not supported.

In a possible implementation, the first prompt information may include a first text prompt and a first graphic prompt. The first text prompt may include text information prompting the user to maintain or adjust the current posture of holding the first electronic device, and/or text information indicating a current status of the connection between the first electronic device and the satellite. The first graphic prompt may include one or more of the following: an azimuth angle guide icon, an azimuth angle sector area, a pitch angle guide icon, and a pitch angle circular area. The azimuth angle guide icon and the azimuth angle sector area may indicate the user to maintain or adjust a current azimuth angle at which the first electronic device is held. The pitch angle guide icon and the pitch angle circular area indicate the user to maintain and adjust a current pitch angle at which the first electronic device is held. In this way, the user can be prompted, by using text and a graphic and from a plurality of dimensions, to maintain or adjust the current posture of holding the first electronic device, and indicate the user to adjust an azimuth angle and a pitch angle of the electronic device.

In a possible implementation, the method may further include: When the first card is displayed on the in-call screen, the first electronic device receives an operation for the first card, and the first electronic device displays the first capsule and stops displaying the first card. In this way, the card on the in-call screen can be switched to the capsule, to prevent the card from covering content of the in-call screen.

In a possible implementation, when the first capsule is displayed on the in-call screen, the first electronic device receives an operation for the first capsule, and the first electronic device displays the first card and stops displaying the first capsule. In this way, the capsule on the in-call screen can be switched to the card. In this way, the card can prompt, by using the text and the graphic and from a plurality of dimensions, the user to maintain or adjust the current posture of holding the first electronic device, and indicate the user to adjust the azimuth angle and the pitch angle of the electronic device.

In a possible implementation, the in-call screen may further include first information, and the first information may prompt the user that the first electronic device makes the call to the second electronic device through the satellite communication connection. In this way, the user can be prompted to make the call to the second electronic device through the satellite connection currently.

In a possible implementation, after the first electronic device displays the in-call screen with the first contact, the method further includes: The first electronic device receives an operation for the position sending control; the electronic device displays a first pop-up box, where the first pop-up box includes the position information of the first electronic device and the sending control; the first electronic device receives the operation for the sending control; and the first electronic device sends the position information to the second electronic device. In this way, the user can send the position information of the user during the call.

In a possible implementation, before the first electronic device receives the dialing operation performed by the user to make the call to the first contact, the method may further include: The first electronic device displays the first dialing interface, where the first dialing interface includes the first card or the first capsule, and the first dialing interface further includes the first dialing control. That the first electronic device receives a dialing operation performed by the user to make a call to a first contact includes: The first electronic device receives an operation for the first dialing control in the first dialing interface, or the first electronic device receives, in the first dialing interface, the dialing operation for making the call to the first contact. In this way, the user can select a contact in the dialing interface to make a call.

In a possible implementation, the first dialing control includes the satellite communication identifier, and the satellite communication identifier indicates that the first electronic device supports a call made through the satellite communication connection. In this way, the user can be prompted to make the call to the second electronic device through the satellite connection currently.

In a possible implementation, before the first electronic device displays the first dialing interface, the method may include: The first electronic device displays a second dialing interface, where the second dialing interface includes a second dialing control and a first prompt box, the second dialing control does not include the satellite communication identifier, the first prompt box prompts the user that a mobile network of the first electronic device is unavailable and establishment of the connection to the satellite for satellite communication is supported, the first prompt box includes a satellite communication setting control, and the first electronic device does not camp on the cellular network, and does not establish the communication connection to the satellite; and the first electronic device receives an operation for the satellite communication setting control, and the first electronic device displays a satellite communication setting interface, where the satellite communication setting interface includes a first switch, and the first switch is configured to enable a satellite communication function of the first electronic device. In this way, when the electronic device does not have the cellular network, the user can quickly enable the satellite communication function in the dialing interface, and make a call to another electronic device through the satellite connection.

In a possible implementation, after the first electronic device receives the operation for the satellite communication setting control, and the first electronic device displays the satellite communication setting interface, the method may further include: The first electronic device receives an operation for the first switch; the first electronic device displays a first page, where the first page includes first indication information, and the first indication information indicates the user to adjust a posture of holding the first electronic device; if a posture in which the user holds the first electronic device is aligned with the satellite, the first electronic device establishes the satellite communication connection to the satellite; and when the first electronic device establishes the communication connection to the satellite, the first electronic device displays a second page, where the second page indicates that the satellite communication connection has been established, the second page includes a strength indicator and second indication information, the strength indicator indicates strength of a satellite signal received by the first electronic device, and if the posture of the first electronic device is aligned with the satellite, the second indication information indicates the user to maintain the current posture of holding the first electronic device.

In this way, after the satellite communication connection is established, the user can be prompted to maintain the current posture of holding the first electronic device.

In a possible implementation, the method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and the first electronic device switches the third indication information back to the second indication information after it is detected that the first electronic device is re-aligned with the satellite.

In this way, when the position relationship between the first electronic device and the satellite changes, the indication information can be output to prompt the user to adjust the posture of holding the first electronic device, to prevent the first electronic device from being disconnected from the satellite.

In a possible implementation, the method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and when it is detected that duration in which the first electronic device is not aligned with the satellite reaches first duration, displaying an exit prompt, where the exit prompt prompts that the first electronic device is to exit the satellite communication mode.

In this way, the user can be prompted that the first electronic device is to exit the satellite communication mode.

In a possible implementation, the method further includes: receiving an operation for the second page, stopping displaying the second page, and displaying a first card. The first card includes the strength indicator and fourth indication information. The fourth indication information indicates whether a posture in which the user holds the first electronic device is aligned with the satellite. In a case of non-alignment, the fourth indication information further indicates an azimuth angle and a pitch angle of the first electronic device relative to the satellite.

In this way, switching between a satellite real-time page and a satellite real-time card can be implemented.

In a possible implementation, the second page further includes a phone application icon, and the phone application icon indicates that the first electronic device supports a call made through the satellite communication connection. After the first electronic device displays the second page when the first electronic device establishes the communication connection to the satellite, the method may further include: The first electronic device receives an operation for the phone application icon, and the first electronic device displays the first dialing interface. In this way, the user can quickly enter the dialing interface from the second page.

In a possible implementation, the phone application icon includes the satellite communication identifier. In this way, the user can be prompted to make the call to the second electronic device through the satellite connection currently.

In a possible implementation, the second page further includes an SMS application icon, and the SMS application icon indicates that the first electronic device supports sending and receiving of an SMS message through the satellite communication connection. In this way, the user can quickly enter, from the second page, an interface for sending and receiving an SMS message.

In a possible implementation, a drop-down status bar of a home screen of the first electronic device includes a satellite communication switch, and the satellite communication switch is configured to enable the satellite communication function of the first electronic device. In this way, the user can enable the satellite communication function of the electronic device from the drop-down bar of the home screen.

In a possible implementation, a setting interface of the first electronic device includes a control configured to enable the satellite communication function of the first electronic device. In this way, the user can enable the satellite communication function of the electronic device by using the control in the drop-down bar of the home screen.

In a possible implementation, the method may include: The first electronic device displays a first SMS session display interface. The first SMS session display interface includes the first indicator, a plurality of SMS messages sent by the first electronic device to the first contact, and sending statuses of the plurality of SMS messages. The plurality of SMS messages include a first SMS message and a second SMS message. The sending statuses of the plurality of SMS messages include a first state and a second state. The first state indicates that the first SMS message is being sent. The second state indicates that the second SMS message is waiting to be sent. In this way, the user can send the plurality of SMS messages through the satellite connection, and learn of a sending status of each SMS message.

In a possible implementation, the first SMS session display interface may further include the first card or the first capsule. In this way, the first card or the first capsule can prompt the user with current satellite signal strength, and/or prompt the user to maintain or adjust the current posture of holding the first electronic device.

In a possible implementation, the method may include: The first electronic device displays a second SMS session display interface, where the second SMS session display interface displays a plurality of received SMS messages that are sent by a third electronic device of the second contact and that include position information, and a track map control, the plurality of SMS messages including the position information include a third SMS message and a fourth SMS message, the third SMS message includes first position information, and the fourth SMS message includes second position information; the first electronic device receives an operation for the track map control; and the first electronic device displays a track map, where the track map is used to display a track of the third electronic device from a first position to a second position. In this way, it can be convenient for the user to see a movement track of the second contact.

In a possible implementation, the method may include: If the satellite communication connection is established, the first electronic device displays the home screen, where the home screen includes an icon of a first application, the first application is any one of the following: a call application, an SMS application, and an address book application, the icon of the first application displays the satellite communication identifier, and the satellite communication identifier indicates that the first application supports the satellite communication. In this way, the user can be prompted to make a call, answer a call, and receive and send an SMS message through the satellite connection.

In a possible implementation, the call answering control includes the satellite communication identifier, and the satellite communication identifier indicates that the first electronic device supports receiving of the call request through the satellite communication connection. In this way, the user can be prompted that the electronic device supports answering of the call through the satellite communication connection.

In a possible implementation, the method may further include: When the first electronic device successfully establishes the satellite communication connection to the satellite, the first electronic device displays a first animation, and/or outputs first sound effect, and/or outputs a first vibration; and when the first electronic device disconnects the satellite communication connection from the satellite, the first electronic device displays a second animation, and/or outputs second sound effect, and/or outputs a second vibration. The first animation is different from the second animation, the first sound effect is different from the second sound effect, and a vibration frequency and/or a vibration loudness of the first vibration are/is different from a vibration frequency and/and a vibration loudness of the second vibration. In this way, the user can be prompted with the status of the connection between the electronic device and the satellite in a timely manner by using an animation, sound effect, or a vibration.

In a possible implementation, the method further includes: after the first electronic device establishes the satellite communication connection to the satellite, displaying a SIM card management interface, where the SIM card management interface includes a first SIM card control and a second SIM card control; and graying out the SIM card management interface, where the first SIM card control displays a satellite enabling prompt, and the satellite enabling prompt prompts the user that the first electronic device has established the satellite communication connection to the satellite by using the first SIM card corresponding to the first SIM card control.

In this way, after the satellite communication mode is enabled, a control corresponding to the SIM card for enabling the satellite communication mode can display a prompt, and the SIM card management interface is grayed out, to prompt the user that the SIM card management interface cannot be operated.

In a possible implementation, the first electronic device further includes the first SIM card and a second SIM card, and the method further includes: before the first electronic device establishes the communication connection to the satellite, displaying a SIM card management interface, where the SIM card management interface includes a first SIM card control and a second SIM card control, the first SIM card control displays a number of the first SIM card and a communication technology corresponding to the first SIM card, and the second SIM card control displays a number of the second SIM card and a communication technology corresponding to the second SIM card; and after the first electronic device establishes the satellite communication connection to the satellite by using the first SIM card, displaying the SIM card management interface, where the first SIM card control and the second SIM card control are in a grayed-out state, and in the grayed-out state, the first electronic device does not respond to an operation performed by the user on the first SIM card control or the second SIM card control.

In a possible implementation, after the first electronic device establishes the satellite communication connection to the satellite by using the first SIM card, the first SIM card control does not display the communication technology corresponding to the first SIM card, the first SIM card control displays a satellite communication prompt, and the satellite communication prompt prompts the user that the satellite communication mode has been enabled by using the first SIM card; and the second SIM card control does not display the communication technology corresponding to the second SIM card, the second SIM card control displays an unavailability prompt, and the unavailability prompt prompts the user that the second SIM card is unavailable.

According to a third aspect, a satellite communication method is provided. The method may include: A first electronic device displays a first dialing interface, where the first dialing interface displays a first dialing control, a first indicator, and a dial, the first indicator indicates satellite signal strength and a status of a connection between the first electronic device and a satellite, the first dialing control includes a satellite communication identifier, the first electronic device does not camp on a cellular network, and the first electronic device establishes the communication connection to the satellite; and the first electronic device receives an operation that a user inputs a first number on the dial, where the first dialing interface displays the first number, and the first dialing interface does not display a video calling control configured to request a video call.

In this way, the user can dial a number through satellite communication, and the user can be prompted that in a satellite communication mode, the user cannot make a video call.

In a possible implementation, before the first electronic device displays the first dialing interface, the method may further include: The first electronic device displays a second dialing interface, where the second dialing interface includes a second dialing control and a first prompt box, the second dialing control does not include the satellite communication identifier, the first prompt box prompts the user that a mobile network of the first electronic device is unavailable and establishment of the connection to the satellite for satellite communication is supported, the first prompt box includes a satellite communication setting control, and the first electronic device does not camp on the cellular network, and does not establish the communication connection to the satellite; and the first electronic device receives an operation for the satellite communication setting control, and the first electronic device displays a satellite communication setting interface, where the satellite communication setting interface includes a first switch, and the first switch is configured to enable a satellite communication function of the first electronic device.

In a possible implementation, the method may further include: The first electronic device displays the second dialing interface, where the second dialing interface displays the dial; and the first electronic device receives the operation that the user inputs the first number on the dial, where the first dialing interface displays the first number and the video calling control.

In a possible implementation, the method may include: After the satellite communication connection is established, the first electronic device receives a call request initiated by a second electronic device, where the first electronic device does not camp on the cellular network. The first electronic device displays an incoming call screen in response to the call request, where the incoming call screen displays an incoming call answering control, the first indicator, and related information of a second contact corresponding to the second electronic device, the incoming call answering control includes the satellite communication identifier, the satellite communication identifier indicates that the first electronic device supports a call made through the satellite communication connection, the first indicator indicates the satellite signal strength and the status of the connection between the first electronic device and the satellite, and the related information of the second contact includes one or more of the following: a name of the second contact, a phone number of the second contact, and a home position of the phone number of the second contact. The first electronic device receives an operation performed by the user on the incoming call answering control, and the first electronic device makes a call to the second electronic device through the satellite communication connection.

In this way, if there is no cellular network, the first electronic device can answer a call through the satellite communication connection. In this way, when the user is in an area that is not covered by the cellular network, the user of the electronic device can still contact another user. When the user is in a dangerous area, it is also convenient for the user to seek help from the another user through the satellite communication connection.

In a possible implementation, a call answering control includes the satellite communication identifier, and the satellite communication identifier indicates that the first electronic device supports receiving of the call request through the satellite communication connection. In this way, the user can be prompted to answer a call through the satellite communication connection.

In a possible implementation, the incoming call screen includes a first card or a first capsule, the first card includes the first indicator and first prompt information, the first prompt information prompts the user to maintain or adjust a current posture of holding the first electronic device, and the first capsule includes the first indicator. In this way, the first card or the first capsule can prompt the user with current satellite signal strength, and/or prompt the user to maintain or adjust the current posture of holding the first electronic device.

In a possible implementation, the method may further include: When the first card is displayed on the incoming call screen, the first electronic device receives an operation for the first card, and the first electronic device displays the first capsule and stops displaying the first card. In this way, the card on the incoming call screen can be switched to the capsule, to prevent the card from covering content of an in-call screen.

Alternatively, when the first capsule is displayed on the incoming call screen, the first electronic device receives an operation for the first capsule, and the first electronic device displays the first card and stops displaying the first capsule. In this way, the capsule on the incoming call screen can be switched to the card. In this way, the card can prompt, by using the text and the graphic and from a plurality of dimensions, the user to maintain or adjust the current posture of holding the first electronic device, and indicate the user to adjust the azimuth angle and the pitch angle of the electronic device.

In a possible implementation, the method may further include: The first electronic device receives a dialing operation performed by the user to make a call to a first contact, where the first electronic device does not camp on the cellular network, and the first electronic device establishes the satellite communication connection to the satellite; and the first electronic device displays an in-call screen with the first contact in response to the dialing operation, where the in-call screen includes the first indicator, related information of the first contact, and a hang-up control, the first indicator indicates the satellite signal strength and the status of the connection between the first electronic device and the satellite, the related information of the first contact includes one or more of the following: a name of the first contact, a phone number of the first contact, and a home position of the phone number of the first contact, and the hang-up control is configured to end the call between the first electronic device and the second electronic device of the first contact.

In this way, if there is no cellular network, the first electronic device can make the call to the second electronic device through the satellite communication connection. In this way, when the user is in an area that is not covered by the cellular network, the user of the electronic device can still contact another user. When the user is in a dangerous area, it is also convenient for the user to seek help from the another user through the satellite communication connection.

In a possible implementation, the in-call screen further includes a position sending control, and the position sending control may be configured to send position information of the first electronic device to the second electronic device. In this way, when the user of the first electronic device makes the call to the first contact, the position information may be sent to the second electronic device, so that a second contact learns of the position information of the user.

In a possible implementation, the in-call screen includes a first card or a first capsule, the first card includes the first indicator and first prompt information, and the first prompt information may prompt the user to maintain or adjust a current posture of holding the first electronic device. The first capsule includes the first indicator. In this way, the first card or the first capsule can prompt the user with current satellite signal strength, and/or prompt the user to maintain or adjust the current posture of holding the first electronic device.

In a possible implementation, the in-call screen does not display a video call control configured to request a video call. In this way, the user can be prompted that the video call is not supported.

In a possible implementation, the first prompt information may include a first text prompt and a first graphic prompt. The first text prompt may include text information prompting the user to maintain or adjust the current posture of holding the first electronic device, and/or text information indicating a current status of the connection between the first electronic device and the satellite. The first graphic prompt may include one or more of the following: an azimuth angle guide icon, an azimuth angle sector area, a pitch angle guide icon, and a pitch angle circular area. The azimuth angle guide icon and the azimuth angle sector area may indicate the user to maintain or adjust a current azimuth angle at which the first electronic device is held. The pitch angle guide icon and the pitch angle circular area indicate the user to maintain and adjust a current pitch angle at which the first electronic device is held. In this way, the user can be prompted, by using text and a graphic and from a plurality of dimensions, to maintain or adjust the current posture of holding the first electronic device, and indicate the user to adjust an azimuth angle and a pitch angle of the electronic device.

In a possible implementation, the method may further include: When the first card is displayed on the in-call screen, the first electronic device receives an operation for the first card, and the first electronic device displays the first capsule and stops displaying the first card. In this way, the card on the in-call screen can be switched to the capsule, to prevent the card from covering content of the in-call screen.

In a possible implementation, when the first capsule is displayed on the in-call screen, the first electronic device receives an operation for the first capsule, and the first electronic device displays the first card and stops displaying the first capsule. In this way, the capsule on the in-call screen can be switched to the card. In this way, the card can prompt, by using the text and the graphic and from a plurality of dimensions, the user to maintain or adjust the current posture of holding the first electronic device, and indicate the user to adjust the azimuth angle and the pitch angle of the electronic device.

In a possible implementation, the in-call screen may further include first information, and the first information may prompt the user that the first electronic device makes the call to the second electronic device through the satellite communication connection. In this way, the user can be prompted to make the call to the second electronic device through the satellite connection currently.

In a possible implementation, after the first electronic device displays the in-call screen with the first contact, the method further includes: The first electronic device receives an operation for the position sending control; the electronic device displays a first pop-up box, where the first pop-up box includes the position information of the first electronic device and the sending control; the first electronic device receives the operation for the sending control; and the first electronic device sends the position information to the second electronic device. In this way, the user can send the position information of the user during the call.

In a possible implementation, before the first electronic device receives the dialing operation performed by the user to make the call to the first contact, the method may further include: The first electronic device displays the first dialing interface, where the first dialing interface includes the first card or the first capsule, and the first dialing interface further includes the first dialing control. That the first electronic device receives a dialing operation performed by the user to make a call to a first contact includes: The first electronic device receives an operation for the first dialing control in the first dialing interface, or the first electronic device receives, in the first dialing interface, the dialing operation for making the call to the first contact. In this way, the user can select a contact in the dialing interface to make a call.

In a possible implementation, the first dialing control includes the satellite communication identifier, and the satellite communication identifier indicates that the first electronic device supports a call made through the satellite communication connection. In this way, the user can be prompted to make the call to the second electronic device through the satellite connection currently.

In a possible implementation, before the first electronic device displays the first dialing interface, the method may include: The first electronic device displays a second dialing interface, where the second dialing interface includes a second dialing control and a first prompt box, the second dialing control does not include the satellite communication identifier, the first prompt box prompts the user that a mobile network of the first electronic device is unavailable and establishment of the connection to the satellite for satellite communication is supported, the first prompt box includes a satellite communication setting control, and the first electronic device does not camp on the cellular network, and does not establish the communication connection to the satellite; and the first electronic device receives an operation for the satellite communication setting control, and the first electronic device displays a satellite communication setting interface, where the satellite communication setting interface includes a first switch, and the first switch is configured to enable a satellite communication function of the first electronic device. **In** this way, when the electronic device does not have the cellular network, the user can quickly enable the satellite communication function in the dialing interface, and make a call to another electronic device through the satellite connection.

**In** a possible implementation, after the first electronic device receives the operation for the satellite communication setting control, and the first electronic device displays the satellite communication setting interface, the method may further include: The first electronic device receives an operation for the first switch; the first electronic device displays a first page, where the first page includes first indication information, and the first indication information indicates the user to adjust a posture of holding the first electronic device; if a posture in which the user holds the first electronic device is aligned with the satellite, the first electronic device establishes the satellite communication connection to the satellite; and when the first electronic device establishes the communication connection to the satellite, the first electronic device displays a second page, where the second page indicates that the satellite communication connection has been established, the second page includes a strength indicator and second indication information, the strength indicator indicates strength of a satellite signal received by the first electronic device, and if the posture of the first electronic device is aligned with the satellite, the second indication information indicates the user to maintain the current posture of holding the first electronic device.

In this way, after the satellite communication connection is established, the user can be prompted to maintain the current posture of holding the first electronic device.

In a possible implementation, the method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and the first electronic device switches the third indication information back to the second indication information after it is detected that the first electronic device is re-aligned with the satellite.

In this way, when the position relationship between the first electronic device and the satellite changes, the indication information can be output to prompt the user to adjust the posture of holding the first electronic device, to prevent the first electronic device from being disconnected from the satellite.

In a possible implementation, the method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and when it is detected that duration in which the first electronic device is not aligned with the satellite reaches first duration, displaying an exit prompt, where the exit prompt prompts that the first electronic device is to exit the satellite communication mode.

In this way, the user can be prompted that the first electronic device is to exit the satellite communication mode.

In a possible implementation, the method further includes: receiving an operation for the second page, stopping displaying the second page, and displaying a first card. The first card includes the strength indicator and fourth indication information. The fourth indication information indicates whether a posture in which the user holds the first electronic device is aligned with the satellite. In a case of non-alignment, the fourth indication information further indicates an azimuth angle and a pitch angle of the first electronic device relative to the satellite.

In this way, switching between a satellite real-time page and a satellite real-time card can be implemented.

In a possible implementation, the second page further includes a phone application icon, and the phone application icon indicates that the first electronic device supports a call made through the satellite communication connection. After the first electronic device displays the second page when the first electronic device establishes the communication connection to the satellite, the method may further include: The first electronic device receives an operation for the phone application icon, and the first electronic device displays the first dialing interface. In this way, the user can quickly enter the dialing interface from the second page.

In a possible implementation, the phone application icon includes the satellite communication identifier. In this way, the user can be prompted to make the call to the second electronic device through the satellite connection currently.

In a possible implementation, the second page further includes an SMS application icon, and the SMS application icon indicates that the first electronic device supports sending and receiving of an SMS message through the satellite communication connection. In this way, the user can quickly enter, from the second page, an interface for sending and receiving an SMS message.

In a possible implementation, a drop-down status bar of a home screen of the first electronic device includes a satellite communication switch, and the satellite communication switch is configured to enable the satellite communication function of the first electronic device. In this way, the user can enable the satellite communication function of the electronic device from the drop-down bar of the home screen.

In a possible implementation, a setting interface of the first electronic device includes a control configured to enable the satellite communication function of the first electronic device. In this way, the user can enable the satellite communication function of the electronic device by using the control in the drop-down bar of the home screen.

In a possible implementation, the method may include: The first electronic device displays a first SMS session display interface. The first SMS session display interface includes the first indicator, a plurality of SMS messages sent by the first electronic device to the first contact, and sending statuses of the plurality of SMS messages. The plurality of SMS messages include a first SMS message and a second SMS message. The sending statuses of the plurality of SMS messages include a first state and a second state. The first state indicates that the first SMS message is being sent. The second state indicates that the second SMS message is waiting to be sent. In this way, the user can send the plurality of SMS messages through the satellite connection, and learn of a sending status of each SMS message.

In a possible implementation, the first SMS session display interface may further include the first card or the first capsule. In this way, the first card or the first capsule can prompt the user with current satellite signal strength, and/or prompt the user to maintain or adjust the current posture of holding the first electronic device.

In a possible implementation, the method may include: The first electronic device displays a second SMS session display interface, where the second SMS session display interface displays a plurality of received SMS messages that are sent by a third electronic device of the second contact and that include position information, and a track map control, the plurality of SMS messages including the position information include a third SMS message and a fourth SMS message, the third SMS message includes first position information, and the fourth SMS message includes second position information; the first electronic device receives an operation for the track map control; and the first electronic device displays a track map, where the track map is used to display a track of the third electronic device from a first position to a second position. In this way, it can be convenient for the user to see a movement track of the second contact.

In a possible implementation, the method may include: If the satellite communication connection is established, the first electronic device displays the home screen, where the home screen includes an icon of a first application, the first application is any one of the following: a call application, an SMS application, and an address book application, the icon of the first application displays the satellite communication identifier, and the satellite communication identifier indicates that the first application supports the satellite communication. In this way, the user can be prompted to make a call, answer a call, and receive and send an SMS message through the satellite connection.

In a possible implementation, the method may further include: When the first electronic device successfully establishes the satellite communication connection to the satellite, the first electronic device displays a first animation, and/or outputs first sound effect, and/or outputs a first vibration; and when the first electronic device disconnects the satellite communication connection from the satellite, the first electronic device displays a second animation, and/or outputs second sound effect, and/or outputs a second vibration. The first animation is different from the second animation, the first sound effect is different from the second sound effect, and a vibration frequency and/or a vibration loudness of the first vibration are/is different from a vibration frequency and/and a vibration loudness of the second vibration. In this way, the user can be prompted with the status of the connection between the electronic device and the satellite in a timely manner by using an animation, sound effect, or a vibration.

In a possible implementation, the method further includes: after the first electronic device establishes the satellite communication connection to the satellite, displaying a SIM card management interface, where the SIM card management interface includes a first SIM card control and a second SIM card control; and graying out the SIM card management interface, where the first SIM card control displays a satellite enabling prompt, and the satellite enabling prompt prompts the user that the first electronic device has established the satellite communication connection to the satellite by using the first SIM card corresponding to the first SIM card control.

In this way, after the satellite communication mode is enabled, a control corresponding to the SIM card for enabling the satellite communication mode can display a prompt, and the SIM card management interface is grayed out, to prompt the user that the SIM card management interface cannot be operated.

In a possible implementation, the first electronic device further includes the first SIM card and a second SIM card, and the method further includes: before the first electronic device establishes the communication connection to the satellite, displaying a SIM card management interface, where the SIM card management interface includes a first SIM card control and a second SIM card control, the first SIM card control displays a number of the first SIM card and a communication technology corresponding to the first SIM card, and the second SIM card control displays a number of the second SIM card and a communication technology corresponding to the second SIM card; and after the first electronic device establishes the satellite communication connection to the satellite by using the first SIM card, displaying the SIM card management interface, where the first SIM card control and the second SIM card control are in a grayed-out state, and in the grayed-out state, the first electronic device does not respond to an operation performed by the user on the first SIM card control or the second SIM card control.

In a possible implementation, after the first electronic device establishes the satellite communication connection to the satellite by using the first SIM card, the first SIM card control does not display the communication technology corresponding to the first SIM card, the first SIM card control displays a satellite communication prompt, and the satellite communication prompt prompts the user that the satellite communication mode has been enabled by using the first SIM card; and the second SIM card control does not display the communication technology corresponding to the second SIM card, the second SIM card control displays an unavailability prompt, and the unavailability prompt prompts the user that the second SIM card is unavailable.

According to a fourth aspect, this application provides a satellite communication method, applied to a first electronic device. The satellite communication method includes:

displaying a satellite communication mode enabling control in a first interface, where the satellite communication mode enabling control is configured to trigger the first electronic device to enable a satellite communication mode; receiving an operation for the satellite communication mode enabling control and displaying a first page, where the first page includes first indication information, and the first indication information indicates a user to adjust a posture of holding the first electronic device; if the first electronic device is aligned with a satellite, the first electronic device establishes a satellite communication connection to the satellite; receiving a dialing operation for a first number; displaying an in-call screen, where if the satellite communication connection is established, the in-call screen displays a first prompt, where the first prompt prompts the user to maintain or adjust a current posture of holding the first electronic device; and the first electronic device makes, through the satellite communication connection, a call to a second electronic device corresponding to the first number.

In this way, the first electronic device can make the call to the second electronic device by using the satellite, to implement satellite communication.

In a possible implementation, the displaying a satellite communication mode enabling control in a first interface specifically includes: receiving an operation that the user starts a first application, where the first application is any one of the following: a phone application, an SMS application, and an address book application; and when a mobile network is unavailable, displaying the satellite communication mode enabling control in the first interface of the first application.

In this way, if the mobile network is unavailable (for example, signal strength of the mobile network is lower than a first threshold), when detecting that the user starts a communication application, for example, a phone application or an SMS application, the first electronic device may ask the user whether to enable the satellite communication mode, so that switching of applications can be avoided. This improves a rate of enabling the satellite communication mode.

In a possible implementation, the first interface is the in-call screen, and the displaying a satellite communication mode enabling control in a first interface specifically includes: after the dialing operation for the first number is received, when it is detected that a mobile network is unavailable, displaying the satellite communication mode enabling control on the in-call screen.

In a possible implementation, the displaying a satellite communication mode enabling control in a first interface specifically includes: receiving an operation of sending an SMS message; and when it is detected that the SMS message fails to be sent, displaying the satellite communication mode enabling control in the first interface.

In this way, after being successfully connected to the satellite, the first electronic device can immediately re-initiate a call or re-send an SMS message to the second electronic device. This simplifies operation steps and improves communication efficiency.

In a possible implementation, the method further includes: displaying a phone application icon and an SMS application icon in response to that the first electronic device establishes the satellite communication connection to the satellite, where the phone application icon and the SMS application icon include a satellite communication identifier.

In this way, it is convenient for the user to make a call or send an SMS message by using the satellite.

In a possible implementation, the method further includes: if the satellite communication connection is established, displaying a home screen, where the home screen includes the phone application icon and the SMS application icon, and the phone application icon and the SMS application icon include the satellite communication identifier.

In this way, the user can be prompted that both the phone application and the SMS application can support the satellite communication.

In a possible implementation, the method further includes: if the satellite communication connection is established, displaying a dialing interface of the phone application, where the dialing interface includes a dialing control, and the dialing control includes the satellite communication identifier.

In this way, the user can be prompted to dial to another electronic device in a current status by using the satellite.

In a possible implementation, the dialing interface further includes a dial, and the method further includes: skipping displaying a video calling control in the dialing interface after the first number is input on the dial.

In this way, the user can be prompted that the video call is not supported in the satellite communication mode.

In a possible implementation, when the first electronic device makes, through the satellite communication connection, the call to the second electronic device corresponding to the first number, the first electronic device does not support use of an earpiece.

To avoid affecting the satellite communication connection between the first electronic device and the satellite, an earpiece mode is not supported in the satellite communication mode. In this way, call quality can be ensured.

In a possible implementation, the in-call screen includes a Bluetooth identifier, and the method further includes: The first electronic device establishes a Bluetooth connection to a third electronic device; and the first electronic device sends call data to the third electronic device through the Bluetooth connection in a process in which the first electronic device makes the call to the second electronic device through the satellite connection.

In this way, in the satellite communication mode, the first electronic device supports a call to the second electronic device by using a Bluetooth headset (namely, the third electronic device).

In a possible implementation, the in-call screen further includes a position sending control, and the method further includes: when an operation for the position sending control is received, sending a position of the first electronic device to the second electronic device.

In this way, during the call, the first electronic device can further send the position to the second electronic device.

In a possible implementation, the in-call screen does not display a video call control.

In this way, the user can be prompted that the video call is not supported in the satellite communication mode.

In a possible implementation, the method further includes: when it is detected that the first electronic device enters a low battery level mode, exiting the satellite communication mode.

In this way, the user can be prompted that the satellite communication mode is not supported in the low battery level mode.

In a possible implementation, the method further includes: displaying a first call record after the call between the first electronic device and the second electronic device ends, where the first call record includes the satellite communication identifier.

In this way, the user can be prompted that the call corresponding to the call record is a satellite call.

In a possible implementation, the method further includes: The first electronic device sends an SMS message to a fourth electronic device through the satellite communication connection and displays a first SMS message record, where the first SMS message record includes the satellite communication identifier.

In this way, the user can be prompted that the SMS message is sent by using the satellite.

In a possible implementation, the method further includes: displaying a control center interface. The control center interface includes a position switch. When the satellite is searched for, the position switch is in an on state; and when the satellite is aligned, the position switch is in an off state.

When the satellite is searched for, the position of the first electronic device needs to be obtained, to determine a position relationship between the first electronic device and the satellite. After the satellite is aligned, to maintain the connection between the first electronic device and the satellite, the first electronic device should maintain, as much as possible, a position and a status existing when the first electronic device is connected to the satellite. Therefore, the position of the first electronic device does not need to be obtained.

In a possible implementation, the method further includes: displaying the control center interface, where the control center interface includes a mobile data switch, a wireless local area network switch, and an airplane mode switch. After the satellite communication mode is enabled, the mobile data switch, the wireless local area network switch, and the airplane mode switch are all in an off state.

In this way, the user can be prompted with a control that is not supported in the satellite communication mode.

In a possible implementation, the first interface is the control center interface.

In a possible implementation, the method further includes: displaying a subscriber identity module SIM card setting interface in response to the operation for the satellite communication mode enabling control, where the SIM card setting interface includes a first SIM card option; and receiving and responding to an operation performed by the user on the first SIM card option, and performing the satellite communication by using a first SIM card.

In this way, if a SIM card for enabling the satellite communication mode is not configured, when it is detected that the user enables the satellite communication mode, the user can be prompted to select the SIM card for enabling the satellite communication mode.

In a possible implementation, the first interface further includes a SIM card setting control, and the method further includes: receiving an operation for the SIM card setting control and displaying a SIM card setting interface, where the SIM card setting interface includes a first SIM card option; and receiving and responding to an operation performed by the user on the first SIM card option, and performing the satellite communication by using a first SIM card.

In this way, a SIM card for enabling the satellite communication mode can be selected.

In a possible implementation, the method further includes: in response to a first operation, outputting a third prompt when it is detected that a battery level of the first electronic device is lower than a first battery level threshold, where the third prompt prompts that a satellite communication success rate is affected because a battery level of the device is excessively low.

In this way, the user can be prompted that the battery level of the device is excessively low and affects the satellite communication success rate.

In a possible implementation, after the first electronic device establishes the satellite communication connection to the satellite, the method further includes: when the first electronic device establishes the satellite communication connection to the satellite, displaying a second page. The second page indicates that the satellite communication connection has been established. The second page includes a strength indicator and second indication information. The strength indicator indicates strength of a satellite signal received by the first electronic device. If the first electronic device is aligned with the satellite, the second indication information indicates the user to maintain the current posture of holding the first electronic device.

In this way, after the satellite communication connection is established, the user can be prompted to maintain the current posture of holding the first electronic device.

In a possible implementation, the method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and the first electronic device switches the third indication information back to the second indication information after it is detected that the first electronic device is re-aligned with the satellite.

In this way, when the position relationship between the first electronic device and the satellite changes, the indication information can be output to prompt the user to adjust the posture of holding the first electronic device, to prevent the first electronic device from being disconnected from the satellite.

In a possible implementation, the method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and when it is detected that duration in which the first electronic device is not aligned with the satellite reaches first duration, displaying an exit prompt, where the exit prompt prompts that the first electronic device is to exit the satellite communication mode.

In this way, the user can be prompted that the first electronic device is to exit the satellite communication mode.

In a possible implementation, the method further includes: receiving an operation for the second page, stopping displaying the second page, and displaying a first card. The first card includes the strength indicator and fourth indication information. The fourth indication information indicates whether a posture in which the user holds the first electronic device is aligned with the satellite. In a case of non-alignment, the fourth indication information further indicates an azimuth angle and a pitch angle of the first electronic device relative to the satellite.

In this way, switching between a satellite real-time page and a satellite real-time card can be implemented.

In a possible implementation, after the first card is displayed, the method further includes: receiving an operation for the first card, stopping displaying the first card, and displaying a first capsule, where the first capsule includes the strength indicator.

In this way, switching between the satellite real-time card and a satellite real-time capsule can be implemented.

In a possible implementation, the method further includes: receiving an operation for the first capsule, stopping displaying the first capsule, and displaying the first card.

In this way, switching between the satellite real-time capsule and the satellite real-time card can be implemented.

In a possible implementation, the method further includes: receiving an operation for the first card, stopping displaying the first card, and displaying the second page.

In this way, switching between the satellite real-time card and the satellite real-time page can be implemented.

It should be noted that the first prompt may be the satellite real-time card (the first card), or may be the satellite real-time page (the second page).

In a possible implementation, the second page further includes the phone application icon and the SMS application icon, and the phone application icon and the SMS application icon include the satellite communication identifier. Before the dialing operation is received, the method further includes: receiving an operation for the phone application icon on the second page, stopping displaying the second page, and displaying the dialing interface of the phone application and the first capsule, where the first capsule includes the strength indicator.

In this way, the phone application can be quickly started, and switching between the satellite real-time page and the satellite real-time capsule can be further implemented.

In a possible implementation, after the in-call screen is displayed, the method further includes: detecting that a temperature of the first electronic device is higher than a first temperature value; and displaying a fourth prompt, where the fourth prompt prompts the user that the current call is to end after a first time period.

In this way, when the temperature of the first electronic device is excessively high, the user can be prompted that the satellite call is to end.

In a possible implementation, the method further includes: after the satellite communication connection is established, receiving a call request initiated by a fifth electronic device; displaying an incoming call screen in response to the call request, where the incoming call screen displays an incoming call answering control, the first prompt, and a second number, and the incoming call answering control includes the satellite communication identifier; receiving an operation performed by the user on the incoming call answering control; and the first electronic device makes, through the satellite communication connection, a call to the fifth electronic device corresponding to the second number.

In this way, the first electronic device can also answer, by using the satellite, a call made by another electronic device.

In a possible implementation, that the first electronic device establishes a satellite communication connection to the satellite specifically includes: The first electronic device establishes the satellite communication connection to the satellite by using the first SIM card of a first operator.

In a possible implementation, the method further includes: after the first electronic device establishes the satellite communication connection to the satellite, displaying a SIM card management interface, where the SIM card management interface includes a first SIM card control and a second SIM card control; and graying out the SIM card management interface, where the first SIM card control displays a satellite enabling prompt, and the satellite enabling prompt prompts the user that the first electronic device has established the satellite communication connection to the satellite by using the first SIM card corresponding to the first SIM card control.

In this way, after the satellite communication mode is enabled, a control corresponding to the SIM card for enabling the satellite communication mode can display a prompt, and the SIM card management interface is grayed out, to prompt the user that the SIM card management interface cannot be operated.

In a possible implementation, the first electronic device further includes the first SIM card and a second SIM card, and the method further includes: before the first electronic device establishes the communication connection to the satellite, displaying a SIM card management interface, where the SIM card management interface includes a first SIM card control and a second SIM card control, the first SIM card control displays a number of the first SIM card and a communication technology corresponding to the first SIM card, and the second SIM card control displays a number of the second SIM card and a communication technology corresponding to the second SIM card; and after the first electronic device establishes the satellite communication connection to the satellite by using the first SIM card, displaying the SIM card management interface, where the first SIM card control and the second SIM card control are in a grayed-out state, and in the grayed-out state, the first electronic device does not respond to an operation performed by the user on the first SIM card control or the second SIM card control.

In a possible implementation, after the first electronic device establishes the satellite communication connection to the satellite by using the first SIM card, the first SIM card control does not display the communication technology corresponding to the first SIM card, the first SIM card control displays a satellite communication prompt, and the satellite communication prompt prompts the user that the satellite communication mode has been enabled by using the first SIM card; and the second SIM card control does not display the communication technology corresponding to the second SIM card, the second SIM card control displays an unavailability prompt, and the unavailability prompt prompts the user that the second SIM card is unavailable.

According to a fifth aspect, this application provides a method for enabling a satellite communication mode, applied to a first electronic device. The method for enabling a satellite communication mode includes: receiving an operation performed by a user on a first application, and when it is detected that a mobile network is unavailable, displaying a satellite communication mode enabling control in a first interface of the first application; receiving an operation for the satellite communication mode enabling control and displaying a first page, where the first page includes first indication information, and the first indication information indicates the user to adjust a posture of holding the first electronic device; and if the first electronic device is aligned with a satellite, the first electronic device establishes a satellite communication connection to the satellite and displays a second page, where the second page indicates that the satellite communication connection has been established, the second page includes a strength indicator and second indication information, the strength indicator indicates strength of a satellite signal received by the first electronic device, and the second indication information indicates the user to maintain a current posture of holding the first electronic device.

In this way, enabling of the satellite communication mode can be triggered inside the first application. The first application may be a communication application, for example, a phone application, an SMS application, or an address book application.

In a possible implementation, the operation performed by the user on the first application specifically includes an operation performed by the user on an icon of the first application.

In a possible implementation, the first application is a phone application; and the operation performed by the user on the first application specifically includes: a dialing operation performed by the user on a first number by using the first application.

In a possible implementation, the first application is an information application; and the operation performed by the user on the first application specifically includes: an operation that the user sends information to a second electronic device by using the first application.

According to a sixth aspect, this application provides a satellite communication method, applied to a first electronic device. The first electronic device includes a satellite communication mode module, a satellite searching service module, a call management module telecom, and a satellite communication modem (modem). The satellite communication method includes: receiving an operation that a user enables a satellite communication mode and obtaining satellite data by using the satellite searching service module, where the satellite data includes an azimuth angle, a pitch angle, and satellite signal strength; displaying a first page based on the satellite data by using the satellite communication mode module, where the first page includes first indication information, and the first indication information indicates the user to adjust a posture of holding the first electronic device; if the first electronic device is aligned with a satellite, the first electronic device establishes a satellite communication connection to the satellite; receiving, by using the telecom, a dialing operation performed by the user for a first number; and if the satellite communication connection is established, initiating, by using the satellite communication modem, a call request to a second electronic device corresponding to the first number.

In this way, the first electronic device can initiate the call request to the second electronic device by using the satellite.

In a possible implementation, the first electronic device further includes a call service module telephony, a communication system framework, and a radio interface layer RIL. After the dialing operation performed by the user on the first number is received by using the first application, the method further includes: if the satellite communication connection is established, sending the first number to the telephony by using the telecom; determining, by using the telephony, that a communication mode is the satellite communication mode, and binding a satellite communication service; creating a connection to the communication system framework by using the telephony; sending, by using the telephony, the first number and the satellite communication mode to the communication system framework based on the connection; sending the first number and the satellite communication mode to the RIL by using the communication system framework; and sending, by using the RIL, the first number to the satellite communication modem based on the satellite communication mode.

In a possible implementation, the telephony includes a satellite call module and a satellite connection module. The binding a satellite communication service by using the telephony specifically includes: binding the satellite communication service by using the satellite call module and the satellite connection module. The creating a connection to the communication system framework by using the telephony specifically includes: creating the connection to the communication system framework by using the satellite connection module. The sending, by using the telephony, the first number and the satellite communication mode to the communication system framework based on the connection specifically includes: sending the first number and the satellite communication mode to the communication system framework by using the satellite connection module.

In a possible implementation, the communication system framework includes a satellite phone module, a satellite voice call model, and an interface layer RILJ that supports a Java language. The sending the first number and the satellite communication mode to the RIL by using the communication system framework specifically includes: sending the first number and the satellite communication mode to the RIL by using the satellite phone module, the satellite voice call model, and the RILJ.

In a possible implementation, the RIL includes a satellite interface layer satellite-RIL. The sending, by using the RIL, the first number to the satellite communication modem based on the satellite communication mode specifically includes: sending, by using the satellite-RIL, the first number to the satellite communication modem based on the satellite communication mode.

In a possible implementation, the first electronic device further includes an SMS application, the communication system framework further includes an SMS manager and a satellite SMS dispatcher, and the method further includes: receiving, by using the SMS application, an operation that the user sends target information to a second number, and sending the target information and the second number to the SMS management module; determining, by using the SMS management module, that the communication mode is the satellite communication mode; sending the target information, the second number, and the satellite communication mode to the RIL by using the SMS management module and the satellite SMS dispatcher; sending the target information and the second number to the satellite communication modem by using the RIL; and sending, by using the satellite communication modem, the target information to the second electronic device corresponding to the second number.

In a possible implementation, the method further includes: receiving, by using the satellite communication modem, a paging message sent by the second electronic device; obtaining an incoming call message by using the satellite communication modem, where the incoming call message includes the second number of the second electronic device; reporting the incoming call message to the telecom by using the satellite communication modem; determining, by using the telecom, that the communication mode is the satellite communication mode; sending the satellite communication mode and the incoming call message to a phone application by using the telecom; and displaying, by using the phone application, an incoming call screen based on the satellite communication mode and the incoming call message, where the incoming call screen includes the second number, an incoming call answering control, and a hang-up control, and the incoming call answering control includes a satellite communication identifier.

In a possible implementation, the first electronic device further includes a cellular modem and a global positioning service module, and the method further includes: after the operation that the user enables the satellite communication mode is received, obtaining a position of the first electronic device by using the global positioning service module; and disabling the cellular modem after the position of the first electronic device is obtained.

According to a seventh aspect, this application provides an electronic device. The electronic device is a first electronic device and includes one or more processors and one or more memories. The one or more memories are coupled to the one or more processors. The one or more memories are configured to store computer program code. The computer program code includes computer instructions. When the one or more processors execute the computer instructions, the first electronic device is enabled to perform the satellite communication method or the method for enabling a satellite communication mode in any possible implementation of any one of the foregoing aspects.

According to an eighth aspect, an embodiment of this application provides a computer storage medium, including computer instructions. When the computer instructions are run on an electronic device, the electronic device is enabled to perform the satellite communication method or the method for enabling a satellite communication mode in any possible implementation of any one of the foregoing aspects.

According to a ninth aspect, an embodiment of this application provides a computer program product. When the computer program product runs on a computer, the computer is enabled to perform the satellite communication method or the method for enabling a satellite communication mode in any possible implementation of any one of the foregoing aspects.

### BRIEF DESCRIPTION OF DRAWINGS

FIG. 1A is a diagram of a system architecture of a satellite communication system 10 according to an embodiment of this application;
FIG. 1B is a diagram of a hardware structure of an electronic device 100 according to an embodiment of this application;
FIG. 1C-1 and FIG. 1C-2 are a diagram of a software structure of an electronic device 100 according to an embodiment of this application;
FIG. 2A to FIG. 2M are diagrams of a group of interfaces existing when an electronic device 100 enables a satellite communication mode according to an embodiment of this application;
FIG. 3A to FIG. 3L are diagrams of another group of interfaces existing when an electronic device 100 enables a satellite communication mode according to an embodiment of this application;
FIG. 4A to FIG. 4L are diagrams of a group of interfaces existing when a satellite communication mode is enabled in an application according to an embodiment of this application;
FIG. 5A to FIG. 5G are diagrams of a group of satellite real-time cards according to an embodiment of this application;
FIG. 6A to FIG. 6G are diagrams of a group of interfaces of a manner of switching between a satellite real-time card, a satellite real-time capsule, and a satellite real-time page according to an embodiment of this application;
FIG. 7A to FIG. 7S are diagrams of a group of interfaces existing when an electronic device 100 makes a call after enabling a satellite communication mode according to an embodiment of this application;
FIG. 8A to FIG. 8F are diagrams of a group of interfaces existing when an electronic device 200 answers a call made by an electronic device 100 by using a satellite according to an embodiment of this application;
FIG. 9A and FIG. 9B are diagrams of a group of interfaces existing when an electronic device 100 answers a call after enabling a satellite communication mode according to an embodiment of this application;
FIG. 10A to FIG. 10H are diagrams of a group of interfaces existing when an electronic device 100 sends an SMS message after enabling a satellite communication mode according to an embodiment of this application;
FIG. 11A to FIG. 11D are diagrams of a group of interfaces existing when an electronic device 100 sends an emergency rescue SMS message after enabling a satellite communication mode according to an embodiment of this application;
FIG. 12A to FIG. 12D are diagrams of a group of interfaces existing when an electronic device 100 views a track map of the electronic device 100 according to an embodiment of this application;
FIG. 13A to FIG. 13F are diagrams of a group of interfaces existing when an electronic device 200 views a track map of an electronic device 100 according to an embodiment of this application;
FIG. 14A to FIG. 14F are diagrams of a group of interfaces existing when an electronic device 100 performs a forwarding or copying operation on a sent SMS message according to an embodiment of this application;
FIG. 15A to FIG. 15E are diagrams of a group of interfaces existing when an electronic device 100 manages and controls some controls if a constraint is met according to an embodiment of this application;
FIG. 16A to FIG. 16F are diagrams of a group of interfaces of a manner of switching between a satellite real-time capsule and a satellite real-time card or a satellite real-time page in a call scenario according to an embodiment of this application;
FIG. 16G is a diagram of an emergency call screen in a scenario in which an emergency number is dialed in a satellite communication mode according to an embodiment of this application;
FIG. 17A to FIG. 17D are diagrams of a group of interfaces existing when a satellite communication mode is enabled in a split-screen or floating window scenario according to an embodiment of this application;
FIG. 18A to FIG. 18F are diagrams of a group of interfaces existing when a satellite communication mode is exited according to an embodiment of this application;
FIG. 18G to FIG. 18L are diagrams of a group of interfaces of a manner of switching between a plurality of capsules and a notification list according to an embodiment of this application;
FIG. 19 is a schematic flowchart of interaction between internal modules of an electronic device 100 in a process of enabling or exiting a satellite communication mode according to an embodiment of this application;
FIG. 20A and FIG. 20B are a schematic flowchart of interaction between internal modules of an electronic device 100 in a process of dialing in a satellite communication mode according to an embodiment of this application;
FIG. 21 is a schematic flowchart of interaction between internal modules of an electronic device 100 in a process of answering a call in a satellite communication mode according to an embodiment of this application;
FIG. 22 is a schematic flowchart of interaction between internal modules of an electronic device 100 in a process of sending an SMS message in a satellite communication mode according to an embodiment of this application;
FIG. 23 is a schematic flowchart of interaction between internal modules of an electronic device 100 in a process of receiving an SMS message in a satellite communication mode according to an embodiment of this application;
FIG. 24 is a schematic flowchart of viewing a track map of an electronic device 100 by an electronic device 200 based on a plurality of SMS messages sent by the electronic device 100 according to an embodiment of this application;
FIG. 25A is a diagram of a connection relationship between a subscriber identity module (subscriber identity module, SIM) card and a modem in an electronic device 100 if a satellite communication mode is not enabled according to an embodiment of this application;
FIG. 25B is a diagram of an interconnection relationship between a SIM card and a modem in an electronic device 100 if a satellite communication mode is not enabled according to an embodiment of this application;
FIG. 26 is a schematic flowchart of a method for enabling satellite communication according to an embodiment of this application;
FIG. 27 is a schematic flowchart of a satellite communication method according to an embodiment of this application;
FIG. 28 is a schematic flowchart of a method for enabling a satellite communication mode according to an embodiment of this application;
FIG. 29 is a schematic flowchart of a satellite communication method according to an embodiment of this application;
FIG. 30 is a schematic flowchart of a satellite communication method according to an embodiment of this application;
FIG. 31 is a schematic flowchart of a satellite communication method according to an embodiment of this application; and
FIG. 32 is a schematic flowchart of a satellite communication method according to an embodiment of this application.

### DESCRIPTION OF EMBODIMENTS

The technical solutions according to embodiments of this application are clearly and completely described in the following with reference to the accompanying drawings. **In** descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. **In** addition, in the descriptions of embodiments of this application, "a plurality of" means two or more.

The following terms "first" and "second" are merely used for description, and shall not be understood as an indication or implication of relative importance or implicit indication of a quantity of indicated technical features. Therefore, a feature limited by "first" and "second" may explicitly or implicitly include one or more features. **In** the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a Widget that is displayed on a display of the electronic device.

The following describes an architecture of a satellite communication system 10 according to an embodiment of this application.

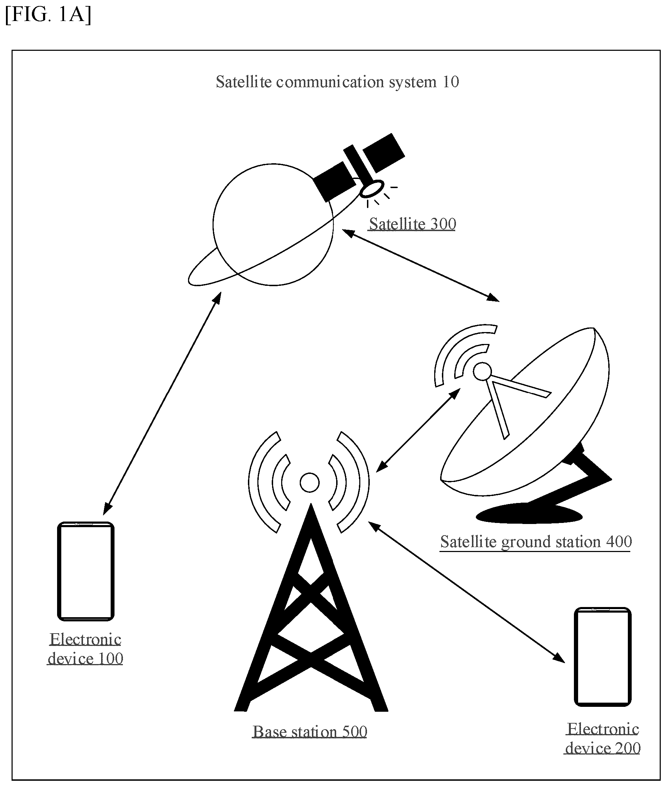

As shown in FIG. 1A, the satellite communication system 10 may include an electronic device 100, an electronic device 200, a satellite 300, a satellite ground station 400, and a base station 500.

In the satellite communication system 10, the electronic device 100 may establish a communication connection to the satellite 300, the satellite 300 may establish a communication connection to the satellite ground station 400, the satellite ground station 400 may establish a communication connection to the base station 500, and a communication connection may be established between the base station 500 and the electronic device 200.

When the electronic device 100 needs to communicate with the electronic device 200, the electronic device 100 may send communication data (for example, a paging message, target information, and call data) to the satellite 300. The communication data may carry a device identifier of the electronic device 200. The device identifier may be used to identify the device, for example, a number of a subscriber identity module (subscriber identity module, SIM) card of the device. The satellite 300 may send the communication data to the satellite ground station 400. The satellite ground station 400 may send the communication data to the base station 500. The base station 500 sends the communication data to the electronic device 200.

The electronic device 200 may also send the communication data to the electronic device 100 along a communication path in a reverse direction. For example, the electronic device 200 initiates a call request to the electronic device 100. The electronic device 200 may send, to the base station 500, a paging message that carries a device identifier of the electronic device 100. The base station 500 may forward the paging message to the satellite ground station 400. The satellite ground station 400 may send the received paging message to the satellite 300. The satellite 300 may send the paging message to the electronic device 100.

**In** this way, based on the satellite 300, the satellite ground station 400, and the base station 500, the electronic device 100 and the electronic device 200 can communicate with each other.

When both the electronic device 100 and the electronic device 200 are in coverage of a cellular network, the electronic device 100 may communicate with the electronic device 200 through the base station 500.

When the electronic device 100 is out of coverage of the cellular network, and the electronic device 200 is in coverage of the cellular network, the electronic device 100 may communicate with the electronic device 200 based on the satellite 300, the satellite ground station 400, and the base station 500.

It may be understood that the satellite communication system 10 shown in FIG. 1A is merely an example. In some embodiments, the satellite communication system 10 may further include more electronic devices, more base stations, or the like. This is not limited herein in this application.

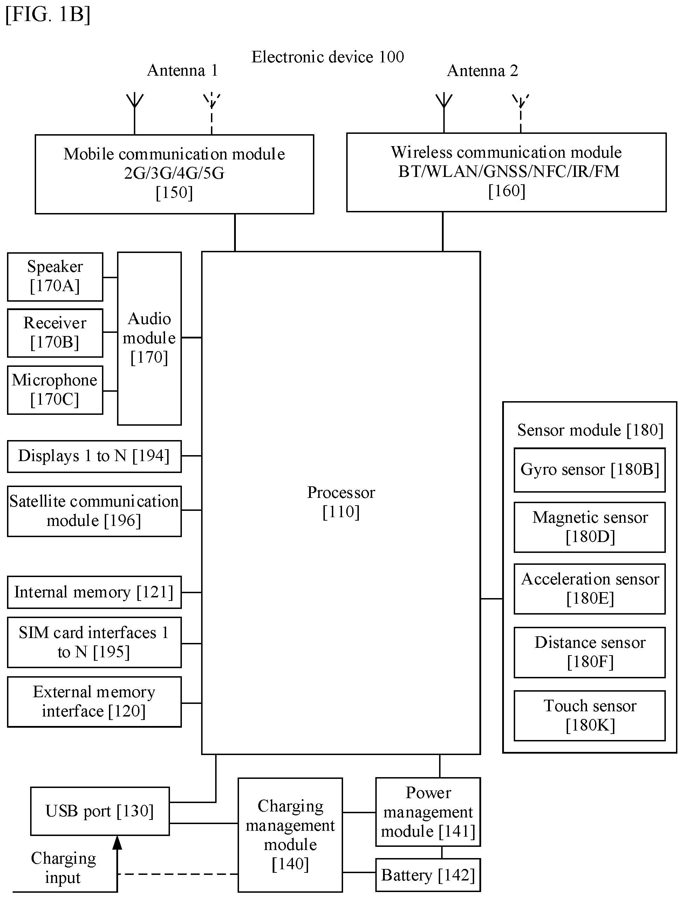

FIG. 1B is a diagram of a hardware structure of the electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), augmented reality (augmented reality, AR) device, virtual reality (virtual reality, VR) device, artificial intelligence (artificial intelligence, AI) device, wearable device, in-vehicle device, smart home device, and/or smart city device, a specific type of the electronic device is not limited in the embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a sensor module 180, a display 194, a subscriber identity module (subscriber identity module, SIM) card interface 195, a satellite communication module 196, and the like. The sensor module 180 may include one or more sensors, for example, a gyro sensor 180B, a magnetic sensor 180D, an acceleration sensor 180E, a distance sensor 180F, a touch sensor 180K, and the like. In some embodiments, the sensor module 180 may further include one or more of sensors such as a pressure sensor, a barometric pressure sensor, an optical proximity sensor, a fingerprint sensor, a temperature sensor, an ambient optical sensor, and a bone conduction sensor.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency. In some embodiments, the processor 110 may include one or more interfaces, for example, a universal serial bus (universal serial bus, USB) port.

The USB port 130 is an interface that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

The charging management module 140 is configured to receive a charging input from a charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may include one or more random access memories (random access memories, RAMs) and one or more non-volatile memories (non-volatile memories, NVMs).

The random access memory may be directly read and written by the processor 110, may be configured to store executable programs (such as machine instructions) of an operating system or another running program, and may also be configured to store data of users and applications.

The non-volatile memory may also store the executable programs, the data of the user and the application, and the like, and may be loaded into the random access memory in advance, to be directly read and written by the processor 110.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The electronic device 100 may implement audio functions, for example, music playing and recording, by using the audio module 170, the speaker 170A, the receiver 170B, the microphone 170C, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

In some embodiments, the electronic device 100 may further include one or more of the following: a button, a motor, and an indicator. The button may include a power button, a volume button, and the like. The button may be a mechanical button, may be a touch button. The electronic device 100 may receive a key input, and generate a key signal input related to a user setting and function control of the electronic device 100. The motor may generate a vibration prompt. The indicator may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

The satellite communication module 196 may provide a solution of satellite communication applied to the electronic device 100. The satellite communication module 196 may be one or more components integrating at least one communication processing module, for example, a satellite communication modem (modem) and an antenna. The satellite communication module 196 may modulate a signal by using the satellite communication modem, and radiate a modulated signal by using the antenna. In some embodiments, the satellite communication module 196 may also receive, by using the antenna, a signal sent by a satellite, demodulate the received signal by using the satellite communication modem, and send a processed signal to the processor 110.

It should be noted that for a hardware structure of the electronic device 200, refer to the hardware structure of the electronic device 100. Details are not described herein again in this application.

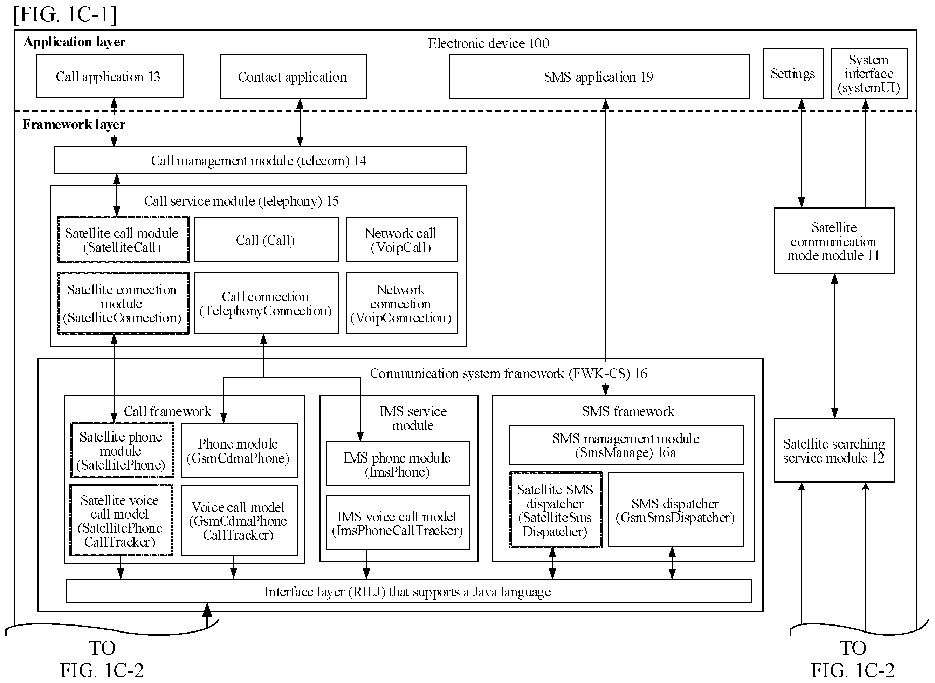

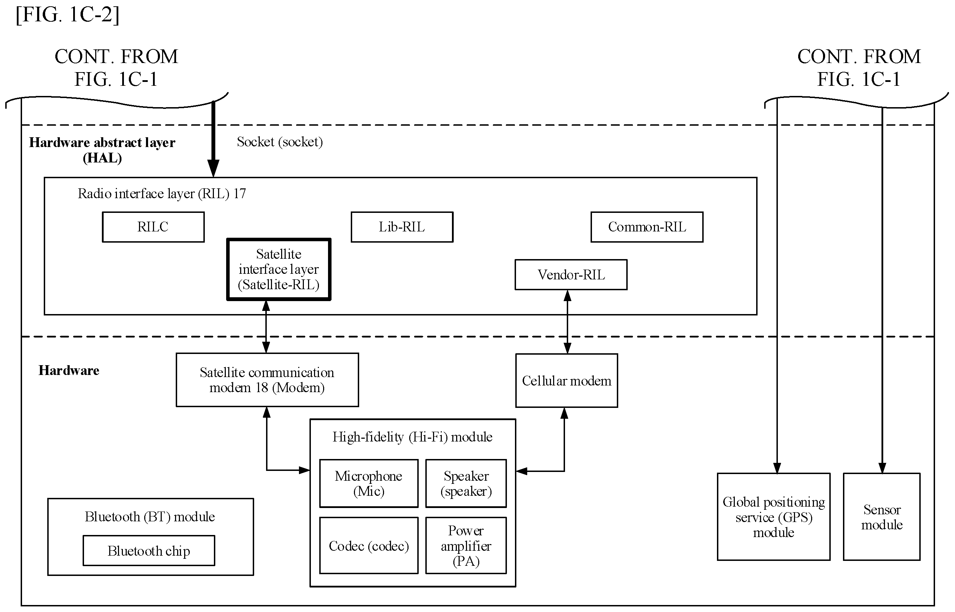

FIG. 1C-1 and FIG. 1C-2 are a diagram of a software architecture of the electronic device 100 according to an embodiment of this application.

As shown in FIG. 1C-1 and FIG. 1C-2, the software architecture of the electronic device 100 may include an application layer, a framework layer, and a hardware abstract layer (hardware abstract layer, HAL).

The application layer may include one or more application programs, for example, a call application 13, a contact application, and an SMS application 19. The application layer further includes modules, for example, a setting module and a system interface (systemUI) module. The call application 13 may also be referred to as a phone application, a dialing application, or the like. The SMS application 19 may also be referred to as an information application or the like. A specific name of the application is not limited in this application.

The framework layer may include a satellite communication mode module 11, a satellite searching service module 12, a call management module (telecom) 14, a call service module (telephony) 15, and a communication system framework (communication system framework, FWK-CS) 16.

The call management module (telecom) 14 may be configured to transmit data between the call service module (telephony) 15 and the application layer.

The call service module (telephony) 15 may include a call module and a connection module that correspond to one or more communication modes, for example, a satellite call module (satellite call) and a satellite connection module (satellite connection) that correspond to a satellite communication mode; a call module (call) and a call connection module (telephony connection) that correspond to a cellular communication mode; and a network call module (VoIP call) and a network connection module (VoIP connection) that correspond to a network communication mode. The call service module (telephony) 15 may determine a current communication mode, and bind a corresponding call service based on the current communication mode, that is, invoke a call module and a connection module that correspond to the current communication mode.

The satellite communication mode module 11 may set the satellite communication mode, and may further deliver an instruction to the satellite searching service module 12 after detecting that the satellite communication mode is enabled, where the instruction indicates the satellite searching service module 12 to obtain satellite data, the satellite data may include an azimuth angle, a pitch angle, and satellite signal strength of the satellite relative to the device. The satellite communication mode module 11 may further display satellite searching guidance based on the satellite data sent by the satellite searching service module 12, and guide the user to establish a communication connection between the electronic device 100 and the satellite.

After receiving the instruction delivered by the satellite communication mode module 11, the satellite searching service module 12 may obtain real-time satellite data, and send the satellite data to the satellite communication mode module 11. In some embodiments, the satellite searching service module 12 may determine the satellite data based on data collected by a global positioning service (global positioning service, GPS) module and a sensor module.

The communication system framework 16 may include a call framework, an SMS framework, and a radio interface layer (radio interface layer, RIL)-Java (also written as RILJ) that may also be referred to as an interface layer that supports a Java language. Optionally, the communication system framework 16 may further include an IMS service module.

The call framework may include a phone module and a voice call model module that correspond to one or more communication modes, for example, a satellite phone module (satellite phone) and a satellite voice call model (satellite phone call tracker) that correspond to the satellite communication mode; and a phone module (GsmCdma phone) and a voice call model (GsmCdma phone call tracker) that correspond to the cellular communication mode.

The SMS framework may include an SMS management module (Smsmanager) 16a, and an SMS dispatcher that corresponds to one or more communication modes, for example, a satellite SMS dispatcher (satellite Smsdispatcher) that corresponds to the satellite communication mode; and an SMS dispatcher (GsmSmsdispatcher) that corresponds to the cellular communication mode.

The RILJ may transmit data between the communication system framework and the radio interface layer. The communication connection between the RILJ and the radio interface layer may be a socket (socket).

The HAL may include a radio interface layer (radio interface layer, RIL) 17. The RIL 17 may receive an instruction transmitted by the communication system framework, and deliver the instruction to a corresponding modem. The RIL 17 may include RIL submodules that correspond to one or more communication modes, for example, a satellite interface layer (Satellite-RIL) that corresponds to the satellite communication mode and a Vendor-RIL module that corresponds to the cellular communication mode. The Satellite-RIL module may deliver an AT instruction to a satellite communication modem at the hardware layer. The Vendor-RIL module may deliver an AT instruction to a cellular modem. In addition, the RIL 17 may further include modules, for example, a radio interface layer (RILC) that support a C language, a Lib-RIL, and a Common-RIL.

The software architecture of the electronic device 100 may interact with one or more pieces of hardware in the electronic device 100. The one or more pieces of hardware may include a satellite communication modem (modem) 18, a cellular modem, a Bluetooth (Bluetooth, BT) module, a high-fidelity (high-fidelity, Hi-Fi) module, a sensor module, and a global positioning service (global positioning service, GPS) module. The Hi-Fi module may include a microphone (mic), a speaker (speaker), a codec (codec), and a power amplifier (power amplifier, PA).

When the electronic device 100 dials or answers a call by using the satellite communication modem 18, the satellite communication modem 18 may invoke the Hi-Fi module to implement a voice call function. In some embodiments, if the electronic device 100 is further connected to another electronic device, for example, a Bluetooth headset, by using the Bluetooth module in a call process, the satellite communication modem 18 may also invoke the Bluetooth module.

After the satellite communication mode is enabled, the electronic device 100 may determine a position of the electronic device 100 by using the GPS module. Then, the electronic device 100 may disable the cellular modem, and start satellite searching guidance. For a specific satellite searching guidance manner, refer to descriptions in the following embodiment.

It should be noted that the foregoing modules may also use other Chinese names, and the Chinese names of the modules are not limited in this application.

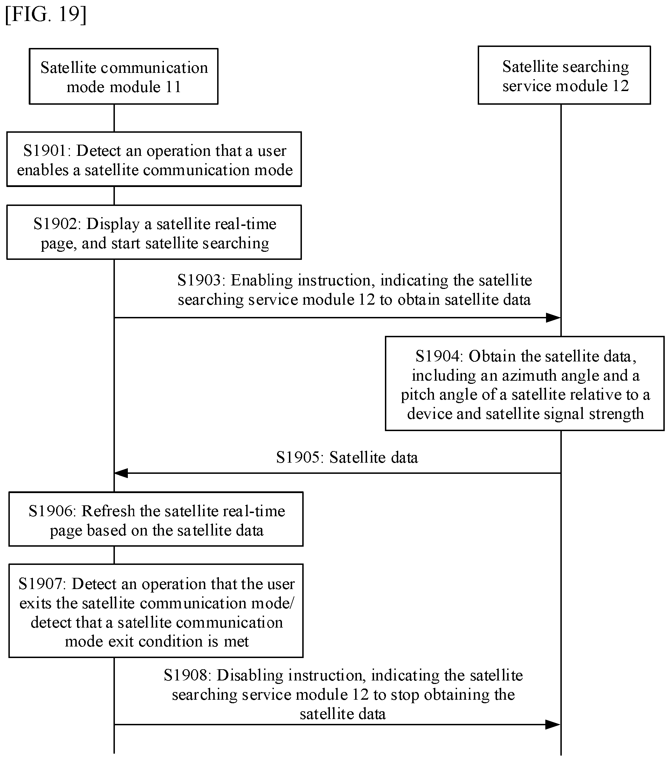

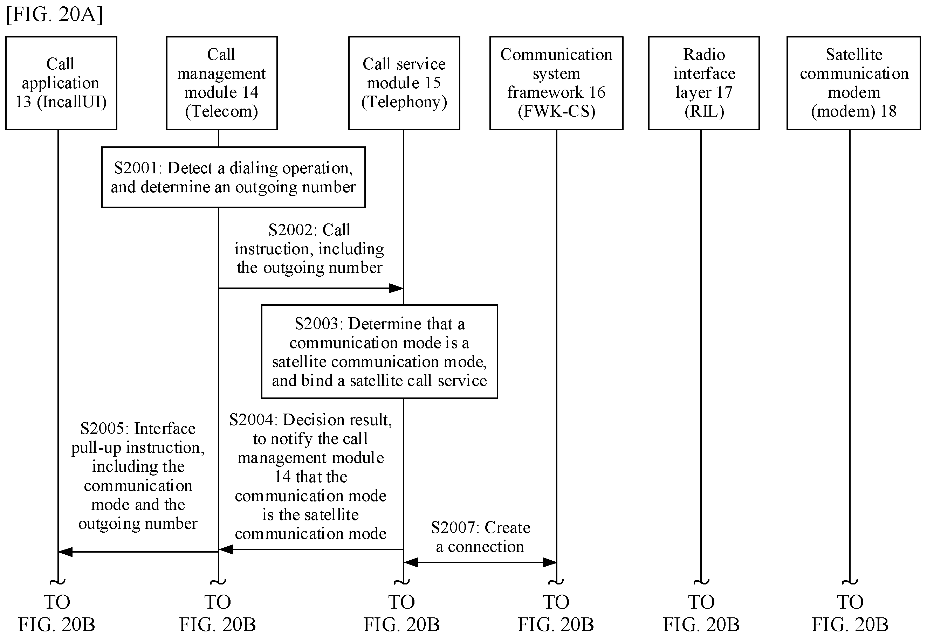

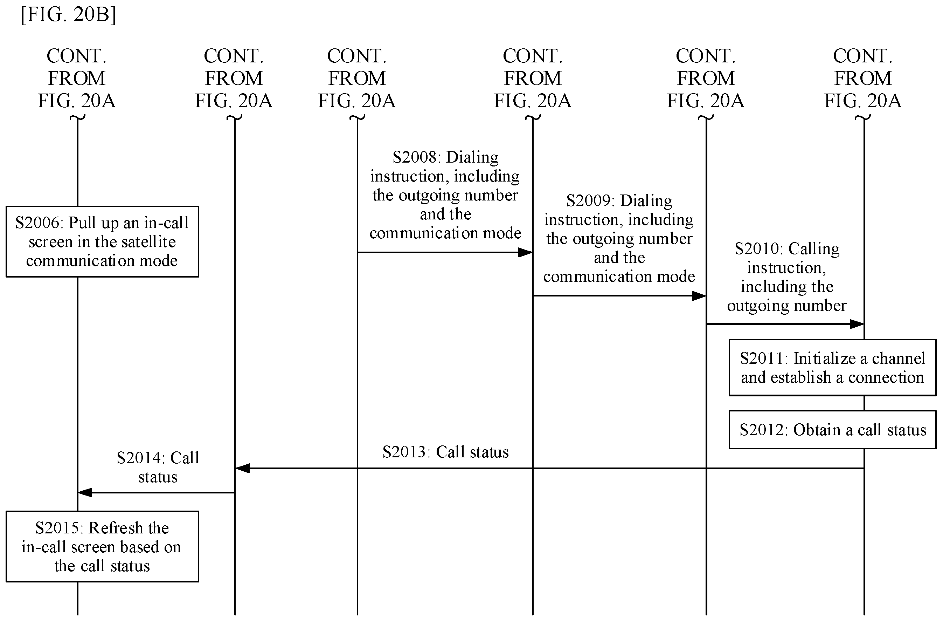

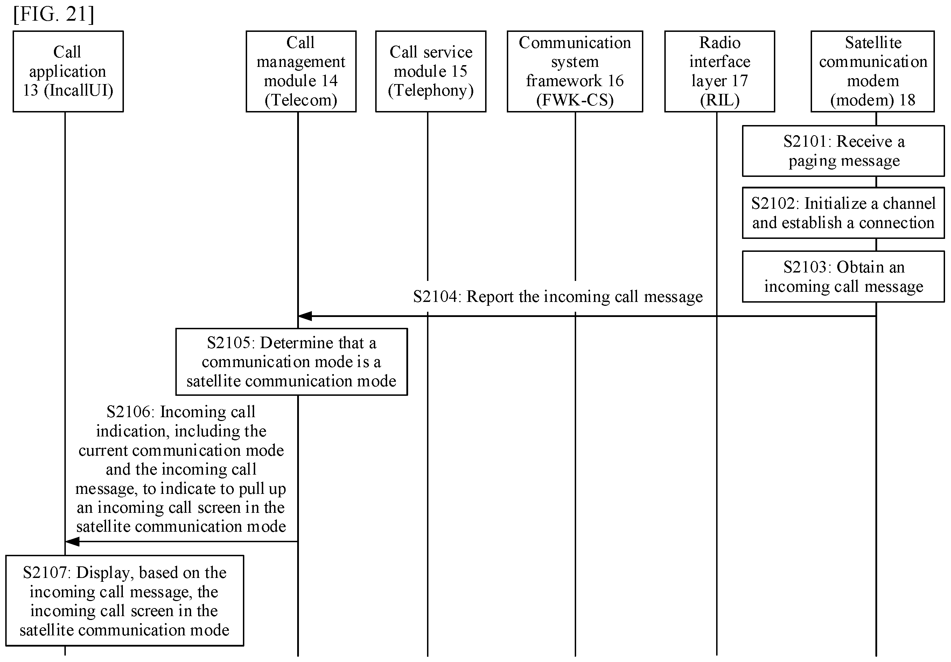

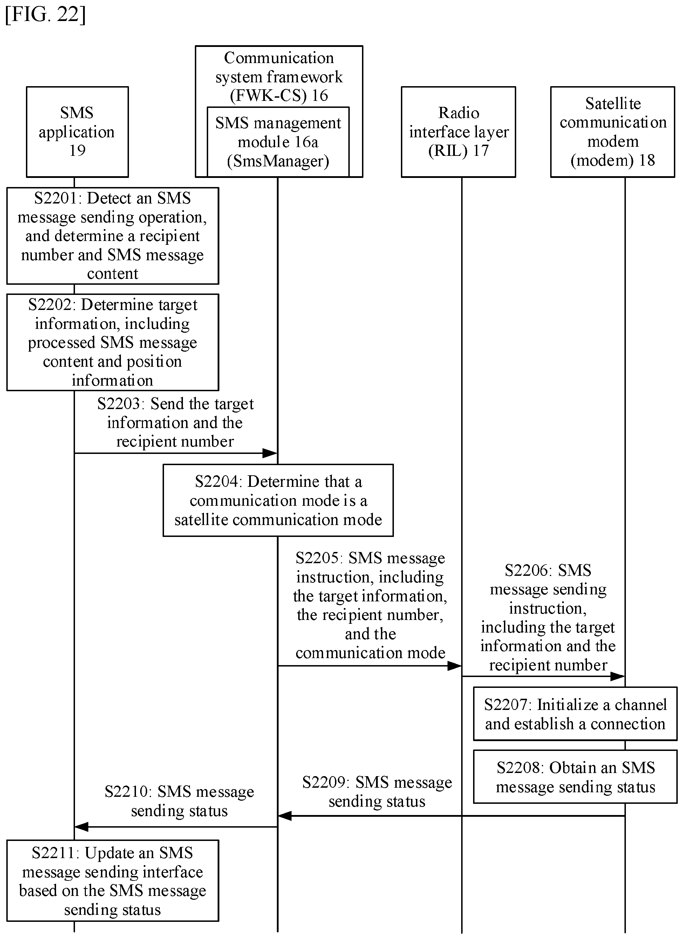

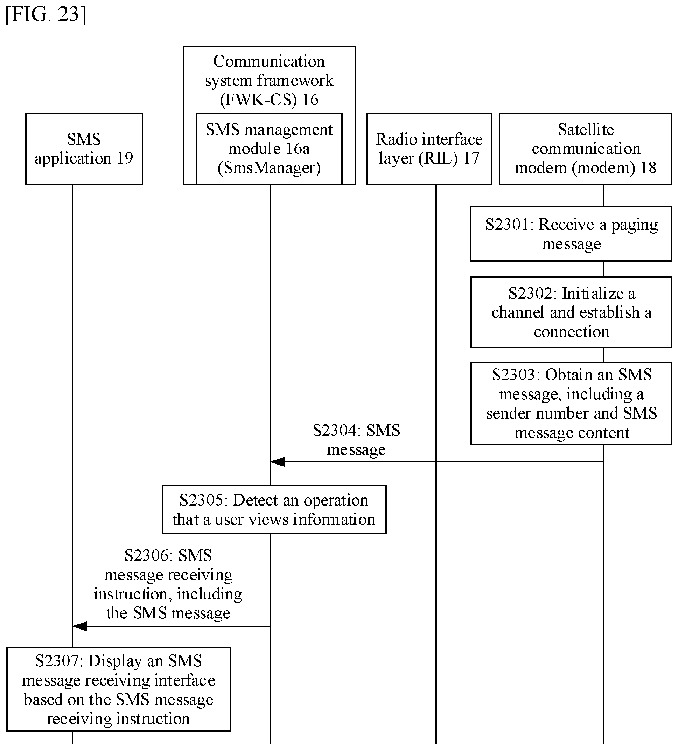

It should be noted that, in a process in which the electronic device 100 enables the satellite communication mode, for an interaction procedure of the foregoing modules, refer to the following embodiment shown in FIG. 19. For a specific procedure in which the electronic device 100 implements a satellite call based on a plurality of modules in the satellite communication mode, refer to the following embodiments shown in FIG. 20A and FIG. 20B and FIG. 21. For a specific procedure in which the electronic device 100 implements SMS message sending and receiving based on the plurality of modules in the satellite communication mode, refer to the following embodiments shown in FIG. 22 and FIG. 23. Specific functions of the modules in the embodiment shown in FIG. 1C-1 and FIG. 1C-2 are not described in detail herein in this application.

In this embodiment of this application, the electronic device 200 may not include the plurality of modules corresponding to the foregoing satellite communication mode. For other modules in the software architecture of the electronic device 200, refer to the software architecture of the electronic device 100 in the foregoing embodiment shown in FIG. 1C-1 and FIG. 1C-2.

This application provides a satellite communication method. The electronic device 100 displays a first control configured to enable the satellite communication mode. The electronic device 100 may receive and respond to input of the user for the first control, and display a first page. The first page indicates the user to adjust a posture of holding the electronic device 100, so that the electronic device 100 establishes a communication connection to the satellite. After the communication connection between the electronic device 100 and the satellite is successfully established, the electronic device 100 may display a second page, where the second page indicates satellite signal strength, and the second page further indicates the user to maintain or adjust a current posture of holding the electronic device 100. The electronic device 100 may receive and respond to a dialing operation of the user, and make a call to another electronic device (for example, an electronic device 200) through the satellite communication connection. In some other embodiments, the electronic device 100 may also receive and respond to an operation that the user sends an SMS message, and send an SMS message to another electronic device based on the satellite in the satellite communication mode.

In this way, when the electronic device 100 is located out of coverage of a cellular network, or is located in an area in which quality of a network signal is poor, the electronic device 100 may communicate with the electronic device 200 by using the satellite.

In some application scenarios, the electronic device 100 may display a first interface (for example, a system interface like a control center interface or a satellite communication mode setting interface), and the first interface includes a satellite communication mode enabling control. The electronic device 100 may receive and respond to input of the user for the satellite communication mode enabling control, and display the first page in the first interface. The first page includes first indication information (including a satellite searching operation prompt and/or an alignment operation prompt). The first indication information indicates the user to adjust the posture of holding the electronic device 100 and/or a position of the electronic device 100, so that the electronic device 100 establishes the communication connection to the satellite. When the communication connection between the electronic device 100 and the satellite is successfully established, the electronic device 100 may display the second page, where the second page includes second indication information. The second indication information prompts the user that the electronic device 100 has successfully established the communication connection to the satellite, and prompt the user to maintain the current posture of holding the electronic device 100. In addition, the second page may further include a strength indicator. The strength indicator indicates strength of a satellite signal received by the electronic device 100. After the communication connection between the electronic device 100 and the satellite is successfully established, the electronic device 100 may communicate with another electronic device in the satellite communication mode.

In this way, even in an area in which quality of the cellular network signal is poor, the user may use the electronic device 100 to communicate with the another electronic device by using the satellite.

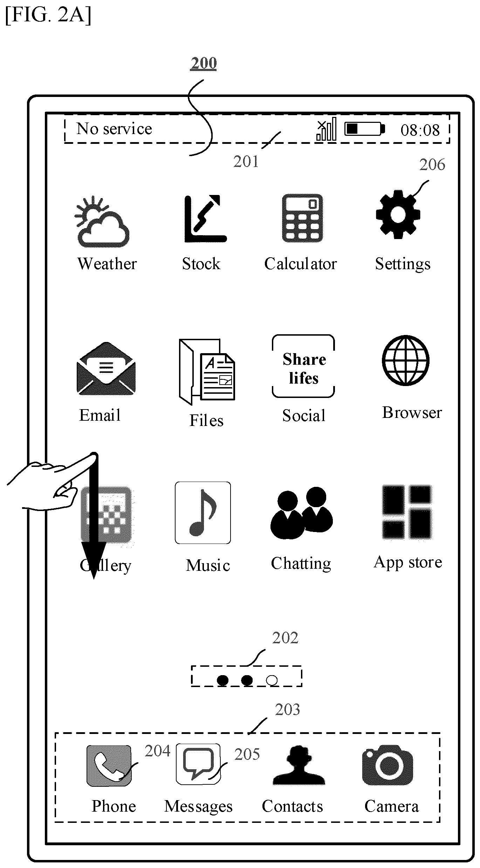

For example, as shown in FIG. 2A, the electronic device 100 displays a home screen 200. A page on which an application icon is placed is displayed on the home screen 200. The page includes a plurality of application icons (for example, a weather application icon, a setting application icon 206, a browser application icon, a chat application icon, a social application icon, a document application icon, and the like). A page indicator 202 is further displayed below the page on which the application icon is placed, to indicate a total quantity of pages on the home screen and a position relationship between a currently displayed page and another page. For example, the home screen 200 may include three pages. A white dot in the page indicator is located in a third position from left, indicating that the currently displayed page is the third page from left of the three pages. Optionally, a status bar 201 is further displayed above the page on which the application icon is placed. The status bar 201 may include information such as a strength indicator of a communication signal, a battery level value, and time. It should be noted that the strength indicator of the communication signal may indicate the signal strength of the cellular network signal received by the electronic device 100. It may be learned from FIG. 2A that the electronic device 100 currently cannot receive the cellular network signal. Further optionally, there may be a dock (dock) area 203 below the page indicator. The dock area 203 may include one or more dock icons (for example, a phone application icon 204, an information application icon 205, a contact application icon, and a camera application icon). One or more dock icons in the dock area can remain displayed during page switching.

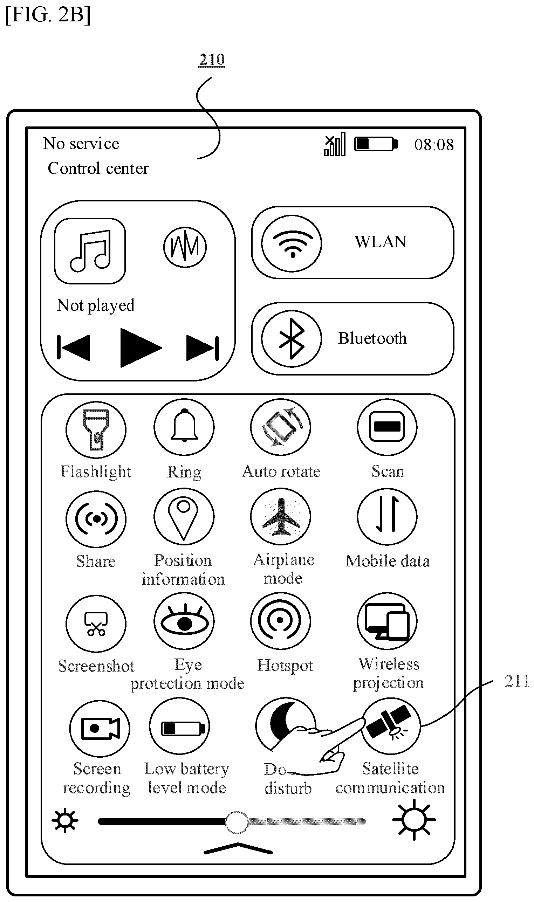

The electronic device 100 may receive and respond to a down-slide operation performed by the user on the home screen 200, and display a control center interface 210 shown in FIG. 2B.

As shown in FIG. 2B, the control center interface 210 may include one or more function switch controls, for example, a satellite communication control 211, a flashlight control, a share control, and an airplane mode control. Each function switch control may be configured to enable or disable a corresponding function.

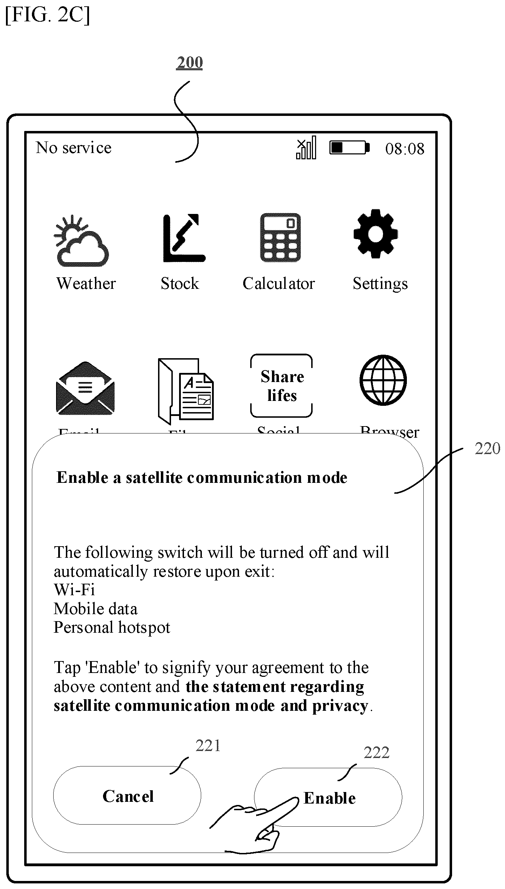

The electronic device 100 may receive and respond to a tap operation performed by the user on the satellite communication control 211. As shown in FIG. 2C, an enabling prompt window 220 is displayed on the home screen 200.

As shown in FIG. 2C, an enabling prompt may be displayed in the enabling prompt window 220. The enabling prompt prompts the user with a caution for enabling the satellite communication mode. For example, after the satellite communication mode is enabled, functions such as Wi-Fi, mobile data, and personal hotspot are disabled. The enabling prompt window 220 may further include a cancel control 221 and an enable control 222. The cancel control 221 may be configured to trigger the electronic device 100 to close the enabling prompt window 220. The enable control 222 may be configured to trigger the electronic device 100 to enable the satellite communication mode.

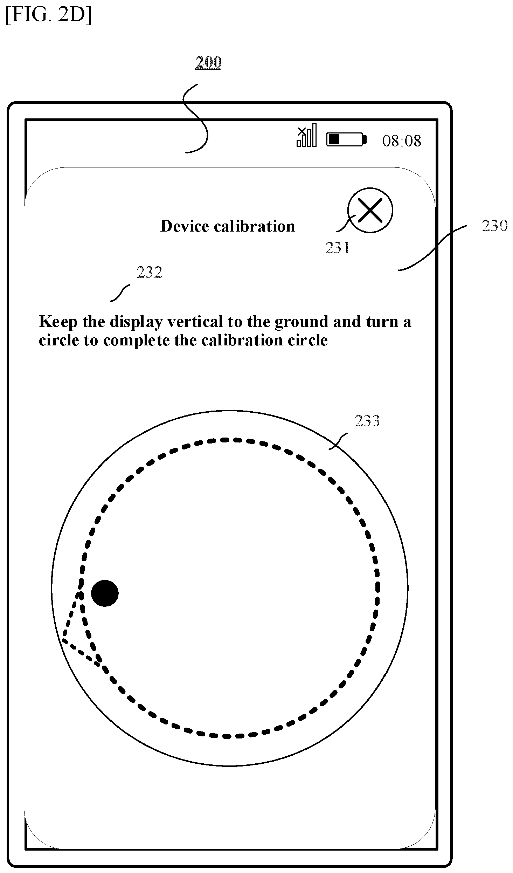

The electronic device 100 may receive and respond to a tap operation performed by the user on the enable control 222, and close the enabling prompt window 220. Optionally, the electronic device 100 may display a calibration page 230 shown in FIG. 2D on the home screen 200.

As shown in FIG. 2D, the calibration page 230 may include a disabling control 231, an operation prompt 232, and a calibration auxiliary graph 233. The disabling control 231 may be configured to trigger the electronic device 100 to disable the satellite communication mode. The operation prompt 232 may prompt the user to perform calibration. The operation prompt may be a text prompt, for example, "Keep the display vertical to the ground and turn a circle to complete the calibration circle". The calibration auxiliary graph 233 may be used to assist the user in completing calibration. For example, the calibration auxiliary graph 233 may be a ball and a circle shown in FIG. 2D. In a process in which the user rotates the electronic device 100, the ball may move around an inner side of the circle. After the ball moves around the inner side of the circle for one circle, the electronic device 100 completes the calibration.

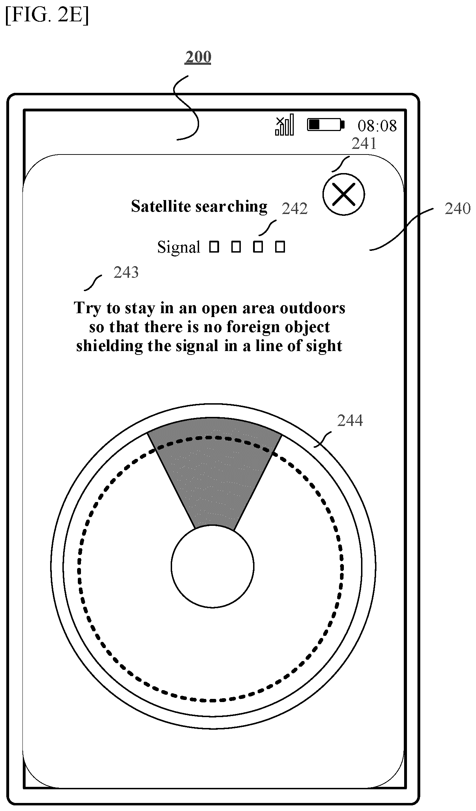

After the calibration is completed, the electronic device 100 may close the calibration page 230, and display a satellite searching page 240 shown in FIG. 2E on the home screen 200. In some embodiments, if the electronic device 100 determines that calibration is not needed, the electronic device 100 may alternatively close the enabling prompt window 220 in response to the tap operation performed by the user on the enable control 222, and display the satellite searching page 240 shown in FIG. 2E on the home screen 200.

As shown in FIG. 2E, the satellite searching page 240 may include a disabling control 241, a strength indicator 242, and a satellite searching operation prompt (including a text prompt 243 and an animation prompt 244). The disabling control 241 may be configured to trigger the electronic device 100 to disable the satellite communication mode. The strength indicator 242 indicates the satellite signal strength. The satellite searching operation prompt indicates the user to perform a satellite searching operation. For example, the text prompt 243 may include text "Try to stay in an open area outdoors so that there is no foreign object shielding the signal in a line of sight". The animation prompt 244 may indicate whether the electronic device 100 detects a satellite. The animation prompt 244 may include a sector area. The sector area may prompt the user of a position relationship between a position of the satellite and a pointing direction of an antenna of the electronic device 100. In the embodiment shown in FIG. 2E, no symbol representing a satellite appears in the animation prompt 244, to prompt the user that the electronic device 100 has not found a satellite currently.

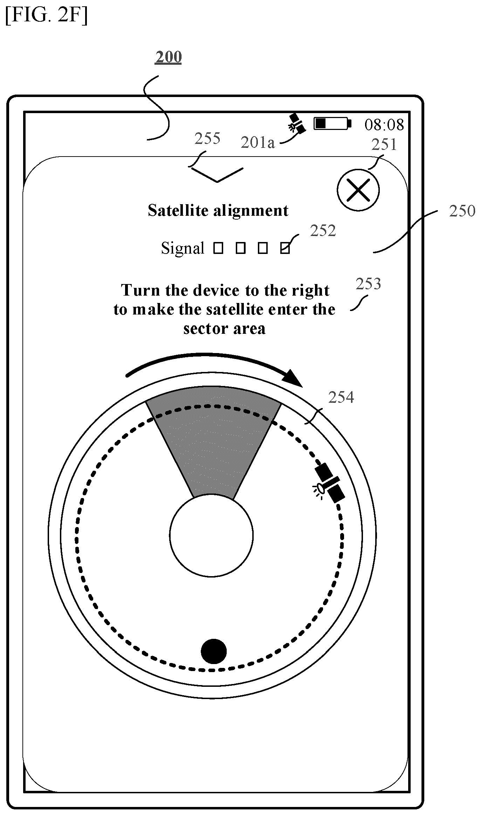

After the electronic device 100 finds the satellite, the electronic device 100 may close the satellite searching page 240, and display, based on a position of the satellite relative to the electronic device 100, an alignment page 250 shown in FIG. 2F. The position of the satellite relative to the electronic device 100 may be represented by a pitch angle and an azimuth angle.

As shown in FIG. 2F, the alignment page 250 may include a disabling control 251, a strength indicator 252, a card display control 255, and an alignment operation prompt (including a text prompt 253 and an animation prompt 254). For specific functions of the disabling control 251 and the strength indicator 252, refer to functions of corresponding controls on the satellite searching page 240 shown in FIG. 2E. The card display control 255 may be configured to trigger the electronic device 100 to close the alignment page, and display a satellite real-time card. The satellite real-time card includes some or all current content of the alignment page 250. The alignment operation prompt indicates the user to perform an alignment operation. For example, the text prompt 253 may include text "Turn the device to the right to make the satellite enter the sector area". The animation prompt 254 may include a sector area. The sector area may prompt the user of an azimuth angle between a position of the satellite and an antenna of the electronic device 100. In the animation prompt 254 shown in FIG. 2F, a symbol representing a satellite (briefly referred to as a satellite in the following embodiments) is located on the right side of the sector area. Therefore, the user needs to turn the electronic device 100 to the right to enable the satellite to be located in the sector area, to ensure that the electronic device 100 establishes a good communication connection to the satellite through the antenna. In addition, the animation prompt 254 may further include a ball. A position of the ball may prompt the user of a pitch angle of the electronic device 100 relative to the satellite. The animation prompt 254 may further include an arrow. The arrow indicates the user to turn the device to the right. In addition, a satellite symbol 201a may be further displayed on the home screen 200, to prompt the user that the electronic device 100 has currently found the satellite. In some other embodiments, the satellite symbol 201a may alternatively be displayed after the electronic device 100 establishes the communication connection to the satellite, or may be displayed after the satellite communication mode is enabled.

It may be understood that the alignment page 250 shown in FIG. 2F is merely an example. In some embodiments, if the satellite is in another orientation relative to the antenna of the electronic device 100, the alignment operation prompt on the alignment page 250 may also be correspondingly changed (for example, when the satellite is located on the left side of the sector area, the user is prompted to turn the device to the left). This is not limited herein in this application.

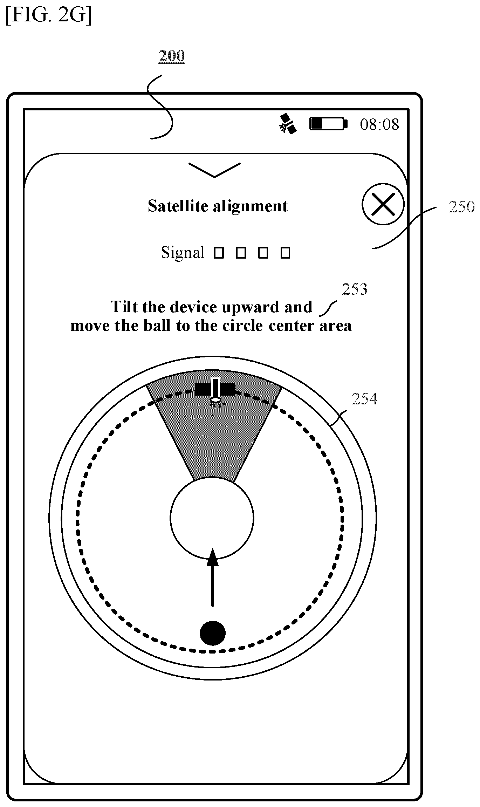

After the electronic device 100 is turned to the right to enable the satellite to be located in the sector area, as shown in FIG. 2G, the electronic device 100 may change the alignment operation prompt.

As shown in FIG. 2G, on the alignment page 250, the text prompt 253 may be "Tilt the device upward and move the ball to the circle center area". In the animation prompt 254, the satellite may be located in a sector area, and a pointing arrow may be displayed near the ball, to indicate the user to tilt the device to move the ball upward. When the ball moves to the circle center area, adjustment of the pitch angle of the electronic device 100 relative to the satellite is completed.

It may be understood that the alignment page 250 shown in FIG. 2G is merely an example. In some embodiments, a pitch angle of the electronic device 100 relative to the satellite may alternatively be different from that in the foregoing embodiment. In this case, a position of the ball in the animation prompt may also be different from that in the foregoing embodiment shown in FIG. 2G. This is not limited in this application.

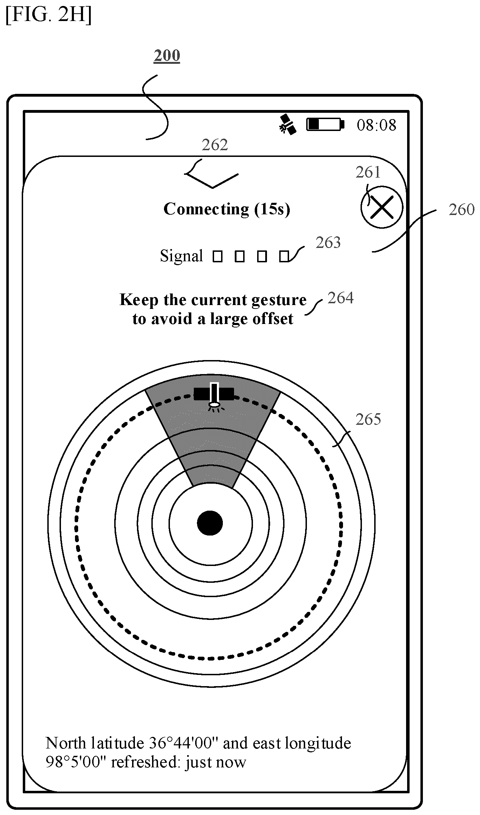

After the alignment is completed, the electronic device 100 may close the alignment page 250, and display a satellite connection page 260 shown in FIG. 2H on the home screen 200.

As shown in FIG. 2H, the satellite connection page 260 may include a disabling control 261, a card display control 262, a strength indicator 263, and an operation prompt (including a text prompt 264 and an animation prompt 265). Optionally, the satellite connection page 260 may further display current longitude and latitude information of the electronic device 100, for example, north latitude 36°44'00" and east longitude 98°5'00", and may further display update time with longitude and latitude, for example, refreshed: just now. For function descriptions of the disabling control 261 and the strength indicator 263, refer to the function descriptions of the related controls in the foregoing embodiment. Details are not described herein again. The card display control 262 may be configured to trigger the electronic device 100 to close the satellite connection page 260, and display a satellite real-time card. The satellite real-time card includes some or all content of the satellite connection page 260. The operation prompt may indicate an operation performed by the user in a satellite connection process. For example, the text prompt 264 may be text "Keep the current gesture to avoid a large offset". The animation prompt 265 may prompt the user whether the posture of holding the device is correct. For example, the satellite is located in the sector area, and the ball is located in the circle center area. In this case, the posture of the user holding the device is correct. In other cases, the user needs to adjust the posture of holding the device. A plurality of concentric circles may be further displayed in the animation prompt 265, to indicate that the electronic device 100 is establishing a communication connection to the satellite. In addition, the satellite connection page 260 may further display a title "Connecting", to prompt the user that the electronic device 100 is currently establishing a communication connection to the satellite. Optionally, a countdown may be further displayed next to the title, for example, "15 seconds".

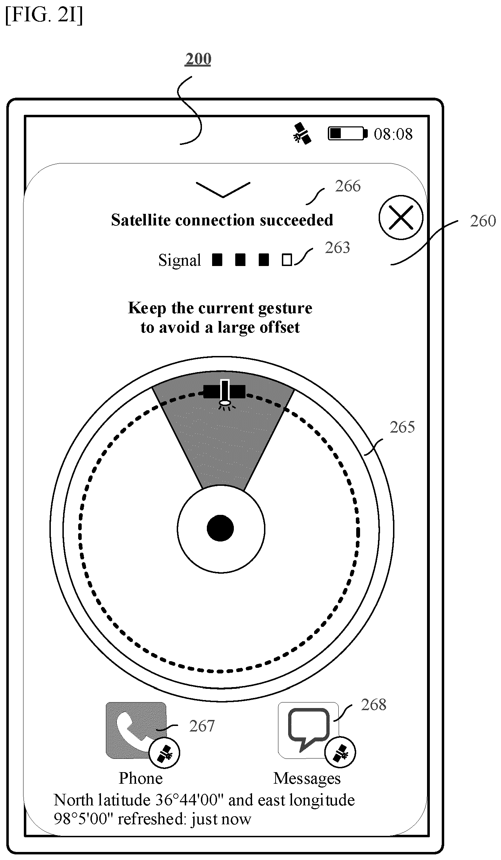

After the electronic device 100 successfully establishes the connection to the satellite, as shown in FIG. 2I, the electronic device 100 may change the strength of the signal in the strength indicator 263, and display a connection success prompt 266.

The signal strength in the strength indicator 263 shown in FIG. 2I is three bars, while the signal strength in the strength indicator 263 shown in FIG. 2H is zero bar. The connection success prompt 266 may be changed from the title "Connecting" shown in FIG. 2H to "Satellite connection succeeded". In addition, the electronic device 100 may further display a phone application icon 267 and an SMS application icon 268 on the satellite connection page 260, and satellite symbols are displayed on both the two application icons, to prompt the user that the satellite communication mode is currently used. In addition, after the connection to the satellite is successfully established, the electronic device 100 may close the plurality of concentric circles in the animation prompt 265, to prompt the user that the communication connection has been established.

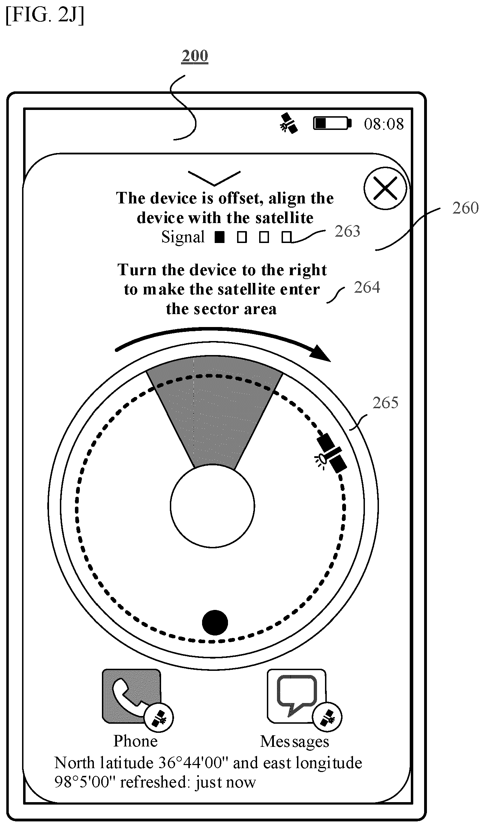

After the satellite connection succeeds, if an offset occurs when the user holds the electronic device 100, as shown in FIG. 2J, the electronic device 100 may change the strength indicator 263 and the operation prompt on the satellite connection page 260.

As shown in FIG. 2J, the strength of the signal in the strength indicator 263 is one bar. The operation prompt may include the text prompt 264 and the animation prompt 265. For example, the electronic device 100 is offset to the left relative to the satellite. The changed text prompt 264 may be "turn the device to the right to enable the satellite to enter the sector area". In this case, the animation prompt 265 may be that the satellite is located on the right side of the sector area, and the ball is located in an area outside the circle center area. In addition, the animation prompt 265 may further include an arrow. The arrow indicates the user to turn the device to the right. It may be understood that if a direction in which or an angle at which the electronic device 100 is offset relative to the satellite is different from that in the foregoing embodiment, the operation prompt on the satellite connection page 260 may also be correspondingly changed.

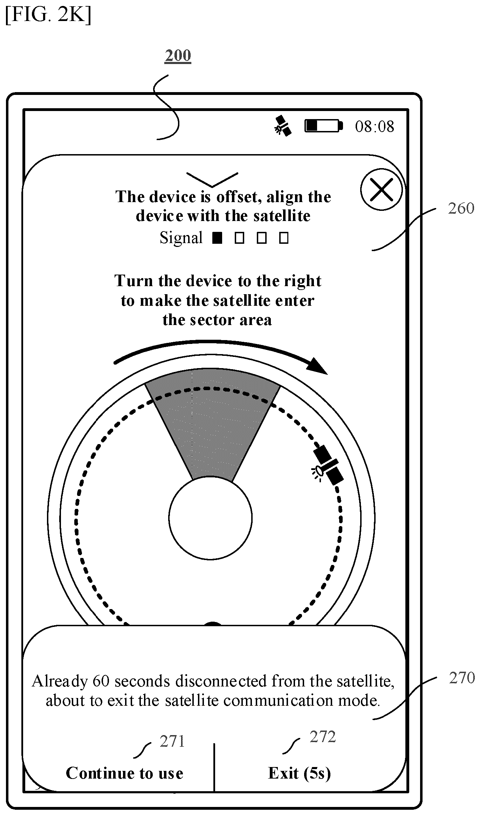

When time in which the electronic device 100 is offset relative to the satellite exceeds a preset time threshold (for example, 60 seconds), the electronic device 100 may display an exit prompt window 270 shown in FIG. 2K on the satellite connection page 260.

As shown in FIG. 2K, an exit prompt may be displayed in the exit prompt window 270. The exit prompt prompts the user that time in which the electronic device 100 is disconnected from the satellite has reached the preset time threshold and the electronic device is about to exit the satellite communication mode. For example, the exit prompt may include the following text: "Already 60 seconds disconnected from the satellite, about to exit the satellite communication mode." The exit prompt window 270 may further include a continue-to-use control 271 and an exit control 272. The continue-to-use control 271 may be configured to trigger the electronic device 100 to re-establish a communication connection to the satellite. The exit control 272 may be configured to trigger the electronic device 100 to exit the satellite communication mode. Optionally, a countdown (for example, 5 seconds) may be further displayed near the exit control 272. When the countdown ends, the electronic device 100 may be triggered to exit the satellite communication mode.

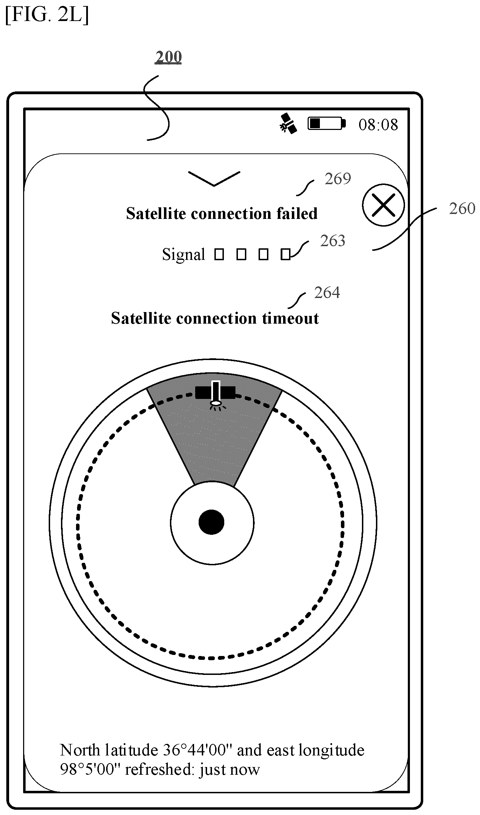

In some embodiments, if the electronic device 100 fails to establish a communication connection to the satellite, as shown in FIG. 2L, the electronic device 100 may output a connection failure prompt 269.

As shown in FIG. 2L, the connection failure prompt 269 may include text "Satellite connection failed". In addition, in the satellite connection page 260, the strength of the signal in the strength indicator 263 is zero bar. Optionally, the text prompt 264 may be changed to "Satellite connection timeout".

In this way, after the satellite connection times out, the electronic device 100 may exit the satellite communication mode, or may re-establish a communication connection to the satellite.

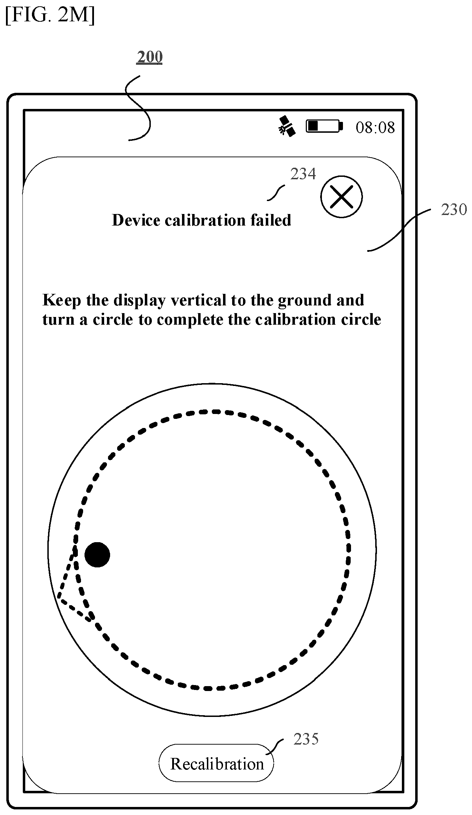

In some other embodiments, the electronic device 100 displays a calibration page 230 shown in FIG. 2D. If calibration fails, as shown in FIG. 2M, the electronic device 100 may output a calibration failure prompt 234, and display a recalibration control 235 on the calibration page 230. As shown in FIG. 2M, the calibration failure prompt 234 may include text "Device calibration failed". The recalibration control 235 may be configured to trigger the electronic device 100 to perform recalibration.

In this way, after calibration of the electronic device 100 fails, the electronic device 100 may further perform recalibration.

In some embodiments, the electronic device 100 may prompt the user of a status of the connection between the electronic device 100 and the satellite by using the text prompt, the animation prompt, and the like, and may further prompt the user of a status of the connection between the electronic device 100 and the satellite in one or more manners such as vibration or sound. For example, when the electronic device 100 successfully establishes the connection to the satellite, the electronic device 100 may output sound effect 1; when the electronic device 100 fails to be connected to the satellite, the electronic device 100 may output sound effect 2; or when the electronic device 100 is disconnected from the satellite, the electronic device 100 may output sound effect 3. The sound effect 1, the sound effect 2, and the sound effect 3 are all different. It may be understood that this embodiment herein is merely an example for description. Alternatively, the user may be prompted of a status of the connection between the electronic device 100 and the satellite in other manners such as sound or vibration. A prompt form is not limited herein in this application.

In some embodiments, the first interface may alternatively be the satellite communication mode setting interface in a setting application. Alternatively, the user may trigger, in the setting application, the electronic device 100 to enable the satellite communication mode.

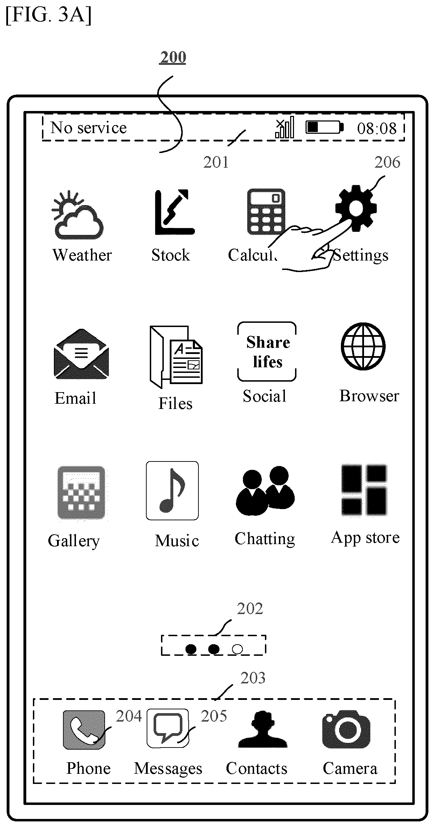

For example, as shown in FIG. 3A, the electronic device 100 displays the home screen 200. For specific descriptions of the home screen 200, refer to the related content in the embodiment shown in FIG. 2A. Details are not described herein again.

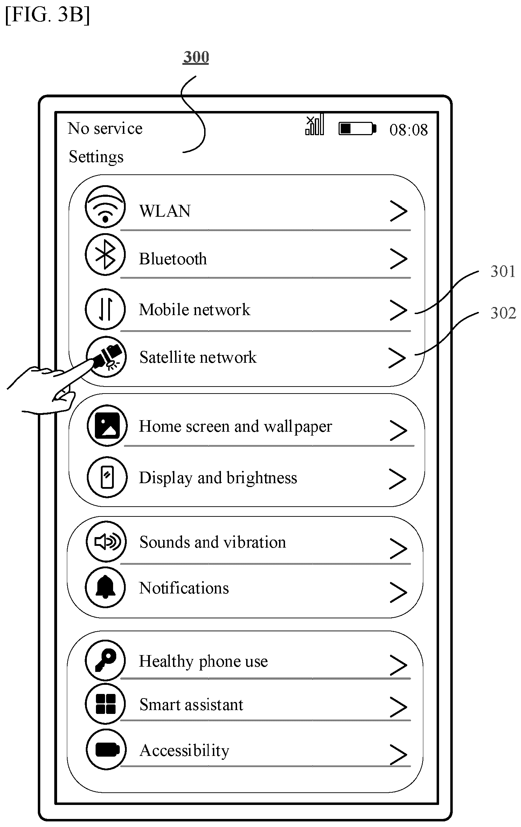

The electronic device 100 may receive and respond to a tap operation performed by the user on the setting application icon 206, and display a setting application interface 300 shown in FIG. 3B.

As shown in FIG. 3B, the setting application interface 300 may include one or more setting entries, for example, a Bluetooth entry, a mobile network entry 301, and a satellite network entry 302. Each setting entry may be used to trigger the electronic device 100 to display a corresponding function setting interface.

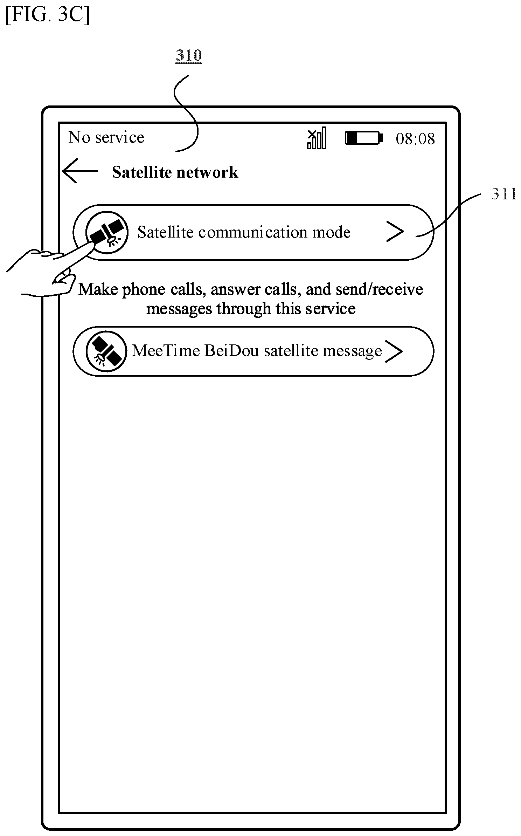

The electronic device 100 may receive and respond to a tap operation performed by the user on the satellite network entry 302, and display a satellite network interface 310 shown in FIG. 3C.

As shown in FIG. 3C, the satellite network interface 310 may include one or more satellite service setting entries, for example, a satellite communication mode entry 311, and optionally may further include a MeeTime BeiDou satellite message entry and the like. The satellite communication mode entry 311 may be used to trigger the electronic device 100 to display the satellite communication mode setting interface.

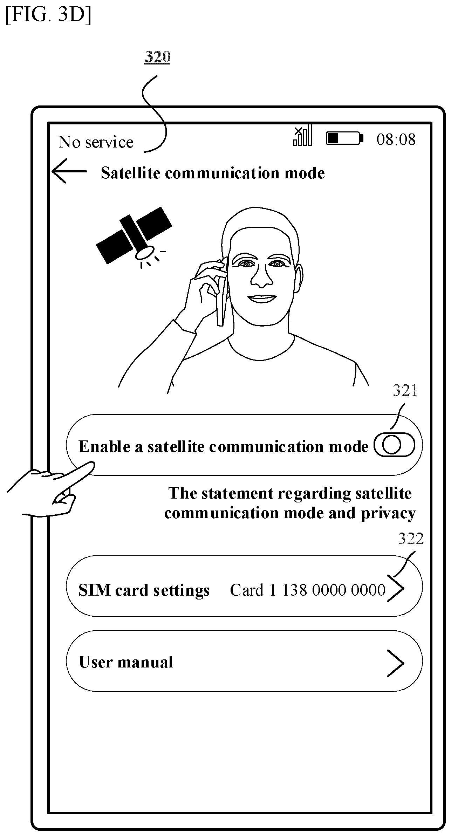

The electronic device 100 may receive and respond to a tap operation performed by the user on the satellite communication mode entry 311, and display a satellite communication mode setting interface 320 shown in FIG. 3D.

As shown in FIG. 3D, the satellite communication mode setting interface 320 may include an enable control 321 and a SIM card setting control 322. The enable control 321 may be configured to trigger the electronic device 100 to enable the satellite communication mode, or trigger the electronic device 100 to disable the currently-used satellite communication mode. Optionally, an on/off indicator may be further displayed on the enable control 321, to indicate whether the satellite communication mode is enabled. The SIM card setting control 322 may be configured to trigger the electronic device 100 to set a SIM card that uses the satellite communication mode. When only one SIM card is installed in the electronic device 100, or a default SIM card in the satellite communication mode is previously set, as shown in FIG. 3D, text "Card 1 138 0000 0000" may be displayed on the SIM card setting control 322, to prompt the user that the card 1 is currently selected by default as the SIM card that uses the satellite communication mode. Optionally, the satellite communication mode setting interface 320 may further include a user manual control. The user manual control may be used to trigger the electronic device 100 to display a user manual of the satellite communication mode.

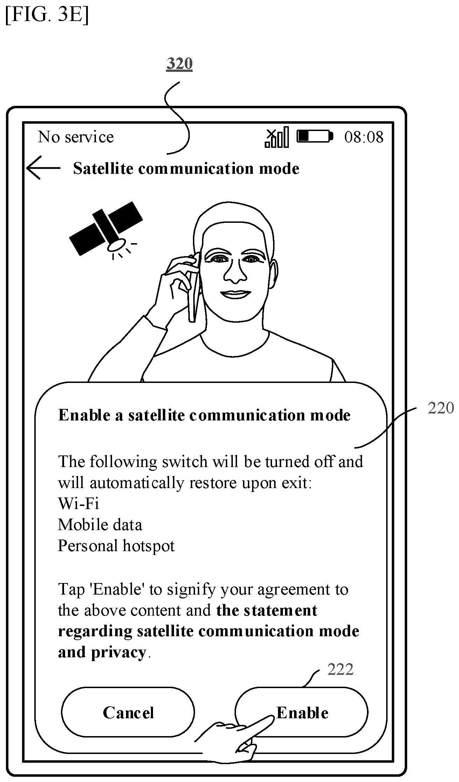

The electronic device 100 may receive and respond to a tap operation performed by the user on the enable control 321. As shown in FIG. 3E, an enabling prompt window 220 is displayed in the satellite communication mode setting interface 320. For specific content of the enabling prompt window 220, refer to the related descriptions in the embodiment shown in FIG. 2C. Details are not described herein again.

The electronic device 100 may receive and respond to a tap operation performed by the user on the enable control 222 in the enabling prompt window 220, and enable the satellite communication mode. In a process of enabling the satellite communication mode, the electronic device 100 may sequentially display pages such as the calibration page 230, the satellite searching page 240, the alignment page 250, and the satellite connection page 260 in the satellite communication mode setting interface 320. For specific content of the foregoing pages and a switching manner between the pages, refer to the related descriptions in the embodiments shown in FIG. 2D to FIG. 2I. Details are not described herein again. It should be noted that, in some embodiments, if it is detected that the electronic device 100 enables the satellite communication service not for the first time (or it is detected that the electronic device 100 enables the satellite communication service not for the first time within a preset time period, for example, 24 hours), the electronic device 100 may display the calibration page or the satellite searching page instead of displaying the enabling prompt window 220. This is not limited herein in this application.

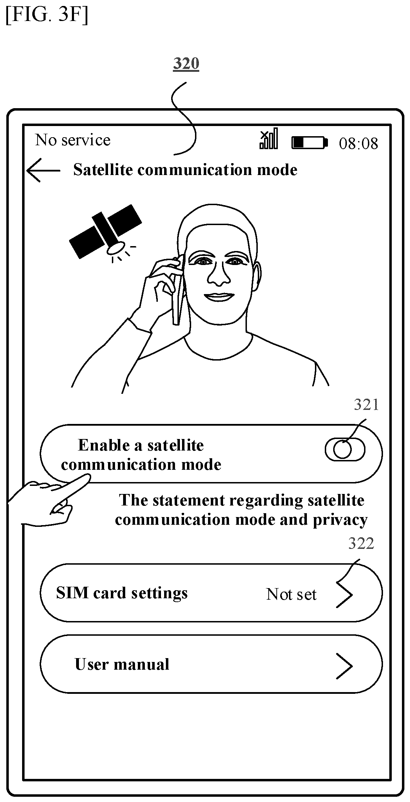

In some embodiments, if a plurality of SIM cards are installed in the electronic device 100, and the user has not set the default SIM card of the satellite communication mode before, the electronic device 100 may display the satellite communication mode setting interface 320 shown in FIG. 3F.

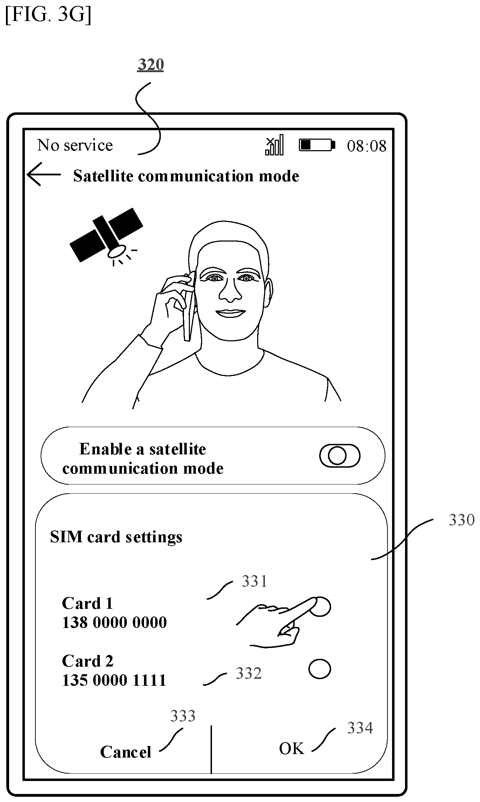

As shown in FIG. 3F, in the satellite communication mode setting interface 320, the SIM card setting control 322 does not display a card number of a SIM card. Optionally, text "Not set" may be further displayed to prompt the user that the SIM card that currently uses the satellite communication mode is not set. In the case shown in FIG. 3F, the electronic device 100 may receive and respond to a tap operation performed by the user on the enable control 321, and display a SIM card setting window 330 shown in FIG. 3G in the satellite communication mode setting interface 320.

As shown in FIG. 3G, the SIM card setting window 330 may include a plurality of SIM card entries, for example, a card 1 entry 331 and a card 2 entry 332. A number of the SIM card and a selection identifier may be further displayed on each SIM entry. The selection identifier indicates whether the SIM entry is selected. For example, when the selection identifier is a hollow circle, the SIM entry corresponding to the selection identifier is not selected; or when the selection identifier is a solid circle, the SIM entry corresponding to the selection identifier is selected. It may be understood that the selection identifier may alternatively be an identifier of another shape or another type. This is not limited herein in this application. The SIM entry may be further used to trigger the electronic device 100 to set a corresponding SIM to a SIM card that currently uses the satellite communication mode. In addition, the SIM card setting window 330 may further include a cancel control 333 and a confirm control 334. The cancel control 333 is configured to trigger the electronic device 100 to close the SIM card setting window 330. The confirm control 334 is configured to trigger the electronic device 100 to set a SIM card corresponding to a selected SIM entry to a SIM card that currently uses the satellite communication mode.

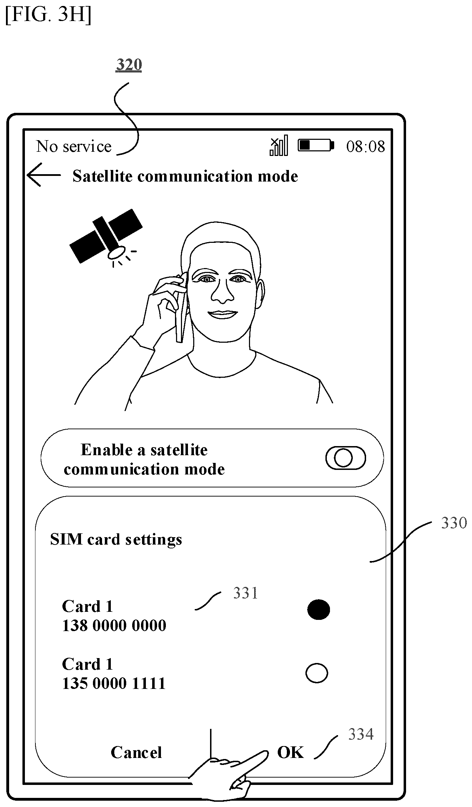

The electronic device 100 may receive and respond to a tap operation performed by the user on the card 1 entry 331. As shown in FIG. 3H, the electronic device 100 may fill a selection identifier in the card 1 entry 331 to be a solid circle, to prompt the user that the currently selected SIM entry is the card 1 entry 331.

The electronic device 100 may receive and respond to a tap operation performed by the user on the confirm control 334, set the card 1 to the SIM card that currently uses the satellite communication mode, enable the satellite communication mode, and close the SIM card setting window 330.

In some embodiments, the satellite communication mode setting interface may alternatively be entered by using another entry in the setting application interface.

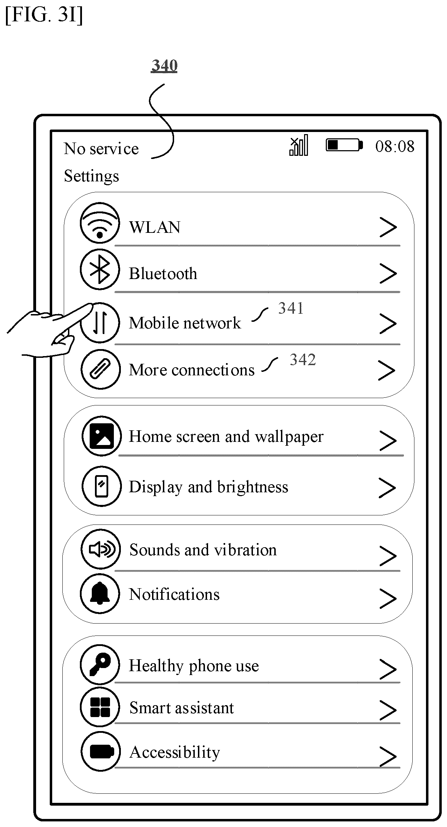

For example, as shown in FIG. 3I, the electronic device 100 may display a setting application interface 340. The setting application interface 340 may include one or more setting entries, for example, a mobile network entry 341 and a more connections entry 342. For a function of a setting entry, refer to the related descriptions in the embodiment shown in FIG. 3B.

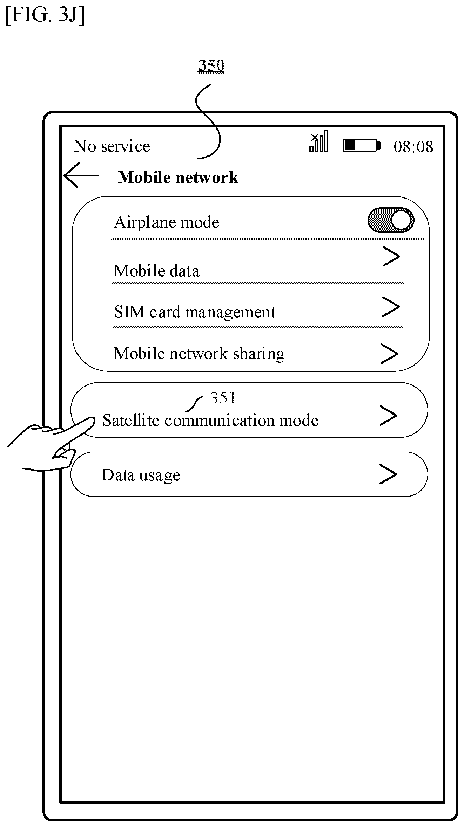

The electronic device 100 may receive and respond to a tap operation performed by the user on the mobile network entry 341, and display a mobile network interface 350 shown in FIG. 3J.

As shown in FIG. 3J, the mobile network interface 350 may include one or more mobile network entries, for example, a mobile data entry, a SIM card management entry, a satellite communication mode entry 351, and a data usage entry. Each mobile network entry is used to trigger the electronic device 100 to display a corresponding mobile network setting interface.

The electronic device 100 may receive and respond to a tap operation performed by the user on the satellite communication mode entry 351, and display a satellite communication mode setting interface 320 shown in FIG. 3D. Then, for a diagram of an interface in which the electronic device 100 enables the satellite communication mode, refer to the related content in the foregoing embodiment. Details are not described herein again.

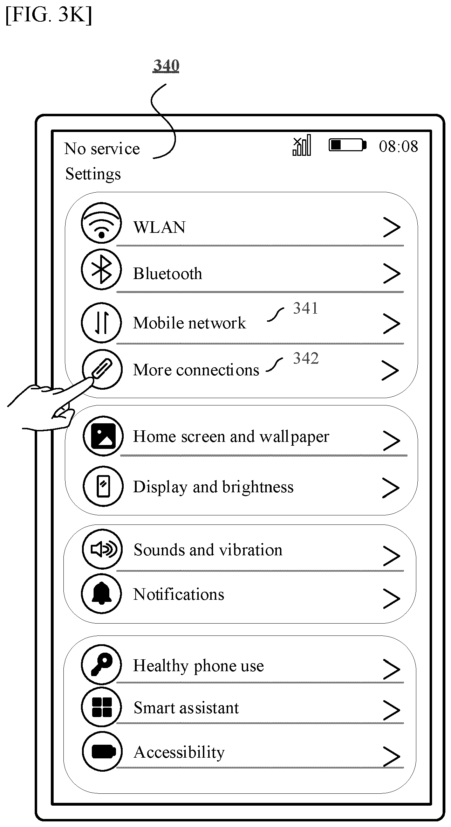

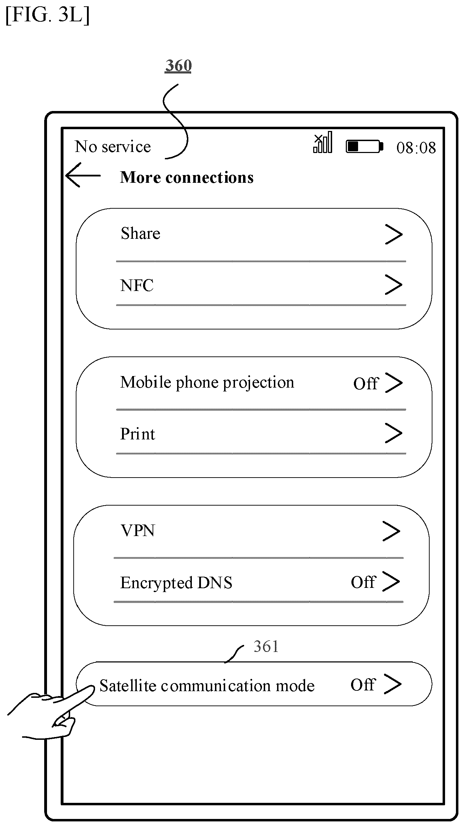

For another example, the electronic device 100 may display a setting application interface 340 shown in FIG. 3K. For specific content of the setting application interface 340, refer to the related content in the embodiment shown in FIG. 3I. The electronic device 100 may receive and respond to a tap operation performed by the user on the more connections entry 342, and display a more connections setting interface 360 shown in FIG. 3L.

As shown in FIG. 3L, the more connections setting interface 360 may include one or more connections entries, for example, a share entry, an NFC entry, a mobile phone projection entry, a print entry, and a satellite communication mode entry 361. Each connection entry is used to trigger the electronic device 100 to display a corresponding connection setting interface.

The electronic device 100 may receive and respond to a tap operation performed by the user on the satellite communication mode entry 361, and display a satellite communication mode setting interface 320 shown in FIG. 3D. Then, for a diagram of an interface in which the electronic device 100 enables the satellite communication mode, refer to the related content in the foregoing embodiment. Details are not described herein again.

In some application scenarios, if strength of a cellular network signal of the electronic device 100 is lower than a first threshold, the electronic device 100 may receive and respond to an operation that the user starts a first application (for example, a communication application like a call application, an information application, or a contact application), display a first interface of the first application, and display a satellite communication mode enabling control in the first interface. The electronic device 100 may receive and respond to input of the user for the satellite communication mode enabling control, and display the first page in the first interface. The first page includes the first indication information (including the satellite searching operation prompt and the alignment operation prompt). The first indication information indicates the user to adjust the posture of holding the electronic device 100, so that the electronic device 100 establishes the communication connection to the satellite. When the communication connection between the electronic device 100 and the satellite is successfully established, the electronic device 100 may display the second page, where the second page includes second indication information. The second indication information prompts the user that the electronic device 100 has successfully established the communication connection to the satellite, and prompt the user to maintain the current posture of holding the electronic device 100. In addition, the second page may further include a strength indicator. The strength indicator indicates strength of a satellite signal received by the electronic device 100. After the communication connection between the electronic device 100 and the satellite is successfully established, the electronic device 100 may communicate with another electronic device by using the satellite.

In this way, when it is detected that the cellular network signal of the electronic device 100 is lower than the first threshold, the electronic device 100 may also enable the satellite communication mode in response to an operation that the user enables the satellite communication mode in an application, for example, a call application or an information application. This can avoid application switching and improve a rate of enabling the satellite communication mode.

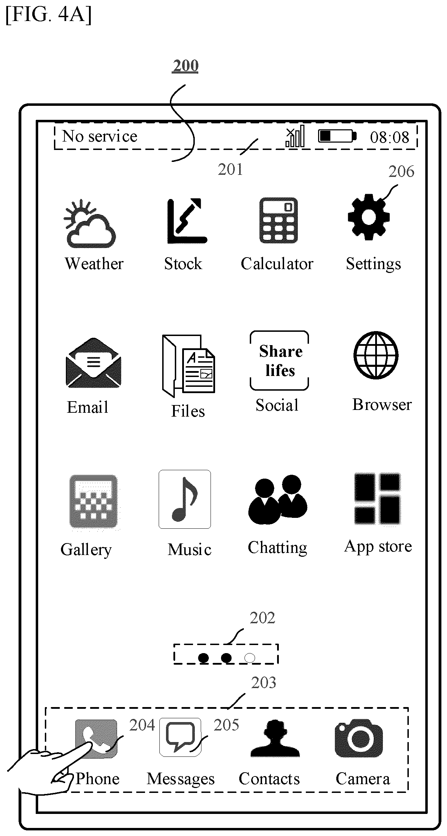

For example, as shown in FIG. 4A, the electronic device 100 displays the home screen 200. For specific content of the home screen 200, refer to the related descriptions in the embodiment shown in FIG. 2A.

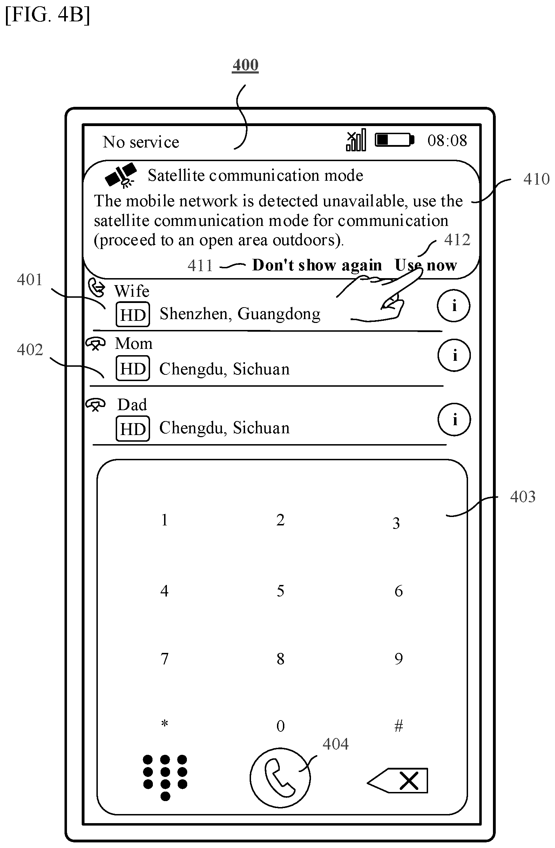

The electronic device 100 may receive and respond to a tap operation performed by the user on the phone application icon 204, display a phone application interface 400 shown in FIG. 4B, and display a satellite communication mode prompt window 410 in the phone application interface 400.

As shown in FIG. 4B, the phone application interface 400 may include one or more call records, for example, a call record 401 and a call record 402. Each call record may record information about a peer device, for example, a SIM card number, a contact, a SIM card position, a dialing/answering indicator, and a call type indicator. In addition, the call record may also be used to trigger the electronic device 100 to dial an electronic device corresponding to a SIM card number/contact in the call record. The phone application interface 400 may further include a dialing keyboard 403. The dialing keyboard 403 may include a plurality of number keys, a dialing key 404, and the like. The user may input the SIM card number of the peer device by using the dialing keyboard 403, and trigger, by using the dialing key 404, the electronic device 100 to dial the peer device. The satellite communication mode prompt window 410 may include a satellite communication mode prompt. The satellite communication mode prompt prompts the user that the electronic device 100 cannot currently use cellular network communication (or signal quality of a cellular network in an area in which the electronic device 100 is currently located is poor), and ask the user whether to enable the satellite communication mode. For example, the satellite communication mode prompt may include text "The mobile network is detected unavailable, use the satellite mode for communication (proceed to an open area outdoors)". The satellite communication mode prompt window 410 may further include a don't-show-again control 411 and a use-now control 412. The don't-show-again control 411 may be configured to trigger the electronic device 100 to close the satellite communication mode prompt window 410. The use-now control 412 may be configured to trigger the electronic device 100 to enable the satellite communication mode.

The electronic device 100 may receive and respond to a tap operation performed by the user on the use-now control 412, and enable the satellite communication mode. In a process of enabling the satellite communication mode, the electronic device 100 may sequentially display the enabling prompt window 220 shown in FIG. 2C and the satellite real-time pages (for example, pages such as the calibration page 230, the satellite searching page 240, the alignment page 250, and the satellite connection page 260) in the embodiments shown in FIG. 2D to FIG. 2I in the phone application interface 400. It should be noted that the satellite real-time page may be displayed in the phone application interface 400 in an overlay manner, or may completely block the phone application interface 400.

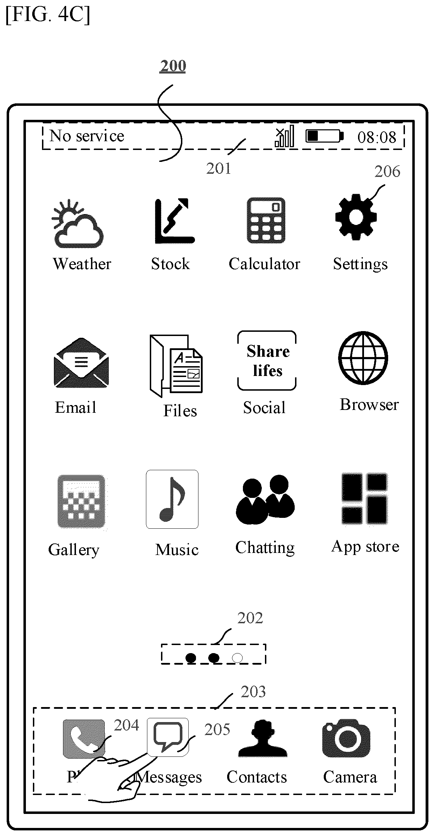

For another example, the electronic device 100 displays the home screen 200 shown in FIG. 4C. For specific descriptions of the home screen 200, refer to the embodiment shown in FIG. 2A.

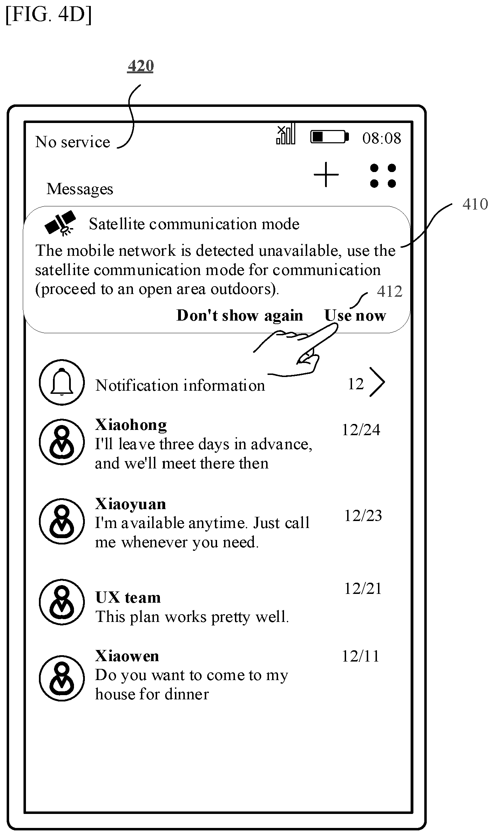

The electronic device 100 may receive and respond to a tap operation performed by the user on the information application icon 205, display an information application interface 420 shown in FIG. 4D, and display a satellite communication mode prompt window 410 in the information application interface 420.

As shown in FIG. 4D, the information application interface 420 may include a notification information entry and an information list. The information list may include one or more information entries. The notification information entry may be used to trigger the electronic device 100 to display the notification information list. The information entry may be used to trigger the electronic device 100 to display corresponding information. For specific content of the satellite communication mode prompt window 410, refer to the related content in the embodiment shown in FIG. 4B. Details are not described herein again.

In this case, the electronic device 100 may also receive and respond to a tap operation performed by the user on the use-now control 412, enable the satellite communication mode, and sequentially display pages such as the enabling prompt window 220, the calibration page 230, the satellite searching page 240, the alignment page 250, and the satellite connection page 260 in the information application interface 420. For specific content of the enabling prompt window 220 and each page and a manner of switching between pages, refer to the related descriptions in the embodiments shown in FIG. 2C to FIG. 2I. Details are not described herein again.

In some application scenarios, the electronic device 100 displays the interface of the first application (for example, the communication application like the phone application or the information application). The interface includes a control configured to dial a number or send an SMS message. The electronic device 100 may receive and respond to input of the user for the control, and display a satellite enabling control when it is detected that the strength of the cellular network signal of the electronic device 100 is lower than the first threshold. The electronic device 100 may receive and respond to input of the user for the satellite communication mode enabling control, and display the first page. The first page includes the first indication information (including the satellite searching operation prompt and the alignment operation prompt). The first indication information indicates the user to adjust the posture of holding the electronic device 100, so that the electronic device 100 establishes the communication connection to the satellite. When the communication connection between the electronic device 100 and the satellite is successfully established, the electronic device 100 may display the second page, where the second page includes second indication information. The second indication information prompts the user that the electronic device 100 has successfully established the communication connection to the satellite, and prompt the user to maintain the current posture of holding the electronic device 100. In addition, the second page may further include a strength indicator. The strength indicator indicates strength of a satellite signal received by the electronic device 100. After the communication connection between the electronic device 100 and the satellite is successfully established, the electronic device 100 may re-initiate communication to the electronic device 200.

In this way, after being successfully connected to the satellite, the electronic device 100 may immediately re-initiate communication to the electronic device 200. This simplifies operation steps and improves communication efficiency.

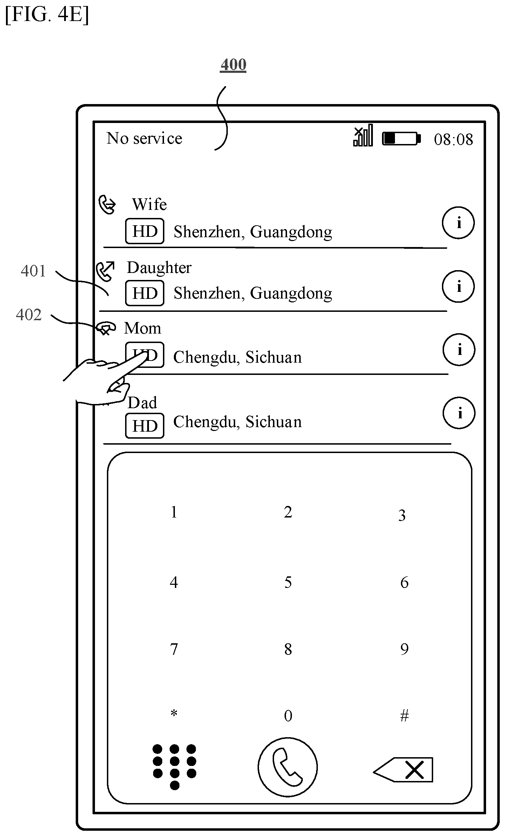

For example, the electronic device 100 displays the phone application interface 400 shown in FIG. 4E. For specific content of the phone application interface 400, refer to the related descriptions in the embodiment shown in FIG. 4B. Details are not described herein again.

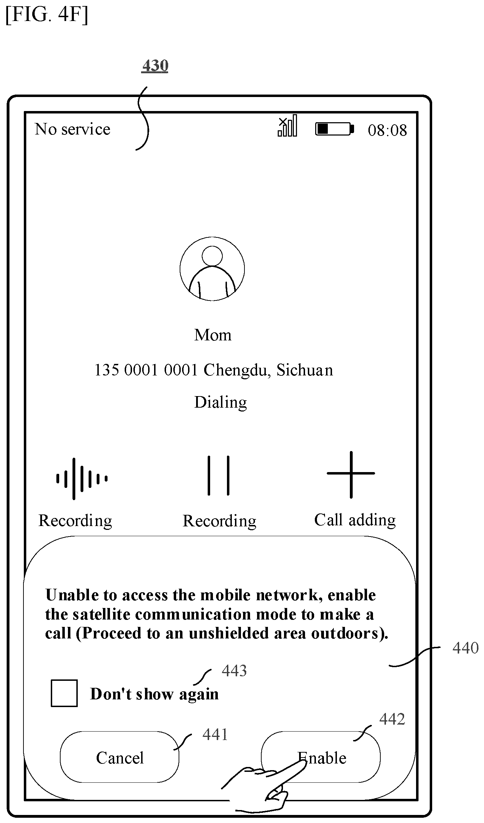

The electronic device 100 may receive and respond to a tap operation performed by the user on the call record 402. When it is detected that the strength of the cellular network signal in the area in which the electronic device 100 is located is lower than the first threshold, the electronic device 100 may display a call screen 430 shown in FIG. 4F, and display a satellite communication mode prompt window 440 on the call screen 430.

As shown in FIG. 4F, the call screen 430 may include a name and/or a SIM card number of a called party, and may further include one or more call controls, for example, a recording control and a call adding control. The satellite communication mode prompt window 440 may include a satellite communication mode prompt. For a function and content of the satellite communication mode prompt, refer to the related descriptions in the embodiment shown in FIG. 4B. In addition, the satellite communication mode prompt window 440 may further include a cancel control 441 and an enable control 442. Optionally, the satellite communication mode prompt window 440 may further include a don't-show-again control 443. The cancel control 441 is configured to trigger the electronic device 100 to close the satellite communication mode prompt window 440. The enable control 442 may be configured to trigger the electronic device 100 to enable the satellite communication mode. The don't-show-again control 443 may be configured to trigger the electronic device 100 to stop displaying the satellite communication mode prompt window 440.

The electronic device 100 may receive and respond to a tap operation performed by the user on the enable control 442, and enable the satellite communication mode. For content that the electronic device 100 sequentially displays on the call screen 430 in a process of enabling the satellite communication mode, refer to the related descriptions in the embodiments shown in FIG. 2C to FIG. 2I. Details are not described herein again.

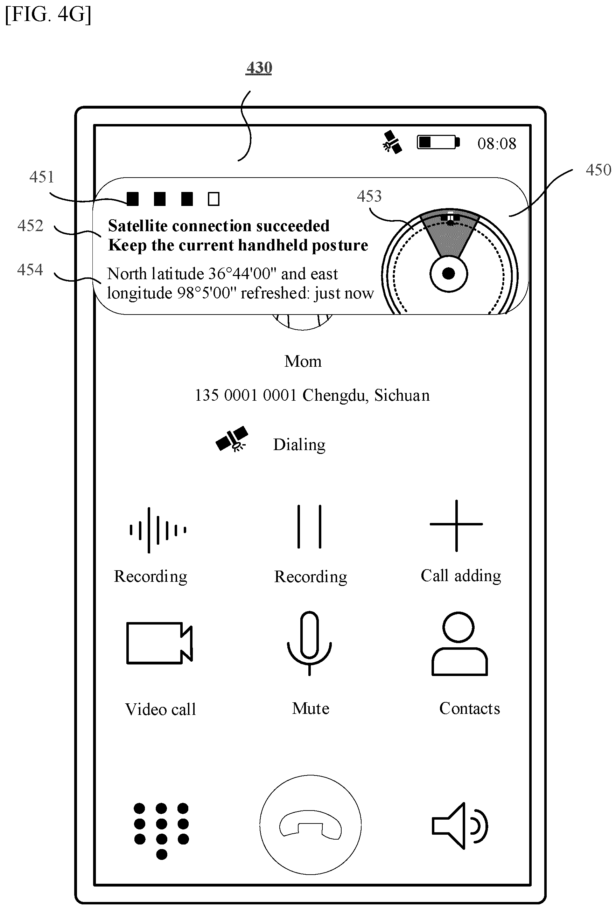

After the electronic device 100 successfully establishes the communication connection to the satellite, the electronic device 100 may display the call screen 430 shown in FIG. 4G, and display a satellite real-time card 450 on the call screen 430.

As shown in FIG. 4G, for specific descriptions of the call screen 430, refer to the related content in the embodiment shown in FIG. 4F. The satellite real-time card 450 may include a strength indicator 451 and an operation prompt (including a text prompt 452 and an animation prompt 453), and optionally may further include longitude and latitude information 454. For specific content and functions of the strength indicator 451, the text prompt 452, the animation prompt 453, and the longitude and latitude information 454, refer to the related descriptions in the embodiments shown in FIG. 2H to FIG. 2J. Details are not described herein again. It should be noted that the animation prompt 453 may be some or all of the animation prompt 265 shown in FIG. 2I.

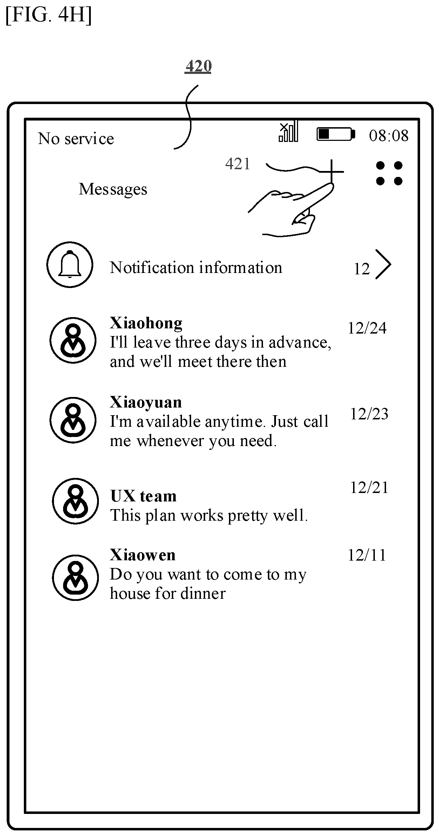

For another example, the electronic device 100 may display the information application interface 420 shown in FIG. 4H. The information application interface 420 may include a new message control 421. The new message control 421 is used to trigger the electronic device 100 to display a new message interface. For other specific content of the information application interface 420, refer to the related descriptions in the embodiment shown in FIG. 4D. Details are not described herein again.

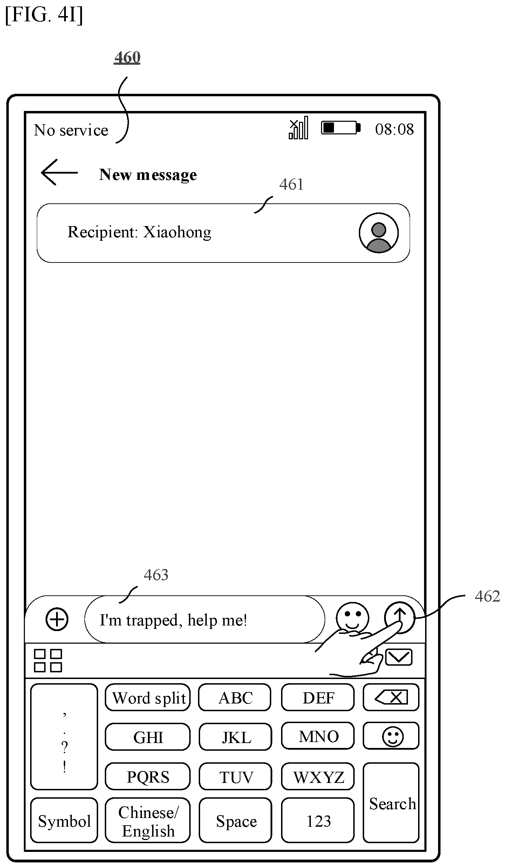

The electronic device 100 may receive and respond to a tap operation performed by the user on the new message control 421, and display the new message interface 460 shown in FIG. 4I.

As shown in FIG. 4I, the new message interface 460 may include a title "new message", a recipient bar 461, and one or more information editing controls, for example, a keyboard, an information sending control 462, and an information editing bar 463. The recipient bar 461 may be used to display one or more selected recipients, for example, "Xiaohong". The recipient bar 461 may be further configured to trigger the electronic device 100 to display a contact list, so that the user selects more recipients. The information sending control 462 may be configured to trigger the electronic device 100 to send information displayed in the information editing bar 463 to an electronic device corresponding to the recipient. The information editing bar 463 may be configured to display information input by the user, for example, "I'm trapped, help me!".

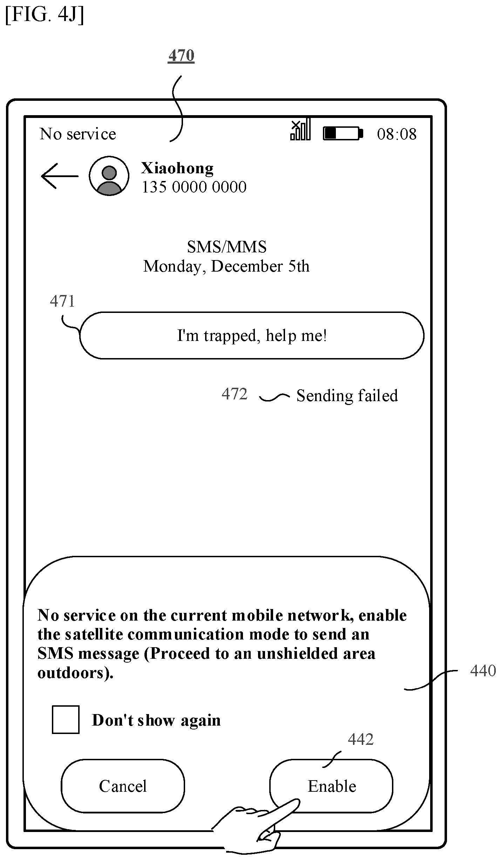

The electronic device 100 may receive and respond to a tap operation performed by the user on the information sending control 462. When it is detected that the strength of the cellular network signal in the area in which the electronic device 100 is located is lower than the first threshold, an information sending interface 470 shown in FIG. 4J is displayed, and the satellite communication mode prompt window 440 is displayed in the information sending interface 470.

As shown in FIG. 4J, the information sending interface 470 may include a recipient and sent information 471. A sending status 472 may be further displayed below the information 471, to notify the user whether the information 471 is successfully sent. In this case, because the strength of the cellular network signal in the area in which the electronic device 100 is located is lower than the first threshold, the information cannot be sent by using the cellular network. Therefore, the sending status 472 may display text "Sending failed". For a function and specific content of the satellite communication mode prompt window 440, refer to the related descriptions in the embodiment shown in FIG. 4F. Details are not described herein again.

The electronic device 100 may receive and respond to a tap operation performed by the user on the enable control 442, and enable the satellite communication mode. For a change of an interface in a process in which the electronic device 100 enables the satellite communication mode, refer to the related descriptions in the foregoing embodiment. Details are not described herein again.

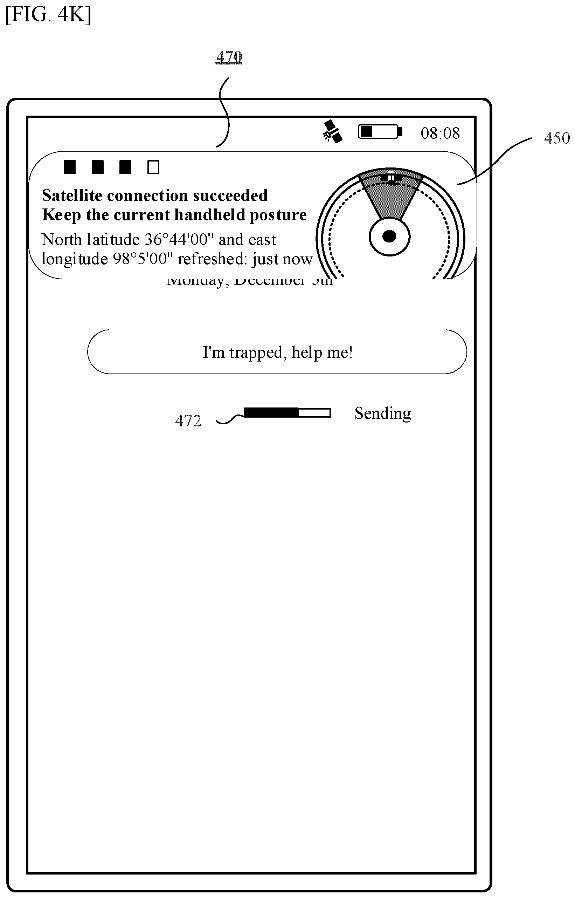

After the electronic device 100 successfully establishes the communication connection to the satellite, the electronic device 100 may display the information sending interface 470 shown in FIG. 4K, and display the satellite real-time card 450 in the information sending interface 470.

As shown in FIG. 4K, for specific content of the information sending interface 470, refer to the related descriptions in the embodiment shown in FIG. 4J. For specific content of the satellite real-time card 450, refer to the related descriptions in the embodiment shown in FIG. 4G. Details are not described herein again. It should be noted that, in this case, the sending status 472 of the information 471 in the information sending interface 470 may include text "Sending", to prompt the user that the electronic device 100 is sending the information by using the satellite. In addition, the sending status 472 may further include a sending progress bar, configured to prompt the user of a sending progress of the information 471.

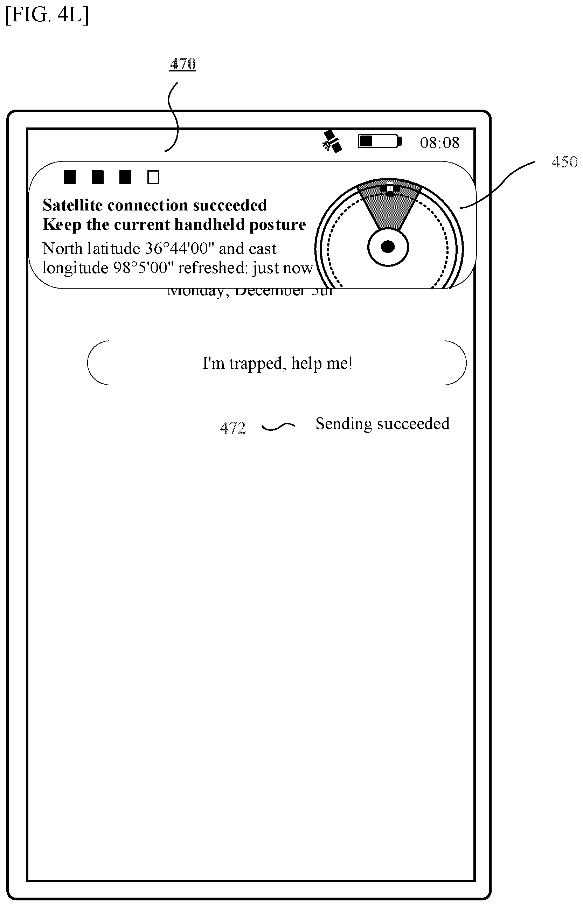

After the electronic device 100 successfully sends the information by using the satellite, as shown in FIG. 4L, the electronic device 100 may change the sending status 472.

As shown in FIG. 4L, after the electronic device 100 successfully sends the information by using the satellite, the sending status 472 of the information 471 in the information sending interface 470 may be switched to text "Sending succeeded", to prompt the user that the information 471 has been successfully sent.

It should be noted that, in some embodiments, if the electronic device 100 enables the satellite communication mode in an application 1 (a phone application, an SMS application, or the like), a call application icon, an information application icon, or the like may not be displayed on the satellite connection page displayed by the electronic device 100.

In some application scenarios, when establishing the communication connection to the satellite, the electronic device 100 may also display the satellite real-time card. The satellite real-time card may include the strength indicator and the operation prompt (including the text prompt and the animation prompt), and optionally may further include the longitude and latitude information. The satellite real-time card may prompt the user of a status of establishing the communication connection between the electronic device 100 and the satellite, and may further prompt the user of the posture of holding the device.

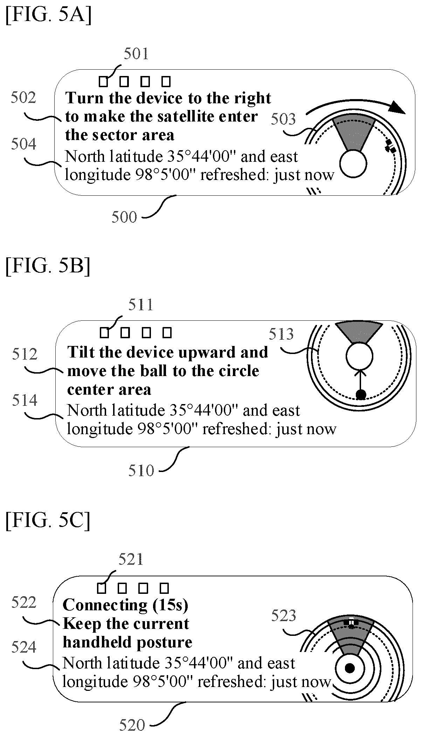

For example, FIG. 5A to FIG. 5G are diagrams of a group of satellite real-time cards according to an embodiment of this application.

The electronic device 100 may receive and respond to input of the user for the card display control 255 on the alignment page 250 shown in FIG. 2F, close the alignment page 250, and display an alignment card 500 shown in FIG. 5A.

As shown in FIG. 5A, the alignment card 500 may include a strength indicator 501 and an operation prompt (including a text prompt 502 and an animation prompt 503). Optionally, the alignment card 500 may further include longitude and latitude information 504. For specific content of the strength indicator 501, the operation prompt (including the text prompt 502 and the animation prompt 503), and the longitude and latitude information 504, refer to the related content of the alignment page 250 in the embodiment shown in FIG. 2F. Details are not described herein again. It should be noted that the animation prompt 503 may be some or all of the animation prompt 254 on the alignment page 250 shown in FIG. 2F. In addition, when the user turns the electronic device 100, a relative position of the satellite in the animation prompt 503 relative to the sector area may also change in real time, and the text prompt 502 may also change in real time, to prompt the user to move the satellite in the animation prompt 503 to the sector area.

After the user turns the electronic device 100 to move the satellite in the animation prompt 503 to the sector area, the satellite real-time card may be updated from the alignment card 500 to an alignment card 510 shown in FIG. 5B.

As shown in FIG. 5B, the alignment card 510 may include a strength indicator 511 and an operation prompt (including a text prompt 512 and an animation prompt 513). Optionally, the alignment card 510 may further include longitude and latitude information 514. For a relationship between the alignment card 510 and the alignment page 250 shown in FIG. 2G, refer to the related descriptions in the embodiment shown in FIG. 5A. When the user turns the electronic device 100, a relative position of the ball in the animation prompt in the alignment card 510 relative to the circle center area may also change in real time, and the text prompt 512 may also change in real time, to prompt the user to move the ball in the animation prompt to the circle center area.

After the user tilts the electronic device 100 to move the ball in the animation prompt 513 to the circle center area, the satellite real-time card may be updated from the alignment card 510 to a satellite connection card 520 shown in FIG. 5C.

As shown in FIG. 5C, the satellite connection card 520 may include a strength indicator 521 and an operation prompt (including a text prompt 522 and an animation prompt 523), and optionally may further include longitude and latitude information 524. The satellite connection card 520 may be configured to prompt the user that the electronic device 100 is currently establishing a communication connection to the satellite. For a correspondence between the satellite connection card 520 and the satellite connection page 260 shown in FIG. 2H, refer to the related content in the embodiment shown in FIG. 5A.

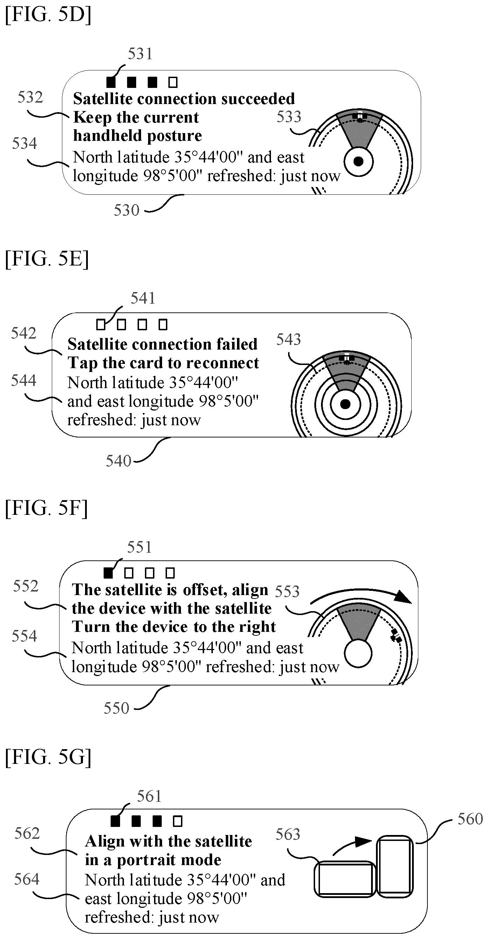

After the electronic device 100 successfully establishes the communication connection to the satellite, the satellite real-time card may be updated from the satellite connection card 520 to a satellite connection card 530 shown in FIG. 5D.

As shown in FIG. 5D, the satellite connection card 530 may include a strength indicator 531 and an operation prompt (including a text prompt 532 and an animation prompt 533), and optionally may further include longitude and latitude information 534. The satellite connection card 530 may be configured to prompt the user that the electronic device 100 has successfully established a communication connection to the satellite. For a correspondence between the satellite connection card 530 and the satellite connection page 260 shown in FIG. 2I, refer to the related content in the embodiment shown in FIG. 5A.

If the electronic device 100 fails to be connected to the satellite, the satellite real-time card may be updated from the satellite connection card 520 to a satellite connection card 540 shown in FIG. 5E.

As shown in FIG. 5E, the satellite connection card 540 may include a strength indicator 541 and an operation prompt (including a text prompt 542 and an animation prompt 543), and optionally may further include longitude and latitude information 544. The satellite connection card 540 may be configured to prompt the user that the electronic device 100 fails to be connected to the satellite. For a correspondence between the satellite connection card 540 and the satellite connection page 260 shown in FIG. 2L, refer to the related content in the embodiment shown in FIG. 5A. In this case, the text prompt 542 may include text "Satellite connection failed", "Tap the card to reconnect", and the like.

After the electronic device 100 successfully establishes the communication connection to the satellite, if the electronic device 100 is offset relative to the satellite, the satellite real-time card may be updated from the satellite connection card 530 to a satellite connection card 550 shown in FIG. 5F.

As shown in FIG. 5F, the satellite connection card 550 may include a strength indicator 551 and an operation prompt (including a text prompt 552 and an animation prompt 553), and optionally may further include longitude and latitude information 554. The satellite connection card 550 may be configured to prompt the user that the electronic device 100 is offset relative to the satellite, and the user needs to turn the device to align with the satellite. For a correspondence between the satellite connection card 550 and the satellite connection page 260 shown in FIG. 2J, refer to the related content in the embodiment shown in FIG. 5A.

In some embodiments, if the electronic device 100 is horizontally held by the user, the satellite real-time card may be a satellite real-time card 560 shown in FIG. 5G, to prompt the user to adjust the electronic device 100 to be vertically held.

As shown in FIG. 5G, the satellite connection card 560 may include a strength indicator 561 and an operation prompt (including a text prompt 562 and an animation prompt 563), and optionally may further include longitude and latitude information 564. The operation prompt may prompt the user to turn the electronic device 100 clockwise by 90° from horizontal holding to vertical holding. The horizontal holding means that a long side of the electronic device 100 is parallel to the ground, and a short side is perpendicular to the ground. The vertical holding means that a long side of the electronic device 100 is perpendicular to the ground, and a short side is parallel to the ground.

It may be understood that FIG. 5A to FIG. 5G are merely examples of the satellite real-time cards. In some embodiments, if an azimuth angle and/or a pitch angle of an antenna of the electronic device 100 relative to the satellite are/is different from those in the foregoing embodiments, the operation prompt in the satellite real-time card may also be correspondingly adjusted. This is not limited herein in this application.

In some application scenarios, in a process of establishing the communication connection to the satellite (or after establishing the communication connection), the electronic device 100 displays a satellite real-time page (including any one of pages such as the calibration page, the satellite searching page, the alignment page, and the satellite connection page in the foregoing embodiment). The electronic device 100 may receive and respond to input of the user for the satellite real-time page (for example, input for the card display control on the satellite real-time page), close the satellite real-time page, and display a satellite real-time card corresponding to the satellite real-time page. The satellite real-time card may include some or all content of the satellite real-time page. The electronic device 100 may receive and respond to an operation (for example, an up-slide operation or a left-slide operation) performed by the user on the satellite real-time card, close the satellite real-time card, and display a satellite real-time capsule. The satellite real-time capsule may indicate strength of a current satellite signal. The electronic device 100 may also receive and respond to input of the user for the satellite real-time capsule, close the satellite real-time capsule, and display the satellite real-time card. The electronic device 100 may further receive and respond to input of the user for the satellite real-time card, close the satellite real-time card, and display a satellite real-time page corresponding to the satellite real-time card.

In this way, the user can switch between the satellite real-time page, the satellite real-time card, and the satellite real-time capsule through convenient operations.

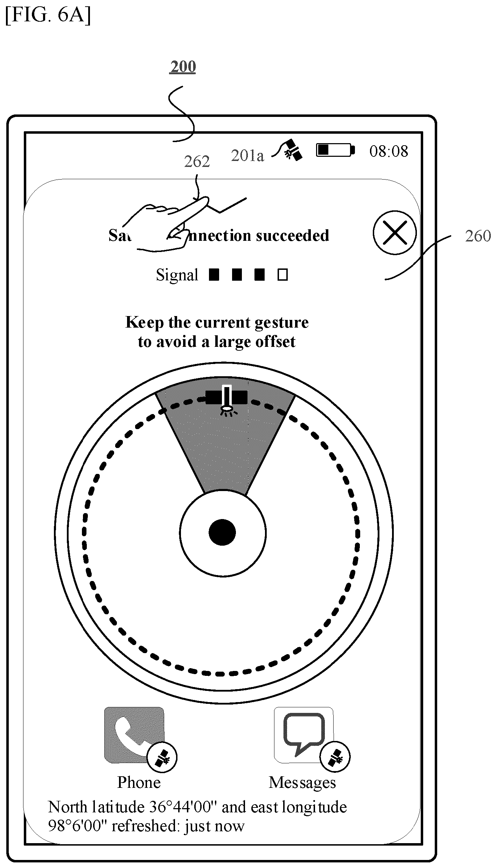

For example, as shown in FIG. 6A, the electronic device 100 displays the home screen 200, and displays the satellite connection page 260 on the home screen 200. For specific content of the satellite connection page 260, refer to the related descriptions in the embodiment shown in FIG. 2I. Details are not described herein again. A satellite symbol 201a is further displayed on the home screen 200, to prompt the user that the satellite communication mode is enabled.

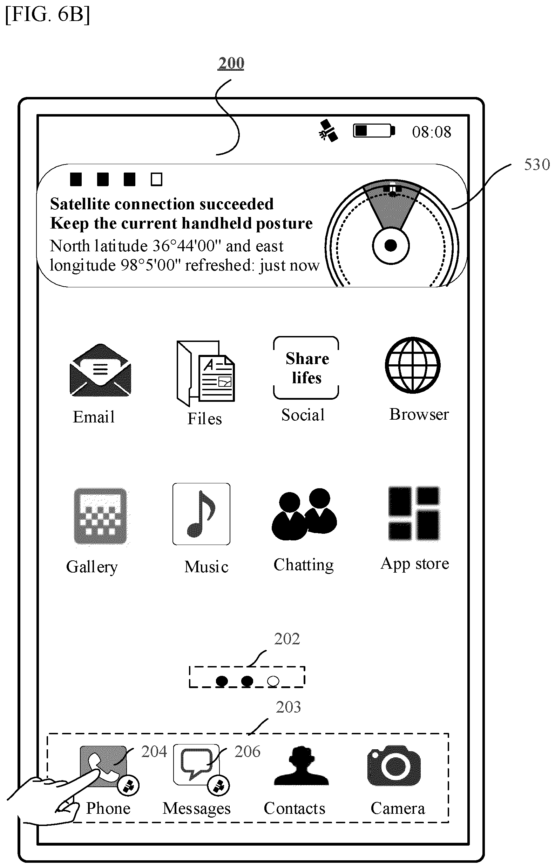

The electronic device 100 may receive and respond to a tap operation performed by the user on the card display control 262. As shown in FIG. 6B, the electronic device 100 may close the satellite connection page 260, and display the satellite connection card 530 on the home screen 200. For specific content of the satellite connection card 530, refer to the related descriptions in the embodiment shown in FIG. 5D.

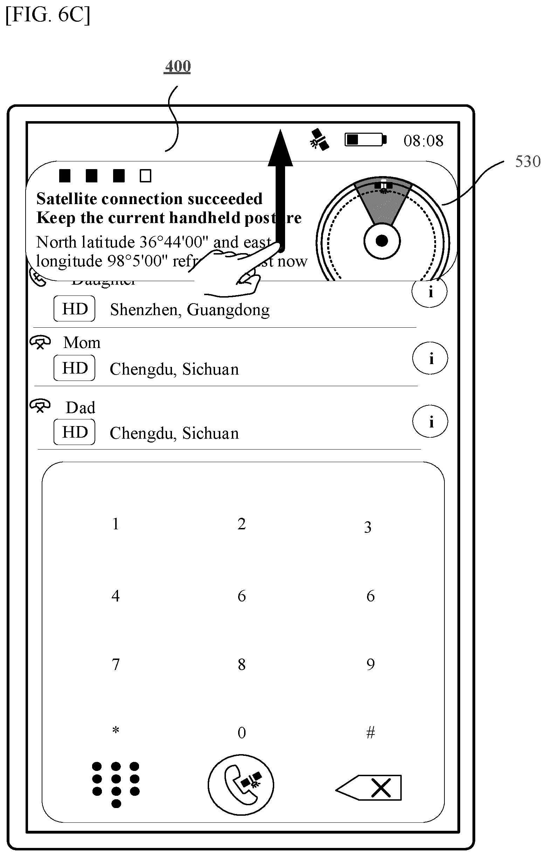

The electronic device 100 may receive and respond to a tap operation performed by the user on the phone application icon 204 on the home screen 200. As shown in FIG. 6C, the electronic device 100 may display the phone application interface 400, and the satellite connection card 530 is displayed in the phone application interface 400.

As shown in FIG. 6C, for specific content of the phone application interface 400, refer to the related content in the embodiment shown in FIG. 4B, and the satellite connection card 530 is displayed in the phone application interface 400.

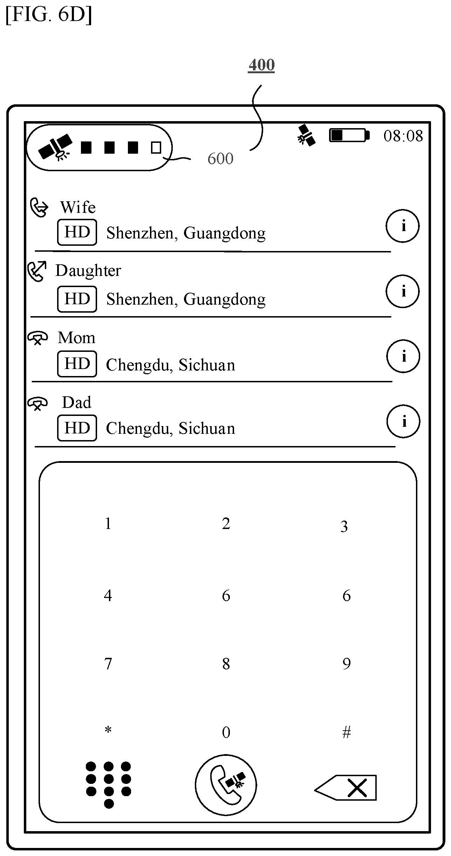

The electronic device 100 may receive and respond to an up-slide operation performed by the user on the satellite connection card 530. As shown in FIG. 6D, the satellite connection card 530 is closed, and a satellite real-time capsule 600 is displayed.

As shown in FIG. 6D, the electronic device 100 may close the satellite connection card 530, and display the satellite real-time capsule 600. The satellite real-time capsule 600 may be in a capsule shape shown in FIG. 6D, or may be in another shape. This is not limited herein in this application. The satellite real-time capsule 600 may include a strength indicator, to prompt the user of the strength of the current satellite signal. For example, it may be learned from the satellite real-time capsule 600 shown in FIG. 6D that the current signal strength is three bars. A satellite symbol may also be displayed in the satellite real-time capsule 600. In some embodiments, the electronic device 100 may display satellite real-time capsules of different colors based on a satellite connection status. For example, when the electronic device 100 is connected to the satellite, the satellite real-time capsule is displayed in green. When the electronic device 100 is disconnected from the satellite, the satellite real-time capsule is displayed in blue. In some other embodiments, the electronic device 100 may alternatively display the satellite real-time capsule in red when disconnecting from the satellite, display the satellite real-time capsule in blue in a process of re-establishing a connection to the satellite, display the satellite real-time capsule in green after establishing a connection to the satellite, and the like. A relationship between a color of the satellite real-time capsule and the satellite connection status is not limited herein in this application.

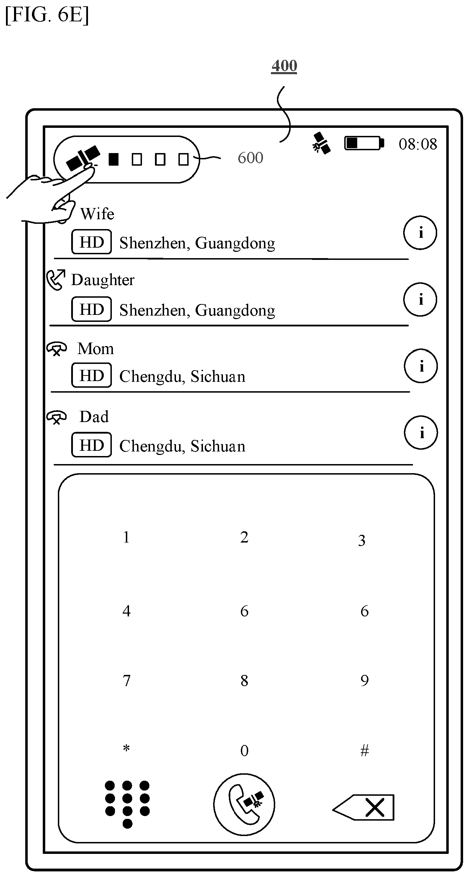

When the electronic device 100 is offset to the left relative to the satellite, the satellite signal strength weakens. As shown in FIG. 6E, the electronic device 100 may change the signal strength indicated by the satellite real-time capsule 600.

As shown in FIG. 6E, after the satellite signal strength weakens, it may be learned from the satellite real-time capsule 600 that the current signal strength is one bar. It may be understood that FIG. 6E is merely an example for the description that the signal strength indicated by the satellite real-time capsule 600 changes in real time based on the current satellite signal strength. In some embodiments, the signal strength indicated by the satellite real-time capsule 600 may alternatively be signal strength different from that in the foregoing embodiments. This is not limited in this application.

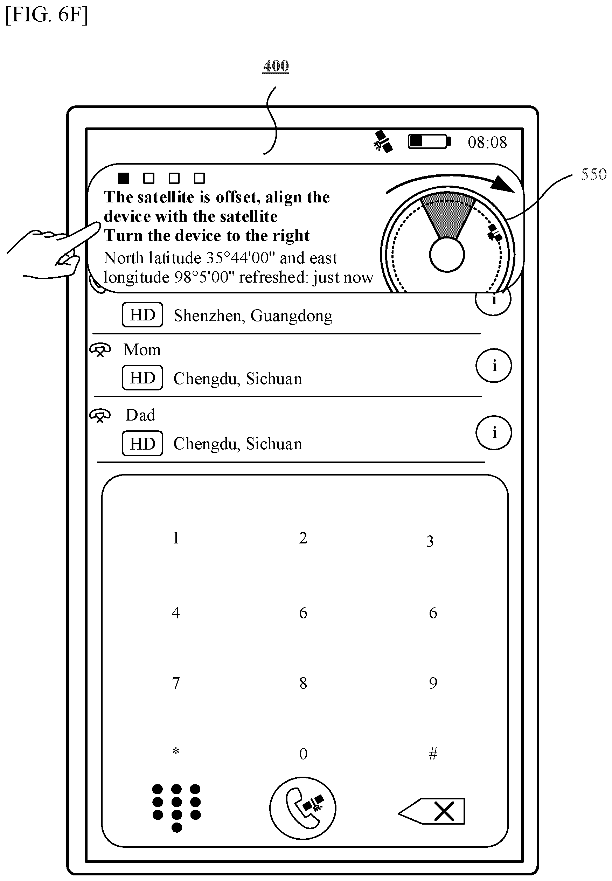

The electronic device 100 may receive and respond to a tap operation performed by the user on the satellite real-time capsule 600. As shown in FIG. 6F, the satellite real-time capsule 600 is closed, and the satellite connection card 550 is displayed. For specific content of the satellite connection card 550, refer to the related descriptions in the embodiment shown in FIG. 5E.

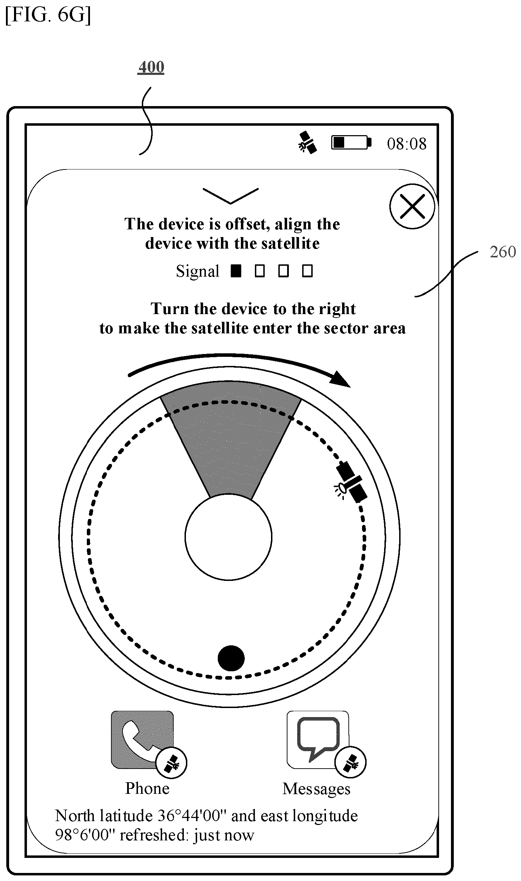

The electronic device 100 may receive and respond to a tap operation performed by the user on the satellite connection card 550. As shown in FIG. 6G, the satellite connection card 550 is closed, and the satellite connection page 260 is displayed in the phone application interface 400. Herein, for specific content of the satellite connection page 260, refer to the related descriptions in the embodiment shown in FIG. 2J.

It may be understood that FIG. 6A to FIG. 6G are merely examples. In some embodiments, the electronic device 100 may also perform switching between the satellite real-time page, the satellite real-time card, and the satellite real-time capsule in another interface (for example, the phone application interface, the setting application interface, or the information application interface). This is not limited herein in this application.

In some application scenarios, after the electronic device 100 successfully establishes the communication connection to the satellite, the electronic device 100 may receive and respond to a dialing operation of the user, and display an in-call screen. The in-call screen includes a satellite dialing prompt and a position sending control. The satellite dialing prompt prompts the user that the satellite communication mode is currently used for dialing. The position sending control is configured to trigger the electronic device 100 to send current position information (for example, longitude and latitude) of the electronic device 100 to the electronic device 200. After the call is answered, the electronic device 100 may close the satellite dialing prompt, and display a satellite call prompt. The satellite call prompt prompts the user that the satellite is being used for a call, and further prompts the user with call time. In addition, in a process in which the electronic device 100 dials and makes a call to the electronic device 200, the electronic device 100 further displays any one of the satellite real-time page, the satellite real-time card, and the satellite real-time capsule, to prompt the user with satellite signal strength.

In this way, after the electronic device 100 establishes the communication connection to the satellite, the electronic device 100 may make a call to another electronic device.

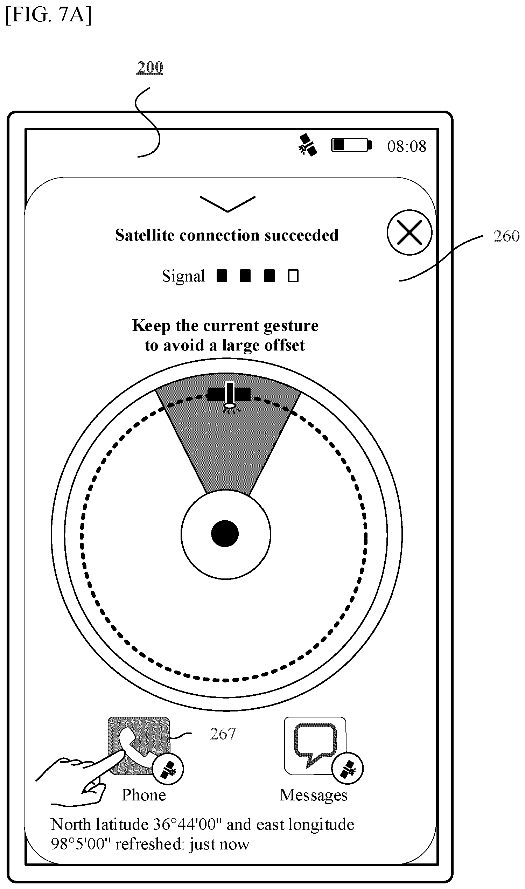

For example, as shown in FIG. 7A, the electronic device 100 may display the satellite connection page 260 on the home screen 200. For specific content of the satellite connection page 260, refer to the related content in the embodiment shown in FIG. 2I.

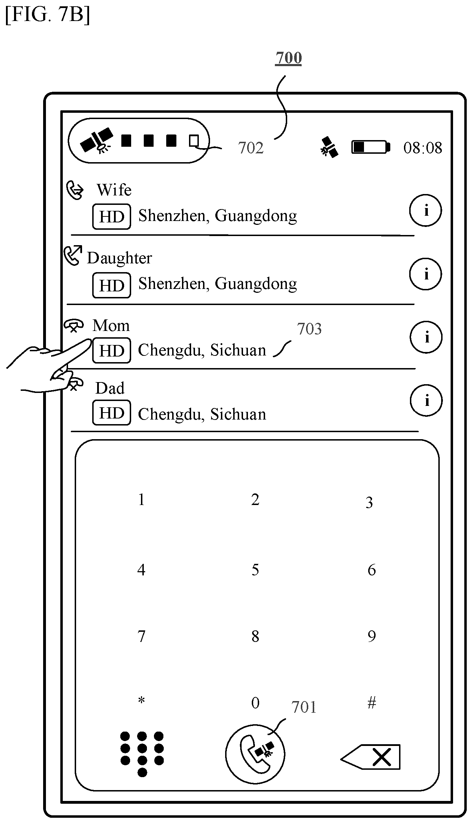

The electronic device 100 may receive and respond to a tap operation performed by the user on the phone application icon 267, and display a phone application interface 700 shown in FIG. 7B.

As shown in FIG. 7B, the phone application interface 700 may include one or more call records, for example, a call record 703. The phone application interface 700 further includes a dialing keyboard and a dialing control 701, and may be configured to trigger the electronic device 100 to dial another electronic device. A satellite symbol is displayed on the dialing control 701, to prompt the user that the electronic device 100 can currently communicate by using the satellite. In addition, a satellite real-time capsule 702 may be further displayed in the phone application interface 700. For specific content of the satellite real-time capsule 702, refer to the related descriptions of the satellite real-time capsule 600 in the embodiment shown in FIG. 6D. For other content of the phone application interface 700, refer to the related descriptions of the phone application interface 400 in the embodiment shown in FIG. 4B. Details are not described herein again.

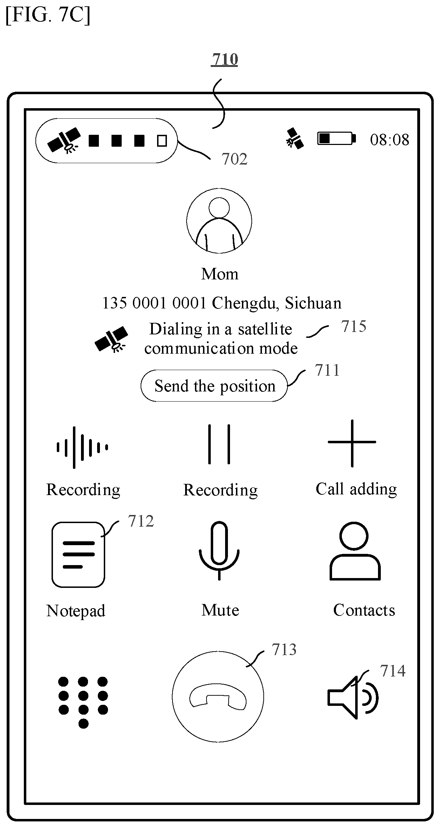

The electronic device 100 may receive and respond to a tap operation performed by the user on the call record 703, keep displaying the satellite real-time capsule 702, and display an in-call screen 710 shown in FIG. 7C.

As shown in FIG. 7C, the in-call screen 710 may include basic information (for example, a SIM card number, a SIM card position, a contact name, and a contact profile picture) of the called party, a position sending control 711, a satellite dialing prompt 715, and one or more call auxiliary controls. The one or more call auxiliary controls may include a recording control, a call adding control, a notepad control 712, a call ending control 713, a speaker control 714, and the like. It should be noted that the one or more call auxiliary controls may be different from one or more call auxiliary controls in the dialing interface if the satellite communication mode is not enabled. For example, if the electronic device 100 does not enable the satellite communication mode, the notepad control 712 may be replaced with a video call control. In some other embodiments, if the satellite communication mode is enabled or not enabled, a same call auxiliary control may be displayed in the dialing interface, and one or more call auxiliary controls (for example, a video call control) are displayed in different display manners, to prompt the user that these call auxiliary controls are in an unavailable state. The position sending control 711 is configured to trigger the electronic device 100 to send current position information (for example, longitude and latitude information) of the electronic device 100 to the called party. The notepad control 712 is configured to trigger the electronic device 100 to open a memo. The call ending control 713 is configured to trigger the electronic device 100 to end a call. The satellite dialing prompt 715 may prompt the user that the satellite communication mode is currently used for dialing. The satellite dialing prompt 715 may include a satellite symbol, and may further include a text prompt, for example, "Dialing in a satellite communication mode".

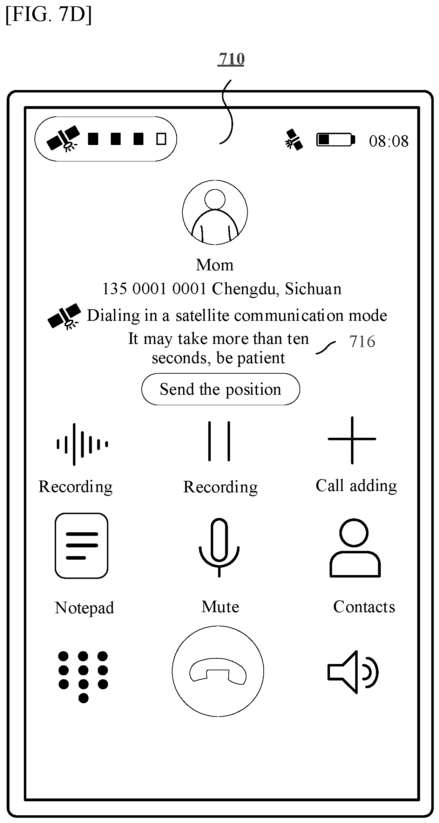

In a process in which the electronic device 100 dials the electronic device 200 by using the satellite, if it is detected that dialing time exceeds a preset dialing time threshold, as shown in FIG. 7D, the electronic device 100 may display a waiting prompt 716 on the in-call screen 710.

As shown in FIG. 7D, the waiting prompt 716 may be a text prompt, for example, "It may take more than ten seconds, be patient". The waiting prompt 716 may prompt the user that time of dialing in the satellite communication mode is long. It may be understood that, in some embodiments, when the called party is ringing, is answering, or is hanging up, the electronic device 100 may also output a corresponding call status prompt on the in-call screen 710, to prompt the user that the called party is ringing, is answering, is hanging up, or the like. This is not limited in this application.

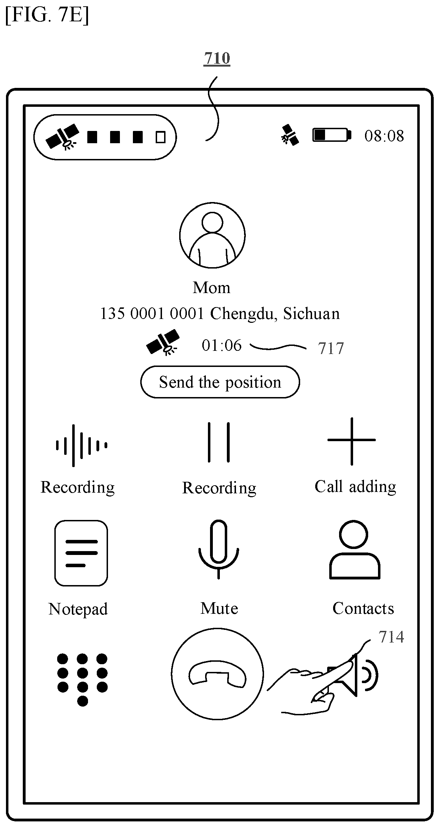

After the call is answered, as shown in FIG. 7E, the electronic device 100 may close the satellite dialing prompt 715 and the waiting prompt 716, and display a satellite call prompt 717.

As shown in FIG. 7E, the satellite call prompt 717 may include a satellite symbol, and may further include call time, for example, "01:06". The satellite call prompt 717 may prompt the user that a call is currently being made in the satellite communication mode, and further prompt the user of time of the call.

It may be understood that the embodiments shown in FIG. 7A to FIG. 7E are merely examples. In some embodiments, when the electronic device 100 is in a call with another electronic device by using the satellite, the electronic device 100 may alternatively display the satellite real-time card on the in-call screen, or switch to display the satellite real-time card or the satellite real-time capsule in response to an operation of the user. Content in the satellite real-time card or the satellite real-time capsule may also change based on satellite signal strength detected in real time. This is not limited herein in this application.

In some application scenarios, when the electronic device 100 is in a call with the electronic device 200 by using the satellite, to maintain a stable connection, the electronic device 100 does not support sound output from an earpiece.

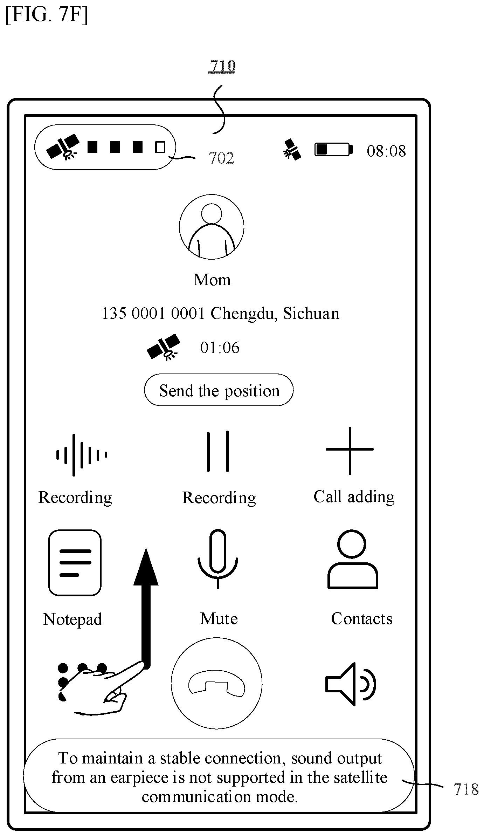

For example, as shown in FIG. 7E, the electronic device 100 may receive and respond to a tap operation performed by the user on the speaker control 714. As shown in FIG. 7F, a rejection prompt 718 is displayed on the in-call screen 710. The rejection prompt 718 prompts the user that when a call is made in the satellite communication mode, the electronic device 100 does not support sound output from the earpiece.

It may be understood that FIG. 7E to FIG. 7F are merely examples. In some embodiments, in a process of using the satellite communication mode, the electronic device 100 may further include more unavailable controls. When detecting input of the user for such controls, the electronic device 100 may also output a rejection prompt, to prompt the user that the control cannot be used if the satellite communication mode is enabled. This is not limited herein in this application.

In some application scenarios, when the electronic device 100 is in a call with the electronic device 200 by using the satellite, the electronic device 100 displays the in-call screen, and the satellite real-time capsule is displayed on the in-call screen. The electronic device 100 may receive and respond to an operation that the user enables the call real-time capsule (for example, an up-slide operation on the in-call screen), display the home screen, and display the call real-time capsule, and the satellite real-time card is further displayed on the home screen. The electronic device 100 may receive and respond to input of the user for the call real-time capsule, close the satellite real-time card and the call real-time capsule, and display a call floating window and the satellite real-time capsule. A display area of the satellite real-time capsule is an area in which the call real-time capsule is originally displayed. In some embodiments, the electronic device 100 may also receive and respond to input of the user for the call floating window, and redisplay the in-call screen.

In this way, in a process in which the electronic device 100 makes a call to another electronic device by using the satellite, the in-call screen may also be minimized and displayed as a call real-time capsule, and the call real-time capsule and the satellite real-time capsule are not simultaneously displayed.

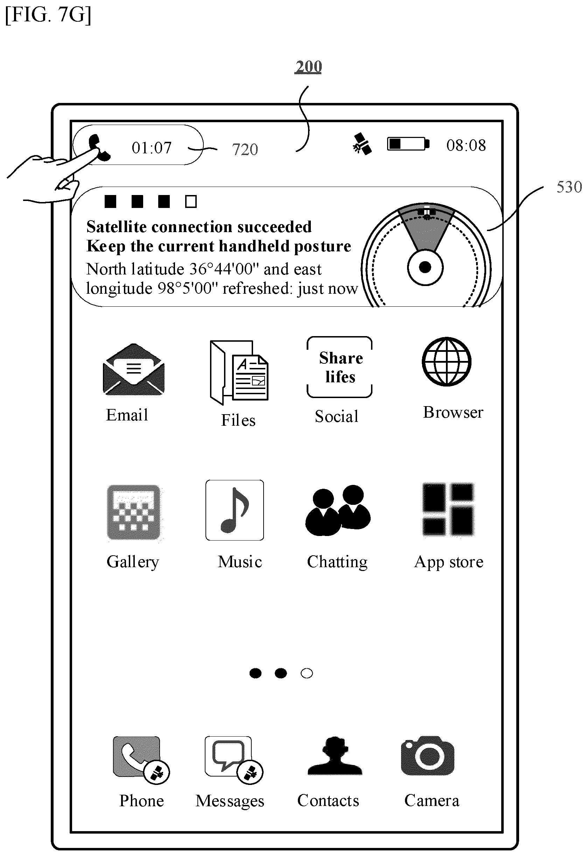

For example, as shown in FIG. 7F, the electronic device 100 displays the in-call screen 710, and the satellite real-time capsule 702 is displayed on the in-call screen 710. The electronic device 100 may receive and respond to an up-slide operation performed by the user on the in-call screen 710. As shown in FIG. 7G, the home screen 200 is displayed, and the satellite real-time capsule 702 is closed.

As shown in FIG. 7G, the satellite connection card 530 and a call real-time capsule 720 may be displayed on the home screen 200. In addition, a display area of the call real-time capsule 720 is a display area of the satellite real-time capsule 702 on the in-call screen 710 shown in FIG. 7F. Call time may be displayed in the call real-time capsule 720, and a call identifier may be further displayed. The call identifier may prompt the user that a call is currently in progress. Both the phone application icon and the information application icon on the home screen 200 include a satellite symbol.

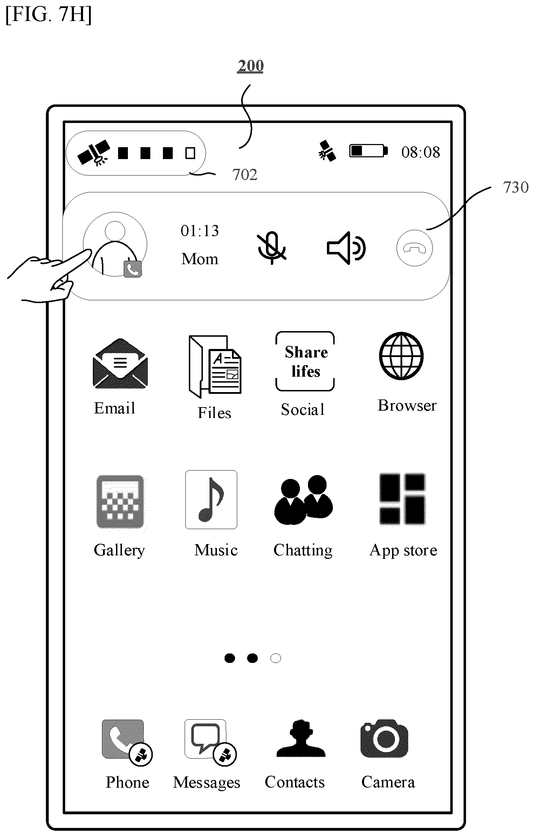

The electronic device 100 may receive and respond to a tap operation performed by the user on the call real-time capsule 720. As shown in FIG. 7H, the call real-time capsule 720 and the satellite connection card 530 are closed, and a call floating window 730 and the satellite real-time capsule 702 are displayed.

As shown in FIG. 7H, a display area of the satellite real-time capsule 702 is the same as the display area of the call real-time capsule 720 on the home screen 200 shown in FIG. 7G. The call floating window 730 may include call time, information about a call peer party (for example, a contact name and a profile picture), and one or more call auxiliary controls, for example, a call ending control and a mute control.

It may be understood that, in some other embodiments, the satellite real-time card and the call floating window may be simultaneously displayed. In this case, the electronic device 100 may also receive and respond to the tap operation performed by the user on the call real-time capsule 720 in the embodiment shown in FIG. 7G, close the call real-time capsule 720, keep displaying the satellite connection card 530, and display the call floating window 730 below the satellite connection card 530. This is not limited in this application.

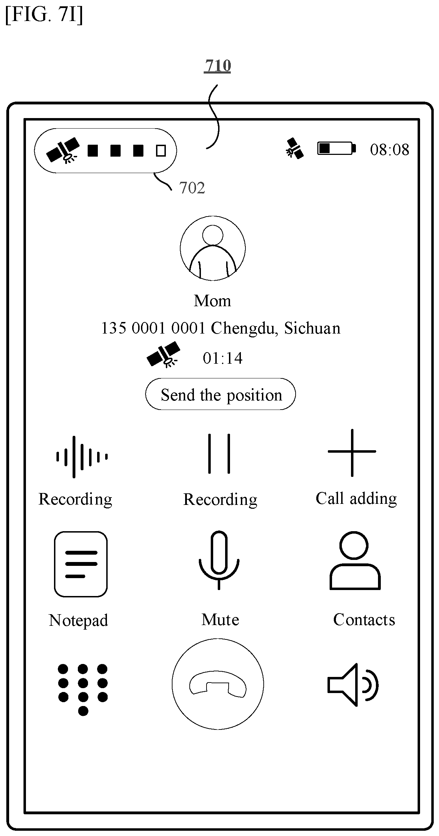

The electronic device 100 may receive and respond to a tap operation performed by the user on the call floating window 730 shown in FIG. 7H, and display the in-call screen 710 shown in FIG. 7I.

As shown in FIG. 7I, the satellite real-time capsule 702 may remain displayed on the in-call screen 710. For other specific content of the in-call screen 710, refer to the related descriptions in the embodiment shown in FIG. 7E. Details are not described herein again.

In some application scenarios, after the electronic device 100 successfully establishes the communication connection to the satellite, if the electronic device 100 detects that a device temperature reaches a preset temperature threshold, the electronic device 100 may output a temperature prompt, to prompt the user that the device temperature is excessively high. The device temperature may be a housing temperature of the electronic device 100, or may be a temperature of a power amplifier (power amplifier, PA) board inside the electronic device 100, or the like. This is not limited herein in this application. It should be noted that if the electronic device 100 detects, in the process of making a call by using the satellite, that the device temperature reaches the preset threshold, the temperature prompt output by the electronic device 100 may further prompt the user that the satellite call is about to end.

In this way, when it is detected that the device temperature is excessively high, the user may be reminded, so that the user ends the currently used satellite communication mode as soon as possible, or performs cooling processing on the device as soon as possible.

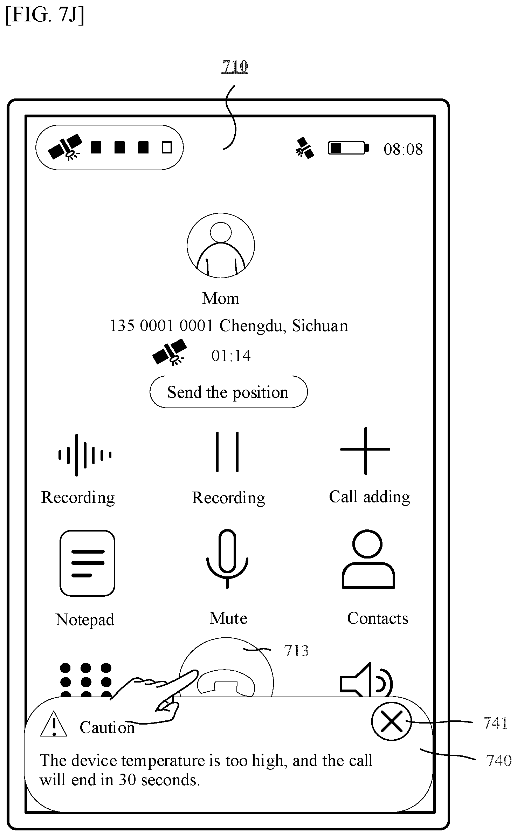

For example, the electronic device 100 displays the in-call screen 710 shown in FIG. 7I. When the electronic device 100 detects that the device temperature reaches the preset temperature threshold, as shown in FIG. 7J, the electronic device 100 may display a temperature prompt window 740 on the in-call screen 710. The temperature prompt window 740 includes a temperature prompt, for example, text "The device temperature is too high, and the call will end in 30 seconds". The temperature prompt window 740 may further include a closing control 741, configured to trigger the electronic device 100 to close the temperature prompt window 740.

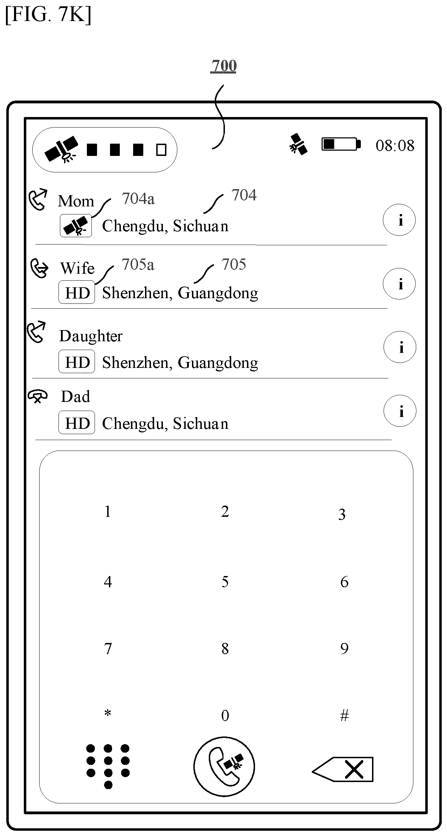

The electronic device 100 may receive and respond to a tap operation performed by the user on the call ending control 713, end the current satellite call, and display the phone application interface 700 shown in FIG. 7K. In some embodiments, when it is detected that time in which the device temperature is greater than or equal to the preset temperature threshold reaches preset temperature protection duration, the electronic device 100 may alternatively end the current satellite call, and display the phone application interface 700 shown in FIG. 7K.

As shown in FIG. 7K, the phone application interface 700 includes one or more call records, including a call record 704 and a call record 705. The call record 704 is a call record corresponding to a satellite call that just ends. It should be noted that a call type indicator 704a in the call record 704 is different from a call type indicator 705a in the call record 705. The call type indicator 704a prompts the user that the call record 704 is a call record of a satellite call. The call type indicator 705a prompts the user that the call record is a call record of cellular network communication. It should be noted that, regardless of whether the satellite communication mode of the electronic device 100 is disabled in this case, in the call record 704 displayed by the electronic device 100, the call type indicator 704a remains unchanged.

In this way, whether satellite communication is used in the call may be determined by using the call type indicator in the call record.

It may be understood that the embodiments shown in FIG. 7J to FIG. 7K are merely examples. In some embodiments, if the electronic device 100 receives the dialing operation of the user, if it is detected that the device temperature reaches the preset temperature threshold, the electronic device 100 may not respond to the dialing operation of the user. In this case, the temperature prompt output by the electronic device 100 may also prompt the user to try dialing later. In some other embodiments, when it is detected that duration in which the device temperature is greater than or equal to the preset temperature threshold reaches preset thermal protection duration, the electronic device 100 may further disable the satellite communication mode. This is not limited herein in this application.

In some application scenarios, in a process in which the electronic device 100 makes a call to (or dials) the electronic device 200 by using the satellite, the electronic device 100 may receive and respond to an operation that the user sends position information, and send current position information of the electronic device 100 to the electronic device 200 by using the satellite. In a process of sending the position information, the electronic device 100 may display a sending status (for example, being sent, successfully sent, or failed to be sent) of the position information in real time.

In this way, even if the user does not determine the position information of the user, the user may send, to the electronic device 200, the position information obtained by the electronic device 100. This improves communication efficiency.

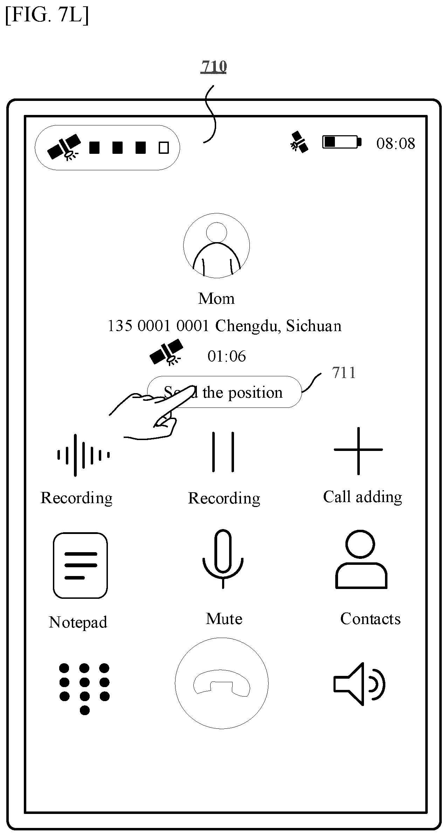

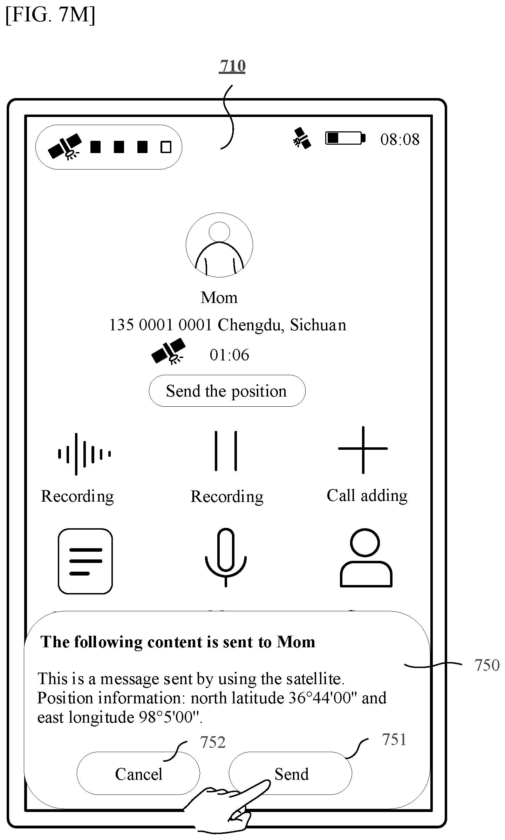

For example, the electronic device 100 displays the in-call screen 710 shown in FIG. 7L. The electronic device 100 may receive and respond to a tap operation performed by the user on the position sending control 711. As shown in FIG. 7M, the information sending window 750 is displayed on the in-call screen 710.

As shown in FIG. 7M, the information sending window 750 may display information to be sent, for example, "Position information: north latitude 36°44'00" and east longitude 98°5'00"", and may further display a recipient. In addition, the information sending window 750 may further include a sending control 751 and a cancel control 752. The sending control 751 is configured to trigger the electronic device 100 to send the foregoing information by using the satellite. The cancel control 752 is configured to trigger the electronic device 100 to close the information sending window 750.

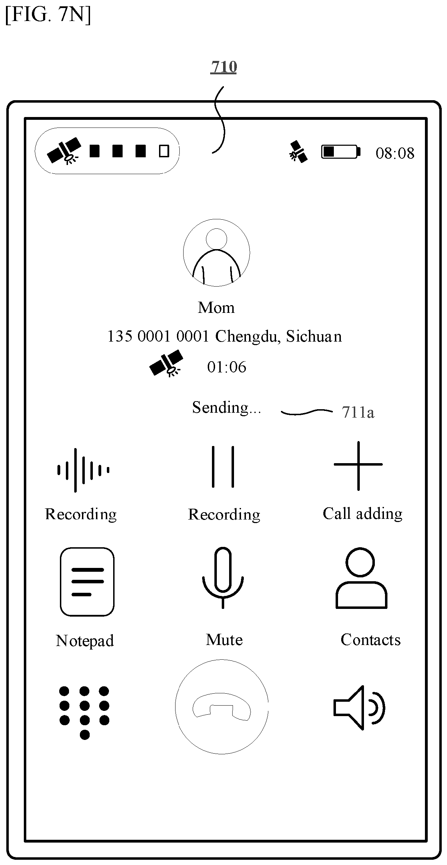

The electronic device 100 may receive and respond to a tap operation performed by the user on the sending control 751. As shown in FIG. 7N, the information sending window 750 is closed, and a sending prompt 711a of the information is displayed. The sending prompt 711a may prompt the user that the information is sending. For example, the sending prompt 711a may be text "Sending..."

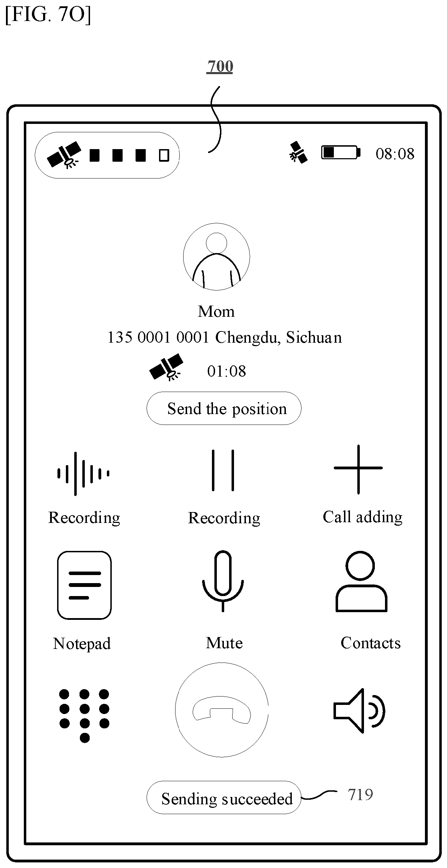

After the electronic device 100 successfully sends the information to the electronic device 200, as shown in FIG. 7O, the electronic device 100 may close the sending prompt 711a on the in-call screen 710, and display a sending success prompt 719. The sending success prompt 719 may prompt the user that the information has been successfully sent to the electronic device 200.

It may be understood that FIG. 7L to FIG. 7O are merely examples. In some embodiments, the electronic device 100 may further display more, fewer, or other sending statuses different from those in the foregoing embodiments, for example, sending failed. This is not limited herein in this application.

In some application scenarios, in a process of making a call to another electronic device by using the satellite, the electronic device 100 may display the satellite real-time card, and may further display the call real-time capsule or the call floating window. The electronic device 100 may receive and respond to an operation (for example, a down-slide operation) that the user opens a notification list, and display a notification list interface. The notification list interface includes one or more notification cards. The one or more notification cards may include the call floating window, and optionally may further include the satellite real-time card. If the one or more notification cards do not include the satellite real-time card, the electronic device 100 may further display the satellite real-time capsule.

In this way, if the notification list interface is displayed, the user can also quickly learn of a current status of the connection between the electronic device 100 and the satellite.

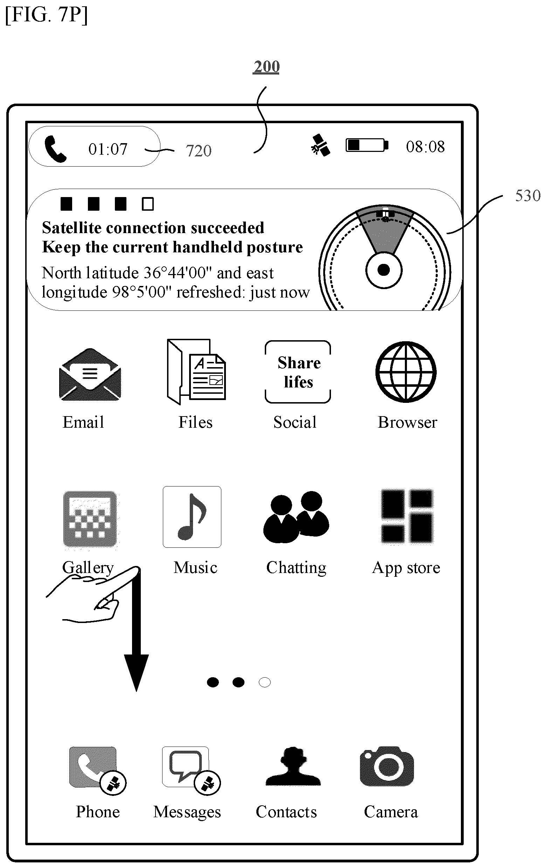

For example, as shown in FIG. 7P, the electronic device 100 displays the home screen 200, and displays the call real-time capsule 720 and further displays the satellite connection card 530 on the home screen 200.

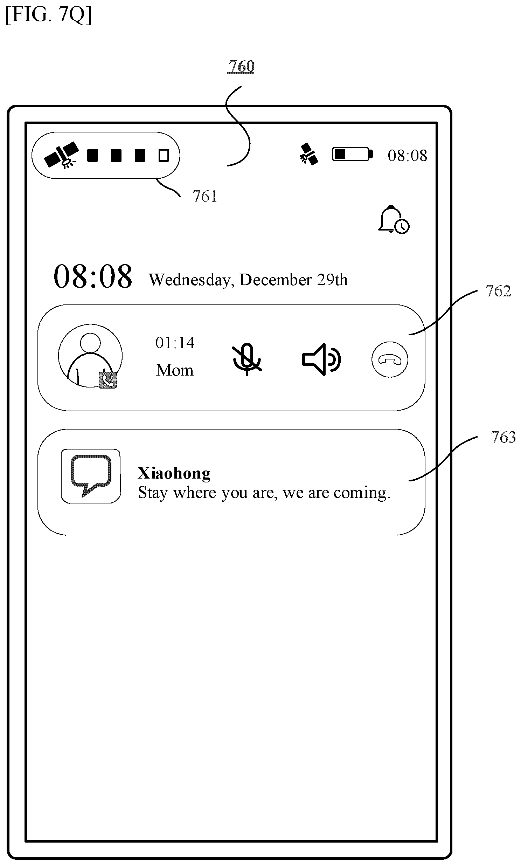

The electronic device 100 may receive and respond to a down-slide operation performed by the user on the home screen 200, and display a notification list interface 760 shown in FIG. 7Q.

As shown in FIG. 7Q, the notification list interface 760 may include time, a date, and one or more notification cards. The one or more notification cards may include a call floating window 762 and an SMS notification 763. For specific content of the call floating window 762, refer to the related descriptions of the call floating window 730 shown in FIG. 7H. It should be noted that, because a priority of the satellite real-time capsule is higher than that of the call real-time capsule, and in the notification list interface 760 shown in FIG. 7Q, the call real-time capsule 720 is expanded and displayed as the call floating window 762, the electronic device 100 may display a satellite real-time capsule 761 in the notification list interface 760. In this case, the notification list does not include the satellite real-time card.

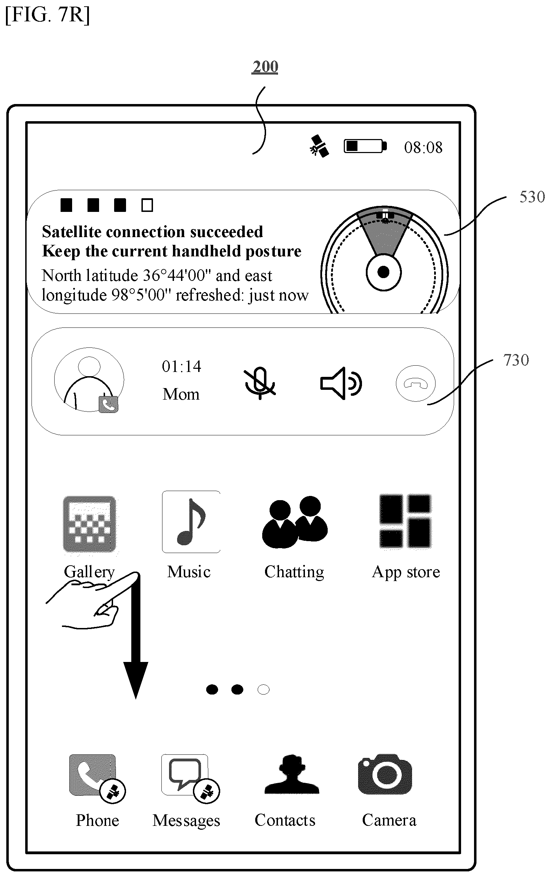

For another example, as shown in FIG. 7R, the electronic device 100 displays the home screen 200, and displays the satellite connection card 530 and the call floating window 730 on the home screen 200.

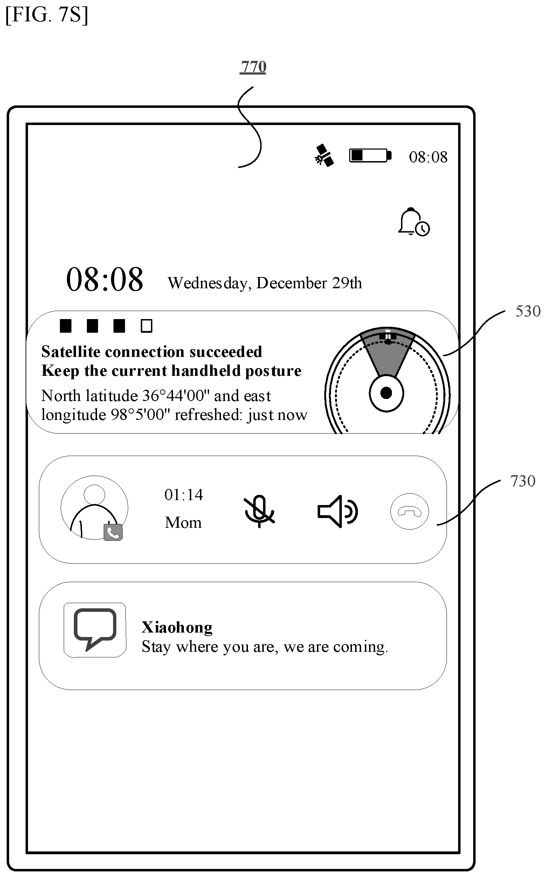

The electronic device 100 may receive and respond to a down-slide operation performed by the user on the home screen 200, and display a notification list interface 770 shown in FIG. 7S.

As shown in FIG. 7S, the notification list interface 770 may include time, a date, and one or more notification cards. The one or more notification cards may include the satellite connection card 530 and the call floating window 730. It should be noted that the one or more notification cards may be displayed from top to bottom in a priority order. In addition, a priority of the satellite real-time card is the highest, a priority of the call floating window is the second highest, and priorities of the remaining one or more notification cards may be determined based on a time sequence of receiving the notifications by the electronic device 100. Therefore, in the notification list interface 770 shown in FIG. 7S, the satellite connection card 530 is displayed at the top of the notification list, and the call floating window 730 is displayed at a second position from top to bottom in the notification list.

It may be understood that FIG. 7P to FIG. 7S are merely two examples. In some embodiments, the notification cards in the notification list may further include more or fewer notification cards, or include notification cards different from those in the foregoing embodiments. This is not limited herein in this application.

In some application scenarios, in a process in which the electronic device 200 communicates with the electronic device 100 by using the satellite, the electronic device 200 receives position information that is sent by the electronic device 100 by using the satellite. The electronic device 200 may receive and respond to an operation that the user views the position information, and display the position information. In some embodiments, the position information may include a hyperlink. The electronic device 200 may receive and respond to input of the user for the hyperlink, and display a map of an area in which the electronic device 100 is located and a position of the electronic device 100 on the map of the area.

In this way, the electronic device 200 may obtain the position information of the electronic device 100.

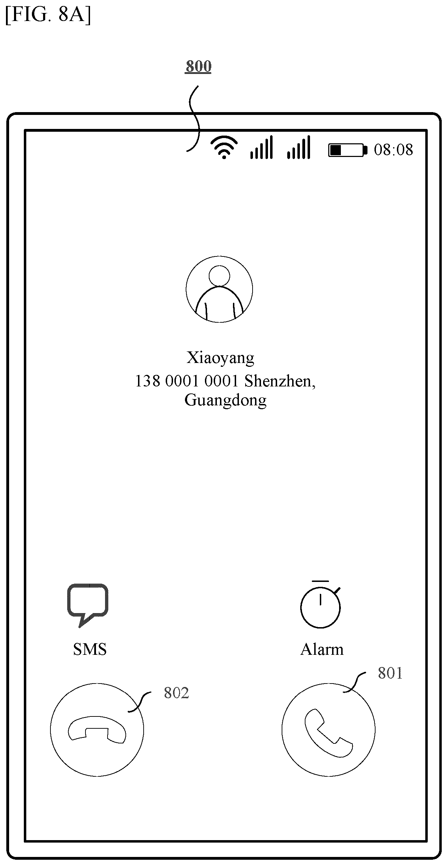

For example, as shown in FIG. 8A, the electronic device 200 displays an incoming call screen 800. The incoming call screen 800 may include incoming call information (for example, a number of a call, a number position, a name of a caller, and a profile picture), and may further include an answering control 801 and a hang-up control 802, configured to trigger the electronic device 200 to answer or hang up the call.

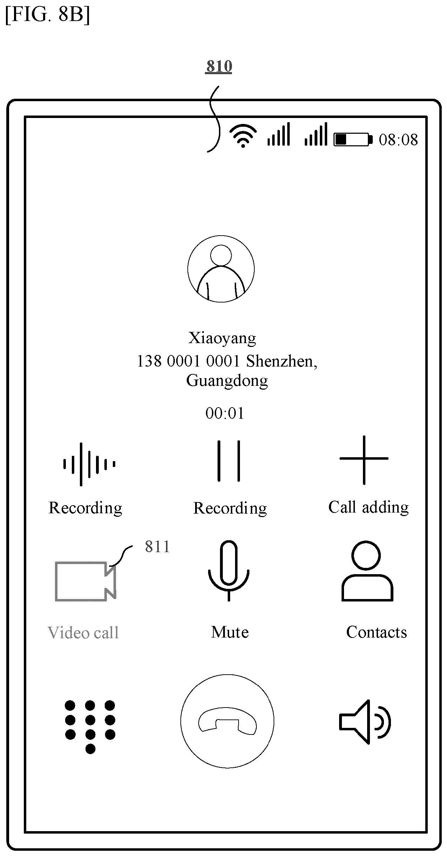

The electronic device 200 may receive and respond to a tap operation performed by the user on the answering control 801, and display an in-call screen 810 shown in FIG. 8B.

As shown in FIG. 8B, the in-call screen 810 may display incoming call information, one or more call auxiliary controls, and call time. One or more controls that are not applicable to a satellite call may exist in the one or more auxiliary controls, for example, a video call control 811. As shown in FIG. 8B, the video call control 811 may prompt, in a display manner (for example, different display colors and different definition degrees) different from that of another call auxiliary control, the user that the video call control 811 is unavailable. In some other embodiments, the one or more auxiliary controls may alternatively be the same as the one or more call auxiliary controls on the in-call screen 710 shown in FIG. 7C. This is not limited in this application.

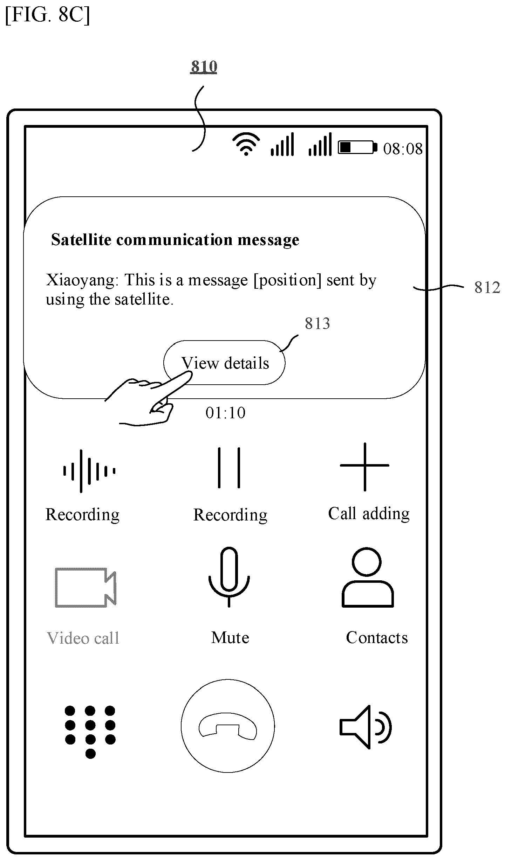

The electronic device 200 may receive the position information that is sent by the electronic device 100 by using the satellite, and display an information notification 812 shown in FIG. 8C.

As shown in FIG. 8C, the information notification 812 may include a viewing control 813. The information notification 812 may prompt the user that the electronic device 200 receives information that is sent by another electronic device by using the satellite. The viewing control 813 is configured to trigger the electronic device 100 to display the received position information. Optionally, the information notification 812 may be displayed in red or another color, to emphasize that the information is information sent by using the satellite.

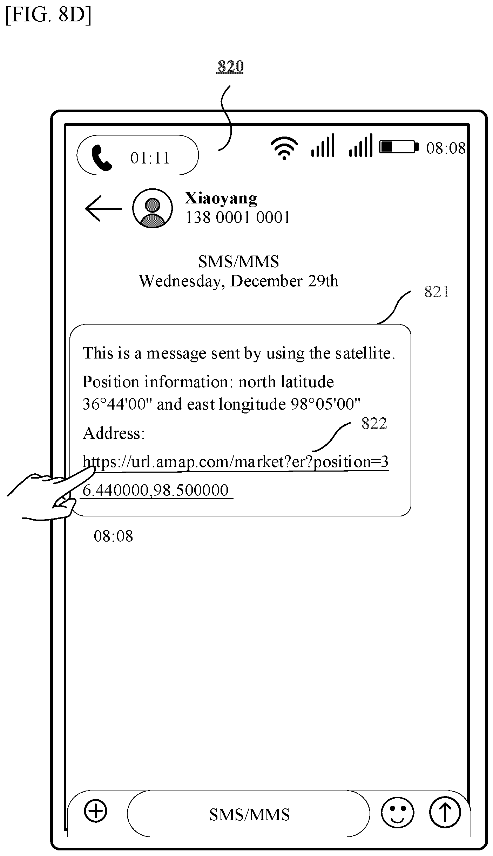

The electronic device 200 may receive and respond to a tap operation performed by the user on the viewing control 813, display the call real-time capsule, and display an information viewing interface 820 shown in FIG. 8D.

As shown in FIG. 8D, the information viewing interface 820 may include sender information (for example, a contact name, a profile picture, and a number) and information 821. The information 821 may include text information, for example, text "This is a message sent by using the satellite". The information 821 may further include position information, for example, "Position information: north latitude 36°44'00" and east longitude 98°5'00"". The position information may further include a hyperlink 822. The hyperlink 822 may be a web page address shown in FIG. 8D, and may be used to trigger the electronic device 200 to display, on the map, a position indicated by the position information in the information 821. In addition, the electronic device 200 may further display the call real-time capsule. For specific content of the call real-time capsule, refer to the related descriptions in the foregoing embodiment. Details are not described herein again.

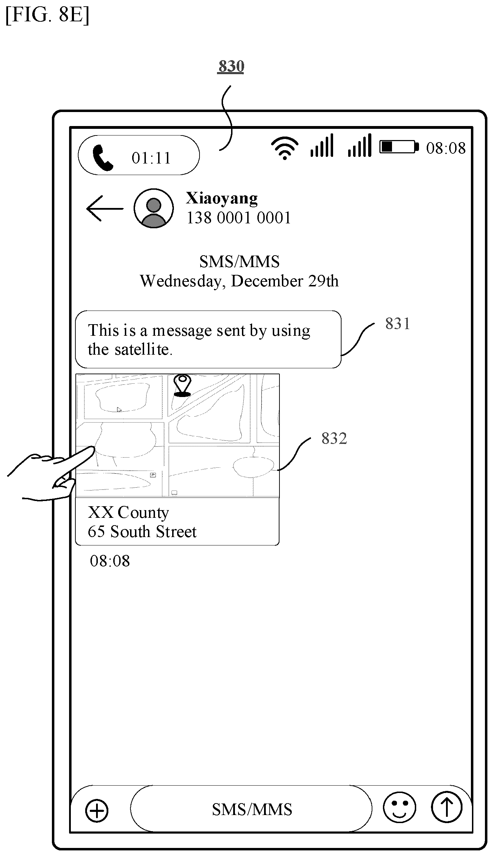

In some other embodiments, the electronic device 200 may also receive and respond to a tap operation performed by the user on the viewing control 813, display the call real-time capsule, and display an information viewing interface 830 shown in FIG. 8E.

As shown in FIG. 8E, the information viewing interface 830 may include sender information (for example, a contact name, a profile picture, and a number) and information 831. The information 831 may include text, for example, "This is a message sent by using the satellite." The information 831 may further include an image control 832. The image control 832 may include a thumbnail map. The position information of the electronic device 100 may be displayed on the thumbnail map. In addition, the image control 832 may be configured to trigger the electronic device 200 to display, on the map, a position indicated by the position information in the information 831. For other content of the information viewing interface 830, refer to the related content of the information viewing interface 820 shown in FIG. 8D. Details are not described herein again.

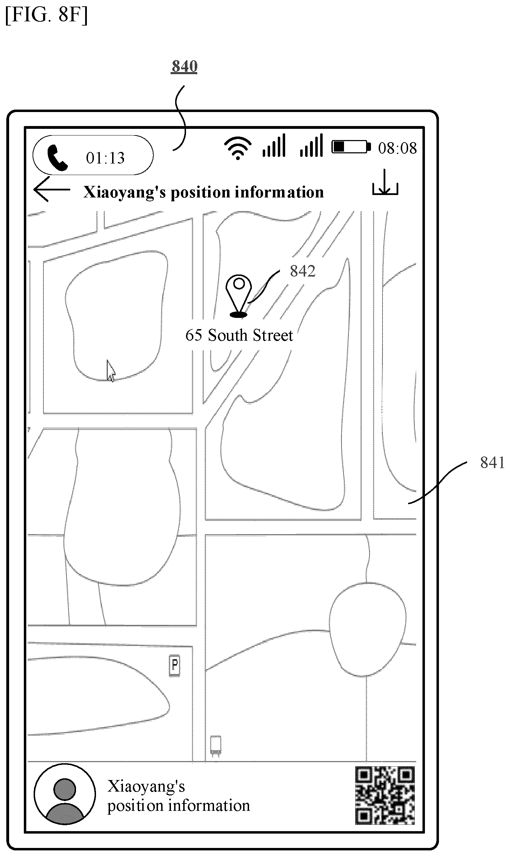

The electronic device 200 may receive and respond to a tap operation performed by the user on the hyperlink 822 shown in FIG. 8D, and display a map interface 840 shown in FIG. 8F. A map 841 may be displayed in the map interface 840. A position identifier 842 is further displayed on the map 841. An area indicated by the map 841 includes the position indicated by the position information in the information 821 shown in FIG. 8D. The position indicated by the position information is the same as a position indicated by the position identifier 842 on the map 841.

In some embodiments, the electronic device 100 may also receive and respond to a tap operation performed by the user on the image control 832 shown in FIG. 8E, and display the map interface 840 shown in FIG. 8F. In this case, the area indicated by the map 841 includes the position indicated by the position information in the information 831 shown in FIG. 8E. The position indicated by the position information is the same as the position indicated by the position identifier 842 on the map 841.

It may be understood that FIG. 8A to FIG. 8F are merely examples. In some embodiments, the position information and the map interface may further include more content or content different from that in the foregoing embodiments. This is not limited in this application.

In some application scenarios, after the electronic device 100 has successfully established the communication connection to the satellite, the electronic device 100 may also receive a call request initiated by another electronic device (for example, the electronic device 200), and display an incoming call screen. The satellite real-time card or the satellite real-time capsule is displayed on the incoming call screen. The electronic device 100 may receive and respond to an operation that the user answers the call, and display the in-call screen. The satellite real-time card or the satellite real-time capsule is also displayed on the in-call screen.

In this way, the electronic device 100 may also answer, by using the satellite, a call initiated by another electronic device.

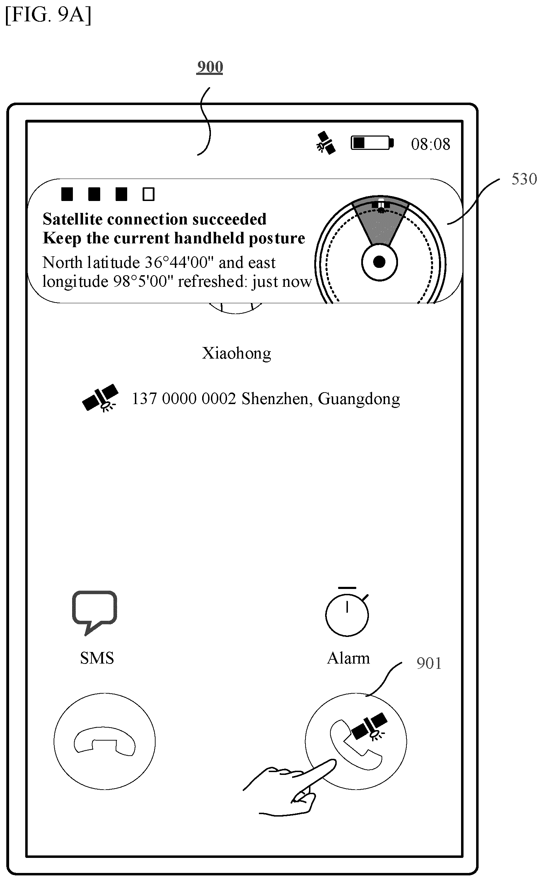

For example, as shown in FIG. 9A, the electronic device 100 displays an incoming call screen 900. The incoming call screen 900 includes an answering control 901. A satellite symbol may be further displayed on the answering control 901. The satellite connection card 530 is further displayed on the incoming call screen 900. For other content on the incoming call screen 900, refer to the related descriptions of the incoming call screen 800 shown in FIG. 8A.

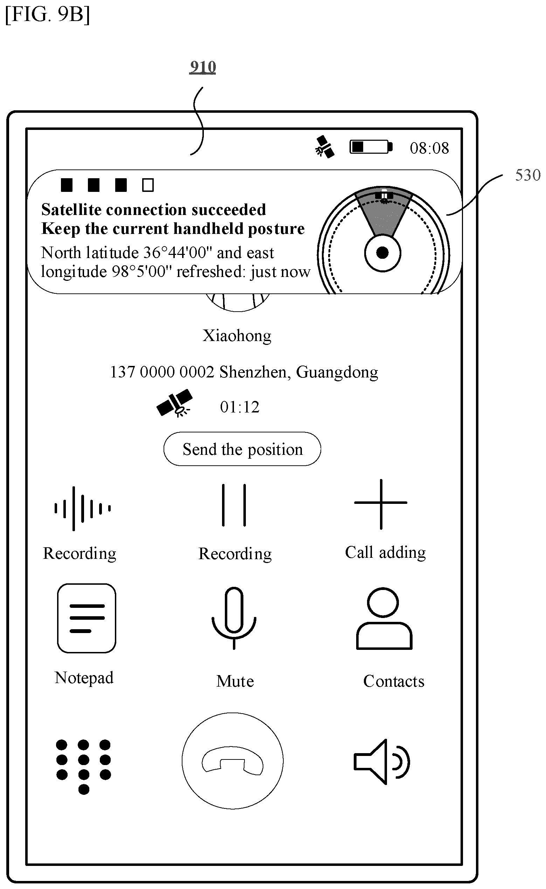

The electronic device 100 may receive and respond to a tap operation performed by the user on the answering control 901, keep displaying the satellite connection card 530, and display an in-call screen 910 shown in FIG. 9B. For specific content of the in-call screen 910, refer to the related descriptions of the in-call screen 710 shown in FIG. 7E.

It may be understood that, in some embodiments, the electronic device 100 may also receive, by using the satellite, information sent by another electronic device. Details are not described herein in this application.

In some application scenarios, the electronic device 100 displays a new message interface. The satellite real-time card/satellite real-time capsule is displayed in the new message interface. The new message interface includes information about one or more recipients and a position carrying control. The position carrying control may include two states: selected and unselected. The electronic device 100 may receive and respond to input of the user for the position carrying control, and change a state of the position carrying control. If the position carrying control is in the selected state, the electronic device 100 may send, when receiving an operation that the user sends target information, the target information that carries the position information of the electronic device 100. In an information sending process, the electronic device 100 may further output a sending status prompt, to prompt the user of the sending status of the information.

In this way, if the electronic device 100 establishes the communication connection to the satellite, the user can quickly send, to one or more recipients, the information that carries the position, so that the recipient can determine the position of the user.

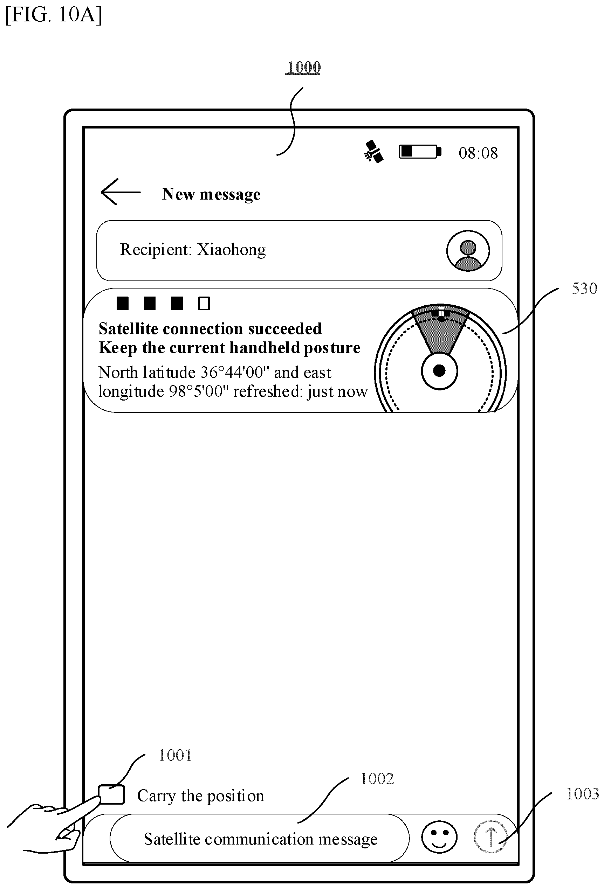

For example, as shown in FIG. 10A, the electronic device 100 displays a new message interface 1000. The satellite connection card 530 is displayed in the new message interface 1000, to prompt the user that the electronic device 100 has successfully established the communication connection to the satellite in this case. The new message interface 1000 includes recipient information, a position carrying control 1001, an information editing bar 1002, and a sending control 1003. The position carrying control 1001 is used to trigger the electronic device 100 to send the position of the electronic device 100 to the recipient together when the electronic device 100 sends the information. In some embodiments, in the new message interface 1000 shown in FIG. 10A, the sending control 1003 is not in a highlighted state, to prompt the user that the sending control 1003 is unavailable in this case. When detecting that the user determines the recipient and that the information input by the user is displayed in the information editing bar 1002, the electronic device 100 may switch a display status of the sending control 1003 to the highlighted state, to prompt the user that text content in the information editing bar 1002 may be sent to the recipient by using the sending control 1003 in this case. For other content of the new message interface 1000, refer to the related descriptions of the new message interface 460 shown in FIG. 4I. Details are not described herein again.

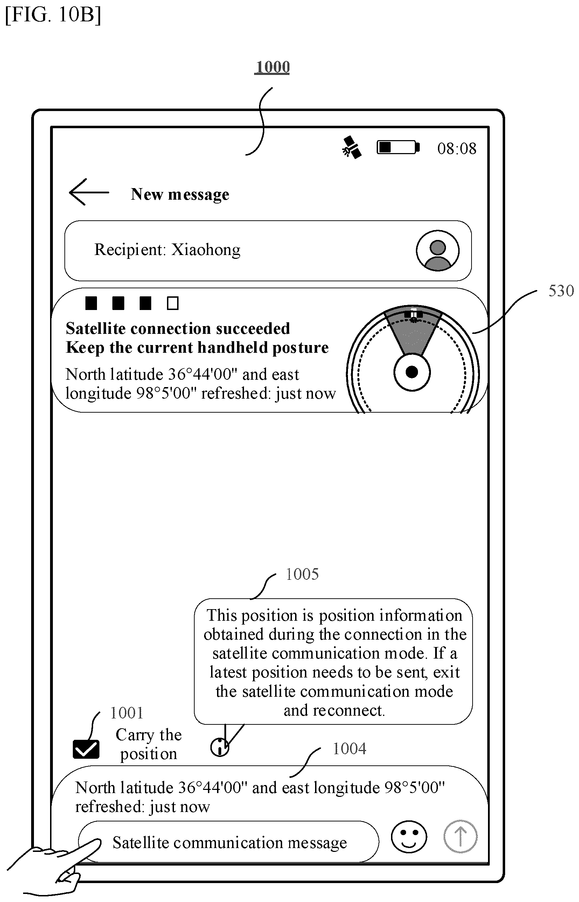

The electronic device 100 may receive and respond to a tap operation performed by the user on the position carrying control 1001. As shown in FIG. 10B, position information 1004 of the electronic device 100 is displayed in the new message interface 1000.

As shown in FIG. 10B, the position information 1004 may be longitude and latitude information of the electronic device 100 and update time of the longitude and latitude information, for example, "North latitude 36°44'00" and east longitude 98°5'00", refreshed: just now". Optionally, if the electronic device 100 detects that the user selects "Carry the position" for the first time, the electronic device 100 may further display a prompt bubble 1005. The prompt bubble 1005 may prompt the user of an update rule of the position information 1004 of the electronic device 100. For example, the prompt bubble 1005 may include text "The position is position information obtained when the satellite is connected. If a latest position needs to be sent, exit the satellite mode and reconnect", and the like. The prompt bubble 1005 may be closed when display duration reaches preset duration, or may be closed when the electronic device 100 receives a next operation of the user. This is not limited herein in this application.

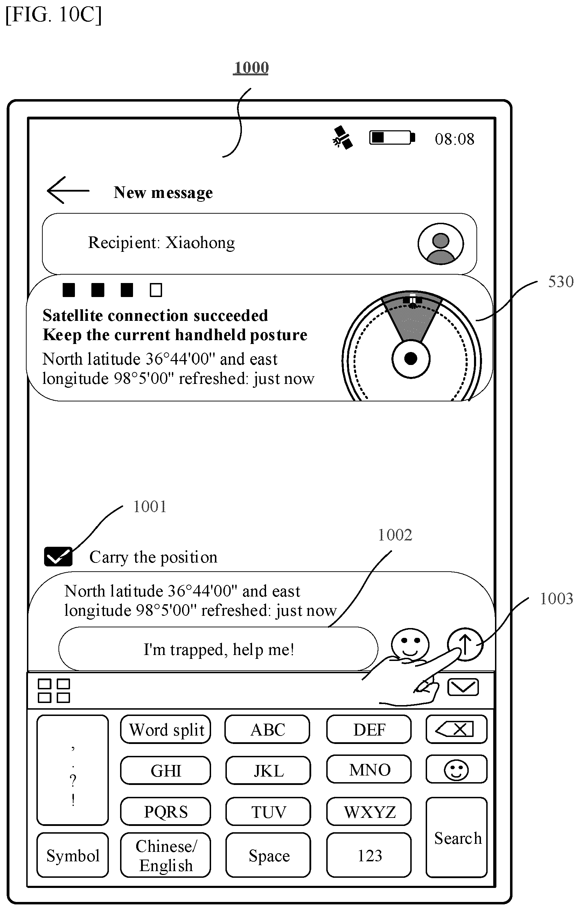

The electronic device 100 may receive and respond to an operation that the user inputs information. As shown in FIG. 10C, text content input by the user is displayed in the information editing bar 1002, for example, "I'm trapped, help me!". In this case, because the recipient is determined, and the information editing bar 1002 displays the text content input by the user, the sending control 1003 is in the highlighted state.

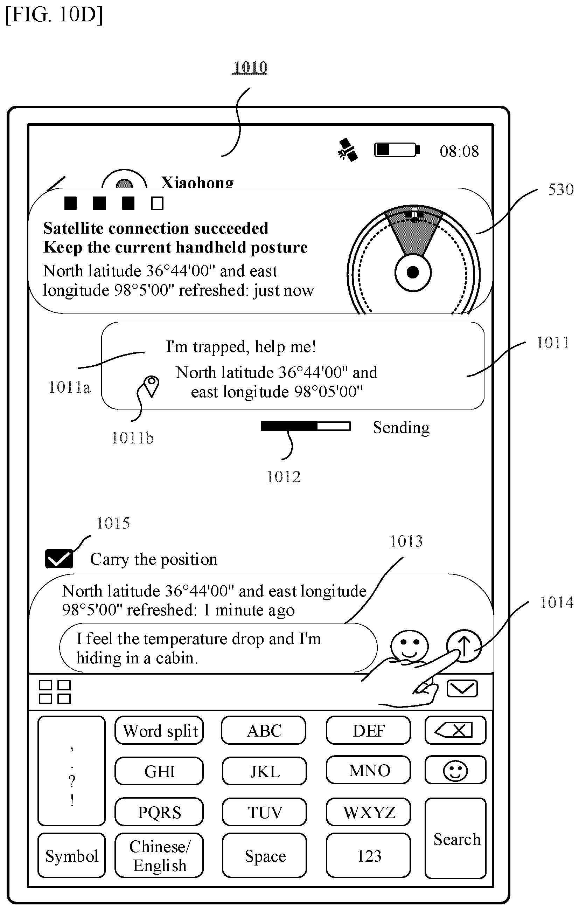

The electronic device 100 may receive and respond to a tap operation performed by the user on the sending control 1003, keep displaying the satellite connection card 530, and display an information sending interface 1010 shown in FIG. 10D.

As shown in FIG. 10D, the information sending interface 1010 may include recipient information, information 1011, a sending status prompt 1012, a position carrying control, an information editing bar 1013, a sending control 1014, a position sending control 1015, and the like. The information 1011 may include text content 1011a and position information 1011b that are input by the user. The text content 1011a may be text content input by the user in the information editing bar 1002 in the embodiment shown in FIG. 10C. The position information 1011b may be the position information 1004 in the embodiment shown in FIG. 10B or FIG. 10C. The sending status prompt 1012 may prompt the user of a sending status of the information. The sending status includes: being sent, successfully sent, failed to be sent, waiting to be sent, or the like. It may be learned from FIG. 10D that the sending status of the information 1011 is sending. For other content of the information sending interface 1010, refer to the related descriptions of the corresponding controls in the information sending interface 470 shown in FIG. 4K and the new message interface 1000 shown in FIG. 10A to FIG. 10C.

In some embodiments, in a process of sending information to the electronic device 200 by using the satellite, the electronic device 100 may further continue to send information to the electronic device 200 or another electronic device by using the satellite.

For example, if the information sending interface 1010 shown in FIG. 10D is displayed, the electronic device 100 may receive and respond to the operation that the user inputs the information, and display, in the information editing bar 1013, text content input by the user, for example, "I feel the temperature drop and I'm hiding in a cabin".

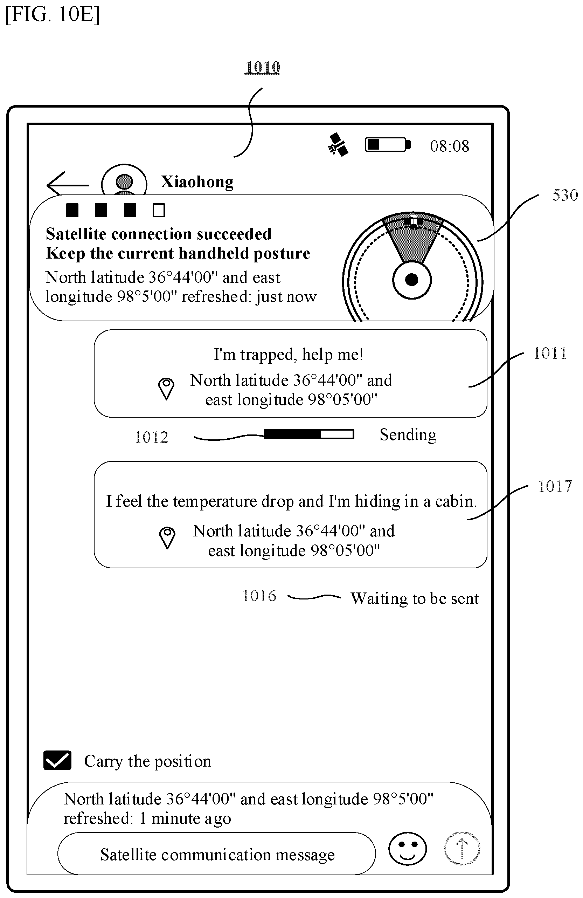

The electronic device 100 may receive and respond to a tap operation performed by the user on the sending control 1014. As shown in FIG. 10E, information 1017 and a corresponding sending status prompt 1016 are displayed in the information sending interface 1010. The sending status prompt 1016 may be waiting to be sent, to indicate a sending status of the information 1017. For specific content composition of the information 1017, refer to the content composition of the information 1011 in the embodiment shown in FIG. 10D. Details are not described herein again.

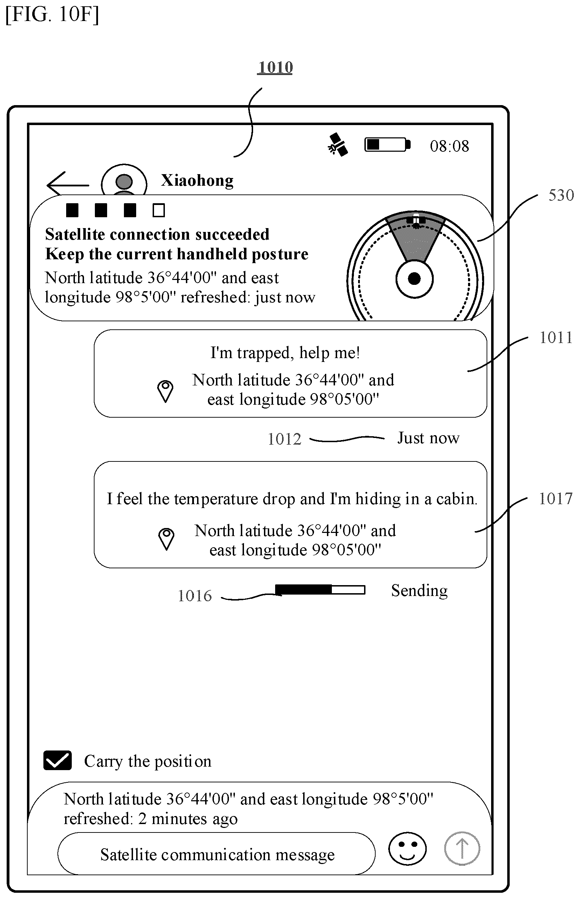

After the information 1011 is successfully sent, as shown in FIG. 10F, the electronic device 100 may change the sending status prompt 1012 in the information sending interface 1010 to "just now", to prompt the user that the information 1011 is just successfully sent. In addition, the electronic device 100 may further change the sending status prompt 1016 to sending, and display the sending progress bar.

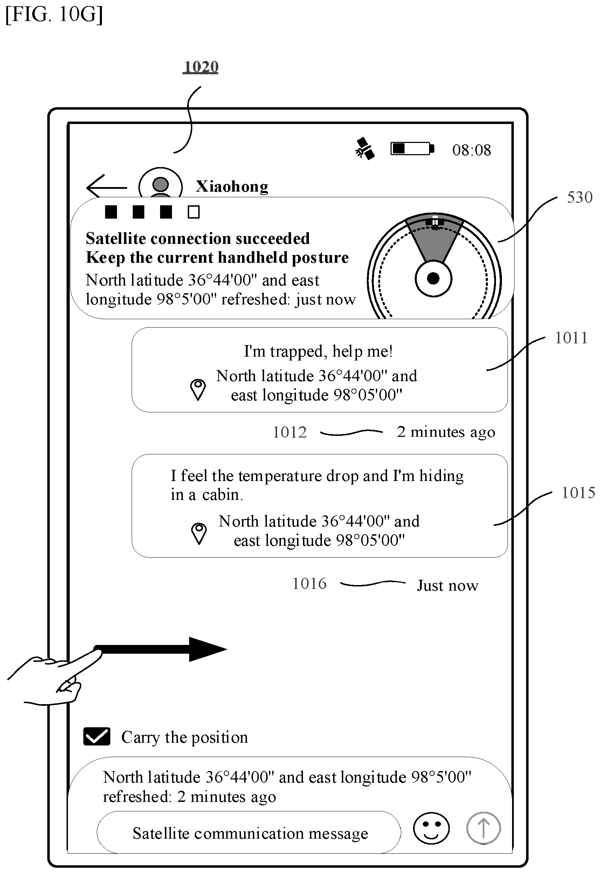

After the information 1017 is successfully sent, as shown in FIG. 10G, the electronic device 100 may change the sending status prompt 1016 in the information sending interface 1010 to "just now", to prompt the user that the information 1017 is just successfully sent. In addition, the electronic device 100 may further change the sending status prompt 1012 to "two minutes ago", to prompt the user that the information 1011 is successfully sent two minutes ago.

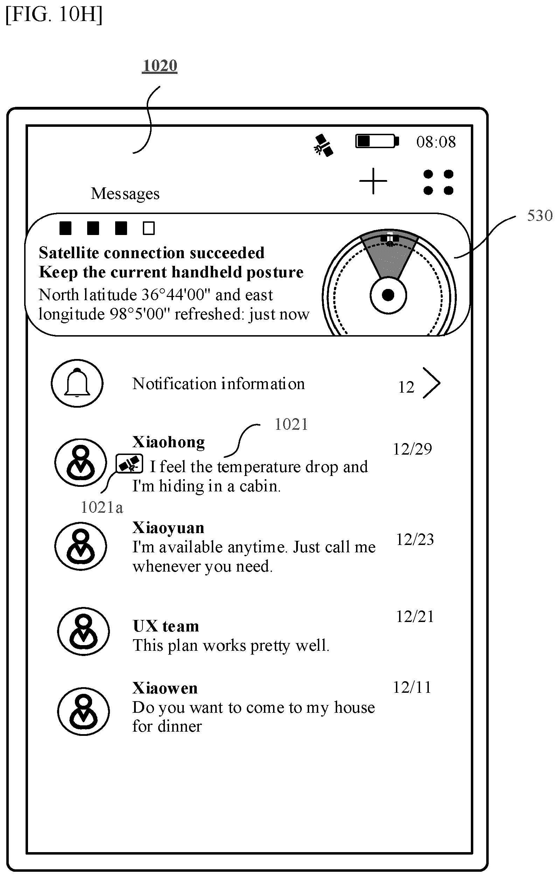

The electronic device 100 may receive and respond to an operation that the user slides rightward in the information sending interface 1010, keep displaying the satellite connection card 530, and display an information application interface 1020 shown in FIG. 10H.

As shown in FIG. 10H, the information application interface 1020 may include a notification information entry and an information list. The information list includes one or more information entries, for example, an information entry 1021. The information entry 1021 may be used to trigger the electronic device 100 to display information just sent in the satellite communication mode. The information entry 1021 may further include a satellite information indicator 1021a, configured to prompt the user that the information corresponding to the information entry 1021 is sent by using the satellite.

It may be understood that the foregoing embodiments shown in FIG. 10A to FIG. 10H are merely examples. In some embodiments, the electronic device 100 may alternatively send more, less, or different information to more recipients (corresponding electronic devices) by using the satellite. This is not limited in this application.

In some application scenarios, the electronic device 100 displays the new message interface. The satellite real-time card/satellite real-time capsule is displayed in the new message interface. The new message interface further includes a quick help control. The electronic device 100 may receive and respond to input of the user for the quick help control, and display a quick help interface. The quick help interface includes a plurality of case options. The electronic device 100 may receive and respond to an operation performed by the user on one or more of the case options, quickly generate message content, and send the message content and the position information of the electronic device 100 to a recipient (for example, the electronic device 200). The message content may include a current situation encountered by the user, a physical condition, a quantity of accompanying persons, and the like.

In this way, the user may quickly generate help information in a quick help manner, and send the help information by using the satellite. This shortens time for editing information, improves efficiency of sending information, and helps the recipient to more quickly and accurately determine the specific situation of the sender.

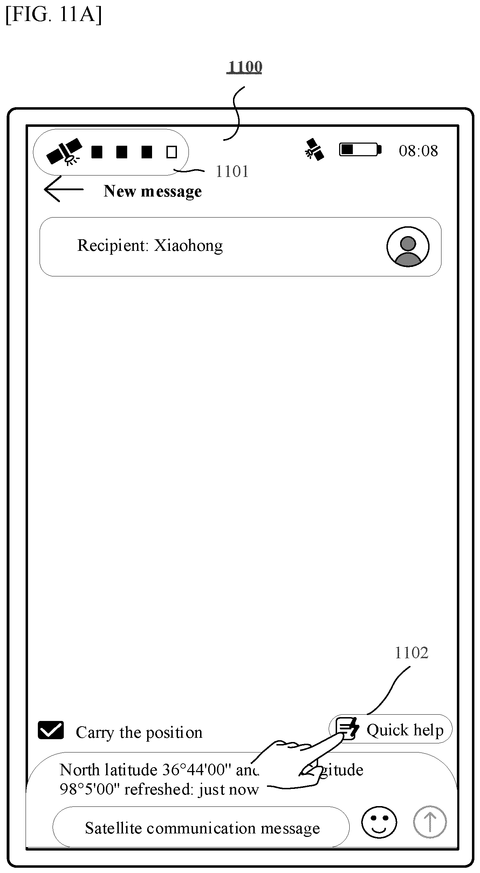

For example, as shown in FIG. 11A, the electronic device 100 displays a new message interface 1100. A satellite real-time capsule 1101 is displayed in the new message interface 1100. The new message interface 1100 may include a quick help control 1102. For other content of the new message interface 1100, refer to the related content of the new message interface 1000 shown in FIG. 10B.

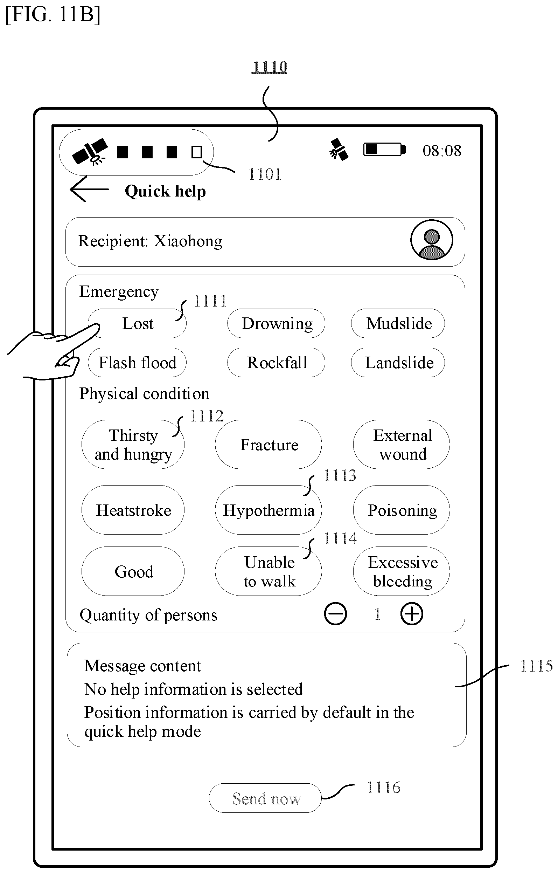

The electronic device 100 may receive and respond to a tap operation performed by the user on the quick help control 1102, keep displaying the satellite real-time capsule 1101, and display a quick help interface 1110 shown in FIG. 11B.

As shown in FIG. 11B, the quick help interface 1110 may include a plurality of case options, a message content area 1115, and a send-now control 1116. The message content area 1115 may be configured to display the generated message content based on a case option selected by the user. The send-now control 1116 may be configured to trigger the electronic device 100 to send the message content displayed in the message content area 1115. The plurality of case options may be classified into one or more categories, including an emergency category, a physical condition category, a quantity of persons option, and the like. For example, the emergency category may include a lost condition option 1111, a drowning condition option, a debris flow condition option, a mountain flood condition option, and the like. The physical condition category may include a thirsty and hungry condition option 1112, a fracture condition option, a skin trauma condition option, a heatstroke condition option, a hypothermia condition option 1113, a good condition option, an unable to walk condition option 1114, and the like. The quantity of persons option may be used to select the quantity of accompanying persons. Each case option may be used to trigger the electronic device 100 to change a display color or brightness of the case option (or display a check mark on the case option, or the like), and change content in the message content area 1115 based on the case option. In some embodiments, if there is no selected case option, the send-now control 1116 may be displayed in a non-highlighted manner, to prompt the user that the send-now control 1116 is unavailable in this case.

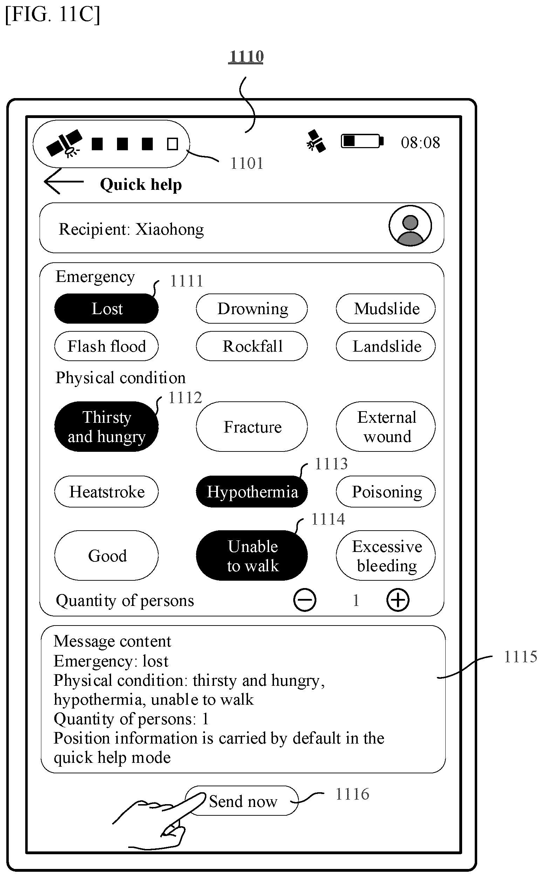

The electronic device 100 may receive and respond to tap operations sequentially performed by the user on the lost condition option 1111, the thirsty and hungry condition option 1112, the hypothermia condition option 1113, and the unable to walk condition option 1114. As shown in FIG. 11C, display colors of the foregoing case options are sequentially changed, and the generated message content is displayed in the message content area 1115.

As shown in FIG. 11C, in the quick help interface 1110, the lost condition option 1111, the thirsty and hungry condition option 1112, the hypothermia condition option 1113, and the unable to walk condition option 1114 may be displayed in colors different from those of other case options. In addition, the message content displayed in the message content area 1115 may be generated based on the foregoing plurality of selected case options. For example, the message content may include "Emergency: lost; physical condition: thirsty and hungry, hypothermia, unable to walk; quantity of persons: 1" and the like. The message content area 1115 may further display a position carrying prompt, to prompt the user that the position information is carried by default in a quick help mode.

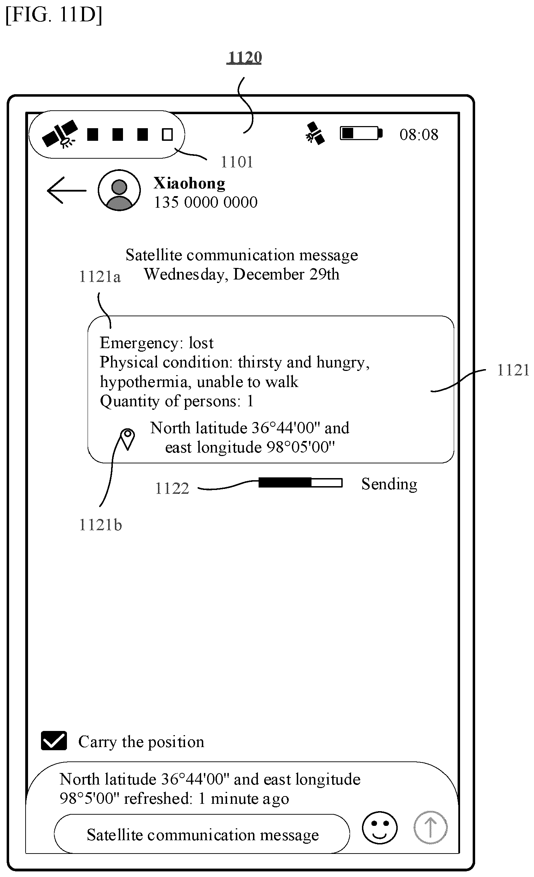

The electronic device 100 may receive and respond to a tap operation performed by the user on the send-now control 1116, keep displaying the satellite real-time capsule 1101, and display an information sending interface 1120 shown in FIG. 11D.

As shown in FIG. 11D, the information sending interface 1120 may include information 1121 and a sending status prompt 1122. The information 1121 may include text content 1121a and position information 1121b. The text content 1121a may be message content displayed in the message content area 1115 shown in FIG. 11C. The position information 1121b may be longitude and latitude information of the electronic device 100. The sending status prompt 1122 may prompt the user of a sending status of the information 1121. The information sending interface 1120 may further display sending time of the information 1121, for example, "Wednesday, December 29". In some embodiments, the information sending interface 1120 may further display a sending manner of the information 1121, for example, "Satellite communication message", to prompt the user that the information is sent by using the satellite. It may be understood that, in the embodiments shown in FIG. 10A to FIG. 10F, the information sending interface 1010 may also display a sending manner of the information 1011. This is not limited herein in this application. For other content of the information sending interface 1120, refer to the related content of the information sending interface 1010 shown in FIG. 10D.

It may be understood that FIG. 11A to FIG. 11D are merely examples for the description that if the satellite communication mode is enabled, the electronic device 100 may quickly send the situation and the position information of the user to another electronic device in a quick help manner. In some embodiments, the quick help interface may include more, fewer, or different case options. This is not limited herein in this application.

In some application scenarios, the electronic device 100 displays an information sending interface. The information sending interface includes a plurality of pieces of information and a track map control. The plurality of pieces of information may separately carry position information. A plurality of positions indicated by the plurality of pieces of position information may include a position 1 and a position 2. The electronic device 100 may receive and respond to input of the user for the track map control, and display a map and a movement track of the electronic device 100 based on the plurality of pieces of position information. An area indicated by the map includes the position 1 and the position 2. The movement track of the electronic device 100 passes through the position 1 and the position 2.

In this way, the user can more clearly learn the movement track of the user.

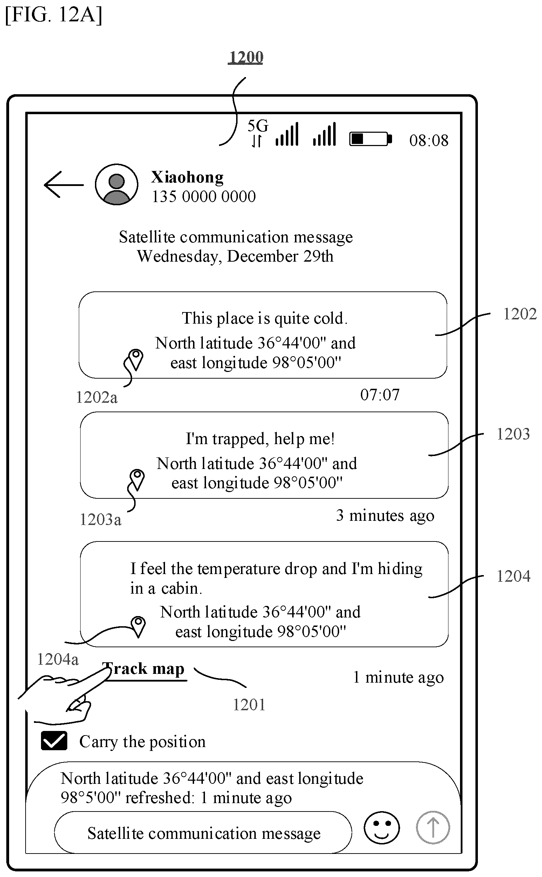

For example, as shown in FIG. 12A, the electronic device 100 may display an information sending interface 1200. The information sending interface 1200 may include recipient information, a track map control 1201, and a plurality of pieces of information. The plurality of pieces of information may include information 1202, information 1203, information 1204, and the like. Some or all of the plurality of pieces of information may carry position information. For example, the information 1202 may include position information 1202a, the information 1203 may include position information 1203a, and the information 1204 may include position information 1204a. The position information may indicate a position of the electronic device 100 when the electronic device 100 sends the information by using the satellite. For other content of the information sending interface 1200, refer to the related content of the information sending interface 1010 shown in FIG. 10D.

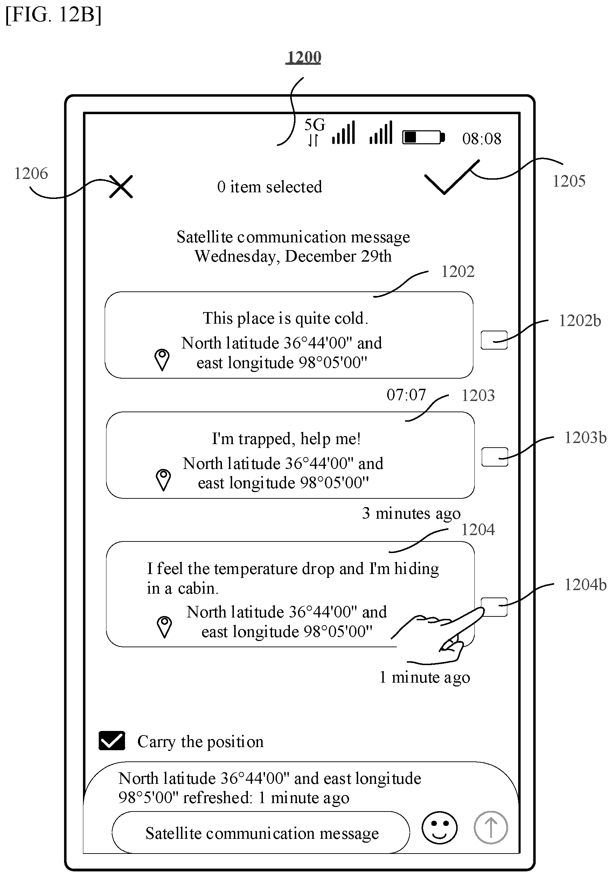

The electronic device 100 may receive and respond to a tap operation performed by the user on the track map control 1201. As shown in FIG. 12B, a selection identifier is displayed beside each piece of information that carries position information, and the selection identifier may prompt the user whether the information is selected.

As shown in FIG. 12B, a selection identifier 1202b is displayed beside the information 1202, a selection identifier 1203b is displayed beside the information 1203, and a selection identifier 1204b is displayed beside the information 1204. It may be learned from the foregoing three selection identifiers that none of the foregoing three pieces of information is selected. In addition, the electronic device 100 may further display a completion control 1205 and a cancel control 1206 in the information sending interface 1200. The completion control 1205 may be configured to trigger the electronic device 100 to display the track map based on the position information carried in the selected information. The cancel control 1206 may be configured to trigger the electronic device 100 to close all the selection identifiers, the completion control 1205, and the cancel control 1206.

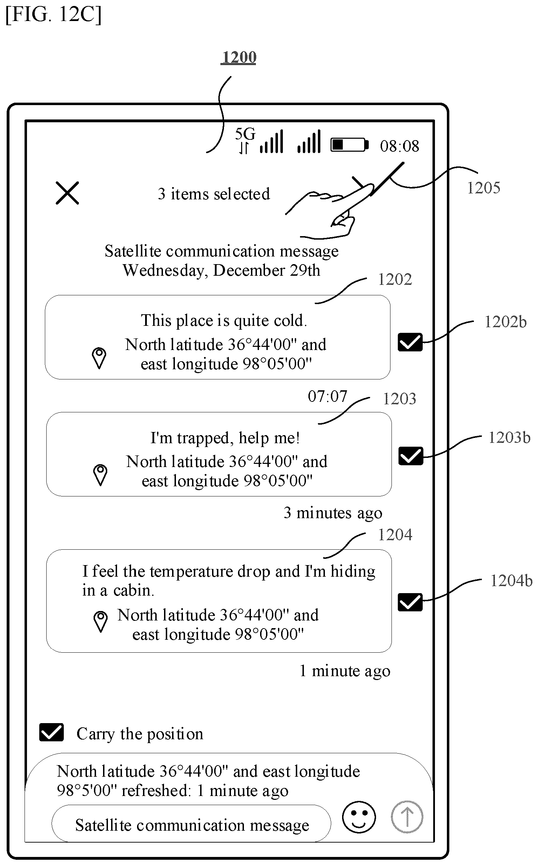

The electronic device 100 may sequentially receive and respond to tap operations performed by the user on the selection identifier 1202b, the selection identifier 1203b, and the selection identifier 1204b. As shown in FIG. 12C, check marks are displayed in the foregoing three selection identifiers.

As shown in FIG. 12C, the check marks are displayed in the selection identifier 1202b, the selection identifier 1203b, and the selection identifier 1204b, to prompt the user that the information 1202, the information 1203, and the information 1204 are all selected.

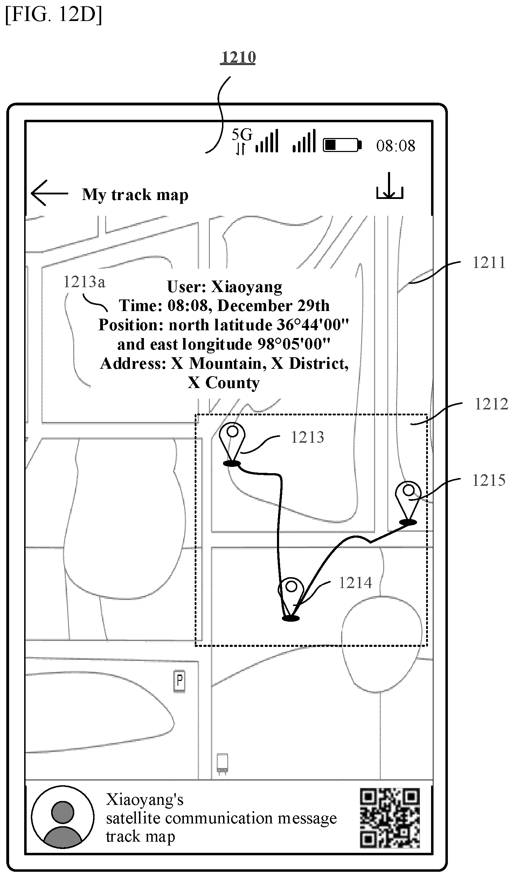

The electronic device 100 may receive and respond to a tap operation performed by the user on the completion control 1205, and display a track map interface 1210 shown in FIG. 12D.

As shown in FIG. 12D, the track map interface 1210 may include a map 1211 and a movement track 1212. One or more position identifiers, for example, a position identifier 1213, a position identifier 1214, and a position identifier 1215, may be displayed on the movement track 1212. A position indicated by the position identifier 1213 is the same as a position indicated by the position information 1202b in FIG. 12C. A position indicated by the position identifier 1214 is the same as a position indicated by the position information 1203b in FIG. 12C. A position indicated by the position identifier 1215 is the same as a position indicated by the position information 1204b in FIG. 12C. It should be noted that, in the movement track 1212, a connection line between any two adjacent position identifiers may be a straight line or a curve. The curve may be drawn based on a shortest travel route between the two position identifiers on the map. This is not limited herein in this application. Optionally, a position description 1213a may be further displayed near the position identifier 1213. The position description 1213a may be used to supplement position information corresponding to the position identifier 1213, an address, a user, time at which the user passes the position, and the like. In some other embodiments, a corresponding position description may also be displayed near another position identifier. This is not limited herein in this application.

It may be understood that the embodiments shown in FIG. 12A to FIG. 12D are merely examples. In some embodiments, the electronic device 100 may alternatively select more or less information in response to an operation of the user, and display a map and a movement track that have a larger scope, a smaller scope, or a different scope than those in the foregoing embodiments. This is not limited herein in this application.

In some application scenarios, after receiving a plurality of pieces of information sent by the electronic device 100 by using the satellite, the electronic device 200 may display an information viewing interface. The information viewing interface may include the plurality of pieces of information and a track map control. The plurality of pieces of information carry a plurality of pieces of position information. Positions indicated by the plurality of pieces of position information include a position 1 and a position 2. The electronic device 100 may receive and respond to input of the user for the track map control, and display a map and a movement track of the electronic device 100 based on the plurality of pieces of position information. An area indicated by the map includes the position 1 and the position 2. The movement track of the electronic device 100 passes through the position 1 and the position 2.

In this way, a recipient can more clearly learn a movement track of a sender.

For example, the electronic device 200 may display an information viewing interface 1300. The information viewing interface 1300 may include sender information, information 1301, information 1302, and a track map control 1303. The information 1301 may include text content 1301a and position information 1301b. The information 1302 may also include text information 1302a. The position information 1301b may be a thumbnail map. The thumbnail map may display position information of the electronic device 100 when the information 1301 is sent. In some embodiments, the information viewing interface 1300 may further display an expansion control 1304. The expansion control 1304 is configured to trigger the electronic device 200 to display the position information 1302b of the information 1302 in the information viewing interface 1300.

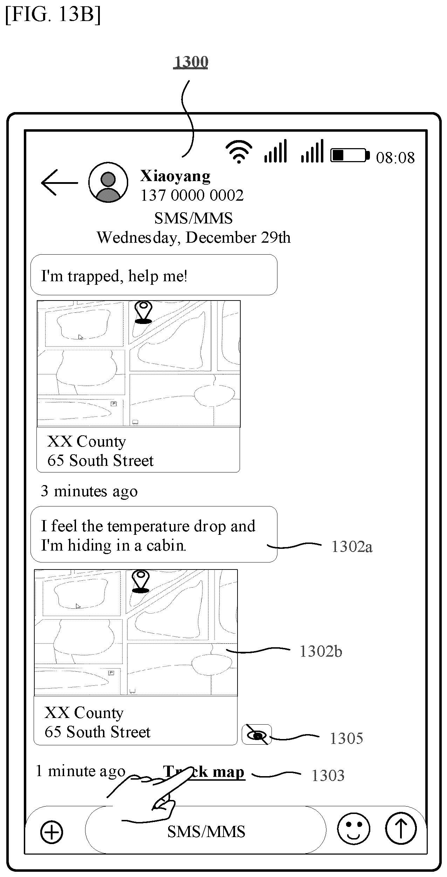

The electronic device 200 may receive and respond to a tap operation performed by the user on the expansion control 1304. As shown in FIG. 13B, the position information 1302b of the information 1302 is displayed in the information viewing interface 1300.

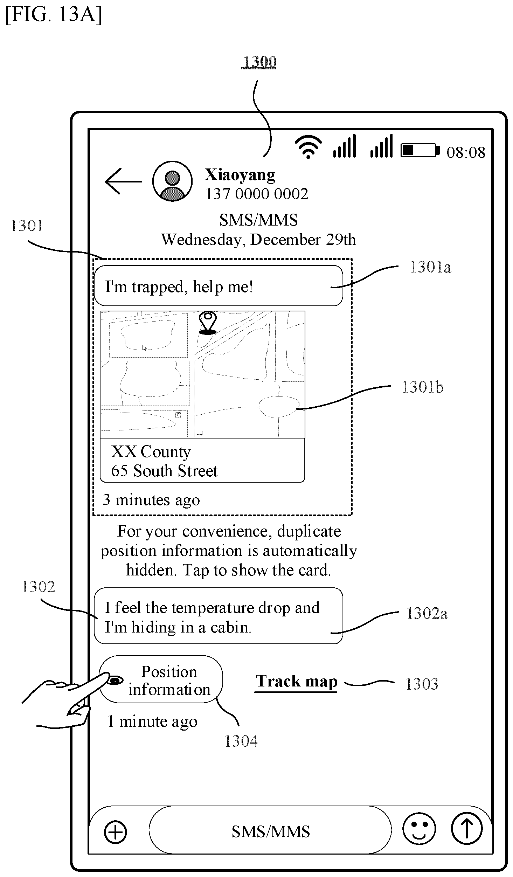

As shown in FIG. 13B, for specific descriptions of the position information 1302b, refer to the position information 1301b shown in FIG. 13A. In addition, the electronic device 200 may further close the expansion control 1304, and display a hiding control 1305 near the position information 1302b. The hiding control 1305 may be used to trigger the electronic device 200 to close the position information 1302b, and replace the hiding control 1305 with the expansion control 1304.

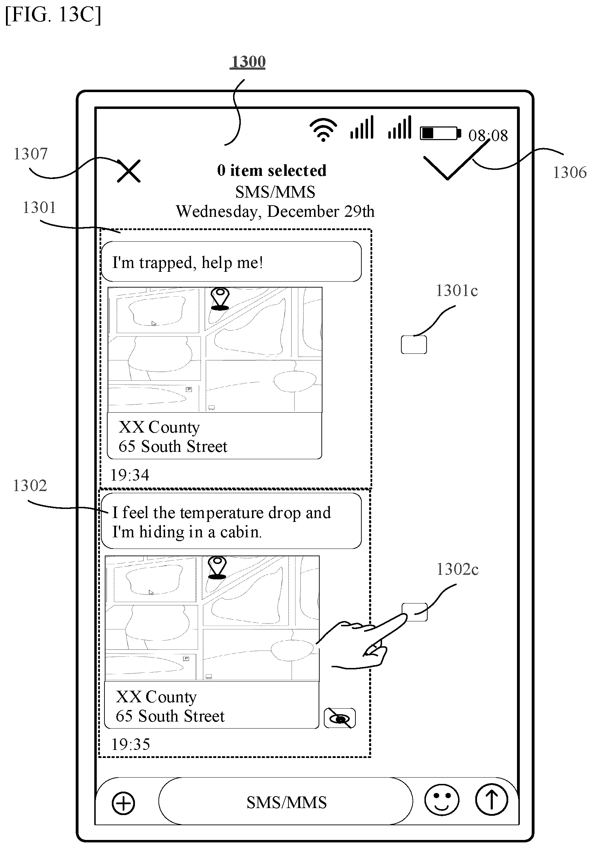

The electronic device 200 may receive and respond to a tap operation performed by the user on the track map control 1303. As shown in FIG. 13C, a selection identifier is displayed beside each position that carries position information, and the selection identifier may prompt the user whether the information is selected.

As shown in FIG. 13C, a selection identifier 1301c is displayed beside the information 1301, and a selection identifier 1302c is displayed beside the information 1302. It may be learned from the foregoing two selection identifiers that neither of the foregoing two pieces of information is selected. In addition, the electronic device 100 may further display a completion control 1306 and a cancel control 1307 in the information viewing interface 1300. For specific content of the selection identifiers, the completion control 1306, and the cancel control 1307, refer to the related content in the embodiment shown in FIG. 12B.

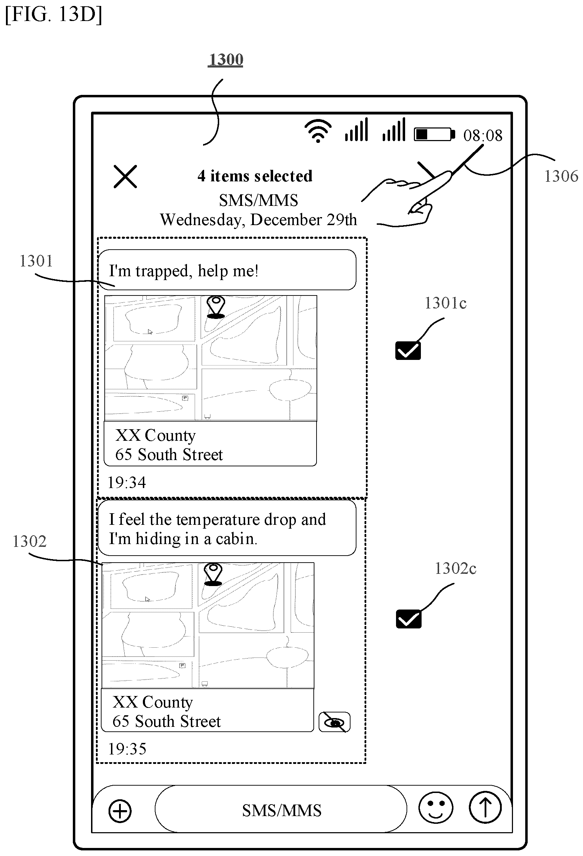

The electronic device 100 may sequentially receive and respond to tap operations performed by the user on the selection identifier 1301c, the selection identifier 1302c, and other two selection identifiers. As shown in FIG. 13D, check marks are displayed in the foregoing selection identifiers.

As shown in FIG. 13D, the check marks are displayed in both the selection identifier 1301c and the selection identifier 1302c, to prompt the user that both the information 1301 and the information 1302 are selected. In addition, the information viewing interface 1300 further displays a quantity prompt, for example, "4 items selected", to prompt the user that four pieces of information have been currently selected.

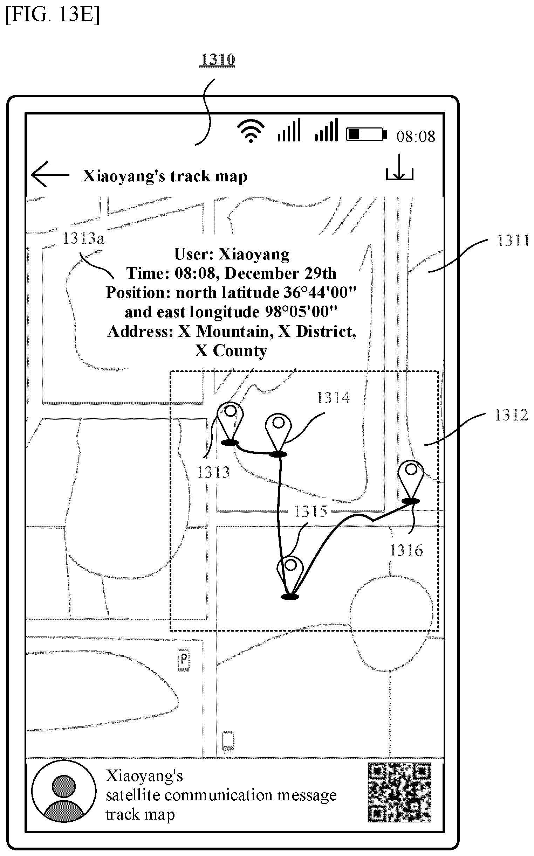

The electronic device 100 may receive and respond to a tap operation performed by the user on the completion control 1306, and display a track map interface 1310 shown in FIG. 13E.

As shown in FIG. 13E, the track map interface 1310 may include a map 1311 and a movement track 1312. One or more position identifiers, for example, a position identifier 1313, a position identifier 1314, a position identifier 1315, and a position identifier 1316, may be displayed on the movement track 1312. Positions indicated by the foregoing four position identifiers may be respectively the same as positions indicated by the position information carried in the foregoing four pieces of information. Optionally, a position description 1313a may be further displayed near the position identifier 1313. For specific content of the track map interface 1310, refer to the related descriptions in the embodiment shown in FIG. 12D. Details are not described herein again.

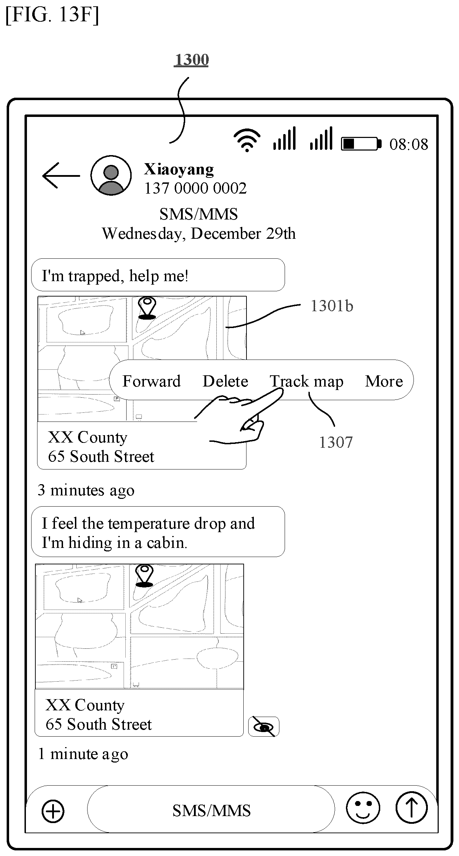

For another example, as shown in FIG. 13F, the electronic device 100 may receive and respond to a touch-and-hold operation performed by the user on the position information 1301b in the information viewing interface 1300 shown in FIG. 13B, and display one or more controls on the position information 1301b, including a forward control, a delete control, a track map control 1307, and the like. Alternatively, the electronic device 100 may receive and respond to a tap operation performed by the user on the track map control 1307, and display a track map of the electronic device 100. For a specific process, refer to the embodiments shown in FIG. 13C to FIG. 13E.

It may be understood that the embodiments shown in FIG. 13A to FIG. 13F are merely examples. In some embodiments, the position information displayed by the electronic device 200 may alternatively be a hyperlink (for example, the foregoing embodiment shown in FIG. 8D), or the like. This is not limited herein in this application.

In some application scenarios, the electronic device 100 may display an information sending interface. The information sending interface includes one or more pieces of information, including information 1. The information 1 may include text information and position information. The electronic device 100 may receive and respond to an operation that the user copies or forwards the information 1, and copy the text information of the information 1 or forward the text information of the information 1.

In this way, the electronic device 100 may forward or copy the information that is sent by using the satellite.

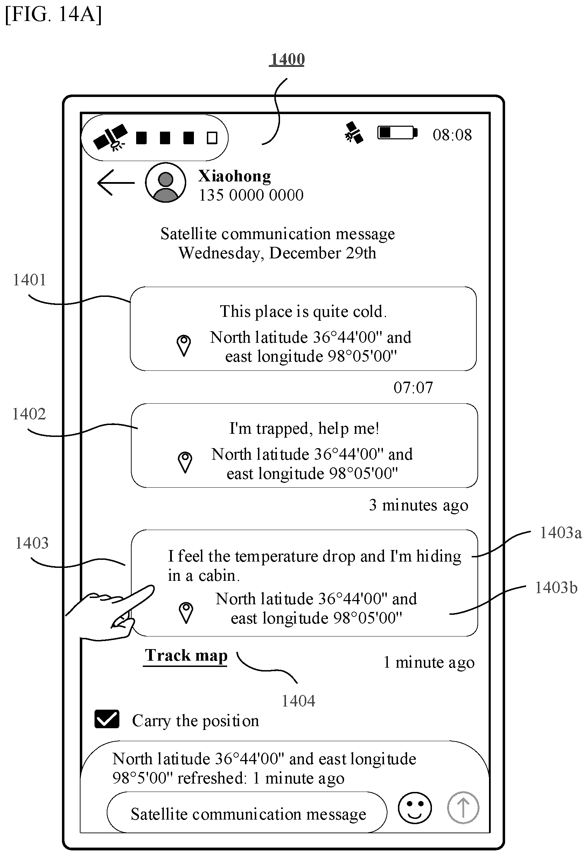

For example, as shown in FIG. 14A, the electronic device 100 displays an information sending interface 1400. The information sending interface 1400 may include information 1401, information 1402, and information 1403. Each piece of information may include text information and position information. For example, the information 1403 may include text information 1403a and position information 1403b. The information sending interface 1400 may further include a position carrying control 1404. For specific content of the position carrying control 1404, refer to the related content in the embodiments shown in FIG. 10A to FIG. 10G. For other content of the information sending interface 1400, refer to the related descriptions of the information sending interface 1200 shown in FIG. 12A.

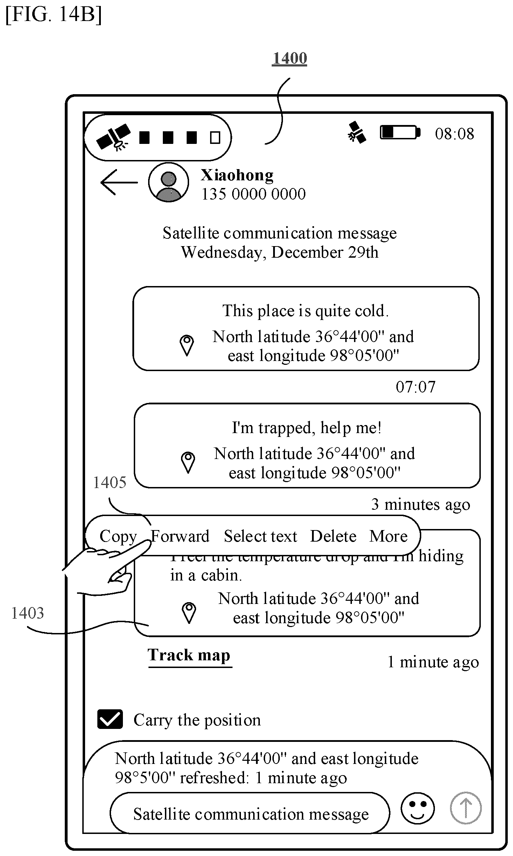

The electronic device 100 may receive and respond to a touch-and-hold operation performed by the user on the information 1403. As shown in FIG. 14B, one or more controls are displayed on the information 1403, including a forward control 1405, a text selection control, and the like.

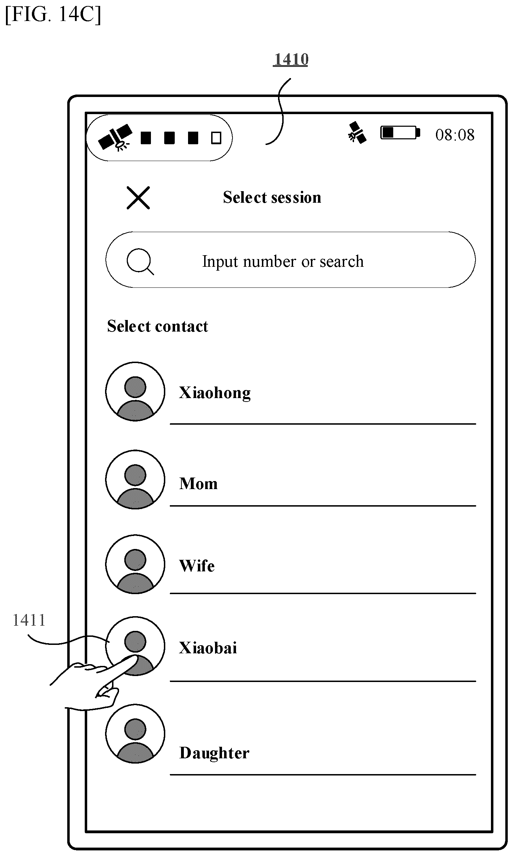

The electronic device 100 may receive and respond to a tap operation performed by the user on the forward control 1405, and display a recipient interface 1410 shown in FIG. 14C. The recipient interface 1410 may include one or more contact entries, for example, Xiaohong, Mom, and Xiaobai 1411.

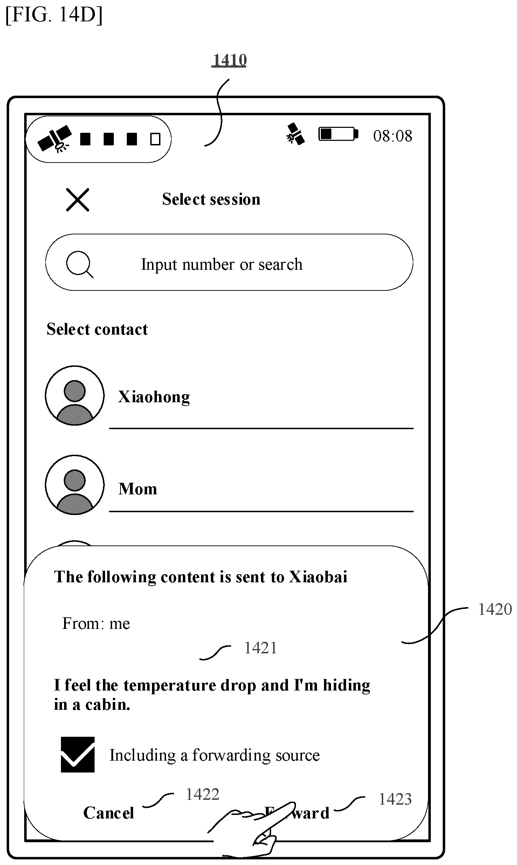

The electronic device 100 may receive and respond to a tap operation performed by the user on Xiaobai 1411. As shown in FIG. 14D, a forwarding prompt window 1420 is displayed in the recipient interface 1410.

As shown in FIG. 14D, the forwarding prompt window 1420 may include to-be-forwarded text 1421, a cancel control 1422, and a forward control 1423. The text 1421 may be the same as the text content 1403b shown in FIG. 14B. The cancel control 1422 may be configured to trigger the electronic device 100 to close the forwarding prompt window 1420.

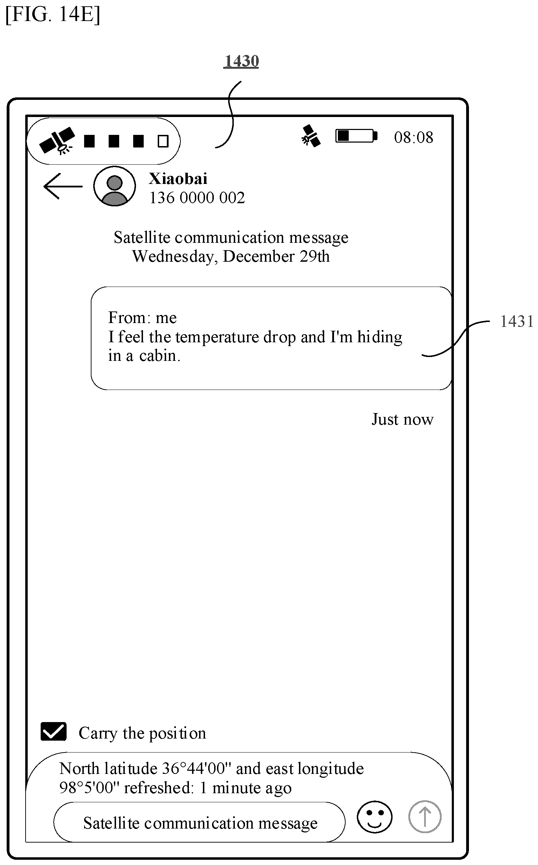

The electronic device 100 may receive and respond to a tap operation performed by the user on the forward control 1423, and display an information sending interface 1430 shown in FIG. 14E.

As shown in FIG. 14E, the information sending interface 1430 may include recipient information and information 1431. Information content of the information 1431 may be the same as the text information 1403b shown in FIG. 14A. In addition, the information 1431 does not carry position information.

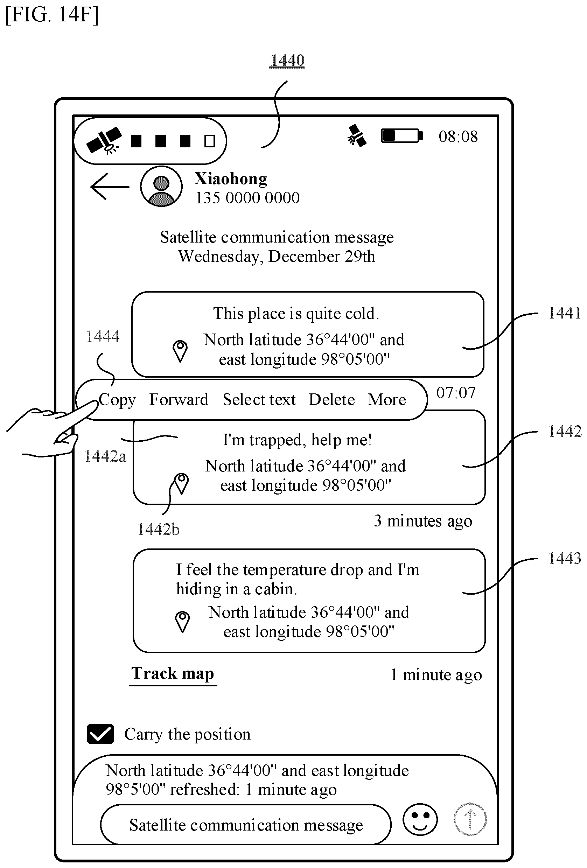

For another example, as shown in FIG. 14F, the electronic device 100 may display an information sending interface 1440. The information sending interface 1440 may include recipient information, information 1441, information 1442, and information 1443. The information 1442 may include text information 1442a and position information 1442b. One or more controls are further displayed on the information 1442, including a copying control 1444. For other content of the information sending interface 1440, refer to the information sending interface 1400 shown in FIG. 14A. The electronic device 100 may receive and respond to a tap operation performed by the user on the copying control 1444, and copy the text information 1442a.

It may be understood that the embodiments shown in FIG. 14A to FIG. 14F are merely examples for the description that the position information carried in the information does not support operations such as copying and forwarding. In some embodiments, the position information also does not support an operation such as selecting text. This is not limited herein in this application.

In some application scenarios, the electronic device 100 may provide a plurality of service modes, including a satellite communication mode, a low battery service mode, a WLAN service, a mobile data service, an airplane mode service, a MeeTime BeiDou satellite message service, a SkyTone service, and the like. The plurality of service modes may be mutually exclusive. For example, after the satellite communication mode is enabled, the electronic device 100 may manage and control a control configured to enable another service mode, or after the SkyTone service mode is enabled, the electronic device 100 may manage and control a satellite communication mode control. The electronic device 100 may implement management and control by graying out the control (or skipping displaying the control), or the electronic device 100 may display a management and control prompt after receiving input of the user for the managed and controlled control.

In this way, when a conflict exists between different services, the user may be notified of the managed and controlled control.

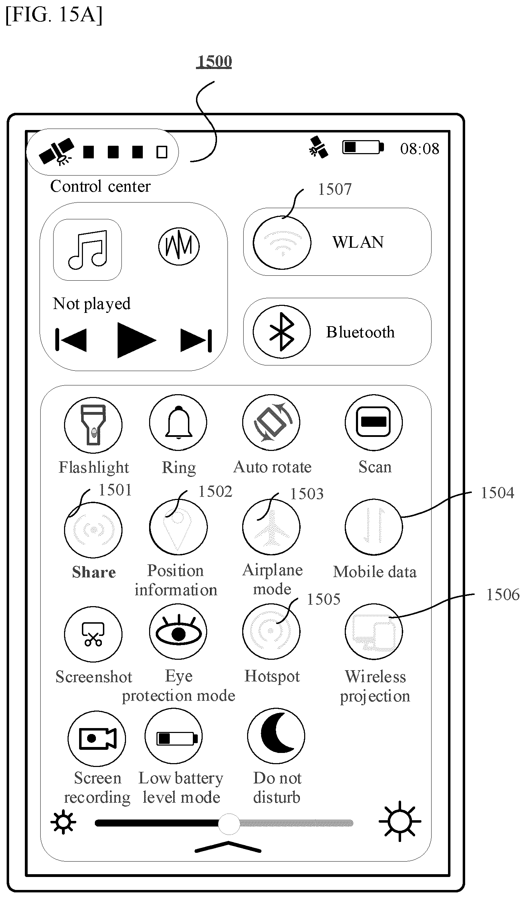

For example, as shown in FIG. 15A, the electronic device 100 may display a control center interface 1500. The control center interface 1500 may display one or more function switch controls, for example, a flashlight control, a share control 1501, a position information control 1502, an airplane mode control 1503, a mobile data control 1504, a hotspot control 1505, a wireless projection control 1506, and a WLAN control 1507. In addition, the satellite real-time capsule or the satellite real-time card is further displayed in the control center interface 1500, to prompt the user that the electronic device 100 has currently enabled the satellite communication mode. The electronic device 100 may gray out the share control 1501, the position information control 1502, the airplane mode control 1503, the mobile data control 1504, the hotspot control 1505, the wireless projection control 1506, and the WLAN control 1507, to prompt the user that the use of the foregoing plurality of controls is restricted after the satellite communication mode is enabled.

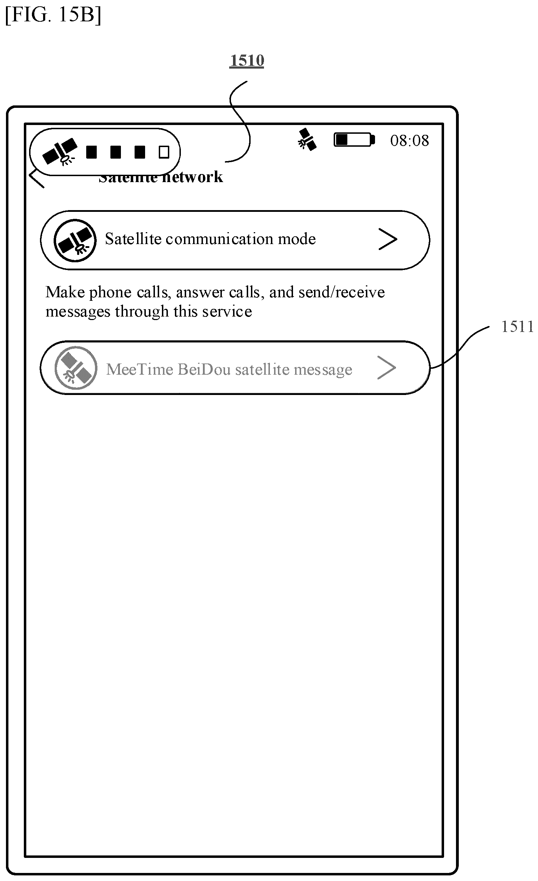

For another example, as shown in FIG. 15B, the electronic device 100 displays a satellite network setting interface 1510. The satellite network setting interface 1510 may include a MeeTime BeiDou control 1511. The MeeTime BeiDou control 1511 may be configured to trigger the electronic device 100 to enable the MeeTime BeiDou satellite message service. The satellite real-time capsule or the satellite real-time card is further displayed in the satellite network setting interface 1510, to prompt the user that the electronic device 100 has enabled the satellite communication mode. In this case, the electronic device 100 may gray out the MeeTime BeiDou control 1511, to prompt the user that the MeeTime BeiDou satellite message service is unavailable when the satellite communication mode is enabled.

It may be understood that the embodiments shown in FIG. 15A and FIG. 15B are merely examples for the description that when the satellite communication mode is enabled, the electronic device 100 may manage and control a control whose use is restricted. In this embodiment of this application, the managed and controlled control may further include more or fewer controls than those in the foregoing embodiment, or controls different from those in the foregoing embodiment, for example, a SkyTone enabling control. This is not limited herein in this application.

In some application scenarios, the electronic device 100 receives an operation that the user enables the satellite communication mode. When detecting that a limitation condition is met, the electronic device 100 may output a limitation prompt, where the limitation prompt prompts the user that the satellite communication mode cannot be enabled in a current state, or prompts the user that the satellite connection of the electronic device 100 is to be affected in a current state. The limitation condition includes any one or more of the following: The electronic device 100 has enabled another service (for example, the SkyTone service or the MeeTime BeiDou satellite message service) that conflicts with the satellite communication mode, a battery level of the electronic device 100 is lower than a battery level threshold, a device temperature of the electronic device 100 is higher than a temperature threshold, or the like.

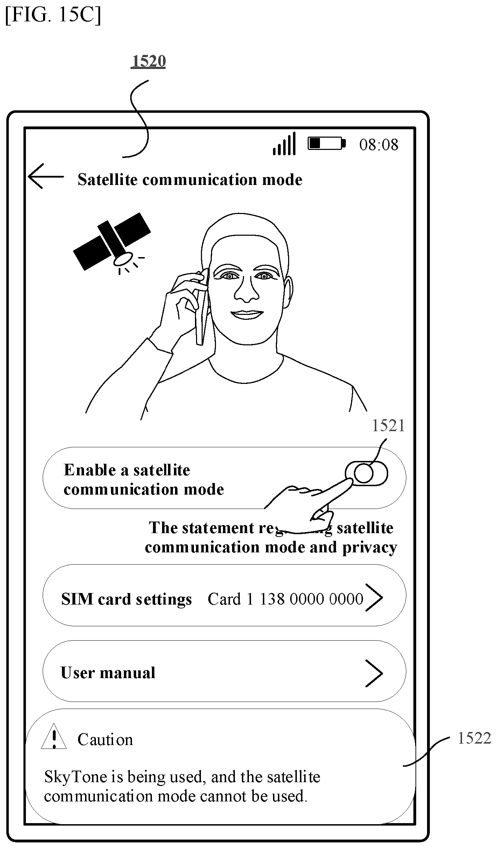

For example, as shown in FIG. 15C, the electronic device 100 displays a satellite communication mode setting interface 1520. The satellite communication mode setting interface 1520 may include an enable control 1521. The enable control 1521 may be configured to trigger the electronic device 100 to enable the satellite communication mode. If SkyTone has been enabled on the electronic device 100, the electronic device 100 may receive and respond to a tap operation performed by the user on the enable control 1521, and display a prompt window 1522, to prompt the user that SkyTone is currently being used and the satellite communication mode cannot be enabled. For example, the prompt window 1522 may include text "SkyTone is being used, and the satellite mode cannot be used".

It may be understood that after the electronic device 100 enables the satellite communication mode, the electronic device 100 may also manage and control an enable control of another service such as SkyTone. For a management and control manner, refer to the related content described in the embodiment shown in FIG. 15C.

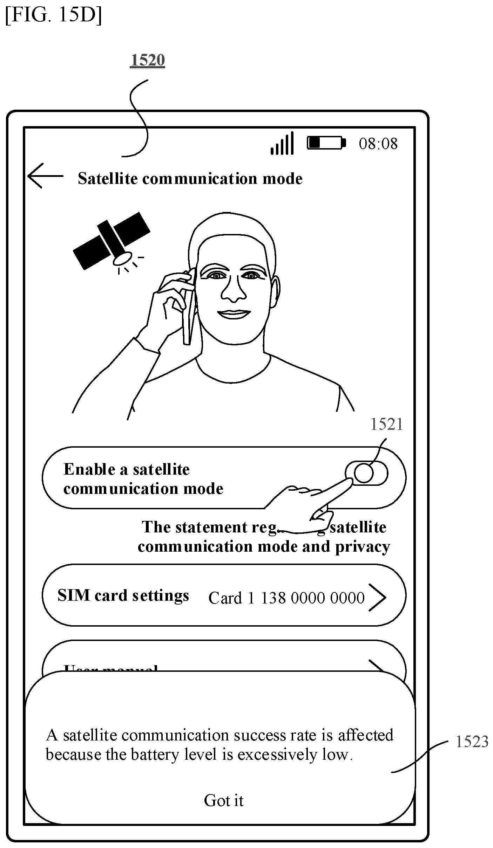

For another example, as shown in FIG. 15D, the electronic device 100 displays a satellite communication mode setting interface 1520. In addition, in this case, a battery level of the electronic device 100 is lower than a preset battery level threshold. The electronic device 100 may receive and respond to a tap operation performed by the user on an enable control 1521, and display a prompt window 1523, to prompt the user that a current battery level is excessively low and affects a satellite connection success rate.

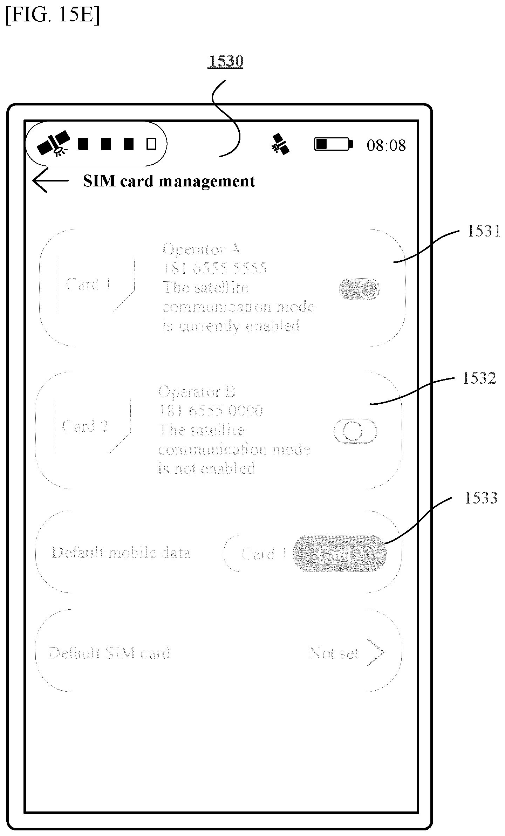

For another example, as shown in FIG. 15E, the electronic device 100 displays a SIM card management interface 1530. The electronic device 100 may enter the SIM card management interface 1530 from a SIM card management entry in a setting application. The satellite real-time card or the satellite real-time capsule may be displayed in the SIM card management interface 1530. The SIM card management interface 1530 may include one or more SIM card entries, for example, a card 1 entry 1531 and a card 2 entry 1532. Each SIM card entry may include a SIM card number, an operator, a satellite communication mode enabling status, and the like. It may be learned from the card 1 entry 1531 and the card 2 entry 1532 that the satellite communication mode has been enabled for a SIM card 1, and the satellite communication mode has not been enabled for a SIM card 2. The SIM card management interface 1530 may further include a default mobile data option 1533, configured to indicate a SIM card that currently uses mobile data by default. After the satellite communication mode is enabled, the SIM card that uses mobile data by default and that is indicated by the default mobile data option 1533 is different from the SIM card for which the satellite communication mode is enabled. In addition, after the satellite communication mode is enabled, controls such as the one or more SIM card entries and the default mobile data option 1533 in the SIM card management interface 1530 may be grayed out by the electronic device 100, and are in a restricted use state.

It may be understood that the embodiments shown in FIG. 15C to FIG. 15E are merely examples. In this embodiment of this application, more or fewer restrictions or restrictions different from those in the foregoing embodiments may be set on the electronic device 100. This is not limited herein in this application.

In some other embodiments, after detecting that the foregoing restriction condition is met, the electronic device 100 may alternatively gray out a control configured to enable the satellite communication mode, or skip displaying the control, or skip displaying an interface that includes a control configured to enable the satellite communication mode. This is not limited herein in this application either.

In some application scenarios, if the electronic device 100 displays the satellite real-time capsule, the electronic device 100 may receive and respond to the dialing operation of the user, display the in-call screen, close the satellite real-time capsule, and display the satellite real-time card or the satellite real-time page. In addition, in a process in which the electronic device 100 performs a satellite call, if the in-call screen displays the satellite real-time capsule, if it is detected that the satellite is offset from the electronic device 100 or that the electronic device 100 is disconnected from the satellite, the electronic device 100 may also close the satellite real-time capsule, and display the satellite real-time card or the satellite real-time page.

In this way, in a call process, the user can more conveniently view a status of the connection between the electronic device 100 and the satellite, and adjust a holding posture in real time. In addition, if the satellite is offset relative to the electronic device 100, the user may also adjust the offset in a timely manner.

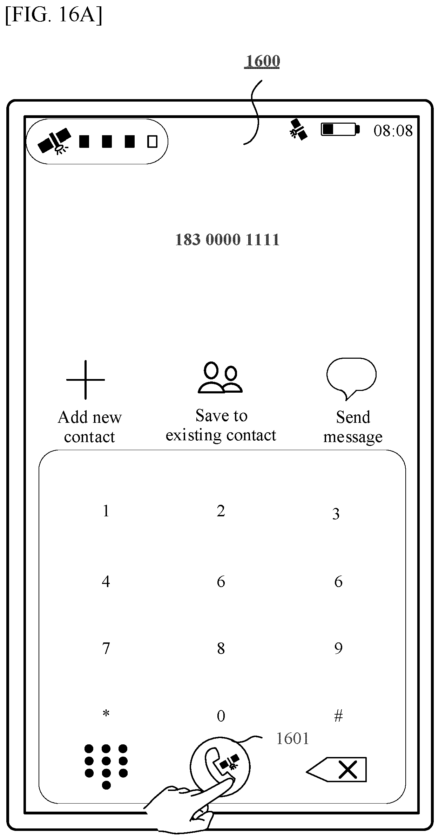

For example, as shown in FIG. 16A, the electronic device 100 displays a dialing interface 1600. The satellite real-time capsule is displayed in the dialing interface 1600, to prompt the user that the satellite communication mode is currently enabled. The dialing interface 1600 may display a dialing keyboard, a dialing control 1601, a number input by the user, and one or more controls, for example, an add new contact control, a save to existing contact control, and a send message control. It should be noted that the one or more controls do not include a video call control. The dialing control 1601 includes a satellite symbol.

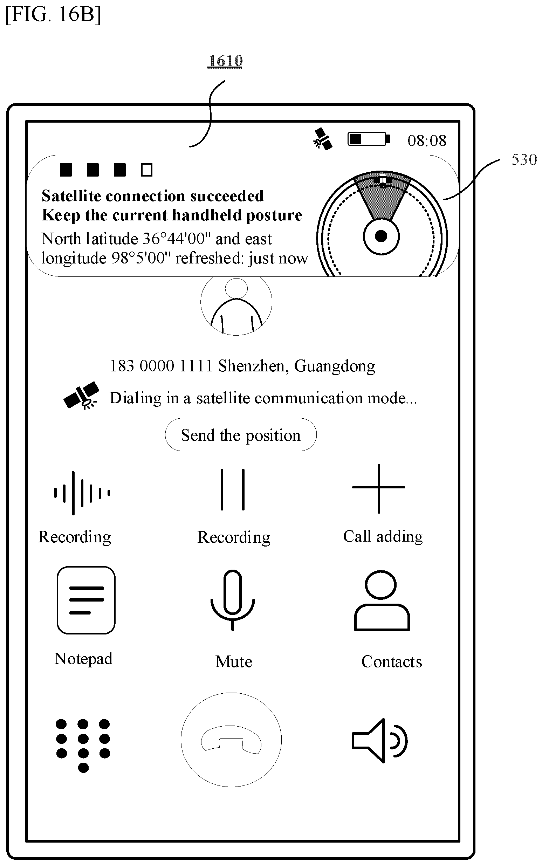

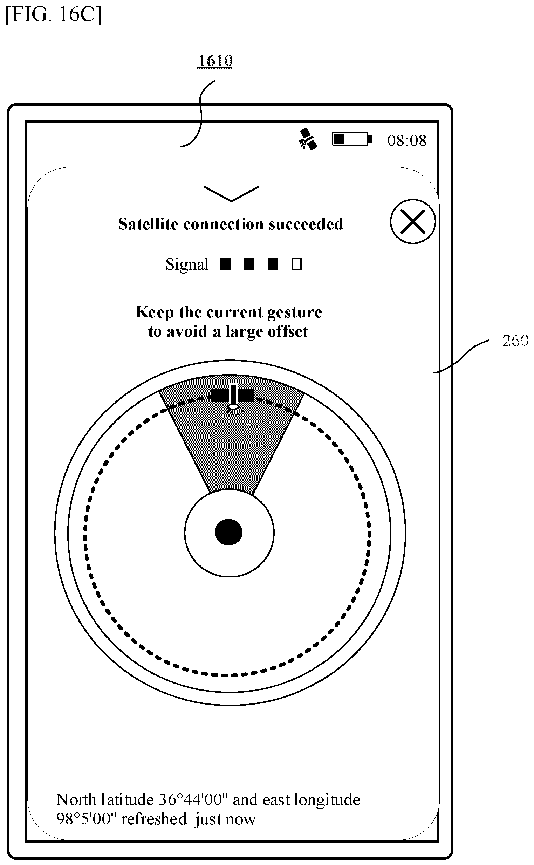

The electronic device 100 may receive and respond to a tap operation performed by the user on the dialing control 1601, close the satellite real-time capsule, and display an in-call screen 1610 shown in FIG. 16B or FIG. 16C.

As shown in FIG. 16B, the satellite connection card 530 is displayed on the in-call screen 1610. For other content of the in-call screen 1610, refer to the in-call screen 710 shown in FIG. 7C. Details are not described herein again.

As shown in FIG. 16C, the satellite connection page 260 is displayed on the in-call screen 1610. For specific content of the satellite connection page 260, refer to the satellite connection page 260 in the embodiment shown in FIG. 2I. It should be noted that, in this case, the satellite connection page 260 may not include the phone application icon and the information application icon.

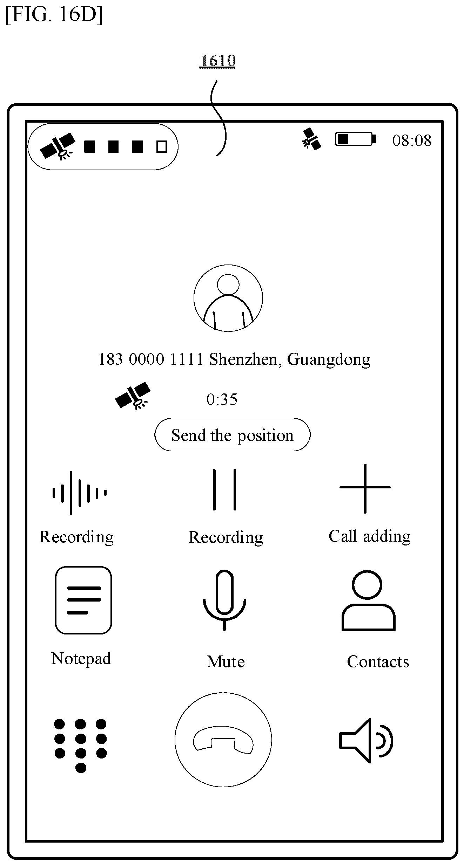

For another example, as shown in FIG. 16D, the electronic device 100 may display an in-call screen 1610. The satellite real-time capsule is displayed on the in-call screen 1610.

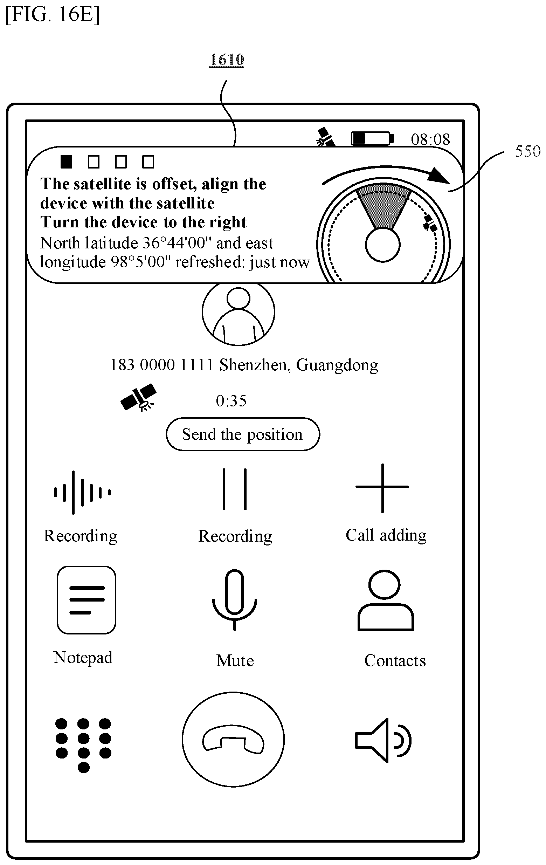

When it is detected that the satellite is offset relative to the electronic device 100, as shown in FIG. 16E, the electronic device 100 may close the satellite real-time capsule, and display the satellite offset card 550 on the in-call screen 1610.

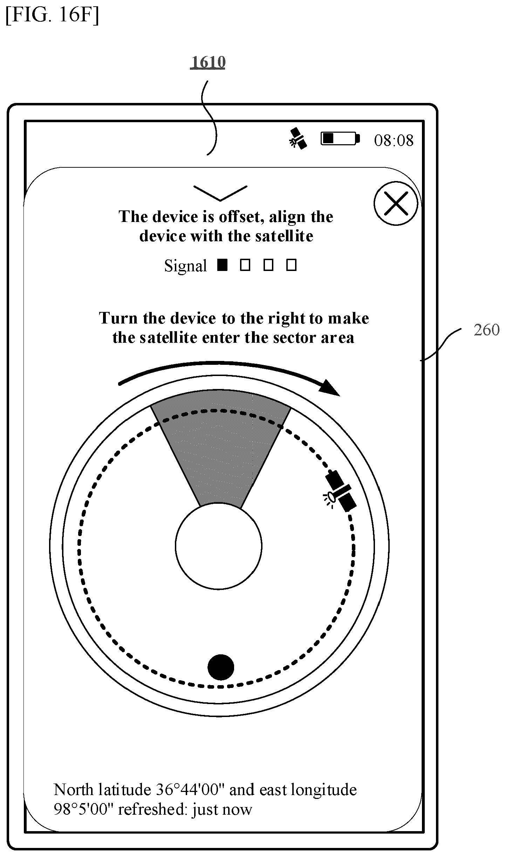

In some embodiments, when it is detected that the satellite is offset relative to the electronic device 100, as shown in FIG. 16F, the electronic device 100 may alternatively close the satellite real-time capsule, and display a satellite offset page 260 on the in-call screen 1610. For specific content of the satellite offset page 260, refer to the satellite connection page 260 shown in FIG. 2J. It should be noted that, in this case, the satellite offset page 260 may not include the phone application icon and the information application icon.

It may be understood that the embodiments shown in FIG. 16A to FIG. 16F are merely examples. In this embodiment of this application, the dialing operation of the user may alternatively be a tap operation performed by the user on a call record, or the like. This is not limited herein in this application.

In some other embodiments, if the electronic device 100 displays the satellite real-time capsule, if it is detected that the satellite is offset relative to the electronic device 100, the electronic device 100 may alternatively close the satellite real-time capsule, and display the satellite real-time card or the satellite real-time page, to prompt the user that the satellite is offset, and prompt the user to adjust the posture of holding the device. This is not limited herein in this application.

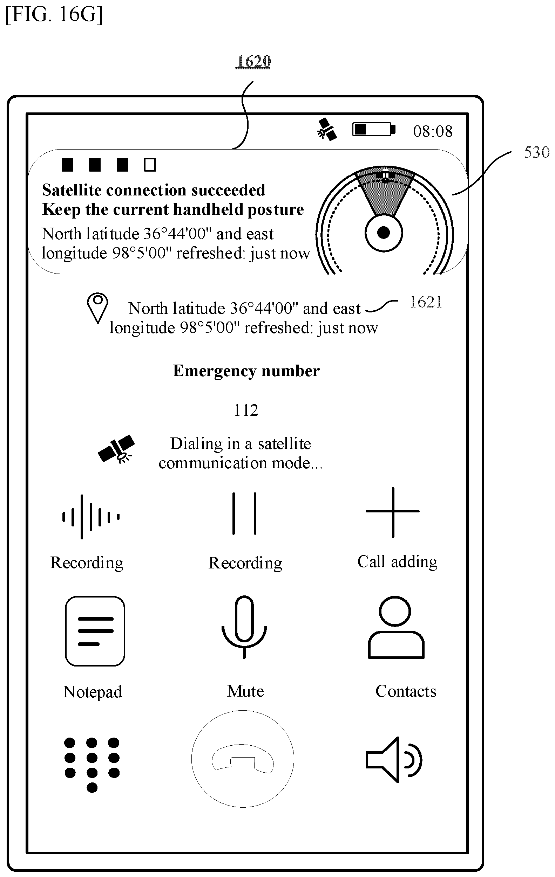

In some other application scenarios, after the electronic device 100 establishes the communication connection to the satellite, the electronic device 100 may receive and respond to an operation that the user dials an emergency number, and display an emergency call screen. For example, as shown in FIG. 16G, the emergency call screen 1620 may include position information 1621. The position information 1621 may indicate current longitude and latitude of the electronic device 100. For other content of the emergency call screen 1620, refer to the related descriptions of the in-call screen 710 shown in FIG. 7C. Optionally, the emergency call screen 1620 may further display a time validity prompt, to prompt update time and an update manner of the position information 1621.

In this way, when the user dials an emergency number, current position information can be quickly and efficiently obtained.

In some application scenarios, the electronic device 100 may display a split-screen interface or a floating window interface. The split-screen interface may include an interface 1 of an application 1 (for example, a setting application, a phone application, or an information application) and an interface 2 of an application 2. The floating window interface may be an interface obtained when the interface 1 of the application 1 is displayed in a floating window form. The interface 1 includes a satellite communication mode enabling control. The electronic device 100 may receive and respond to input of the user for the satellite communication mode enabling control, and output a satellite searching prompt. The satellite searching prompt indicates the user to adjust the posture of holding the electronic device 100, so that the electronic device 100 establishes the communication connection to the satellite. When the communication connection between the electronic device 100 and the satellite is successfully established, the electronic device 100 may output a connection success prompt. The connection success prompt prompts the user that the electronic device 100 has successfully established the communication connection to the satellite. In addition, the electronic device 100 may further display a strength indicator. The strength indicator indicates satellite signal strength received by the electronic device 100. After the communication connection between the electronic device 100 and the satellite is successfully established, the electronic device 100 may communicate with another electronic device by using the satellite.

In this way, if the electronic device 100 performs split-screen displaying or displays a floating window, the satellite communication mode may also be enabled. Even in an area in which quality of the cellular network signal is poor, the user may use the electronic device 100 to make a call to the another electronic device by using the satellite.

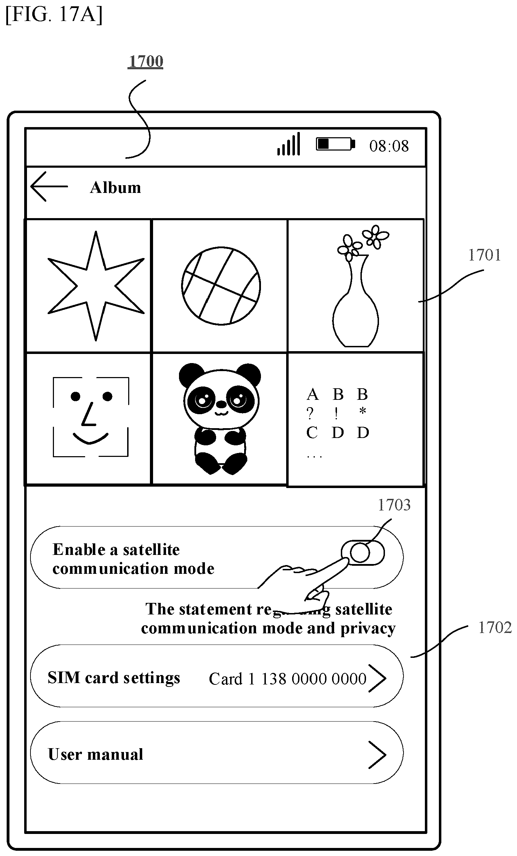

For example, as shown in FIG. 17A, the electronic device 100 displays a split-screen interface 1700. The split-screen interface 1700 may include an album application interface 1701 and a satellite communication mode setting interface 1702. The satellite communication mode setting interface 1702 may display an on/off control 1703, configured to enable or disable the satellite communication mode. For other content of the satellite communication mode setting interface 1702, refer to the related content of the satellite communication mode setting interface 320 shown in FIG. 3D.

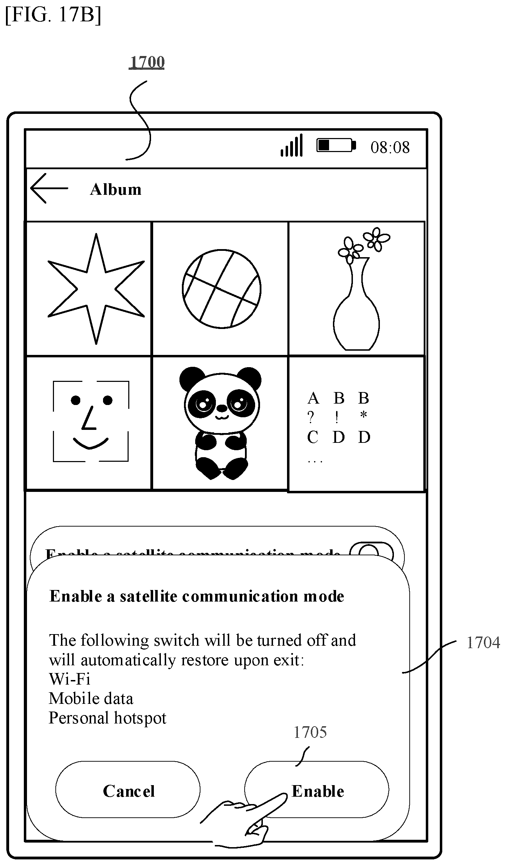

The electronic device 100 may receive and respond to a tap operation performed by the user on the on/off control 1703. As shown in FIG. 17B, an enabling prompt window 1704 is displayed in the split-screen interface 1700.

As shown in FIG. 17B, the enabling prompt window 1704 may include an enabling prompt, a cancel control, and an enable control 1705. For specific content of the enabling prompt window 1704, refer to the related content of the enabling prompt window 220 shown in FIG. 2C.

The electronic device 100 may receive and respond to a tap operation performed by the user on the enable control 1705, and enable the satellite communication mode. For an interface change in a process in which the electronic device 100 enables the satellite communication mode, refer to the foregoing embodiments shown in FIG. 2D to FIG. 2I. Details are not described herein again.

It may be understood that the embodiments shown in FIG. 17A and FIG. 17B are merely examples. In this embodiment of this application, the split-screen interface may further include interfaces of more applications. The application 1 and the application 2 may also be applications different from those in the foregoing embodiments. This is not limited in this application.

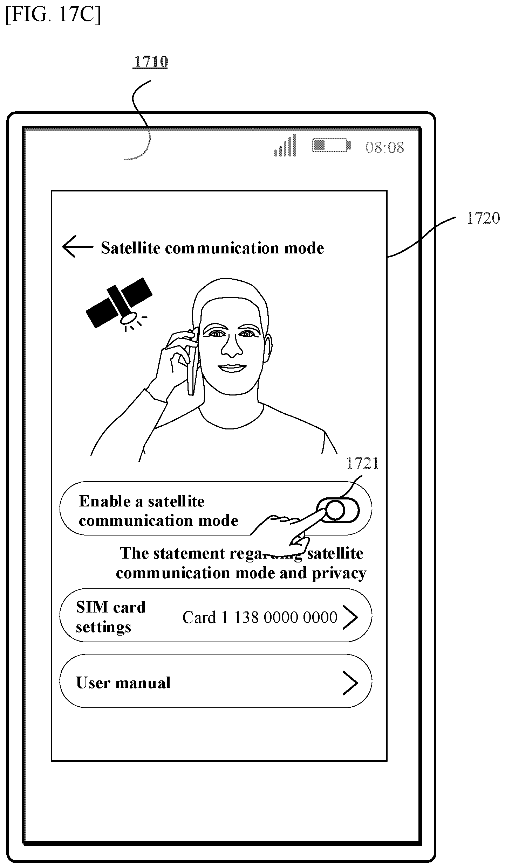

For another example, as shown in FIG. 17C, the electronic device 100 displays a floating window interface 1710. The floating window interface 1710 may include a floating window 1720. For specific content in the floating window 1720, refer to the satellite communication mode setting interface 320 shown in FIG. 3D. The floating window 1720 may include an on/off control 1721, configured to trigger the electronic device 100 to enable or exit the satellite communication mode.

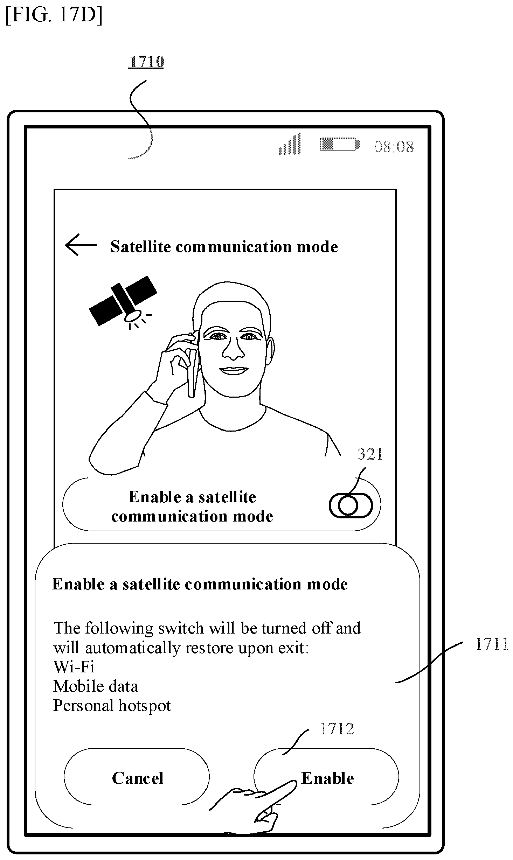

The electronic device 100 may receive and respond to a tap operation performed by the user on the on/off control 1721. As shown in FIG. 17D, an enabling prompt window 1711 is displayed in the floating window interface 1710.

As shown in FIG. 17D, the enabling prompt window 1711 may include an enabling prompt, a cancel control, and an enable control 1712. For specific content of the enabling prompt window 1711, refer to the related content of the enabling prompt window 220 shown in FIG. 2C.

The electronic device 100 may receive and respond to a tap operation performed by the user on the enable control 1712, and enable the satellite communication mode. For an interface change in a process in which the electronic device 100 enables the satellite communication mode, refer to the foregoing embodiments shown in FIG. 2D to FIG. 2I. Details are not described herein again.

It may be understood that the embodiments shown in FIG. 17C to FIG. 17D are merely examples. In this embodiment of this application, the interface displayed in the floating window may alternatively be an interface that includes the satellite communication mode enabling control, for example, a call application interface, an information application interface, or a control center interface. This is not limited in this application.

In some application scenarios, after the electronic device 100 enables the satellite communication mode, the electronic device 100 may display a satellite communication mode disabling control. The electronic device 100 may receive and respond to input of the user for the satellite communication mode disabling control, and display an exit prompt window. The exit prompt window is used to ask the user whether to exit the satellite communication mode. The electronic device 100 may receive and respond to input of the user for an exit control in the exit prompt window, and exit the satellite communication mode.

In this way, the electronic device 100 may exit the satellite communication mode in response to an operation that the user exits the satellite communication mode.

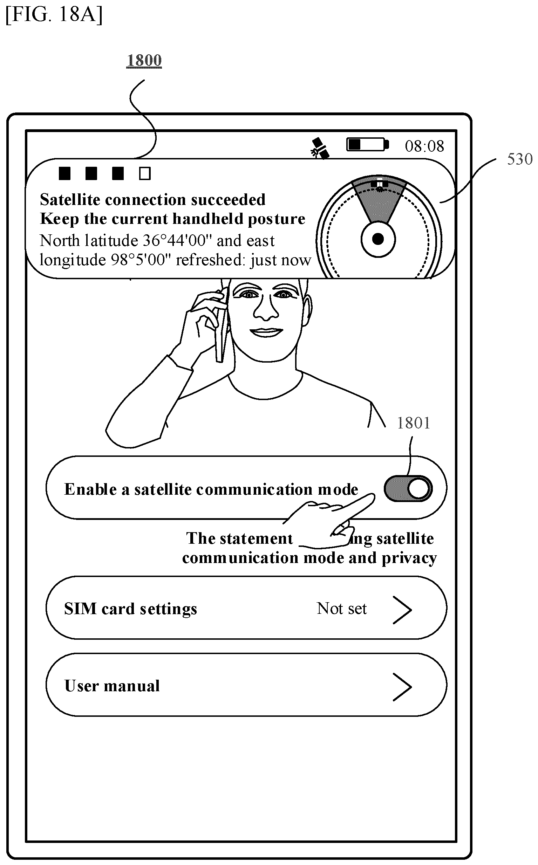

For example, the electronic device 100 may display a satellite communication mode setting interface 1800 shown in FIG. 18A. The satellite communication mode setting interface 1800 may include an on/off control 1801, configured to trigger the electronic device 100 to exit the satellite communication mode. For other specific content of the satellite communication mode setting interface 1800, refer to the satellite communication mode setting interface 320 shown in FIG. 3D. The satellite connection card 530 may be further displayed in the satellite communication mode setting interface 1800. The satellite connection card 530 is configured to prompt the user that the electronic device 100 has currently established the communication connection to the satellite.

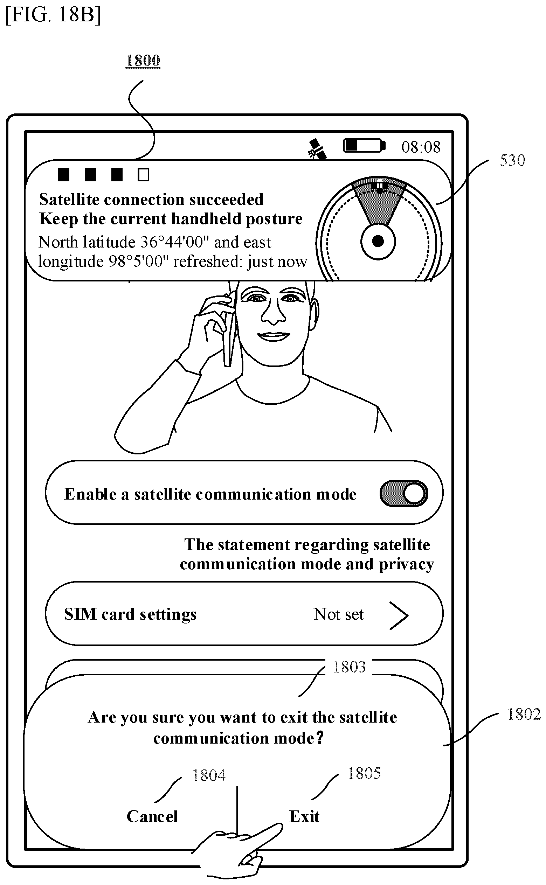

The electronic device 100 may receive and respond to a tap operation performed by the user on the on/off control 1801. As shown in FIG. 18B, an exit prompt window 1802 is displayed in the satellite communication mode setting interface 1800.

As shown in FIG. 18B, the exit prompt window 1802 may include an exit prompt 1803, a cancel control 1804, and an exit control 1805. The exit prompt 1803 is used to ask the user whether to exit the satellite communication mode, for example, "Are you sure you want to exit the satellite mode?". The cancel control 1804 is configured to trigger the electronic device 100 to close the exit prompt window, and maintain the communication connection to the satellite. The exit control 1805 is configured to trigger the electronic device 100 to exit the satellite communication mode.

The electronic device 100 may receive and respond to a tap operation performed by the user on the exit control 1805, close the exit prompt window 1802 and the satellite connection card 530, and exit the satellite communication mode.

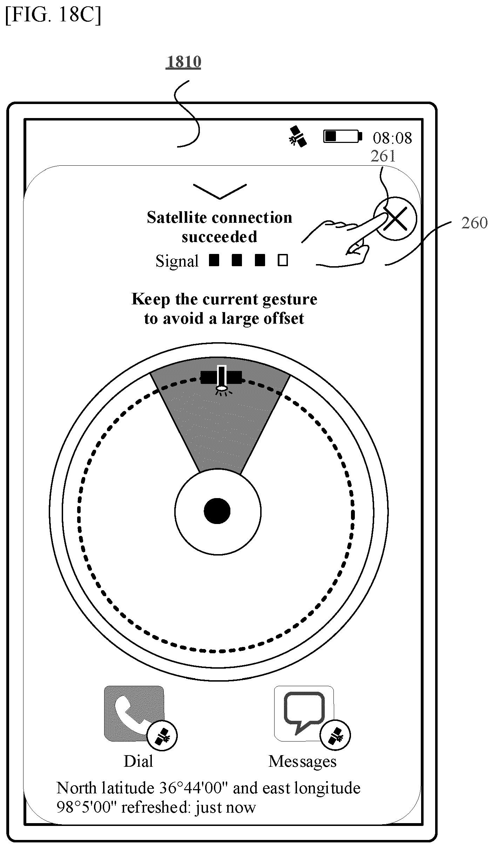

For another example, as shown in FIG. 18C, the electronic device 100 may display a background interface 1810, and display the satellite connection page 260 in the background interface 1810. The background interface 1810 may be a home screen (for example, the home screen 200 in the foregoing embodiment), or may be an interface of an application, for example, a phone application, a setting application, or an information application, or may be an interface of a plurality of applications displayed on split screens, or the like. The satellite connection page 260 may be the satellite connection page 260 shown in FIG. 2I. The satellite connection page 260 may be configured to prompt the user that the electronic device 100 has currently established the communication connection to the satellite.

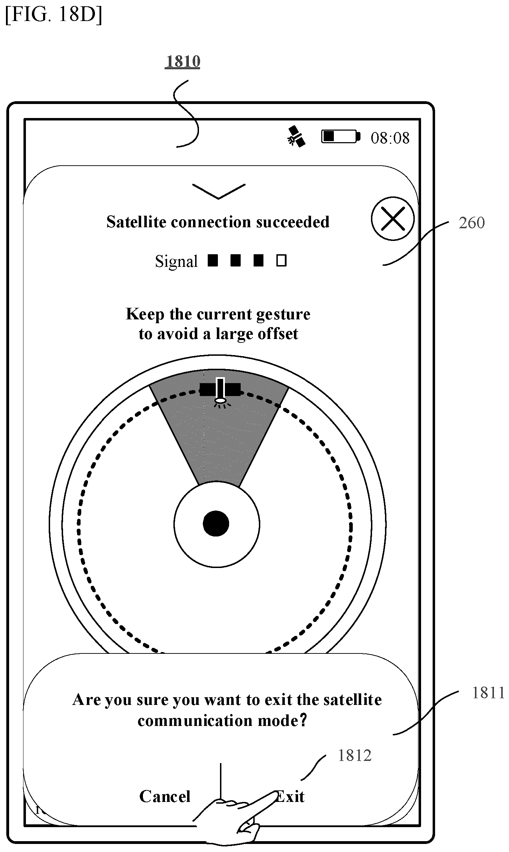

The electronic device 100 may receive and respond to a tap operation performed by the user on the disabling control 261 in the satellite connection page 260. As shown in FIG. 18D, an exit prompt window 1811 is displayed on the satellite connection page 260.

As shown in FIG. 18D, the exit prompt window 1811 may include an exit prompt, a cancel control, and an exit control 1812. For specific content of the exit prompt window 1811, refer to the related content of the exit prompt window 1802 shown in FIG. 18B.

The electronic device 100 may receive and respond to a tap operation performed by the user on the exit control 1812, close the satellite connection page 260 and the exit prompt window 1811, and exit the satellite communication mode.

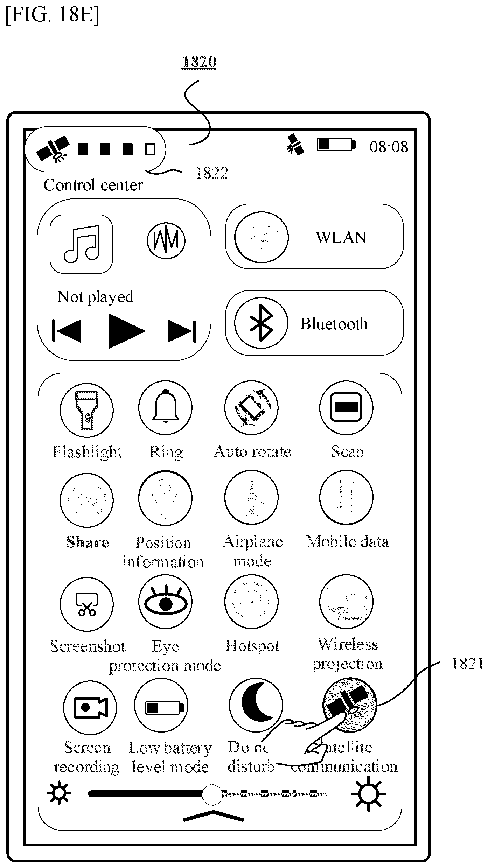

For another example, as shown in FIG. 18E, the electronic device 100 may display a control center interface 1820. The control center interface 1820 may include one or more function controls, for example, a satellite control 1821. The satellite control 1821 may be displayed in a different color, to prompt the user that the satellite communication mode is currently enabled. For other content of the control center interface 1820, refer to the related content of the control center interface 1500 shown in FIG. 15A. In addition, a satellite real-time capsule 1822 (or a satellite connection card, or the like) may be further displayed in the control center interface 1820, to prompt the user that the electronic device 100 has currently established the communication connection to the satellite.

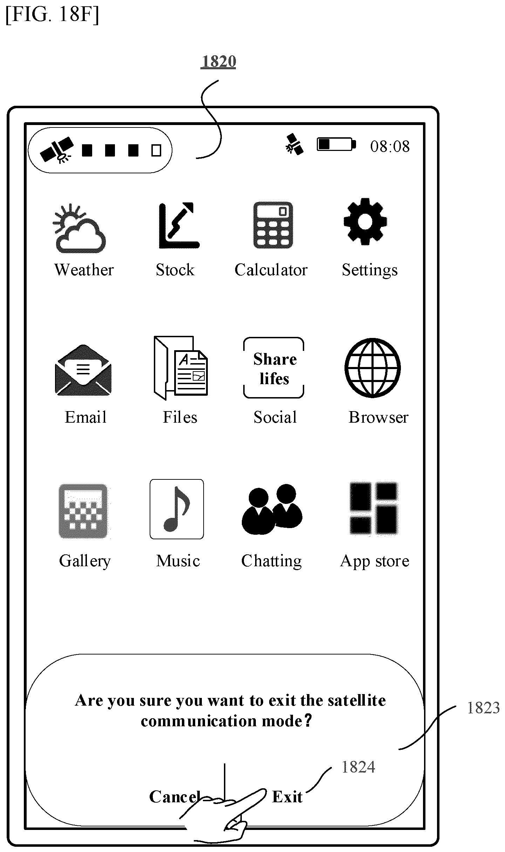

The electronic device 100 may receive and respond to a tap operation performed by the user on the satellite control 1821. As shown in FIG. 18F, an exit prompt window 1823 is displayed. For specific content of the exit prompt window, refer to the related content of the exit prompt window 1802 shown in FIG. 18B. The electronic device 100 may receive and respond to a tap operation performed by the user on an exit control 1824 in the exit prompt window 1823, close the exit prompt window 1823, and exit the satellite communication mode.

It may be understood that FIG. 18A to FIG. 18F merely show an example of a manner in which the electronic device 100 exits the satellite communication mode in response to an operation of the user. In this embodiment of this application, the electronic device 100 may exit the satellite communication mode (for example, the embodiments shown in FIG. 2J to FIG. 2K) when it is detected that duration in which the communication connection to the satellite is disconnected reaches preset duration, or may exit the satellite communication mode when it is detected that the device temperature is higher than a preset temperature or the battery level is lower than a preset battery level. This is not limited in this application.

In some application scenarios, after enabling the satellite communication mode, the electronic device 100 may display a plurality of overlapping real-time capsules including the satellite real-time capsule. The satellite real-time capsule covers and is displayed above the plurality of other real-time capsules. The electronic device 100 may receive and respond to an operation performed by the user on the plurality of overlapping real-time capsules, close the plurality of real-time capsules, and display a notification list. The notification list may include notification bars (for example, the satellite real-time card) corresponding to the plurality of real-time capsules. The satellite real-time card is displayed at the top of the notification list. The electronic device 100 may further receive and respond to an operation performed by the user on an area other than the notification list, close a notification bar other than the satellite real-time card in the notification list, and display one or more real-time capsules. The one or more real-time capsules are in a one-to-one correspondence with the notification bar other than the satellite real-time card.

In this way, if the plurality of real-time capsules are displayed in an overlapping manner, the user may preferentially obtain a connection status of a satellite signal. The plurality of real-time capsules and the notification list may be further rapidly and efficiently switched.

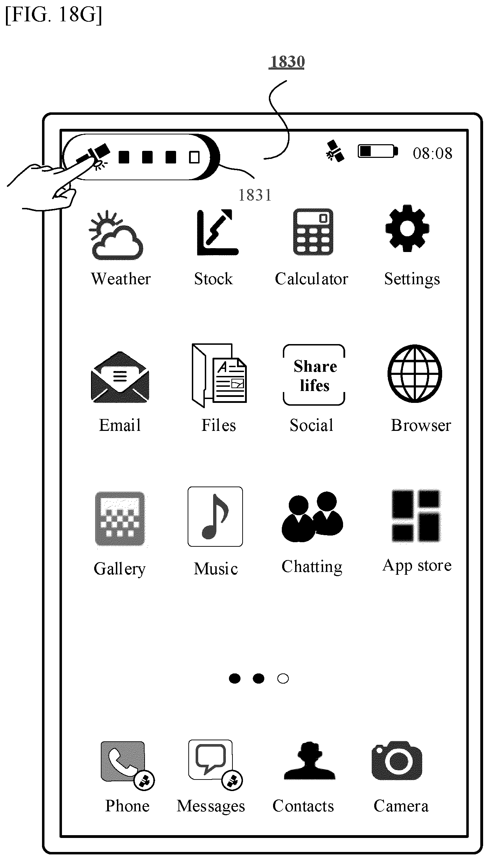

For example, as shown in FIG. 18G, the electronic device 100 displays a home screen 1830. For related descriptions of the home screen 1830, refer to the home screen 200 shown in FIG. 2A. An overlapping real-time capsule 1831 is displayed on the home screen 1830. The overlapping real-time capsule 1831 may include a plurality of real-time capsules that are displayed in an overlapping manner, for example, a satellite real-time capsule, a call real-time capsule, and a Bluetooth real-time capsule. The satellite real-time capsule covers and is displayed above other real-time capsules. Other real-time capsules in the plurality of real-time capsules may be completely covered by the satellite real-time capsule, or may be partially covered by the satellite real-time capsule.

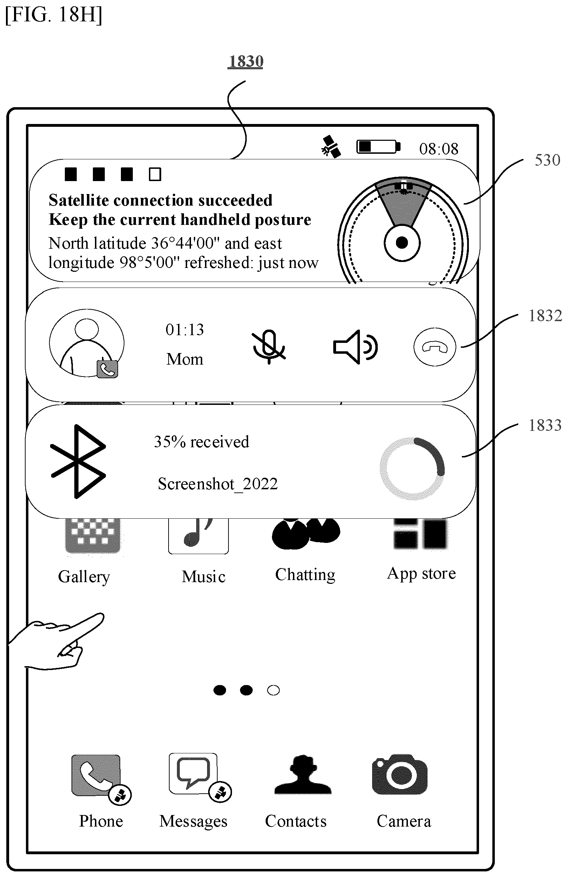

The electronic device 100 may receive and respond to a tap operation performed by the user on the overlapping real-time capsule 1831. As shown in FIG. 18H, the overlapping real-time capsule 1831 is closed, and the notification list is displayed on the home screen 1830.

As shown in FIG. 18H, the notification list may include one or more notification bars, for example, the satellite connection card 530, a call floating window 1832, and a Bluetooth notification bar 1833. For the satellite connection card 530, refer to the related descriptions of the embodiment shown in FIG. 5D. For the call floating window 1832, refer to the call floating window 730 shown in FIG. 7H. The Bluetooth notification bar 1833 may indicate a progress in which the electronic device 100 sends a file via Bluetooth. The foregoing one or more notification bars are in a one-to-one correspondence with one or more real-time capsules in the overlapping real-time capsule 1831 shown in FIG. 18G. It should be noted that, in the notification list, the satellite connection card 530 is displayed at the top of the notification list, and the call floating window 1832 is displayed above the Bluetooth notification bar 1833.

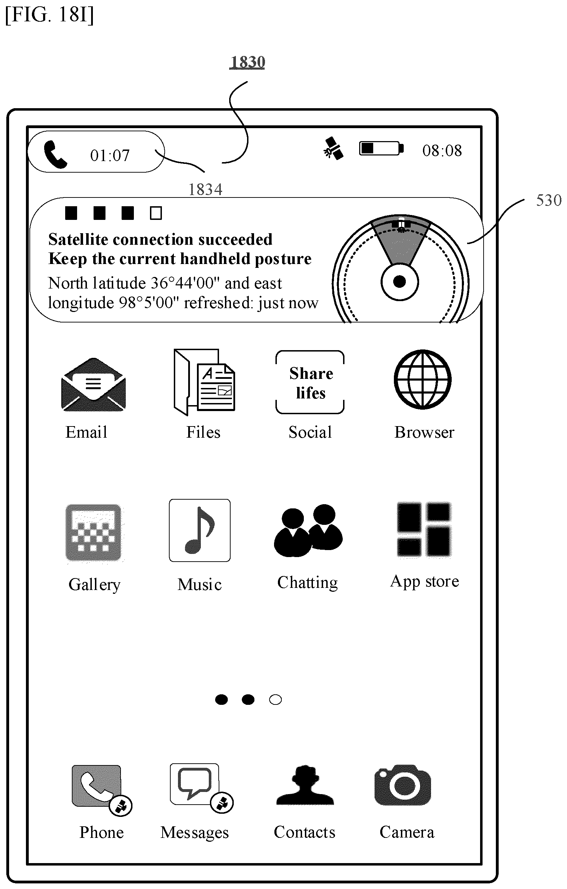

The electronic device 100 may receive and respond to a tap operation performed by the user on an area other than the notification list. As shown in FIG. 18I, the call floating window 1832 and the Bluetooth notification bar 1833 in the notification list are closed, and an overlapping real-time capsule 1834 is displayed.

As shown in FIG. 18I, the overlapping real-time capsule 1834 may include a call real-time capsule and a Bluetooth real-time capsule. The call real-time capsule covers and is displayed above the Bluetooth real-time capsule. In addition, the satellite connection card 530 is further displayed on the home screen 1830.

In some other application scenarios, if the communication mode is not enabled, the electronic device 100 may display a plurality of overlapping real-time capsules. The electronic device 100 may receive and respond to an operation performed by the user on the plurality of overlapping real-time capsules, close the plurality of real-time capsules, and display a notification list. The notification list may include notification bars corresponding to the plurality of real-time capsules. The electronic device 100 may further receive and respond to an operation performed by the user on an area other than the notification list, close the notification list, and redisplay the plurality of overlapping real-time capsules.

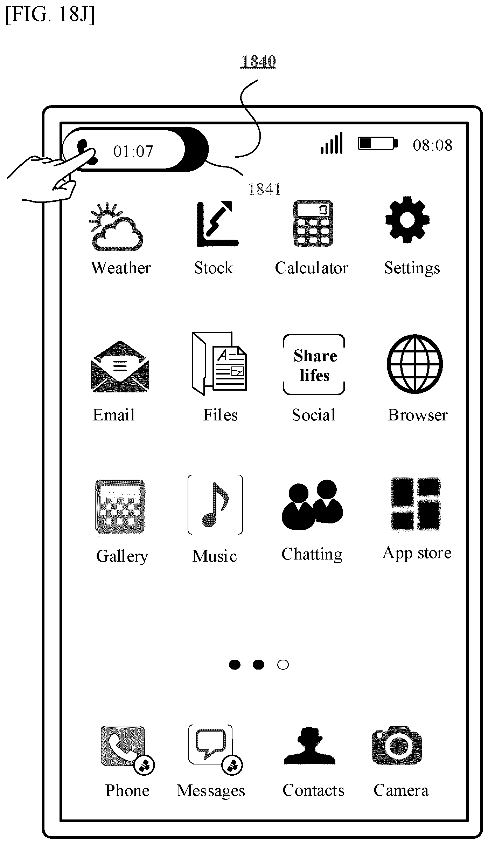

For example, as shown in FIG. 18J, if the satellite communication mode is not enabled, the electronic device 100 displays an overlapping real-time capsule 1841 on the home screen 1840. The overlapping real-time capsule 1841 may include a plurality of real-time capsules that are displayed in an overlapping manner, for example, a call real-time capsule and a Bluetooth real-time capsule. The call real-time capsule covers and is displayed above other real-time capsules. Other real-time capsules in the plurality of real-time capsules may be completely covered by the call real-time capsule, or may be partially covered by the call real-time capsule.

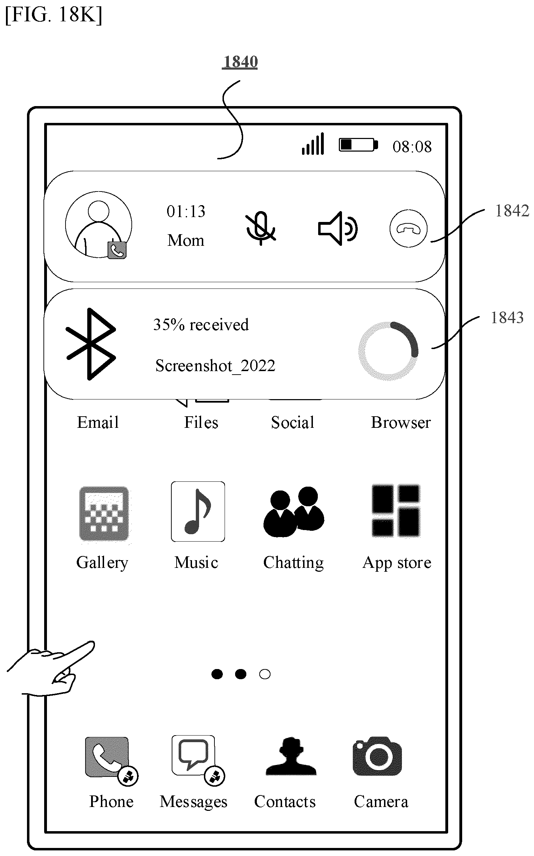

The electronic device 100 may receive and respond to a tap operation performed by the user on the overlapping real-time capsule 1841. As shown in FIG. 18K, the overlapping real-time capsule 1841 is closed, and the notification list is displayed on the home screen 1840.

As shown in FIG. 18K, the notification list may include one or more notification bars, for example, a call floating window 1842 and a Bluetooth notification bar 1843. For the call floating window 1842, refer to the call floating window 730 shown in FIG. 7H. For the Bluetooth notification bar 1843, refer to the Bluetooth notification bar 1833 shown in FIG. 18H. The foregoing one or more notification bars are in a one-to-one correspondence with one or more real-time capsules in the overlapping real-time capsule 1841 shown in FIG. 18G. It should be noted that, in the notification list, the call floating window 1842 is displayed above the Bluetooth notification bar 1843.

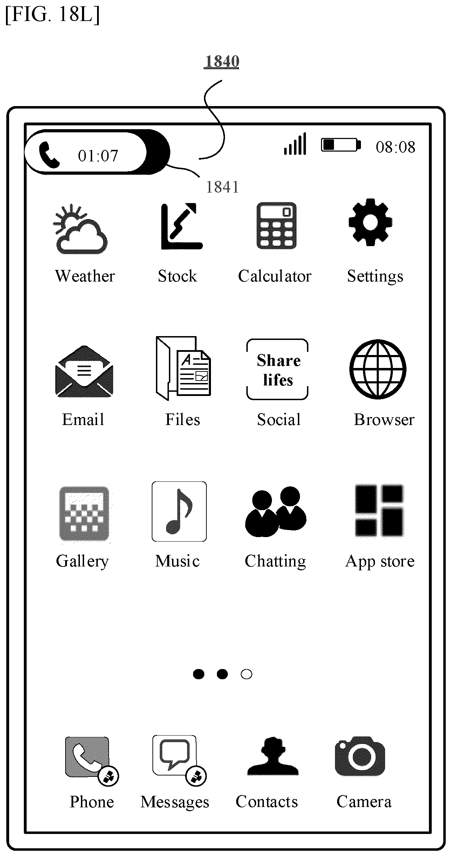

The electronic device 100 may receive and respond to a tap operation performed by the user on an area other than the notification list. As shown in FIG. 18L, the call floating window 1842 and the Bluetooth notification bar 1843 in the notification list are closed, and the overlapping real-time capsule 1841 is redisplayed.

The following describes a specific procedure of interaction between internal modules of the electronic device 100 in a process of enabling or exiting the satellite communication mode according to an embodiment of this application. The modules used in the process in which the electronic device 100 enables or exits the satellite communication mode may include the satellite communication mode module 11 and the satellite searching service module 12 in the embodiment shown in FIG. 1C-1 and FIG. 1C-2.

As shown in FIG. 19, the procedure of the interaction between the internal modules in the electronic device 100 in the process of enabling or exiting the satellite communication mode may include the following steps.

S1901: The satellite communication mode module 11 detects an operation that the user enables the satellite communication mode.

For example, the operation that the user enables the satellite communication mode may be input of the user for the satellite communication mode enabling control, for example, the tap operation for the satellite communication control 211 in the embodiment shown in FIG. 2B, the tap operation performed by the user on the enable control 321 in FIG. 3D, the tap operation performed by the user on the use-now control 412 in FIG. 4B, or the tap operation performed by the user on the enable control 442 in FIG. 4J.

S1902: The satellite communication mode module 11 displays a satellite real-time page, and starts satellite searching.

The satellite real-time page may include the calibration page 230, the satellite searching page 240, the alignment page 250, the satellite connection page 260, and the like in the embodiments shown in FIG. 2D to FIG. 2M. The satellite real-time page may include an operation prompt. The satellite connection page on the satellite real-time page may further include a strength indicator, configured to indicate strength of a satellite signal.

After the satellite communication mode is enabled, the satellite communication mode module 11 may display the satellite searching page. Optionally, in some embodiments, before the satellite searching page is displayed, the satellite communication mode module 11 may display the calibration page, to calibrate a magnetic sensor in the electronic device 100.

S1903: The satellite communication mode module 11 sends an enabling instruction to the satellite searching service module 12, to indicate the satellite searching service module 12 to obtain satellite data.

S1904: The satellite searching service module 12 obtains the satellite data, including an azimuth angle and a pitch angle of the satellite relative to the device and the satellite signal strength.

After receiving the enabling instruction, the satellite searching service module 12 may obtain the satellite data. The satellite data may include the azimuth angle and the pitch angle of the satellite relative to the electronic device 100. After the electronic device 100 determines to establish the communication connection to the satellite, the satellite data further includes the satellite signal strength. The satellite signal strength may indicate quality of the communication connection between the electronic device 100 and the satellite.

S1905: The satellite searching service module 12 sends the satellite data to the satellite communication mode module 11.

S1906: The satellite communication mode module 11 refreshes the satellite real-time page based on the satellite data.

It should be noted that step S1904 to step S1906 are steps that can be repeatedly performed. In some embodiments, the satellite searching service module 12 may periodically obtain the satellite data at a specified time interval T, and send the obtained satellite data to the satellite communication mode module 11.

After obtaining the satellite data for the first time, the satellite communication mode module 11 may display the alignment page based on the satellite data returned by the satellite searching service module 12.

After the communication connection to the satellite is established, the satellite communication mode module 11 may display the satellite connection page based on the satellite data.

The satellite communication mode module 11 may further refresh the satellite signal strength and/or the operation prompt on the satellite real-time page in real time based on the latest satellite data sent by the satellite searching service module 12. For example, when it is determined, based on the satellite data, that the satellite is offset rightward relative to the electronic device 100, the refreshed operation prompt may be indicating the user to turn the electronic device 100 to the right. For another example, when the satellite signal strength in the satellite data is enhanced, the strength indicator on the satellite real-time page may also change correspondingly, to prompt the user that the satellite signal strength is enhanced.

S1907: The satellite communication mode module 11 detects an operation that the user exits the satellite communication mode/detects that a satellite communication mode exit condition is met.

For example, for the operation that the user exits the satellite communication mode, refer to the related content in the embodiments shown in FIG. 18A to FIG. 18F.

The satellite communication mode exit condition may include any one or more of the following: The satellite signal strength is lower than a preset signal strength threshold, the device temperature of the electronic device 100 is higher than the temperature threshold, the device battery level of the electronic device 100 is lower than the battery level threshold, the electronic device 100 is offset relative to the satellite and offset duration reaches preset duration, and the like.

S1908: The satellite communication mode module 11 sends a disabling instruction to the satellite searching service module 12, to indicate the satellite searching service module 12 to stop obtaining the satellite data.

If the operation that the user exits the satellite communication mode is detected or it is detected that the satellite communication mode exit condition is met, the satellite communication mode module 11 may send the disabling instruction to the satellite searching service module 12. After receiving the disabling instruction, the satellite searching service module 12 may stop obtaining the satellite data.

The following describes a procedure of interaction between internal modules of the electronic device 100 in a process of dialing in the satellite communication mode according to an embodiment of this application. The modules used in the process in which the electronic device 100 performs dialing in the satellite communication mode may include the call application 13 (IncallUI), the call management module (telecom) 14, the call service module (telephony) 15, a communication system framework (FWK-CS) 16, a radio interface layer (RIL) 17, a satellite communication modem (modem) 18, and the like in the embodiment shown in FIG. 1C-1 and FIG. 1C-2, to implement a satellite call.

As shown in FIG. 20A and FIG. 20B, the procedure of the interaction between the internal modules of the electronic device 100 in the process of dialing in the satellite communication mode may include the following steps.

S2001: The call management module 14 detects a dialing operation, and determines an outgoing number.

The dialing operation may be a dialing operation of the user. The dialing operation of the user may be a tap operation for a call record, or a tap operation for a dialing control.

S2002: The call management module 14 sends a call instruction to the call service module 15, including the outgoing number.

The call instruction may be used to trigger the call service module 15 to determine a communication mode and bind a call service in the corresponding communication mode.

S2003: The call service module 15 determines that the communication mode is the satellite communication mode, and binds a satellite call service.

The call service module 15 may determine whether the satellite communication mode is currently enabled; and if the satellite communication mode is already enabled, determine that the communication mode is the satellite communication mode, or if the satellite communication mode is not enabled, determine that the communication mode is the cellular communication mode.

In some embodiments, if the satellite communication mode is not enabled, the call service module 15 may further determine strength of a cellular network signal. If the strength of the cellular network signal is lower than a preset signal strength threshold, the call service module 15 may send a determining result to the call application 13 by using the call management module 14, and the call application 13 outputs a satellite communication mode enabling prompt, to ask the user whether to enable the satellite communication mode. For a specific process, refer to the embodiments shown in FIG. 4A to FIG. 4F. After receiving the operation that the user enables the satellite communication mode, the call service module 15 may determine that the communication mode is the satellite communication mode.

After determining that the current communication mode is the satellite communication mode, the call service module 15 may invoke a corresponding module to bind the satellite call service. Modules corresponding to the satellite communication mode in the call service module 15 may include the satellite call module (SatelliteCall) and the satellite connection module (SatelliteConnection) in the embodiment shown in FIG. 1C-1 and FIG. 1C-2.

S2004: The call service module 15 sends a decision result to the call management module 14, to notify the call management module 14 that the communication mode is the satellite communication mode.

S2005: The call management module 14 sends an interface pull-up instruction to the call application 13, including the communication mode and the outgoing number.

The interface pull-up instruction may indicate the call application 13 to display an in-call screen in the satellite communication mode. The satellite real-time page, the satellite real-time card, or the satellite real-time capsule may be displayed on the in-call screen, to indicate satellite signal strength.

For example, for the in-call screen in the satellite communication mode, refer to the related content in the embodiments shown in FIG. 7C to FIG. 7E or FIG. 16A to FIG. 16F.

S2006: The call application 13 pulls up the in-call screen in the satellite communication mode.

S2007: The call service module 15 creates a connection to the communication system framework 16.

After the satellite communication mode is determined, the call service module 15 may create the connection to a module related to satellite communication in the communication system framework 16. The module related to satellite communication in the communication system framework 16 may include the satellite phone module (SatellitePhone) and the satellite voice call model (SatellitePhoneCallTracker) in the call framework in the embodiment shown in FIG. 1C-1 and FIG. 1C-2.

S2008: The call service module 15 sends a dialing instruction to the communication system framework 16, including the outgoing number and the communication mode.

S2009: The communication system framework 16 sends a dialing instruction to the radio interface layer 17, including the outgoing call number and the communication mode.

The communication system framework 16 may send the received dialing instruction to the radio interface layer (RIL) 17 by using the RILJ in the embodiment shown in FIG. 1C-1 and FIG. 1C-2. The connection between the RILJ and the RIL 17 may be a socket (socket).

S2010: The radio interface layer 17 sends a calling instruction to the satellite communication modem 18, including the outgoing number.

After receiving the dialing instruction, the RIL 17 may determine, based on the communication mode in the dialing instruction, to send the calling instruction to the satellite communication modem 18.

The calling instruction belongs to an AT instruction, and may be used to control the modem.

S2011: The satellite communication modem 18 initializes a channel and establishes a connection.

After receiving the dialing instruction, the satellite communication modem 18 may initialize the channel, and establish the communication connection for a current call based on the call number.

S2012: The satellite communication modem 18 obtains a call status.

After the satellite communication modem 18 establishes the connection, the satellite communication modem 18 may obtain the call status of the current call from the satellite. In some embodiments, the satellite communication modem 18 may periodically obtain the call status at a specified time interval.

The call status may include: a dialing state, a ringing state, a connected state, an unconnected state, and the like.

It may be understood that, in the connected state, the satellite communication modem 18 may further obtain, in real time by using the satellite, the call data transmitted by the device at the other end of the call.

S2013: The satellite communication modem 18 sends the call status to the call management module 14.

S2014: The call management module 14 sends the call status to the call application 13.

S2015: The call application 13 refreshes the in-call screen based on the call status.

The call application 13 may change, based on the latest received call status, the call status prompt displayed on the in-call screen. For example, when the call status is the dialing state, the call status prompt may be the satellite dialing prompt 715 in the embodiment shown in FIG. 7C. When the call status is the ringing state, the call status prompt may be text "The other party is ringing". When the call status is the connected state, the call status prompt may be call duration.

It may be understood that step S2012 to step S2015 are steps that can be repeatedly performed. Because the satellite communication modem 18 may obtain the call status in real time, after obtaining the latest call status, the satellite communication modem 18 may send the latest call status to the call application 13 by using the call management module 14. The call application 13 may also refresh the in-call screen based on the latest call status.

The following describes a procedure of interaction between internal modules of the electronic device 100 in a process of answering a call by using the satellite communication mode according to an embodiment of this application. For the modules used in the process in which the electronic device 100 answers the call in the satellite communication mode, refer to the embodiment shown in FIG. 20A and FIG. 20B.

As shown in FIG. 21, when the electronic device 100 answers a call by using the satellite, the procedure of the interaction between the internal modules of the electronic device 100 may include the following steps.

S2101: The satellite communication modem 18 receives a paging message.

After the electronic device 100 enables the satellite communication mode, if another electronic device (for example, the electronic device 200) initiates a call request to the electronic device 100, the satellite communication modem 18 receives the paging message.

The following describes a process in which the satellite communication modem 18 receives the paging message sent by the another electronic device.

For example, the electronic device 200 initiates the call request to the electronic device 100. The electronic device 200 may send, to the base station 500, a paging message carrying a device identifier (for example, a SIM card number) of the electronic device 100. The base station 500 may forward the paging message to the satellite ground station 400. The satellite ground station 400 may send the received paging message to the satellite 300, and then the satellite 300 sends the paging message to the satellite communication modem 18 in the electronic device 100.

S2102: The satellite communication modem 18 initializes a channel and establishes a connection.

After receiving the paging message, the satellite communication modem 18 may initialize the channel, and establish the communication connection for a current call.

S2103: The satellite communication modem 18 obtains an incoming call message, where the incoming call message includes a call number.

The satellite communication modem 18 may obtain an incoming call message sent by the satellite.

S2104: The satellite communication modem 18 reports the incoming call message to the call management module 14.

The satellite communication modem 18 may report the incoming call message to the telecom by using the RIL, the communication system framework, and the telephony.

S2105: The call management module 14 determines that the communication mode is the satellite communication mode.

The call management module 14 may determine, based on the satellite communication modem 18 that reports the incoming call message, that the current communication mode is the satellite communication mode.

S2106: The call management module 14 sends an incoming call indication to the call application 13, including the current communication mode and the incoming call message, to indicate to pull up an incoming call screen in the satellite communication mode.

S2107: Display, based on the incoming call message, the incoming call screen in the satellite communication mode.

The satellite real-time card or the satellite real-time capsule may be displayed or the satellite real-time page may be displayed on the incoming call screen in the satellite communication mode. For example, for the incoming call screen in the satellite communication mode, refer to the embodiment shown in FIG. 9A.

The following describes a procedure of interaction between internal modules of the electronic device 100 when the electronic device 100 sends an SMS message by using the satellite according to an embodiment of this application. The modules used in this case may include the SMS application 19, the communication system framework (FWK-CS) 16, the radio interface layer (RIL) 17, and the satellite communication modem (modem) 18 shown in FIG. 1C-1 and FIG. 1C-2. The communication system framework 16 further includes an SMS management module (SmsManager) 16a.

As shown in FIG. 22, in a process of sending an SMS message to another electronic device in the satellite communication mode, the procedure of the interaction between the internal modules of the electronic device 100 may include the following steps.

S2201: The SMS application 19 detects an SMS message sending operation, and determines a recipient number and SMS message content.

The SMS message sending operation may be an operation performed by the user on an SMS message sending control in an SMS message sending interface or a new message interface. For example, the SMS message sending operation may be the tap operation for the sending control 1003 in the embodiment shown in FIG. 10C, or may be the tap operation for the send-now control 1116 in the embodiment shown in FIG. 11C, or the like.

After the SMS message sending operation is detected, the SMS application 19 displays the SMS message sending interface. For the SMS message sending interface, refer to the SMS message sending interface in the foregoing embodiments shown in FIG. 10D, FIG. 11D, and the like.

S2202: The SMS application 19 determines target information, including processed SMS message content and position information.

In some embodiments, the target information may include the processed SMS message content and the position information. For example, in the embodiments shown in FIG. 10A to FIG. 10F, if the position carrying control 1001 is in a selected state, the target information may include the position information. It may be understood that, in some other embodiments, if the position carrying control 1001 is in an unselected state, the target information may alternatively not include the position information.

S2203: The SMS application 19 sends the target information and the recipient number to the SMS management module 16a.

S2204: The SMS management module 16a determines that the communication mode is the satellite communication mode.

The SMS management module 16a may determine, by determining whether the electronic device 100 enables the satellite communication mode, whether the current communication mode is the satellite communication mode. If the electronic device 100 has currently enabled the satellite communication mode, it is determined that the communication mode is the satellite communication mode; or if the electronic device 100 has not currently enabled the satellite communication mode, it is determined that the communication mode is the cellular network mode.

In some embodiments, if the satellite communication mode is not enabled, the SMS management module 16a may further determine strength of a cellular network signal. If the strength of the cellular network signal is lower than the preset signal strength threshold, the SMS management module 16a may send a determining result to the SMS application 19, and the SMS application 19 outputs a satellite communication mode enabling prompt, to ask the user whether to enable the satellite communication mode. For a specific process, refer to the embodiments shown in FIG. 4I to FIG. 4J. After receiving the operation that the user enables the satellite communication mode, the SMS management module 16a may determine that the communication mode is the satellite communication mode.

S2205: The SMS management module 16a sends an SMS message instruction to the radio interface layer 17, including the target information, the recipient number, and the communication mode.

After determining that the current communication mode is the satellite communication mode, the SMS management module 16a may invoke a module corresponding to the satellite communication mode in the SMS framework and an RILJ module to send the SMS message instruction to the radio interface layer 17. A module corresponding to the satellite communication mode in the SMS management module 16a may include the satellite SMS dispatcher (SatelliteSmsDispatcher) in the embodiment shown in FIG. 1C-1 and FIG. 1C-2.

S2206: The radio interface layer 17 sends an SMS message sending instruction to the satellite communication modem 18, including the target information and the recipient number.

The RIL 17 may determine, based on the communication mode in the SMS message sending instruction, to send the SMS message sending instruction to the satellite communication modem 18.

S2207: The satellite communication modem 18 initializes a channel and establishes a connection.

After receiving the SMS message sending instruction, the satellite communication modem 18 may initialize the channel, and establish the communication connection for a current call based on the recipient number.

S2208: The satellite communication modem 18 obtains an SMS message sending status.

The satellite communication modem 18 may obtain the current SMS message sending status from the satellite. In some embodiments, the satellite communication modem 18 may periodically obtain the SMS message sending status at a specified time interval.

The call status may include: waiting, sending, sending completed, sending failed, and the like.

S2209: The satellite communication modem 18 sends the SMS message sending status to the SMS management module 16a.

S2210: The SMS management module 16a sends the SMS message sending status to the SMS application 19.

S2211: The SMS application 19 updates the SMS message sending interface based on the SMS message sending status.

The SMS application 19 may change, based on the latest received SMS message sending status, an SMS message sending status prompt displayed in the SMS message sending interface. For example, the SMS message sending status prompt may be the sending status prompt 1012 in the embodiments shown in FIG. 10D to FIG. 10G.

It may be understood that step S2208 to step S2211 are steps that can be repeatedly performed. Because the satellite communication modem 18 may obtain the SMS message sending status in real time, after obtaining the latest SMS message sending status, the satellite communication modem 18 may send the latest SMS message sending status to the SMS application 19 by using the SMS management module 16a. The SMS application 19 may also refresh the SMS message sending interface based on the latest SMS message sending status.

The following describes a procedure of interaction between internal modules of the electronic device 100 when the electronic device 100 receives an SMS message by using the satellite according to an embodiment of this application. In this case, for the internal modules of the electronic device 100, refer to the related content in the embodiment shown in FIG. 22.

As shown in FIG. 23, when the electronic device 100 receives an SMS message by using the satellite, the procedure of the interaction between the internal modules of the electronic device 100 may include the following steps.

S2301: The satellite communication modem 18 receives a paging message.

S2302: The satellite communication modem 18 initializes a channel and establishes a connection.

For content of step S2301 and step S2302, refer to step S2101 and step S2102 shown in FIG. 21.

S2303: The satellite communication modem 18 obtains an SMS message, including a sender number and SMS message content.

S2304: The satellite communication modem 18 sends the SMS message to the SMS management module 16a.

S2305: The SMS management module 16a detects an operation that the user views information.

S2306: The SMS management module 16a sends an SMS message receiving instruction to the SMS application 19, including the SMS message.

S2307: The SMS application 19 displays an SMS message receiving interface based on the SMS message receiving instruction.

For the SMS message receiving interface, refer to an existing SMS message receiving interface. A difference lies in that the satellite real-time card or the satellite real-time capsule is further displayed in the SMS message receiving interface of the electronic device 100.

The following describes a procedure in which the electronic device 200 receives the SMS message that is sent by the electronic device 100 by using the satellite, and displays a track map based on position information carried in the SMS message according to an embodiment of this application. The electronic device 200 may include an SMS application 21, a communication system framework (FWK-CS) 22, a radio interface layer (RIL) 23, and a cellular modem (modem) 24. The communication system framework 22 may include an SMS management module (SmsManager) 22a. For relationships between the foregoing modules, refer to the corresponding modules in the embodiment shown in FIG. 1C-1 and FIG. 1C-2.

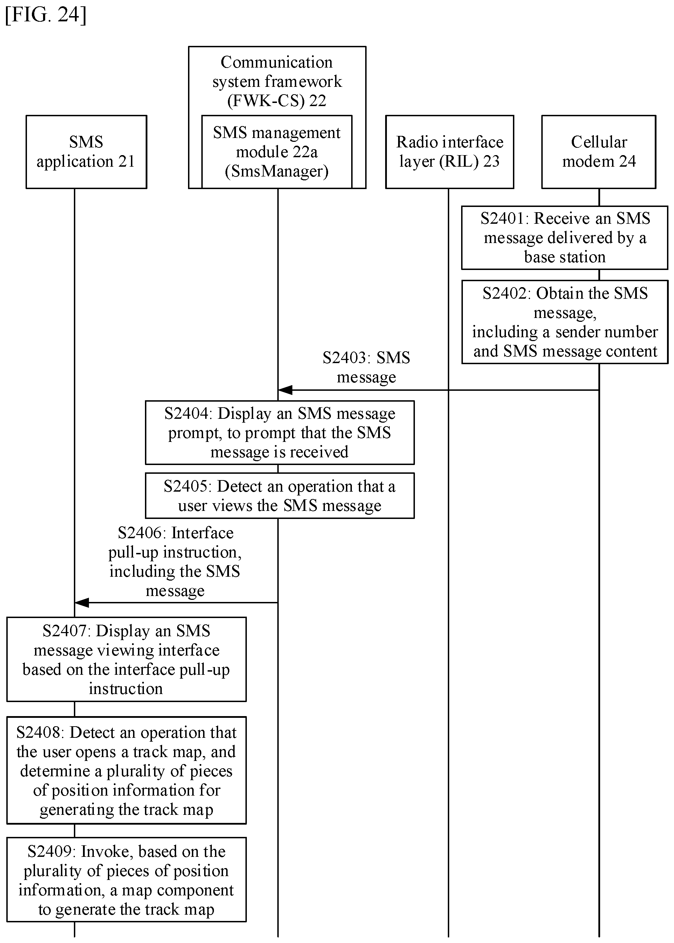

As shown in FIG. 24, the procedure in which the electronic device 200 receives the SMS message that is sent by the electronic device 100 by using the satellite, and displays the track map based on the position information carried in the SMS message may include the following steps.

S2401: A cellular modem 24 receives an SMS message delivered by a base station.

The SMS message carries position information.

S2402: The cellular modem 24 obtains the SMS message, including a sender number and SMS message content.

S2403: The cellular modem 24 sends the SMS message to the SMS management module 22a.

S2404: The SMS management module 22a displays an SMS message prompt, to prompt that the SMS message is received.

In some embodiments, the SMS message prompt may be displayed in a specific color (for example, displayed in a color like red or orange), to prompt the user that the SMS message is the SMS message sent by using the satellite.

S2405: The SMS management module 22a detects an operation that the user views the SMS message.

S2406: The SMS management module 22a sends an interface pull-up instruction to the SMS application 21, including the SMS message.

S2407: The SMS application 21 displays an SMS message viewing interface based on the interface pull-up instruction.

For the SMS message viewing interface, refer to the embodiments shown in FIG. 13A to FIG. 13D.

S2408: The SMS application 21 detects an operation that the user opens the track map, and determines a plurality of pieces of position information for generating the track map.

The SMS application 21 may determine, based on a selection operation performed by the user for one or more SMS messages, to generate the track map based on position information carried in the one or more SMS messages. In some embodiments, the SMS application 21 may alternatively determine, in response to the operation that the user opens the track map (for example, a tap operation on a track map control), to generate the track map based on position information received in a recent period of time (for example, within 24 hours or within three days).

S2409: The SMS application 21 invokes, based on the plurality of pieces of position information, a map component to generate the track map.

After determining the plurality of pieces of position information, the SMS application 21 may obtain, by using a network, a map of an area in which positions corresponding to the plurality of pieces of position information are located, and draw, on the map of the area, the track map based on the plurality of pieces of position information. In some other embodiments, the electronic device 200 may alternatively obtain, from a locally stored map, a map of an area in which positions corresponding to the plurality of pieces of position information are located, and draw, on the map of the area, the track map based on the plurality of pieces of position information.

For the track map, refer to the embodiment shown in FIG. 13E.

It may be understood that the electronic device 100 may alternatively generate the track map of the electronic device 100 based on the position information carried in the plurality of sent SMS messages. For specific steps, refer to the related content in step S2408 and step S2409.

The following describes a connection relationship between a SIM card and a modem (modem) according to an embodiment of this application. It should be noted that the connection between the SIM card and the modem means that communication between the electronic device 100 and the electronic device 200 (or another electronic device) by using the SIM card may be implemented by invoking the connected modem.

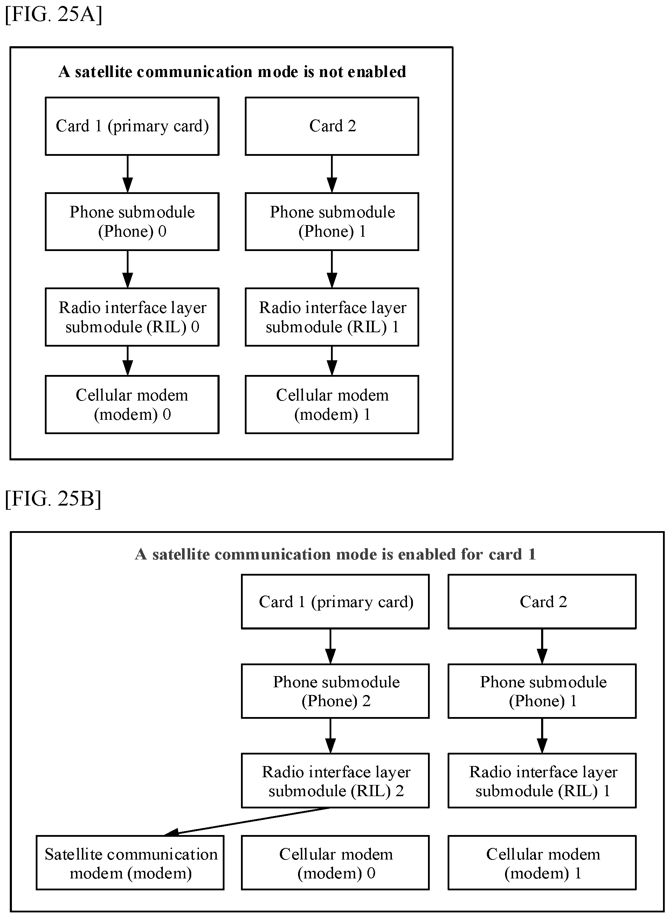

For example, as shown in FIG. 25A, if the satellite communication mode is not enabled, a connection relationship between two SIM cards (a card 1 and a card 2) and the modem in the electronic device 100 is as follows:

A primary card (the card 1) may be connected to a cellular modem (modem) 0 by using a phone submodule (phone) 0 and a radio interface layer submodule (RIL) 0. The card 2 may be connected to a cellular modem (modem) 1 by using a phone submodule (phone) 1 and a radio interface layer submodule (RIL) 1.

When the satellite communication mode is enabled by using the card 1, the cellular modem (including the cellular modem 0 and the cellular modem 1) is disabled. However, for the framework layer, the satellite communication modem is unavailable. Therefore, both the card 1 and the card 2 report absent (absent). In this case, the card 1 and the card 2 may maintain a partial connection relationship in the embodiment shown in FIG. 25A, and are respectively connected to the RIL 0 and the RIL 1. After the card 1 determines to enable the satellite communication mode, the card 1 may switch the RIL 0 to an RIL 2, is connected to the satellite communication modem by using the RIL 2, is identified to camp on the network, and reports that the card 1 is in position.

After the satellite communication mode is enabled by using the card 1, as shown in FIG. 25B, a connection relationship between the two SIM cards and the modem in the electronic device 100 is as follows:

The card 1 may be connected to a satellite communication modem (modem) by using a phone submodule (phone) 2 and a radio interface layer submodule (RIL) 2. The card 2 may be connected to an original radio interface layer submodule (RIL) 1 by using a phone submodule (phone) 1, and the RIL 1 is not connected to any modem.

It should be noted that, in the embodiments shown in FIG. 25A and FIG. 25B, the phone 0, the phone 1, and the phone 2 are all submodules in the call framework shown in FIG. 1C-1 and FIG. 1C-2, and the RIL 0, the RIL 1, and the RIL 2 are all submodules in the RIL 17 in the embodiment shown in FIG. 1C-1 and FIG. 1C-2. In addition, the phone 2 is a submodule in a module corresponding to the satellite communication mode in the call framework, for example, a satellite phone module (satellitePhone) and a satellite voice call model (satellite phone track). Both the phone 0 and the phone 1 are submodules in modules corresponding to the cellular communication mode in the call framework, for example, a phone module (GsmCdmaPhone) and a voice call model (Gsm Cdma phone track). The RIL 2 may be connected to the satellite communication modem, and the RIL 0 and the RIL 1 may be connected to the cellular modem. Both the cellular modem 0 and the cellular modem 1 belong to the cellular modem in the embodiment shown in FIG. 1C-1 and FIG. 1C-2.

In this way, after the electronic device 100 enables the satellite communication mode by using the card 1, the card 1 may be connected to the satellite communication modem 18.

It may be understood that the embodiments shown in FIG. 25A and FIG. 25B are merely examples. In this embodiment of this application, the SIM card for which the satellite communication mode is enabled may alternatively be the card 2. In this case, the card 2 may be connected to the satellite communication modem. This is not limited herein in this application. In some other embodiments, only one SIM card may alternatively be installed in the electronic device 100. This is not limited herein in this application either.

The following describes a procedure of a method in which the electronic device 100 enables the satellite communication mode according to an embodiment of this application.

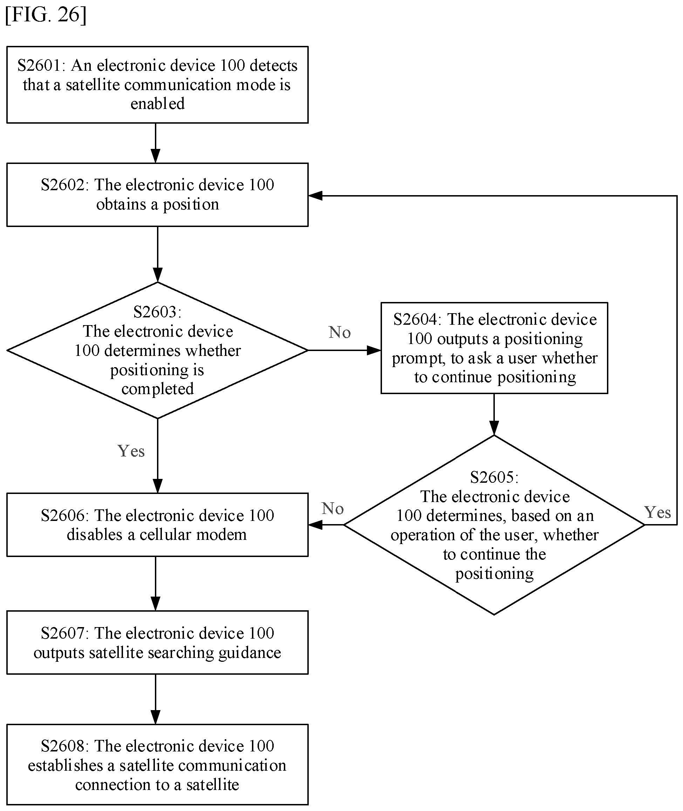

As shown in FIG. 26, the specific procedure of the method in which the electronic device 100 enables the satellite communication mode may include the following steps.

S2601: The electronic device 100 detects that the satellite communication mode is enabled.

In some embodiments, after detecting that the satellite communication mode is enabled, the electronic device 100 may further perform compass calibration. For a calibration page, refer to the related descriptions in the embodiment shown in FIG. 2D.

S2602: The electronic device 100 obtains a position.

The electronic device 100 may obtain the position of the electronic device 100 by using a GPS module.

S2603: The electronic device 100 determines whether positioning succeeds.

If the positioning fails, the electronic device 100 may perform the following step S2604.

If the positioning succeeds, the electronic device 100 may perform the following step S2606.

S2604: The electronic device 100 outputs a positioning prompt, to ask the user whether to continue positioning.

If the positioning fails, the electronic device 100 may output the positioning prompt, to prompt the user that the positioning fails last time, and ask the user whether to continue the positioning.

S2605: The electronic device 100 determines, based on an operation of the user, whether to continue the positioning.

If the electronic device 100 determines, based on the operation of the user, to continue the positioning, the foregoing step S2602 is performed again.

If the electronic device 100 determines, based on the operation of the user, to stop performing the positioning, the following step S2606 is performed.

S2606: The electronic device 100 disables the cellular modem.

If the position of the electronic device 100 is obtained, or if the electronic device 100 determines not to continue the positioning, the electronic device 100 may disable the cellular modem, and release a processor interface bus (mobile industry processor interface BUS, MIPI BUS).

S2607: The electronic device 100 outputs satellite searching guidance.

The satellite searching guidance may be used to guide the user to align the electronic device 100 with the satellite, to establish the satellite communication connection to the satellite.

It should be noted that if the position of the electronic device 100 is obtained, for the satellite searching guidance output by the electronic device 100, refer to the satellite searching page and the alignment page in the foregoing embodiment of the figure.

If the position of the electronic device 100 is not obtained, the electronic device 100 may output a prompt, to prompt the user with a direction toward the equator.

S2608: The electronic device 100 establishes the satellite communication connection to the satellite.

If the electronic device 100 is aligned with the satellite, the electronic device 100 may establish the satellite communication connection to the satellite.

In some embodiments, if the electronic device 100 detects that the satellite communication mode is disabled, the electronic device 100 may disable the satellite communication modem, and re-enable the cellular modem. In addition, the electronic device 100 may further configure a cellular modem proxy antenna switch to an MIPI default state. It should be noted that the MIPI default state is a state in which the cellular modem proxy antenna switch is configured after the electronic device 100 is powered on/restarted.

In some other embodiments, the electronic device 100 includes a Bluetooth module. The Bluetooth module may include two operating modes: a core (core) 1 and a core 0. When the satellite communication mode is enabled, the electronic device 100 may switch the operating mode of the Bluetooth module from the core 0 to the core 1. When the satellite communication mode is disabled, the electronic device 100 may switch the operating mode of the Bluetooth module from the core 1 back to the core 0. Power of the Bluetooth module under the core 1 is lower than power of the Bluetooth module under the core 0.

The following describes a specific procedure of a satellite communication method according to an embodiment of this application.

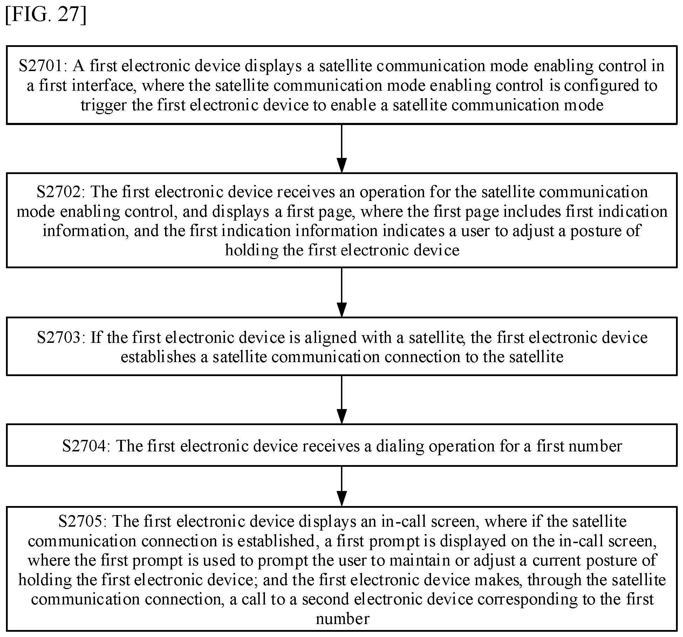

As shown in FIG. 27, the specific procedure of the satellite communication method according to an embodiment of this application may include the following steps.

S2701: A first electronic device displays a satellite communication mode enabling control in a first interface, where the satellite communication mode enabling control is configured to trigger the first electronic device to enable a satellite communication mode.

The first electronic device may be the electronic device 100 in the foregoing embodiment. For the satellite communication mode enabling control, refer to the related descriptions in step S1901 shown in FIG. 19.

The first interface may be the control center interface 210 shown in FIG. 2B, or may be the satellite communication mode setting interface 320 shown in FIG. 3D. A first application may alternatively be an interface of the first application. The first application may be a communication application, for example, a phone application or an information application (also referred to as an SMS application). If a mobile network of the first electronic device is unavailable (for example, signal strength of a cellular network is lower than a first threshold), the first electronic device may display a satellite communication mode enabling control when it is detected that a user makes a call or sends an SMS message, or may display a satellite communication mode enabling control in the interface of the first application when it is detected that a user starts the first application.

S2702: The first electronic device receives an operation for the satellite communication mode enabling control, and displays a first page, where the first page includes first indication information, and the first indication information indicates the user to adjust a posture of holding the first electronic device.

For the operation for the satellite communication mode enabling control, refer to the related descriptions in step S1901 shown in FIG. 19.

The first page may be a satellite searching page or a satellite alignment page. For details, refer to the related descriptions in the embodiment shown in FIG. 2E or FIG. 2F. The first indication information may be a satellite searching operation prompt and/or an alignment operation prompt.

S2703: If the first electronic device is aligned with a satellite, the first electronic device establishes a satellite communication connection to the satellite.

When the first electronic device establishes the satellite communication connection to the satellite, the first electronic device may display a second page, where the second page may be the satellite connection page 260 shown in FIG. 2I. The second page indicates that the satellite communication connection has been established. The second page includes a strength indicator and second indication information. The strength indicator may be the satellite strength indicator 263 shown in FIG. 2I. The second indication information may be an operation prompt (including an animation prompt and a text prompt) on the satellite connection page 260.

S2704: The first electronic device receives a dialing operation for a first number.

The dialing operation for the first number may be performed after the satellite communication connection is established, or may be performed before the communication connection is established.

S2705: The first electronic device displays an in-call screen, where if the satellite communication connection is established, a first prompt is displayed on the in-call screen, where the first prompt prompts the user to maintain or adjust a current posture of holding the first electronic device; and the first electronic device makes, through the satellite communication connection, a call to a second electronic device corresponding to the first number.

The in-call screen may be the in-call screen in the foregoing embodiments such as FIG. 4F, FIG. 16B, and FIG. 16C.

The first prompt may be the satellite real-time card or the satellite real-time page in the foregoing embodiments. In addition, the first electronic device may further receive and respond to an operation of the user, and switch between the satellite real-time card, the satellite real-time page, and the satellite real-time capsule. For a specific switching manner, refer to the related descriptions in the embodiments shown in FIG. 6A to FIG. 6G.

After the satellite connection is established, the first electronic device may make the call to the second electronic device. The second electronic device may be the electronic device 200 in the foregoing embodiments.

In some embodiments, the first electronic device may further display a phone application icon and an SMS application icon in response to that the first electronic device establishes the satellite communication connection to the satellite, where the phone application icon and the SMS application icon include a satellite communication identifier. The satellite communication identifier may be the satellite symbols displayed on the phone application icon 267 and the information application icon 268 in the embodiment shown in FIG. 2I.

In some embodiments, if the satellite communication connection is established, the first electronic device may display a home screen, where the home screen includes the phone application icon and the SMS application icon, and the phone application icon and the SMS application icon include the satellite communication identifier.

In some embodiments, the satellite communication method further includes: if the satellite communication connection is established, displaying a dialing interface of the phone application, where the dialing interface includes a dialing control, and the dialing control includes a satellite communication identifier. The dialing interface may be the phone application interface 700 shown in FIG. 7B, and the dialing control may be the dialing control 701 shown in FIG. 7B.

In a possible implementation, the dialing interface further includes a dial, and the method further includes: skipping displaying a video calling control in the dialing interface after the first number is input on the dial. For example, the dialing interface may be the dialing interface 1600 shown in FIG. 16A.

In some embodiments, when the first electronic device makes, through the satellite communication connection, a call to the second electronic device corresponding to the first number, the first electronic device does not support use of an earpiece. For example, for specific content of the corresponding in-call screen, refer to the embodiments shown in FIG. 7E and FIG. 7F.

To avoid affecting the satellite communication connection between the first electronic device and the satellite, an earpiece mode is not supported in the satellite communication mode. In this way, call quality can be ensured.

In some embodiments, the in-call screen includes a Bluetooth identifier, and the satellite communication method further includes: The first electronic device establishes a Bluetooth connection to a third electronic device; and the first electronic device sends call data to the third electronic device through the Bluetooth connection in a process in which the first electronic device makes the call to the second electronic device through the satellite connection. The third electronic device may be a Bluetooth headset.

In some embodiments, the in-call screen further includes a position sending control; and the method further includes: receiving an operation for the position sending control, and sending a position of the first electronic device to the second electronic device. For example, the position sending control may be the position sending control 711 in the embodiment shown in FIG. 7C.

In this way, during the call, the first electronic device can further send the position to the second electronic device.

In some embodiments, the in-call screen does not display a video call control. For example, the in-call screen 710 in the embodiment shown in FIG. 7C does not include the video call control.

In this way, the user can be prompted that the video call is not supported in the satellite communication mode.

In some embodiments, the satellite communication method further includes: when it is detected that the first electronic device enters a low battery level mode, exiting the satellite communication mode.

The low battery mode is a mode enabled when a battery level of the first electronic device is lower than a preset battery level threshold.

In this way, the user can be prompted that the satellite communication mode is not supported in the low battery level mode.

In some embodiments, the satellite communication method further includes: displaying a first call record after the call between the first electronic device and the second electronic device ends, where the first call record includes the satellite communication identifier. For example, the first call record may be the call record 704 shown in FIG. 7K, and the satellite communication identifier may be the call type indicator 704a.

In this way, the user can be prompted that the call corresponding to the call record is a satellite call.

In some embodiments, the satellite communication method further includes: The first electronic device sends an SMS message to a fourth electronic device through the satellite communication connection and displays a first SMS message record, where the first SMS message record includes the satellite communication identifier. For example, the fourth electronic device may be the electronic device 200. The first SMS message record may be the information entry 1021 in the embodiment shown in FIG. 10H, and the satellite communication identifier may be the satellite information indicator 1021a.

In this way, the user can be prompted that the SMS message is sent by using the satellite.

In some embodiments, the satellite communication method further includes: displaying a control center interface. The control center interface includes a position switch. When the satellite is searched for, the position switch is in an on state; and when the satellite is aligned, the position switch is in an off state. For example, after the satellite is aligned, the control center interface may be the control center interface 1500 shown in FIG. 15A, and the position switch may be the position information control 1502.

When the satellite is searched for, the position of the first electronic device needs to be obtained, to determine a position relationship between the first electronic device and the satellite. After the satellite is aligned, to maintain the connection between the first electronic device and the satellite, the first electronic device should maintain, as much as possible, a position and a status existing when the first electronic device is connected to the satellite. Therefore, the position of the first electronic device does not need to be obtained.

In some embodiments, the satellite communication method further includes: displaying the control center interface, where the control center interface includes a mobile data switch, a wireless local area network switch, and an airplane mode switch. After the satellite communication mode is enabled, the mobile data switch, the wireless local area network switch, and the airplane mode switch are all in an off state. For example, before the satellite communication mode is enabled, the control center interface may be the control center interface 210 shown in FIG. 2B. After the satellite communication mode is enabled, the control center interface may be the control center interface 1500 shown in FIG. 15A.

In this way, the user can be prompted with a control that is not supported in the satellite communication mode.

In some embodiments, the satellite communication method further includes: displaying a subscriber identity module SIM card setting interface in response to the operation for the satellite communication mode enabling control, where the SIM card setting interface includes a first SIM card option; and receiving and responding to an operation performed by the user on the first SIM card option, and performing the satellite communication by using a first SIM card. For example, the SIM card setting interface may be the SIM card setting window 330 shown in FIG. 3G or FIG. 3H.

In this way, if a SIM card for enabling the satellite communication mode is not configured, when it is detected that the user enables the satellite communication mode, the user can be prompted to select the SIM card for enabling the satellite communication mode.

In some embodiments, the first interface further includes a SIM card setting control, and the method further includes: receiving an operation for the SIM card setting control and displaying a SIM card setting interface, where the SIM card setting interface includes a first SIM card option; and receiving and responding to an operation performed by the user on the first SIM card option, and performing the satellite communication by using a first SIM card. For example, the SIM card setting control may be the SIM card setting control 322 in the embodiment shown in FIG. 3F.

In this way, a SIM card for enabling the satellite communication mode can be selected.

In some embodiments, the satellite communication method further includes: in response to a first operation, outputting a third prompt when it is detected that a battery level of the first electronic device is lower than a first battery level threshold, where the third prompt prompts that a satellite communication success rate is affected because a battery level of the device is excessively low. For example, the third prompt may be the prompt window 1523 shown in FIG. 15D. The first battery level threshold may be the preset battery level threshold, for example, 15% or 5%.

In this way, the user can be prompted that the battery level of the device is excessively low and affects the satellite communication success rate.

In some embodiments, the satellite communication method further includes: when it is detected that the first electronic device is not aligned with the satellite, replacing the second indication information on the second page with third indication information, where the third indication information indicates the user to adjust the posture of holding the first electronic device, to re-align the first electronic device with the satellite; and the first electronic device switches the third indication information back to the second indication information after it is detected that the first electronic device is re-aligned with the satellite. For example, for the third indication information, refer to the related descriptions of the operation prompt in the embodiment shown in FIG. 2J.

In this way, when the position relationship between the first electronic device and the satellite changes, the indication information can be output to prompt the user to adjust the posture of holding the first electronic device, to prevent the first electronic device from being disconnected from the satellite.

If it is detected that duration in which the first electronic device is not aligned with the satellite reaches first duration, the first electronic device may display an exit prompt, where the exit prompt prompts that the first electronic device is to exit the satellite communication mode. For example, for the first electronic device displaying the exit prompt, refer to the related descriptions in the embodiment shown in FIG. 2K.

In this way, the user can be prompted that the first electronic device is to exit the satellite communication mode.

In some embodiments, the satellite communication method further includes: receiving an operation for the second page, stopping displaying the second page, and displaying a first card. The first card includes the strength indicator and fourth indication information. The fourth indication information indicates whether the posture in which the user holds the first electronic device is aligned with the satellite. In a case of non-alignment, the fourth indication information further indicates an azimuth angle and a pitch angle of the first electronic device relative to the satellite.

In this way, switching between a satellite real-time page and a satellite real-time card can be implemented.

In some embodiments, after the first card is displayed, the satellite communication method further includes: receiving an operation for the first card, stopping displaying the first card, and displaying a first capsule, where the first capsule includes the strength indicator.

In this way, switching between the satellite real-time card and a satellite real-time capsule can be implemented.

In some embodiments, the satellite communication method further includes: receiving an operation for the first capsule, stopping displaying the first capsule, and displaying the first card.

In this way, switching between the satellite real-time capsule and the satellite real-time card can be implemented.

In some embodiments, the satellite communication method further includes: receiving an operation for the first card, stopping displaying the first card, and displaying the second page.

In this way, switching between the satellite real-time card and the satellite real-time page can be implemented.

It should be noted that the first prompt may be the foregoing first card, or may be the foregoing second page. In addition, the first prompt may also be switched between the first card, the second page, and the first capsule based on an operation of the user.

In some embodiments, the second page further includes the phone application icon and the SMS application icon, and the phone application icon and the SMS application icon include the satellite communication identifier. Before the dialing operation is received, the method further includes: receiving an operation for the phone application icon on the second page, stopping displaying the second page, and displaying the dialing interface of the phone application and the first capsule, where the first capsule includes the strength indicator.

In this way, the phone application can be quickly started, and switching between the satellite real-time page and the satellite real-time capsule can be further implemented.

In some embodiments, the satellite communication method further includes: after the in-call screen is displayed, detecting that a temperature of the first electronic device is higher than a first temperature value; and displaying a fourth prompt, where the fourth prompt prompts the user that the current call is to end after a first time period. For example, the fourth prompt may be the temperature prompt window 740 shown in FIG. 7J.

In this way, when the temperature of the first electronic device is excessively high, the user can be prompted that the satellite call is to end.

In some embodiments, the satellite communication method further includes: after the satellite communication connection is established, receiving a call request initiated by a fifth electronic device; displaying an incoming call screen in response to the call request, where the incoming call screen displays an incoming call answering control, the first prompt, and a second number, and the incoming call answering control includes the satellite communication identifier; receiving an operation performed by the user on the incoming call answering control; and the first electronic device makes, through the satellite communication connection, a call to the fifth electronic device corresponding to the second number. For example, the fifth electronic device may be the electronic device 200, or may be another electronic device. The incoming call screen may be the incoming call screen 900 shown in FIG. 9A.

In this way, the first electronic device can also answer, by using the satellite, a call made by another electronic device.

In some embodiments, that the first electronic device establishes a satellite communication connection to the satellite specifically includes: The first electronic device establishes the satellite communication connection to the satellite by using the first SIM card of a first operator.

The first electronic device may include one or more SIM cards, for example, the first SIM card. Each SIM card corresponds to an operator. The operator of the first SIM card is the first operator. In some embodiments, the first electronic device may select a SIM card of a specific operator (for example, the first operator) as the SIM card for enabling the satellite communication mode.

In some embodiments, the first electronic device further includes the first SIM card and a second SIM card, and the satellite communication method further includes: before the first electronic device establishes the communication connection to the satellite, displaying a SIM card management interface, where the SIM card management interface includes a first SIM card control and a second SIM card control, the first SIM card control displays a number of the first SIM card and a communication technology corresponding to the first SIM card, and the second SIM card control displays a number of the second SIM card and a communication technology corresponding to the second SIM card; and after the first electronic device establishes the satellite communication connection to the satellite by using the first SIM card, displaying the SIM card management interface, where the first SIM card control and the second SIM card control are in a grayed-out state, and in the grayed-out state, the first electronic device does not respond to an operation performed by the user on the first SIM card control or the second SIM card control.

In some embodiments, after the first electronic device establishes the satellite communication connection to the satellite by using the first SIM card, the first SIM card control does not display the communication technology corresponding to the first SIM card, the first SIM card control displays a satellite communication prompt, and the satellite communication prompt prompts the user that the satellite communication mode has been enabled by using the first SIM card; and the second SIM card control does not display the communication technology corresponding to the second SIM card, the second SIM card control displays an unavailability prompt, and the unavailability prompt prompts the user that the second SIM card is unavailable.

The communication technology corresponding to the SIM card may be a communication technology supported by a modem corresponding to a card slot of the SIM card, or may be a communication technology supported by a service activated by the SIM card at an operator.

For example, after the satellite communication connection is established, the SIM card management interface may be the SIM card management interface shown in FIG. 15E, the first SIM card control may be the card 1 entry 1531, and the second SIM card control may be the card 2 entry 1532.

In this way, the user may be prompted to enable the SIM card in the satellite communication mode and the currently unavailable SIM card.

The following describes a procedure of a method for enabling a satellite communication mode according to an embodiment of this application.

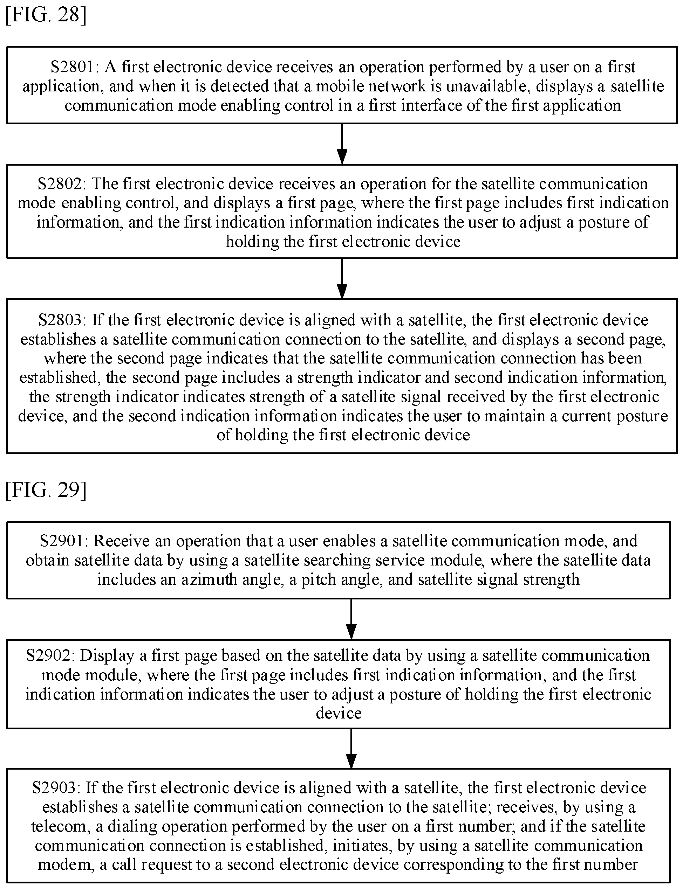

As shown in FIG. 28, the procedure of the method for enabling the satellite communication mode may include the following steps.

S2801: A first electronic device receives an operation performed by a user on a first application, and when it is detected that a mobile network is unavailable, displays a satellite communication mode enabling control in a first interface of the first application.

The first application may be a communication application, for example, a phone application, an SMS application, or an address book application.

The operation performed by the user on the first application may be an operation performed by the user on an icon of the first application.

If the first application is a phone application. The operation performed by the user on the first application may be a dialing operation performed by the user on a first number by using the first application. If the first application is an information application, the operation performed by the user on the first application may be an operation that the user sends information to a second electronic device by using the first application.

The first electronic device displays the satellite communication mode enabling control in the first interface of the first application. For details, refer to the related descriptions in the embodiments shown in FIG. 4A to FIG. 4L.

S2802: The first electronic device receives an operation for the satellite communication mode enabling control, and displays a first page, where the first page includes first indication information, and the first indication information indicates the user to adjust a posture of holding the first electronic device.

For specific content of step S2802, refer to the related descriptions of step S2702 shown in FIG. 27.

S2803: If the first electronic device is aligned with a satellite, the first electronic device establishes a satellite communication connection to the satellite, and displays a second page, where the second page indicates that the satellite communication connection has been established, the second page includes a strength indicator and second indication information, the strength indicator indicates strength of a satellite signal received by the first electronic device, and the second indication information indicates the user to maintain a current posture of holding the first electronic device.

For specific content of step S2803, refer to the related descriptions of step S2703 shown in FIG. 27.

The following describes a procedure of a satellite communication method according to an embodiment of this application.

As shown in FIG. 29, the satellite communication method is applied to a first electronic device. For modules of the first electronic device, refer to the embodiment shown in FIG. 1C-1 and FIG. 1C-2. The specific procedure of the satellite communication method may include the following steps.

S2901: Receive an operation that a user enables a satellite communication mode, and obtain satellite data by using a satellite searching service module, where the satellite data includes an azimuth angle, a pitch angle, and satellite signal strength.

For related content of step S2901, refer to the related steps in the embodiment shown in FIG. 19.

S2902: Display a first page based on the satellite data by using a satellite communication mode module, where the first page includes first indication information, and the first indication information indicates the user to adjust a posture of holding the first electronic device.

For specific descriptions of the first page and the first indication information, refer to the related descriptions of step S2701 shown in FIG. 27.

S2903: If the first electronic device is aligned with a satellite, the first electronic device establishes a satellite communication connection to the satellite; receives, by using a telecom, a dialing operation performed by the user on a first number; and if the satellite communication connection is established, initiates, by using a satellite communication modem, a call request to a second electronic device corresponding to the first number.

A specific process in which the first electronic device initiates the call request to the second electronic device by using the satellite is as follows:
After the dialing operation performed by the user on the first number is received by using a first application, if it is determined that the satellite communication connection is established, the first electronic device sends the first number to a telephony by using the telecom; determines, by using the telephony, that a communication mode is the satellite communication mode, and binds a satellite communication service; creates a connection to a communication system framework by using the telephony; sends, by using the telephony, the first number and the satellite communication mode to the communication system framework based on the connection; sends the first number and the satellite communication mode to an RIL by using the communication system framework; and sends, by using the RIL, the first number to the satellite communication modem based on the satellite communication mode.

The telephony may include a satellite call module and a satellite connection module. The binding a satellite communication service by using the telephony specifically includes: binding the satellite communication service by using the satellite call module and the satellite connection module. The creating a connection to the communication system framework by using the telephony specifically includes: creating the connection to the communication system framework by using the satellite connection module. The sending, by using the telephony, the first number and the satellite communication mode to the communication system framework based on the connection specifically includes: sending the first number and the satellite communication mode to the communication system framework by using the satellite connection module.

The communication system framework includes a satellite phone module, a satellite voice call model, and an interface layer RILJ that supports a Java language. The sending the first number and the satellite communication mode to an RIL by using the communication system framework specifically includes: sending the first number and the satellite communication mode to the RIL by using the satellite phone module, the satellite voice call model, and the RILJ.

The RIL includes a satellite interface layer satellite-RIL. The sending, by using the RIL, the first number to the satellite communication modem based on the satellite communication mode specifically includes: sending, by using the satellite-RIL, the first number to the satellite communication modem based on the satellite communication mode.

The first electronic device further includes an SMS application, the communication system framework further includes an SMS management module and a satellite SMS dispatcher, and the method further includes: receiving, by using the SMS application, an operation that the user sends target information to a second number, and sending the target information and the second number to the SMS management module; determining, by using the SMS management module, that the communication mode is the satellite communication mode; sending the target information, the second number, and the satellite communication mode to the RIL by using the SMS management module and the satellite SMS dispatcher; sending the target information and the second number to the satellite communication modem by using the RIL; and sending, by using the satellite communication modem, the target information to the second electronic device corresponding to the second number.

The satellite communication method further includes: receiving, by using the satellite communication modem, a paging message sent by the second electronic device; obtaining an incoming call message by using the satellite communication modem, where the incoming call message includes the second number of the second electronic device; reporting the incoming call message to the telecom by using the satellite communication modem; determining, by using the telecom, that the communication mode is the satellite communication mode; sending the satellite communication mode and the incoming call message to a phone application by using the telecom; and displaying, by using the phone application, an incoming call screen based on the satellite communication mode and the incoming call message, where the incoming call screen includes the second number, an incoming call answering control, and a hang-up control, and the incoming call answering control includes a satellite communication identifier.

In this way, the first electronic device may make a call to the second electronic device (or another electronic device) by using the satellite, or answer a call made by another electronic device (for example, a fifth electronic device). Alternatively, the first electronic device may send an SMS message to another electronic device (for example, a fourth electronic device) by using the satellite, or receive an SMS message sent by another electronic device. For a specific procedure, refer to the related descriptions in the embodiments shown in FIG. 20A and FIG. 20B to FIG. 24. Details are not described herein again.

In some embodiments, the first electronic device further includes a first cellular modem, a second cellular modem, a first SIM card, and a second SIM card. Before the satellite communication mode is enabled, the first cellular modem communicates with a cellular network device by using the first SIM card, and the second cellular modem communicates with the cellular network device by using the second SIM card. After the satellite communication mode is enabled by using the first SIM card, the satellite communication modem communicates with the satellite by using the first SIM card, the first cellular modem does not communicate with the cellular network device, and the second cellular modem does not communicate with the cellular network device.

It should be noted that after being powered on or restarted, the first electronic device may configure the first cellular modem for the first SIM card, and configure the second cellular modem for the second SIM card. The first SIM card may access the network by using the first cellular modem, and the second SIM card may access the network by using the second cellular modem. After accessing the network, the first electronic device may use the first cellular modem to communicate with the cellular network device by using the first SIM card, or may use the second cellular modem to communicate with the cellular network device by using the second SIM card.

For example, the first SIM card may be the card 1 in the embodiments shown in FIG. 25A and FIG. 25B, the second SIM card may be the card 2, the first cellular modem may be the cellular modem 0, and the second cellular modem may be the cellular modem 1. The cellular network device may be the base station 400.

In some embodiments, the first electronic device further includes a cellular modem and a global positioning service module, and the method further includes: after the operation that the user enables the satellite communication mode is received, obtaining a position of the first electronic device by using the global positioning service module; and disabling the cellular modem after the position of the first electronic device is obtained. For a procedure in which the first electronic device disables the cellular modem after the satellite communication mode is enabled, refer to the related descriptions in the embodiment shown in FIG. 26. Details are not described herein again.

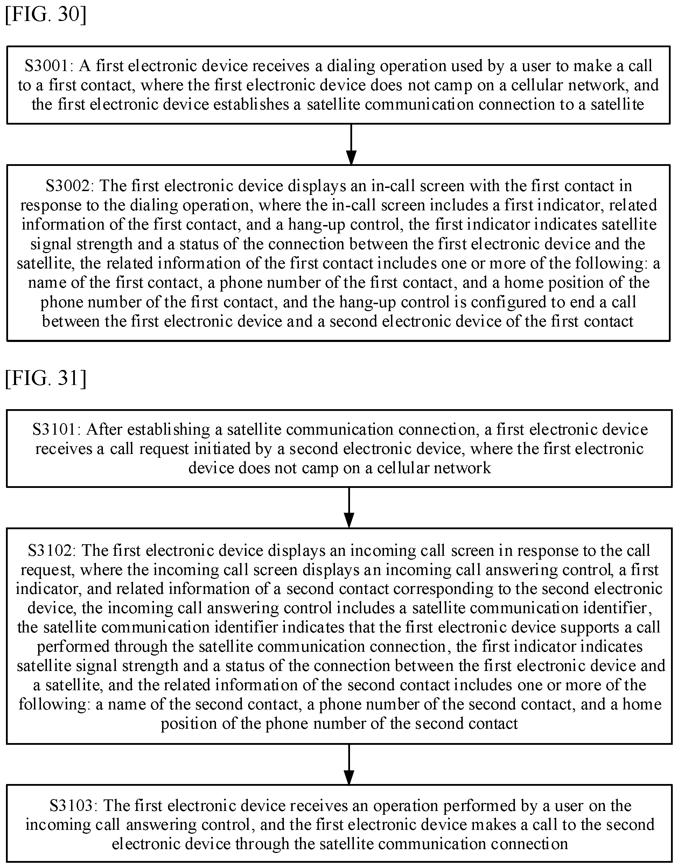

FIG. 30 is an example of a schematic flowchart of a satellite communication method according to an embodiment of this application. As shown in FIG. 30, the satellite communication method provided in this embodiment of this application may include the following steps.

S3001: A first electronic device receives a dialing operation used by a user to make a call to a first contact, where the first electronic device does not camp on a cellular network, and the first electronic device establishes a satellite communication connection to a satellite.

S3002: The first electronic device displays an in-call screen with the first contact in response to the dialing operation, where the in-call screen includes a first indicator, related information of the first contact, and a hang-up control, the first indicator indicates satellite signal strength and a status of the connection between the first electronic device and the satellite, the related information of the first contact includes one or more of the following: a name of the first contact, a phone number of the first contact, and a home position of the phone number of the first contact, and the hang-up control is configured to end a call between the first electronic device and a second electronic device of the first contact.

The first electronic device may be the electronic device 100 shown in FIG. 7B and FIG. 7C. The electronic device 100 does not camp on the cellular network, and establishes the satellite communication connection to the satellite.

As shown in FIG. 7B, the user may tap the call record 703 in the phone application interface 700 that displays the one or more call records, and in response to the user operation, the electronic device may display an in-call screen with a contact "Mom". The in-call screen may be the in-call screen 710 shown in FIG. 7C.

The in-call screen may display the first indicator, the related information of the first contact, and the hang-up control, the first indicator indicates the satellite signal strength and the status of the connection between the first electronic device and the satellite, the related information of the first contact includes one or more of the following: the name of the first contact, the phone number of the first contact, and the home position of the phone number of the first contact, and the hang-up control is configured to end the call between the first electronic device and the second electronic device of the first contact.

As shown in FIG. 7C, the first indicator may be the strength indicator in the satellite real-time capsule 702 shown in FIG. 7C and a color of the satellite real-time capsule 702. For the strength indicator in the satellite real-time capsule 702 and the color of the satellite real-time capsule, refer to the foregoing description in FIG. 6D. Details are not described herein again. The first contact may be "Mom" shown in FIG. 7C. The related information of the first contact may include a contact name "Mom", a phone number "13500010001", and a home position "Chengdu, Sichuan" of the phone number shown in FIG. 7C. The hang-up control may be the call ending control 713 in FIG. 7C.

As shown in FIG. 7E, the electronic device 100 is in a call with an electronic device of the contact "Mom". The electronic device of the contact "Mom" may be referred to as the second electronic device.

In a possible implementation, the in-call screen further includes a position sending control, and the position sending control may be configured to send position information of the first electronic device to the second electronic device. The position sending control may be the position sending control 711 shown in FIG. 7C.

In a possible implementation, the in-call screen includes a first card or a first capsule, the first card includes the first indicator and first prompt information, and the first prompt information may prompt the user to maintain or adjust a current posture of holding the first electronic device. The first capsule includes the first indicator.

For example, the first capsule may be the satellite real-time capsule 702 shown in FIG. 7C.

In a possible implementation, the in-call screen does not display a video call control configured to request a video call.

The in-call screen may be the in-call screen 1610 shown in FIG. 16B. The first card may be the satellite connection card 530 shown in FIG. 16B. The first indicator may be a satellite strength indicator shown in the satellite connection card 530 and a color of the satellite connection card 530. The satellite strength indicator may indicate satellite signal strength. The color of the satellite connection card 530 may indicate the status of the connection between the first electronic device and the satellite. For example, when the color of the satellite connection card 530 is green, it indicates that the first electronic device is connected to the satellite. When the color of the satellite connection card 530 is blue, it indicates that the first electronic device is establishing a connection to the satellite. When the satellite connection card 530 is red, it indicates that the first electronic device is disconnected from the satellite. A specific color corresponding to the status of the connection is not limited in this embodiment of this application.

In a possible implementation, the first prompt information may include a first text prompt and a first graphic prompt.

The first text prompt may include text information prompting the user to maintain or adjust the current posture of holding the first electronic device, and/or text information indicating a current status of the connection between the first electronic device and the satellite. The text information prompting the user to maintain or adjust the current posture of holding the first electronic device may be the text prompt 502 shown in FIG. 5A, or may be the text prompt 512 shown in FIG. 5B. Alternatively, the text information prompting the user to maintain or adjust the current posture of holding the first electronic device may be "Keep the current handheld posture" in the text prompt 522 shown in FIG. 5C. The text information indicating the current status of the connection between the first electronic device and the satellite may be "Connecting" in the text prompt 522 shown in FIG. 5C. The text information prompting the user to maintain or adjust the current posture of holding the first electronic device may alternatively be "Keep the current handheld posture" in the text prompt 532 shown in FIG. 5D. The text information indicating the current status of the connection between the first electronic device and the satellite may be "Satellite connection succeeded" in the text prompt 532 shown in FIG. 5D. Herein, refer to the foregoing descriptions in FIG. 5A to FIG. 5F.

The first graphic prompt may include one or more of the following: an azimuth angle guide icon, an azimuth angle sector area, a pitch angle guide icon, and a pitch angle circular area. The azimuth angle guide icon and the azimuth angle sector area may indicate the user to maintain or adjust a current azimuth angle at which the first electronic device is held. The pitch angle guide icon and the pitch angle circular area indicate the user to maintain and adjust a current pitch angle at which the first electronic device is held. The first graphic prompt may be any one of the following: the animation prompt 503, the animation prompt 513, the animation prompt 523, the animation prompt 533, the animation prompt 543, and the animation prompt 553 in FIG. 5A to FIG. 5F. The animation prompt 503, the animation prompt 513, the animation prompt 523, the animation prompt 533, the animation prompt 543, and the animation prompt 553 may include a sector area, and the sector area may prompt the user of an azimuth angle between a position of the satellite and an antenna of the electronic device 100. The animation prompt 503, the animation prompt 513, the animation prompt 523, the animation prompt 533, the animation prompt 543, and the animation prompt 553 may further include a ball, and a position of the ball may prompt the user of a pitch angle of the electronic device 100 relative to the satellite.

In a possible implementation, the method may further include: When the first card is displayed on the in-call screen, the first electronic device receives an operation for the first card, and the first electronic device displays the first capsule and stops displaying the first card. The in-call screen may be the in-call screen 1610 shown in FIG. 16B. The satellite connection card 530 on the in-call screen 1610 may be referred to as the first card. When the user slides up the satellite connection card, the satellite real-time capsule (which may also be referred to as the first capsule) may be displayed on the in-call screen 1610, for example, the in-call screen 1610 shown in FIG. 16D. For how to switch the first card to the first capsule, refer to the descriptions in FIG. 6C and FIG. 6D.

Alternatively, when the first capsule is displayed on the in-call screen, the first electronic device receives an operation for the first capsule, and the first electronic device displays the first card and stops displaying the first capsule. When the first capsule is displayed on the in-call screen, the user may tap the first capsule. In response to the user operation, the in-call screen may display the first card and stop displaying the first capsule. For how to switch the first capsule to the first card, refer to the foregoing descriptions in FIG. 6E and FIG. 6F.

In a possible implementation, the in-call screen may further include first information, and the first information may prompt the user that the first electronic device makes the call to the second electronic device through the satellite communication connection. The first information may be the satellite dialing prompt 715 shown in FIG. 7C. For details, refer to the description in FIG. 7C.

In a possible implementation, after the first electronic device displays the in-call screen with the first contact, the method further includes: The first electronic device receives an operation for the position sending control; the electronic device displays a first pop-up box, where the first pop-up box includes the position information of the first electronic device and the sending control; the first electronic device receives the operation for the sending control; and the first electronic device sends the position information to the second electronic device. As shown in FIG. 7L, the user may tap the position sending control 711 on the in-call screen 710. The electronic device 100 may receive and respond to a tap operation performed by the user on the position sending control 711. As shown in FIG. 7M, the information sending window 750 is displayed on the in-call screen 710. The information sending window 750 may further include the sending control 751. The first pop-up box may be the information sending window 750 shown in FIG. 7M. The position information in the first pop-up box may be "Position information: north latitude 36°44'00" and east longitude 98°5'00'" in the information sending window 750. The sending control in the first pop-up box may be the sending control 751 shown in FIG. 7M. For details, refer to the descriptions in FIG. 7L to FIG. 7N. Details are not described herein again.

In a possible implementation, before the first electronic device receives the dialing operation performed by the user to make the call to the first contact, the method may further include: The first electronic device displays the first dialing interface, where the first dialing interface includes the first card or the first capsule, and the first dialing interface further includes the first dialing control. That the first electronic device receives a dialing operation performed by the user to make a call to a first contact includes: The first electronic device receives an operation for the first dialing control in the first dialing interface, or the first electronic device receives, in the first dialing interface, the dialing operation for making the call to the first contact. The first dialing interface may be the phone application interface 400 shown in FIG. 6E or FIG. 6F, and the first dialing control may be the dialing control 701 shown in FIG. 7B. Herein, refer to the foregoing descriptions in FIG. 6E to FIG. 7C. Details are not described herein again.

In a possible implementation, the first dialing control includes the satellite communication identifier, and the satellite communication identifier indicates that the first electronic device supports a call made through the satellite communication connection.

In a possible implementation, before the first electronic device displays the first dialing interface, the method may include: The first electronic device displays a second dialing interface, where the second dialing interface includes a second dialing control and a first prompt box, the second dialing control does not include the satellite communication identifier, the first prompt box prompts the user that a mobile network of the first electronic device is unavailable and establishment of the connection to the satellite for satellite communication is supported, the first prompt box includes a satellite communication setting control, and the first electronic device does not camp on the cellular network, and does not establish the communication connection to the satellite; and the first electronic device receives an operation for the satellite communication setting control, and the first electronic device displays a satellite communication setting interface, where the satellite communication setting interface includes a first switch, and the first switch is configured to enable a satellite communication function of the first electronic device. The second dialing interface may be the phone application interface 400 shown in FIG. 4B. The second dialing control may be the dialing key 404 shown in FIG. 4B. The first prompt box may be the satellite communication mode prompt window 410 shown in FIG. 4B. The satellite communication setting control may be the use-now control 412 shown in FIG. 4B. The satellite communication setting interface may be the control center interface 210 shown in FIG. 2B, and the first switch may be the satellite communication control 211 shown in FIG. 2B. Alternatively, the satellite communication setting interface may be the satellite communication mode setting interface 320 shown in FIG. 3F, and the first switch may be the enable control 321 in the satellite communication mode setting interface 320. For details, refer to the descriptions in the foregoing related accompanying drawings. Details are not described herein again.

In a possible implementation, after the first electronic device receives the operation for the satellite communication setting control, and the first electronic device displays the satellite communication setting interface, the method may further include: The first electronic device receives an operation for the first switch; the first electronic device displays a first page, where the first page includes first indication information, and the first indication information indicates the user to adjust a posture of holding the first electronic device; if a posture in which the user holds the first electronic device is aligned with the satellite, the first electronic device establishes the satellite communication connection to the satellite; and when the first electronic device establishes the communication connection to the satellite, the first electronic device displays a second page, where the second page indicates that the satellite communication connection has been established, the second page includes a strength indicator and second indication information, the strength indicator indicates strength of a satellite signal received by the first electronic device, and if the posture of the first electronic device is aligned with the satellite, the second indication information indicates the user to maintain the current posture of holding the first electronic device. The first page may be the satellite connection page 260 shown in FIG. 2H, and the first indication information may include the text prompt 264 and the animation prompt 265 shown in FIG. 2H. The second page may be the satellite connection page 260 shown in FIG. 2I. The second indication information may include the text prompt 264 and the animation prompt 265. The strength indicator may be the strength indicator 263 shown in FIG. 2I. For details, refer to the descriptions in FIG. 2E to FIG. 2M. Details are not described herein again.

In a possible implementation, the second page further includes a phone application icon, and the phone application icon indicates that the first electronic device supports a call made through the satellite communication connection. After the first electronic device displays the second page when the first electronic device establishes the communication connection to the satellite, the method may further include: The first electronic device receives an operation for the phone application icon, and the first electronic device displays the first dialing interface.

In a possible implementation, the phone application icon includes the satellite communication identifier.

In a possible implementation, the second page further includes an SMS application icon, and the SMS application icon indicates that the first electronic device supports sending and receiving of an SMS message through the satellite communication connection.

In a possible implementation, a drop-down status bar of a home screen of the first electronic device includes a satellite communication switch, and the satellite communication switch is configured to enable the satellite communication function of the first electronic device. The satellite communication switch may be the satellite communication control 211 shown in FIG. 2B.

In a possible implementation, a setting interface of the first electronic device includes a control configured to enable the satellite communication function of the first electronic device. The setting interface of the first electronic device may be the setting application interface 300, the satellite network interface 310, and the satellite communication mode setting interface 320 shown in FIG. 3B to FIG. 3H.

In a possible implementation, the method may include: The first electronic device displays a first SMS session display interface. The first SMS session display interface includes the first indicator, a plurality of SMS messages sent by the first electronic device to the first contact, and sending statuses of the plurality of SMS messages. The plurality of SMS messages include a first SMS message and a second SMS message. The sending statuses of the plurality of SMS messages include a first state and a second state. The first state indicates that the first SMS message is being sent. The second state indicates that the second SMS message is waiting to be sent. The first SMS session display interface may be the information sending interface 1010 shown in FIG. 10E. Herein, refer to the description in FIG. 10E.

In a possible implementation, the first SMS session display interface may further include the first card or the first capsule.

In a possible implementation, the method may include: The first electronic device displays a second SMS session display interface, where the second SMS session display interface displays a plurality of received SMS messages that are sent by a third electronic device of the second contact and that include position information, and a track map control, the plurality of SMS messages including the position information include a third SMS message and a fourth SMS message, the third SMS message includes first position information, and the fourth SMS message includes second position information; the first electronic device receives an operation for the track map control; and the first electronic device displays a track map, where the track map is used to display a track of the third electronic device from a first position to a second position. The second SMS session display interface may be the information sending interface 1200 shown in FIG. 12A to FIG. 12C. The track map may include the map 1211 and the movement track 1212 shown in FIG. 12D. For details, refer to the descriptions in FIG. 12A to FIG. 12D. Details are not described herein again.

In a possible implementation, the method may include: If the satellite communication connection is established, the first electronic device displays the home screen, where the home screen includes an icon of a first application, the first application is any one of the following: a call application, an SMS application, and an address book application, the icon of the first application displays the satellite communication identifier, and the satellite communication identifier indicates that the first application supports the satellite communication. The home screen may be the home screen 200 shown in FIG. 6B. For details, refer to the foregoing descriptions in FIG. 6A to FIG. 6G. Details are not described herein again.

In a possible implementation, the method may include: If the satellite communication connection is established, the first electronic device receives a call request initiated by the third electronic device; the first electronic device displays an incoming call screen in response to the call request, where the incoming call screen displays the first prompt information, a call answering control, and related information of the second contact, and the related information of the second contact includes one or more of the following: a name of the second contact, a phone number of the second contact, and a home position of the phone number of the second contact; and in response to an operation performed by the user on the call answering control, the first electronic device makes, through the satellite communication connection, a call to the third electronic device corresponding to the second contact. The incoming call screen may be the incoming call screen 900 shown in FIG. 9A. For details herein, refer to the descriptions in FIG. 9A and FIG. 9B. Details are not described herein again.

In a possible implementation, a call answering control includes the satellite communication identifier, and the satellite communication identifier indicates that the first electronic device supports receiving of the call request through the satellite communication connection.

In a possible implementation, after the first electronic device establishes the satellite communication connection to the satellite, the method may further include: if it is detected that the posture of the first electronic device is not aligned with the satellite, the first electronic device replaces second guide information on the second page with third indication information, where the third indication information indicates the user to adjust the posture of holding the first electronic device, to re-align the first electronic device with the satellite; the first electronic device detects that display duration of the third indication information is greater than first duration; and the first electronic device displays an exit prompt, where the exit prompt prompts that the satellite communication mode is to exit. The third indication information may be the text prompt 264 shown in FIG. 2J. The exit prompt may be the exit prompt box 270 shown in FIG. 2K. Herein, refer to the foregoing descriptions in FIG. 2J and FIG. 2K. Details are not described herein again.

In a possible implementation, the method may further include: When the first electronic device successfully establishes the satellite communication connection to the satellite, the first electronic device displays a first animation, and/or outputs first sound effect, and/or outputs a first vibration; and when the first electronic device disconnects the satellite communication connection from the satellite, the first electronic device displays a second animation, and/or outputs second sound effect, and/or outputs a second vibration. The first animation is different from the second animation, the first sound effect is different from the second sound effect, and a vibration frequency and/or a vibration loudness of the first vibration are/is different from a vibration frequency and/and a vibration loudness of the second vibration.

In this way, by using the satellite communication method provided in this embodiment of this application, when the electronic device does not camp on the cellular network, the electronic device may establish the satellite communication connection to the satellite, and the electronic device may make a call, answer a call, and receive and send an SMS message through the satellite communication connection. In this way, when the user is in an area that is not covered by the cellular network, the user of the electronic device can still contact another user. When the user is in a dangerous area, it is also convenient for the user to seek help from the another user through the satellite communication connection.

FIG. 31 is an example of a schematic flowchart of a satellite communication method according to an embodiment of this application. As shown in FIG. 31, the satellite communication method provided in this embodiment of this application may include the following steps.

S3101: After establishing a satellite communication connection, a first electronic device receives a call request initiated by a second electronic device, where the first electronic device does not camp on a cellular network.

S3102: The first electronic device displays an incoming call screen in response to the call request, where the incoming call screen displays an incoming call answering control, a first indicator, and related information of a second contact corresponding to the second electronic device, the incoming call answering control includes a satellite communication identifier, the satellite communication identifier indicates that the first electronic device supports a call made through the satellite communication connection, the first indicator indicates satellite signal strength and a status of the connection between the first electronic device and a satellite, and the related information of the second contact includes one or more of the following: a name of the second contact, a phone number of the second contact, and a home position of the phone number of the second contact.

S3103. The first electronic device receives an operation performed by a user on the incoming call answering control, and the first electronic device makes a call to the second electronic device through the satellite communication connection.

The incoming call screen may be the incoming call screen 900 shown in FIG. 9A. The incoming call screen 900 includes the answering control 901. The satellite symbol may be further displayed on the answering control 901. The satellite connection card 530 is further displayed on the incoming call screen 900. For details herein, refer to the descriptions in FIG. 9A and FIG. 9B. Details are not described herein again.

In a possible implementation, a call answering control includes the satellite communication identifier, and the satellite communication identifier indicates that the first electronic device supports receiving of the call request through the satellite communication connection.

In a possible implementation, the incoming call screen includes a first card or a first capsule, the first card includes the first indicator and first prompt information, the first prompt information prompts the user to maintain or adjust a current posture of holding the first electronic device, and the first capsule includes the first indicator. The first card may be the satellite connection card 530 shown in FIG. 9A. The first capsule may be the satellite real-time capsule 702 mentioned above. For the first card and the first capsule, refer to the description in FIG. 30. Details are not described herein again.

In a possible implementation, the method may further include: When the first card is displayed on the incoming call screen, the first electronic device receives an operation for the first card, and the first electronic device displays the first capsule and stops displaying the first card. Alternatively, when the first capsule is displayed on the incoming call screen, the first electronic device receives an operation for the first capsule, and the first electronic device displays the first card and stops displaying the first capsule. In other words, the first card and the first capsule on the incoming call screen may be switched for display. When the first capsule is displayed on the incoming call screen, the user may tap the first capsule. After the tapping, the incoming call screen may display the first card and stop displaying the first capsule. When the first card is displayed on the incoming call screen, the user may slide up the first card. In response to the user interface, the incoming call screen may display the first capsule and stop displaying the first card.

In a possible implementation, when the user makes a satellite call by using the electronic device, the electronic device may display a dialing interface. After the call is successfully made, the electronic device may further display an in-call screen. For the dialing interface and the in-call screen, refer to the foregoing descriptions. Details are not described herein again.

In a possible implementation, the user may enable a satellite communication function of the electronic device on a home screen of the electronic device. A satellite communication control may be displayed in a drop-down bar on the home screen of the electronic device. After the user taps the control, an enabling prompt window may be displayed. When the user taps the enable control of the enabling prompt window, the electronic device may display a calibration page. For the home screen of the electronic device, refer to the foregoing description in FIG. 2B. For the enabling prompt box, refer to the description of the enabling prompt box 220 in FIG. 2C.

In a possible implementation, after the calibration is completed, the electronic device may display a satellite searching interface. For the satellite searching interface, refer to the foregoing description of the satellite searching interface 240 shown in FIG. 2E. Details are not described herein again.

In a possible implementation, after the electronic device finds the satellite, the electronic device may close the satellite searching interface, and display an alignment page. For the alignment page, refer to the foregoing description of the alignment page 250 shown in FIG. 2F. Details are not described herein again.

In a possible implementation, after the alignment is completed, the electronic device may close the alignment page, and display a satellite connection page on the home screen. For the satellite connection page, refer to the foregoing description of the satellite connection page 260 shown in FIG. 2H. Details are not described herein again.

In a possible implementation, the electronic device may display a setting application interface. Alternatively, the user may trigger, in the setting application interface, the electronic device to enable the satellite communication mode. For the setting application interface, refer to the foregoing description of the setting application interface 300 shown in FIG. 3B. Details are not described herein again.

In a possible implementation, the electronic device may display a satellite network interface in response to a tap operation performed by the user on a satellite network entry in the setting application interface. For the satellite network interface, refer to the foregoing description of the satellite network interface 310 shown in FIG. 3C. Details are not described herein again.

In a possible implementation, the electronic device may receive and respond to a tap operation performed by the user on a satellite communication mode entry, and display a satellite communication mode setting interface. The satellite communication mode setting interface may be used to enable or disable the satellite communication mode (or enable or disable the satellite communication function). For details of the satellite communication mode setting interface, refer to the foregoing description of the satellite communication mode setting interface 320 shown in FIG. 3D. Details are not described herein again.

In a possible implementation, when the user taps a phone application icon on the home screen of the electronic device, the electronic device may display a phone application interface, where the phone application interface may include one or more call records. Each call record may record information about a peer device, for example, a SIM card number, a contact, a SIM card position, a dialing/answering indicator, and a call type indicator. The phone application interface includes a satellite communication mode prompt window. The satellite communication mode prompt box may be used to remind the user to enable the satellite communication mode. The user may enable the satellite communication mode in the phone application interface. For details of the phone application interface, refer to the foregoing description of the phone application interface 400 shown in FIG. 4B. Details are not described herein again.

The phone application icon includes a satellite communication identifier.

In a possible implementation, when the user taps an SMS application icon on the home screen of the electronic device, the electronic device may display an information application interface, where the information application interface may include a notification information entry, an information list, and a satellite communication mode prompt window, and the information list may include one or more information entry satellites. The notification information entry may be used to trigger the electronic device 100 to display the notification information list, and the information entry may be used to trigger the electronic device 100 to display corresponding information. The satellite communication mode prompt box may be used to remind the user to enable the satellite communication mode.

For details of the information application interface, refer to the foregoing description of the information application interface 420 shown in FIG. 4D. Details are not described herein again.

In a possible implementation, when the user taps new message in the information application interface of the electronic device, the electronic device may display a new message interface in response to the user operation. The new message interface may be used to receive and display information edited by the user, and send the information edited by the user. For the new message interface, refer to the foregoing description of the new message interface 460 shown in FIG. 4I. Details are not described herein again.

In a possible implementation, after the user taps to send an SMS message in the new message interface, the electronic device may display an information sending interface. For details of the information sending interface 470, refer to the foregoing description of the information sending interface 470 shown in FIG. 4K. Details are not described herein again.

In a possible implementation, the first prompt information may include a first text prompt and a first graphic prompt.

The first text prompt may include text information prompting the user to maintain or adjust the current posture of holding the first electronic device, and/or text information indicating a current status of the connection between the first electronic device and the satellite. The text information prompting the user to maintain or adjust the current posture of holding the first electronic device may be the text prompt 502 shown in FIG. 5A, or may be the text prompt 512 shown in FIG. 5B. Alternatively, the text information prompting the user to maintain or adjust the current posture of holding the first electronic device may be "Keep the current handheld posture" in the text prompt 522 shown in FIG. 5C. The text information indicating the current status of the connection between the first electronic device and the satellite may be "Connecting" in the text prompt 522 shown in FIG. 5C. The text information prompting the user to maintain or adjust the current posture of holding the first electronic device may alternatively be "Keep the current handheld posture" in the text prompt 532 shown in FIG. 5D. The text information indicating the current status of the connection between the first electronic device and the satellite may be "Satellite connection succeeded" in the text prompt 532 shown in FIG. 5D. Herein, refer to the foregoing descriptions in FIG. 5A to FIG. 5F.

The first graphic prompt may include one or more of the following: an azimuth angle guide icon, an azimuth angle sector area, a pitch angle guide icon, and a pitch angle circular area. The azimuth angle guide icon and the azimuth angle sector area may indicate the user to maintain or adjust a current azimuth angle at which the first electronic device is held. The pitch angle guide icon and the pitch angle circular area indicate the user to maintain and adjust a current pitch angle at which the first electronic device is held. The first graphic prompt may be any one of the following: the animation prompt 503, the animation prompt 513, the animation prompt 523, the animation prompt 533, the animation prompt 543, and the animation prompt 553 in FIG. 5A to FIG. 5F. The animation prompt 503, the animation prompt 513, the animation prompt 523, the animation prompt 533, the animation prompt 543, and the animation prompt 553 may include a sector area, and the sector area may prompt the user of an azimuth angle between a position of the satellite and an antenna of the electronic device 100. The animation prompt 503, the animation prompt 513, the animation prompt 523, the animation prompt 533, the animation prompt 543, and the animation prompt 553 may further include a ball, and a position of the ball may prompt the user of a pitch angle of the electronic device 100 relative to the satellite.

In a possible implementation, the method may further include: When the first card is displayed on the in-call screen, the first electronic device receives an operation for the first card, and the first electronic device displays the first capsule and stops displaying the first card. The in-call screen may be the in-call screen 1610 shown in FIG. 16B. The satellite connection card 530 on the in-call screen 1610 may be referred to as the first card. When the user slides up the satellite connection card, the satellite real-time capsule (which may also be referred to as the first capsule) may be displayed on the in-call screen 1610, for example, the in-call screen 1610 shown in FIG. 16D. For how to switch the first card to the first capsule, refer to the descriptions in FIG. 6C and FIG. 6D.

Alternatively, when the first capsule is displayed on the in-call screen, the first electronic device receives an operation for the first capsule, and the first electronic device displays the first card and stops displaying the first capsule. When the first capsule is displayed on the in-call screen, the user may tap the first capsule. In response to the user operation, the in-call screen may display the first card and stop displaying the first capsule. For how to switch the first capsule to the first card, refer to the foregoing descriptions in FIG. 6E and FIG. 6F.

In a possible implementation, the in-call screen may further include first information, and the first information may prompt the user that the first electronic device makes the call to the second electronic device through the satellite communication connection. The first information may be the satellite dialing prompt 715 shown in FIG. 7C. For details, refer to the description in FIG. 7C.

In a possible implementation, after the first electronic device displays the in-call screen with the first contact, the method further includes: The first electronic device receives an operation for the position sending control; the electronic device displays a first pop-up box, where the first pop-up box includes the position information of the first electronic device and the sending control; the first electronic device receives the operation for the sending control; and the first electronic device sends the position information to the second electronic device. As shown in FIG. 7L, the user may tap the position sending control 711 on the in-call screen 710. The electronic device 100 may receive and respond to a tap operation performed by the user on the position sending control 711. As shown in FIG. 7M, the information sending window 750 is displayed on the in-call screen 710. The information sending window 750 may further include the sending control 751. The first pop-up box may be the information sending window 750 shown in FIG. 7M. The position information in the first pop-up box may be "Position information: north latitude 36°44'00" and east longitude 98°5'00'" in the information sending window 750. The sending control in the first pop-up box may be the sending control 751 shown in FIG. 7M. For details, refer to the descriptions in FIG. 7L to FIG. 7N. Details are not described herein again.

In a possible implementation, before the first electronic device receives the dialing operation performed by the user to make the call to the first contact, the method may further include: The first electronic device displays the first dialing interface, where the first dialing interface includes the first card or the first capsule, and the first dialing interface further includes the first dialing control. That the first electronic device receives a dialing operation performed by the user to make a call to a first contact includes: The first electronic device receives an operation for the first dialing control in the first dialing interface, or the first electronic device receives, in the first dialing interface, the dialing operation for making the call to the first contact. The first dialing interface may be the phone application interface 400 shown in FIG. 6E or FIG. 6F, and the first dialing control may be the dialing control 701 shown in FIG. 7B. Herein, refer to the foregoing descriptions in FIG. 6E to FIG. 7C. Details are not described herein again.

In a possible implementation, the first dialing control includes the satellite communication identifier, and the satellite communication identifier indicates that the first electronic device supports a call made through the satellite communication connection.

In a possible implementation, before the first electronic device displays the first dialing interface, the method may include: The first electronic device displays a second dialing interface, where the second dialing interface includes a second dialing control and a first prompt box, the second dialing control does not include the satellite communication identifier, the first prompt box prompts the user that a mobile network of the first electronic device is unavailable and establishment of the connection to the satellite for satellite communication is supported, the first prompt box includes a satellite communication setting control, and the first electronic device does not camp on the cellular network, and does not establish the communication connection to the satellite; and the first electronic device receives an operation for the satellite communication setting control, and the first electronic device displays a satellite communication setting interface, where the satellite communication setting interface includes a first switch, and the first switch is configured to enable a satellite communication function of the first electronic device. The second dialing interface may be the phone application interface 400 shown in FIG. 4B. The second dialing control may be the dialing key 404 shown in FIG. 4B. The first prompt box may be the satellite communication mode prompt window 410 shown in FIG. 4B. The satellite communication setting control may be the use-now control 412 shown in FIG. 4B. The satellite communication setting interface may be the control center interface 210 shown in FIG. 2B, and the first switch may be the satellite communication control 211 shown in FIG. 2B. Alternatively, the satellite communication setting interface may be the satellite communication mode setting interface 320 shown in FIG. 3F, and the first switch may be the enable control 321 in the satellite communication mode setting interface 320. For details, refer to the descriptions in the foregoing related accompanying drawings. Details are not described herein again.

In a possible implementation, after the first electronic device receives the operation for the satellite communication setting control, and the first electronic device displays the satellite communication setting interface, the method may further include: The first electronic device receives an operation for the first switch; the first electronic device displays a first page, where the first page includes first indication information, and the first indication information indicates the user to adjust a posture of holding the first electronic device; if a posture in which the user holds the first electronic device is aligned with the satellite, the first electronic device establishes the satellite communication connection to the satellite; and when the first electronic device establishes the communication connection to the satellite, the first electronic device displays a second page, where the second page indicates that the satellite communication connection has been established, the second page includes a strength indicator and second indication information, the strength indicator indicates strength of a satellite signal received by the first electronic device, and if the posture of the first electronic device is aligned with the satellite, the second indication information indicates the user to maintain the current posture of holding the first electronic device. The first page may be the satellite connection page 260 shown in FIG. 2H, and the first indication information may include the text prompt 264 and the animation prompt 265 shown in FIG. 2H. The second page may be the satellite connection page 260 shown in FIG. 2I. The second indication information may include the text prompt 264 and the animation prompt 265. The strength indicator may be the strength indicator 263 shown in FIG. 2I. For details, refer to the descriptions in FIG. 2E to FIG. 2M. Details are not described herein again.

In a possible implementation, the second page further includes a phone application icon, and the phone application icon indicates that the first electronic device supports a call made through the satellite communication connection. After the first electronic device displays the second page when the first electronic device establishes the communication connection to the satellite, the method may further include: The first electronic device receives an operation for the phone application icon, and the first electronic device displays the first dialing interface.

In a possible implementation, the phone application icon includes the satellite communication identifier.

In a possible implementation, the second page further includes an SMS application icon, and the SMS application icon indicates that the first electronic device supports sending and receiving of an SMS message through the satellite communication connection.

In a possible implementation, a drop-down status bar of a home screen of the first electronic device includes a satellite communication switch, and the satellite communication switch is configured to enable the satellite communication function of the first electronic device. The satellite communication switch may be the satellite communication control 211 shown in FIG. 2B.

In a possible implementation, a setting interface of the first electronic device includes a control configured to enable the satellite communication function of the first electronic device. The setting interface of the first electronic device may be the setting application interface 300, the satellite network interface 310, and the satellite communication mode setting interface 320 shown in FIG. 3B to FIG. 3H.

In a possible implementation, the method may include: The first electronic device displays a first SMS session display interface. The first SMS session display interface includes the first indicator, a plurality of SMS messages sent by the first electronic device to the first contact, and sending statuses of the plurality of SMS messages. The plurality of SMS messages include a first SMS message and a second SMS message. The sending statuses of the plurality of SMS messages include a first state and a second state. The first state indicates that the first SMS message is being sent. The second state indicates that the second SMS message is waiting to be sent. The first SMS session display interface may be the information sending interface 1010 shown in FIG. 10E. Herein, refer to the description in FIG. 10E.

In a possible implementation, the first SMS session display interface may further include the first card or the first capsule.

In a possible implementation, the method may include: The first electronic device displays a second SMS session display interface, where the second SMS session display interface displays a plurality of received SMS messages that are sent by a third electronic device of the second contact and that include position information, and a track map control, the plurality of SMS messages including the position information include a third SMS message and a fourth SMS message, the third SMS message includes first position information, and the fourth SMS message includes second position information; the first electronic device receives an operation for the track map control; and the first electronic device displays a track map, where the track map is used to display a track of the third electronic device from a first position to a second position. The second SMS session display interface may be the information sending interface 1200 shown in FIG. 12A to FIG. 12C. The track map may include the map 1211 and the movement track 1212 shown in FIG. 12D. For details, refer to the descriptions in FIG. 12A to FIG. 12D. Details are not described herein again.

In a possible implementation, the method may include: If the satellite communication connection is established, the first electronic device displays the home screen, where the home screen includes an icon of a first application, the first application is any one of the following: a call application, an SMS application, and an address book application, the icon of the first application displays the satellite communication identifier, and the satellite communication identifier indicates that the first application supports the satellite communication. The home screen may be the home screen 200 shown in FIG. 6B. For details, refer to the foregoing descriptions in FIG. 6A to FIG. 6G. Details are not described herein again.

In a possible implementation, after the first electronic device establishes the satellite communication connection to the satellite, the method may further include: if it is detected that the posture of the first electronic device is not aligned with the satellite, the first electronic device replaces second guide information on the second page with third indication information, where the third indication information indicates the user to adjust the posture of holding the first electronic device, to re-align the first electronic device with the satellite; the first electronic device detects that display duration of the third indication information is greater than first duration; and the first electronic device displays an exit prompt, where the exit prompt prompts that the satellite communication mode is to exit. The third indication information may be the text prompt 264 shown in FIG. 2J. The exit prompt may be the exit prompt box 270 shown in FIG. 2K. Herein, refer to the foregoing descriptions in FIG. 2J and FIG. 2K. Details are not described herein again.

In a possible implementation, the method may further include: When the first electronic device successfully establishes the satellite communication connection to the satellite, the first electronic device displays a first animation, and/or outputs first sound effect, and/or outputs a first vibration; and when the first electronic device disconnects the satellite communication connection from the satellite, the first electronic device displays a second animation, and/or outputs second sound effect, and/or outputs a second vibration. The first animation is different from the second animation, the first sound effect is different from the second sound effect, and a vibration frequency and/or a vibration loudness of the first vibration are/is different from a vibration frequency and/and a vibration loudness of the second vibration.

In this way, by using the satellite communication method provided in this embodiment of this application, when the electronic device does not camp on the cellular network, the electronic device may establish the satellite communication connection to the satellite, and the electronic device may make a call, answer a call, and receive and send an SMS message through the satellite communication connection. In this way, when the user is in an area that is not covered by the cellular network, the user of the electronic device can still contact another user. When the user is in a dangerous area, it is also convenient for the user to seek help from the another user through the satellite communication connection.

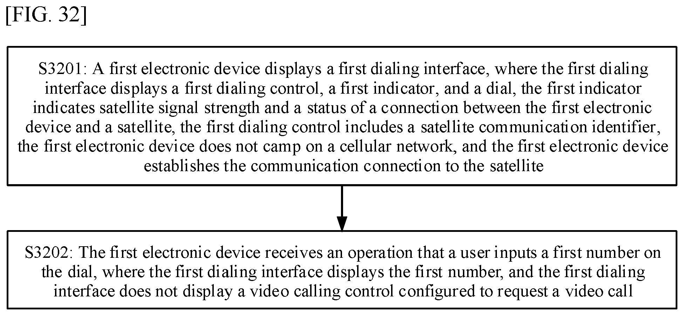

FIG. 32 is an example of a schematic flowchart of a satellite communication method according to an embodiment of this application. As shown in FIG. 32, the satellite communication method provided in this embodiment of this application may include the following steps.

S3201: A first electronic device displays a first dialing interface, where the first dialing interface displays a first dialing control, a first indicator, and a dial, the first indicator indicates satellite signal strength and a status of a connection between the first electronic device and a satellite, the first dialing control includes a satellite communication identifier, the first electronic device does not camp on a cellular network, and the first electronic device establishes the communication connection to the satellite.

S3202: The first electronic device receives an operation that a user inputs a first number on the dial, where the first dialing interface displays the first number, and the first dialing interface does not display a video calling control configured to request a video call.

The first dialing interface may be the phone application interface 400 shown in FIG. 6E or FIG. 6F, and the first dialing control may be the dialing control 701 shown in FIG. 7B. Herein, refer to the foregoing descriptions in FIG. 6E to FIG. 7C. Details are not described herein again.

In a possible implementation, before the first electronic device displays the first dialing interface, the method may further include: The first electronic device displays a second dialing interface, where the second dialing interface includes a second dialing control and a first prompt box, the second dialing control does not include the satellite communication identifier, the first prompt box prompts the user that a mobile network of the first electronic device is unavailable and establishment of the connection to the satellite for satellite communication is supported, the first prompt box includes a satellite communication setting control, and the first electronic device does not camp on the cellular network, and does not establish the communication connection to the satellite; and the first electronic device receives an operation for the satellite communication setting control, and the first electronic device displays a satellite communication setting interface, where the satellite communication setting interface includes a first switch, and the first switch is configured to enable a satellite communication function of the first electronic device. The second dialing interface may be the phone application interface 400 shown in FIG. 4B. The second dialing control may be the dialing key 404 shown in FIG. 4B. The first prompt box may be the satellite communication mode prompt window 410 shown in FIG. 4B. The satellite communication setting control may be the use-now control 412 shown in FIG. 4B. The satellite communication setting interface may be the control center interface 210 shown in FIG. 2B, and the first switch may be the satellite communication control 211 shown in FIG. 2B. Alternatively, the satellite communication setting interface may be the satellite communication mode setting interface 320 shown in FIG. 3F, and the first switch may be the enable control 321 in the satellite communication mode setting interface 320. For details, refer to the descriptions in the foregoing related accompanying drawings. Details are not described herein again.

In a possible implementation, the method may further include: The first electronic device displays the second dialing interface, where the second dialing interface displays the dial; and the first electronic device receives the operation that the user inputs the first number on the dial, where the first dialing interface displays the first number and the video calling control.

In a possible implementation, the method may further include: After establishing a satellite communication connection, the first electronic device receives a call request initiated by a second electronic device, where the first electronic device does not camp on a cellular network. The first electronic device displays an incoming call screen in response to the call request, where the incoming call screen displays an incoming call answering control, a first indicator, and related information of a second contact corresponding to the second electronic device, the incoming call answering control includes a satellite communication identifier, the satellite communication identifier indicates that the first electronic device supports a call made through the satellite communication connection, the first indicator indicates satellite signal strength and a status of the connection between the first electronic device and a satellite, and the related information of the second contact includes one or more of the following: a name of the second contact, a phone number of the second contact, and a home position of the phone number of the second contact. The first electronic device receives an operation performed by the user on the incoming call answering control, and the first electronic device makes a call to the second electronic device through the satellite communication connection. The incoming call screen may be the incoming call screen 900 shown in FIG. 9A. The incoming call screen 900 includes the answering control 901. The satellite symbol may be further displayed on the answering control 901. The satellite connection card 530 is further displayed on the incoming call screen 900. For details herein, refer to the descriptions in FIG. 9A and FIG. 9B. Details are not described herein again.

In a possible implementation, a call answering control includes the satellite communication identifier, and the satellite communication identifier indicates that the first electronic device supports receiving of the call request through the satellite communication connection.

In a possible implementation, the incoming call screen includes a first card or a first capsule, the first card includes the first indicator and first prompt information, the first prompt information prompts the user to maintain or adjust a current posture of holding the first electronic device, and the first capsule includes the first indicator. The first card may be the satellite connection card 530 shown in FIG. 9A. The first capsule may be the satellite real-time capsule 702 mentioned above. For the first card and the first capsule, refer to the description in FIG. 30. Details are not described herein again.

In a possible implementation, the method may further include: When the first card is displayed on the incoming call screen, the first electronic device receives an operation for the first card, and the first electronic device displays the first capsule and stops displaying the first card. Alternatively, when the first capsule is displayed on the incoming call screen, the first electronic device receives an operation for the first capsule, and the first electronic device displays the first card and stops displaying the first capsule. In other words, the first card and the first capsule on the incoming call screen may be switched for display. When the first capsule is displayed on the incoming call screen, the user may tap the first capsule. After the tapping, the incoming call screen may display the first card and stop displaying the first capsule. When the first card is displayed on the incoming call screen, the user may slide up the first card. In response to the user interface, the incoming call screen may display the first capsule and stop displaying the first card.

In a possible implementation, when the user makes a satellite call by using the electronic device, the electronic device may display a dialing interface. After the call is successfully made, the electronic device may further display an in-call screen. For the dialing interface and the in-call screen, refer to the foregoing descriptions. Details are not described herein again.

In a possible implementation, the user may enable a satellite communication function of the electronic device on a home screen of the electronic device. A satellite communication control may be displayed in a drop-down bar on the home screen of the electronic device. After the user taps the control, an enabling prompt window may be displayed. When the user taps the enable control of the enabling prompt window, the electronic device may display a calibration page. For the home screen of the electronic device, refer to the foregoing description in FIG. 2B. For the enabling prompt box, refer to the description of the enabling prompt box 220 in FIG. 2C.

In a possible implementation, after the calibration is completed, the electronic device may display a satellite searching interface. For the satellite searching interface, refer to the foregoing description of the satellite searching interface 240 shown in FIG. 2E. Details are not described herein again.

In a possible implementation, after the electronic device finds the satellite, the electronic device may close the satellite searching interface, and display an alignment page. For the alignment page, refer to the foregoing description of the alignment page 250 shown in FIG. 2F. Details are not described herein again.

In a possible implementation, after the alignment is completed, the electronic device may close the alignment page, and display a satellite connection page on the home screen. For the satellite connection page, refer to the foregoing description of the satellite connection page 260 shown in FIG. 2H. Details are not described herein again.

In a possible implementation, the electronic device may display a setting application interface. Alternatively, the user may trigger, in the setting application interface, the electronic device to enable the satellite communication mode. For the setting application interface, refer to the foregoing description of the setting application interface 300 shown in FIG. 3B. Details are not described herein again.

In a possible implementation, the electronic device may display a satellite network interface in response to a tap operation performed by the user on a satellite network entry in the setting application interface. For the satellite network interface, refer to the foregoing description of the satellite network interface 310 shown in FIG. 3C. Details are not described herein again.

In a possible implementation, the electronic device may receive and respond to a tap operation performed by the user on a satellite communication mode entry, and display a satellite communication mode setting interface. The satellite communication mode setting interface may be used to enable or disable the satellite communication mode (or enable or disable the satellite communication function). For details of the satellite communication mode setting interface, refer to the foregoing description of the satellite communication mode setting interface 320 shown in FIG. 3D. Details are not described herein again.

In a possible implementation, when the user taps a phone application icon on the home screen of the electronic device, the electronic device may display a phone application interface, where the phone application interface may include one or more call records. Each call record may record information about a peer device, for example, a SIM card number, a contact, a SIM card position, a dialing/answering indicator, and a call type indicator. The phone application interface includes a satellite communication mode prompt window. The satellite communication mode prompt box may be used to remind the user to enable the satellite communication mode. The user may enable the satellite communication mode in the phone application interface. For details of the phone application interface, refer to the foregoing description of the phone application interface 400 shown in FIG. 4B. Details are not described herein again.

The phone application icon includes a satellite communication identifier.

In a possible implementation, when the user taps an SMS application icon on the home screen of the electronic device, the electronic device may display an information application interface, where the information application interface may include a notification information entry, an information list, and a satellite communication mode prompt window, and the information list may include one or more information entry satellites. The notification information entry may be used to trigger the electronic device 100 to display the notification information list, and the information entry may be used to trigger the electronic device 100 to display corresponding information. The satellite communication mode prompt box may be used to remind the user to enable the satellite communication mode.

For details of the information application interface, refer to the foregoing description of the information application interface 420 shown in FIG. 4D. Details are not described herein again.

In a possible implementation, when the user taps new message in the information application interface of the electronic device, the electronic device may display a new message interface in response to the user operation. The new message interface may be used to receive and display information edited by the user, and send the information edited by the user. For the new message interface, refer to the foregoing description of the new message interface 460 shown in FIG. 4I. Details are not described herein again.

In a possible implementation, after the user taps to send an SMS message in the new message interface, the electronic device may display an information sending interface. For details of the information sending interface 470, refer to the foregoing description of the information sending interface 470 shown in FIG. 4K. Details are not described herein again.

In a possible implementation, the first prompt information may include a first text prompt and a first graphic prompt.

The first text prompt may include text information prompting the user to maintain or adjust the current posture of holding the first electronic device, and/or text information indicating a current status of the connection between the first electronic device and the satellite. The text information prompting the user to maintain or adjust the current posture of holding the first electronic device may be the text prompt 502 shown in FIG. 5A, or may be the text prompt 512 shown in FIG. 5B. Alternatively, the text information prompting the user to maintain or adjust the current posture of holding the first electronic device may be "Keep the current handheld posture" in the text prompt 522 shown in FIG. 5C. The text information indicating the current status of the connection between the first electronic device and the satellite may be "Connecting" in the text prompt 522 shown in FIG. 5C. The text information prompting the user to maintain or adjust the current posture of holding the first electronic device may alternatively be "Keep the current handheld posture" in the text prompt 532 shown in FIG. 5D. The text information indicating the current status of the connection between the first electronic device and the satellite may be "Satellite connection succeeded" in the text prompt 532 shown in FIG. 5D. Herein, refer to the foregoing descriptions in FIG. 5A to FIG. 5F.

The first graphic prompt may include one or more of the following: an azimuth angle guide icon, an azimuth angle sector area, a pitch angle guide icon, and a pitch angle circular area. The azimuth angle guide icon and the azimuth angle sector area may indicate the user to maintain or adjust a current azimuth angle at which the first electronic device is held. The pitch angle guide icon and the pitch angle circular area indicate the user to maintain and adjust a current pitch angle at which the first electronic device is held. The first graphic prompt may be any one of the following: the animation prompt 503, the animation prompt 513, the animation prompt 523, the animation prompt 533, the animation prompt 543, and the animation prompt 553 in FIG. 5A to FIG. 5F. The animation prompt 503, the animation prompt 513, the animation prompt 523, the animation prompt 533, the animation prompt 543, and the animation prompt 553 may include a sector area, and the sector area may prompt the user of an azimuth angle between a position of the satellite and an antenna of the electronic device 100. The animation prompt 503, the animation prompt 513, the animation prompt 523, the animation prompt 533, the animation prompt 543, and the animation prompt 553 may further include a ball, and a position of the ball may prompt the user of a pitch angle of the electronic device 100 relative to the satellite.

In a possible implementation, the method may further include: When the first card is displayed on the in-call screen, the first electronic device receives an operation for the first card, and the first electronic device displays the first capsule and stops displaying the first card. The in-call screen may be the in-call screen 1610 shown in FIG. 16B. The satellite connection card 530 on the in-call screen 1610 may be referred to as the first card. When the user slides up the satellite connection card, the satellite real-time capsule (which may also be referred to as the first capsule) may be displayed on the in-call screen 1610, for example, the in-call screen 1610 shown in FIG. 16D. For how to switch the first card to the first capsule, refer to the descriptions in FIG. 6C and FIG. 6D.

Alternatively, when the first capsule is displayed on the in-call screen, the first electronic device receives an operation for the first capsule, and the first electronic device displays the first card and stops displaying the first capsule. When the first capsule is displayed on the in-call screen, the user may tap the first capsule. In response to the user operation, the in-call screen may display the first card and stop displaying the first capsule. For how to switch the first capsule to the first card, refer to the foregoing descriptions in FIG. 6E and FIG. 6F.

In a possible implementation, the in-call screen may further include first information, and the first information may prompt the user that the first electronic device makes the call to the second electronic device through the satellite communication connection. The first information may be the satellite dialing prompt 715 shown in FIG. 7C. For details, refer to the description in FIG. 7C.

In a possible implementation, after the first electronic device displays the in-call screen with the first contact, the method further includes: The first electronic device receives an operation for the position sending control; the electronic device displays a first pop-up box, where the first pop-up box includes the position information of the first electronic device and the sending control; the first electronic device receives the operation for the sending control; and the first electronic device sends the position information to the second electronic device. As shown in FIG. 7L, the user may tap the position sending control 711 on the in-call screen 710. The electronic device 100 may receive and respond to a tap operation performed by the user on the position sending control 711. As shown in FIG. 7M, the information sending window 750 is displayed on the in-call screen 710. The information sending window 750 may further include the sending control 751. The first pop-up box may be the information sending window 750 shown in FIG. 7M. The position information in the first pop-up box may be "Position information: north latitude 36°44'00" and east longitude 98°5'00'" in the information sending window 750. The sending control in the first pop-up box may be the sending control 751 shown in FIG. 7M. For details, refer to the descriptions in FIG. 7L to FIG. 7N. Details are not described herein again.

In a possible implementation, after the first electronic device receives the operation for the satellite communication setting control, and the first electronic device displays the satellite communication setting interface, the method may further include: The first electronic device receives an operation for the first switch; the first electronic device displays a first page, where the first page includes first indication information, and the first indication information indicates the user to adjust a posture of holding the first electronic device; if a posture in which the user holds the first electronic device is aligned with the satellite, the first electronic device establishes the satellite communication connection to the satellite; and when the first electronic device establishes the communication connection to the satellite, the first electronic device displays a second page, where the second page indicates that the satellite communication connection has been established, the second page includes a strength indicator and second indication information, the strength indicator indicates strength of a satellite signal received by the first electronic device, and if the posture of the first electronic device is aligned with the satellite, the second indication information indicates the user to maintain the current posture of holding the first electronic device. The first page may be the satellite connection page 260 shown in FIG. 2H, and the first indication information may include the text prompt 264 and the animation prompt 265 shown in FIG. 2H. The second page may be the satellite connection page 260 shown in FIG. 2I. The second indication information may include the text prompt 264 and the animation prompt 265. The strength indicator may be the strength indicator 263 shown in FIG. 2I. For details, refer to the descriptions in FIG. 2E to FIG. 2M. Details are not described herein again.

In a possible implementation, the second page further includes a phone application icon, and the phone application icon indicates that the first electronic device supports a call made through the satellite communication connection. After the first electronic device displays the second page when the first electronic device establishes the communication connection to the satellite, the method may further include: The first electronic device receives an operation for the phone application icon, and the first electronic device displays the first dialing interface.

In a possible implementation, the phone application icon includes the satellite communication identifier.

In a possible implementation, the second page further includes an SMS application icon, and the SMS application icon indicates that the first electronic device supports sending and receiving of an SMS message through the satellite communication connection.

In a possible implementation, a drop-down status bar of a home screen of the first electronic device includes a satellite communication switch, and the satellite communication switch is configured to enable the satellite communication function of the first electronic device. The satellite communication switch may be the satellite communication control 211 shown in FIG. 2B.

In a possible implementation, a setting interface of the first electronic device includes a control configured to enable the satellite communication function of the first electronic device. The setting interface of the first electronic device may be the setting application interface 300, the satellite network interface 310, and the satellite communication mode setting interface 320 shown in FIG. 3B to FIG. 3H.

In a possible implementation, the method may include: The first electronic device displays a first SMS session display interface. The first SMS session display interface includes the first indicator, a plurality of SMS messages sent by the first electronic device to the first contact, and sending statuses of the plurality of SMS messages. The plurality of SMS messages include a first SMS message and a second SMS message. The sending statuses of the plurality of SMS messages include a first state and a second state. The first state indicates that the first SMS message is being sent. The second state indicates that the second SMS message is waiting to be sent. The first SMS session display interface may be the information sending interface 1010 shown in FIG. 10E. Herein, refer to the description in FIG. 10E.

In a possible implementation, the first SMS session display interface may further include the first card or the first capsule.

In a possible implementation, the method may include: The first electronic device displays a second SMS session display interface, where the second SMS session display interface displays a plurality of received SMS messages that are sent by a third electronic device of the second contact and that include position information, and a track map control, the plurality of SMS messages including the position information include a third SMS message and a fourth SMS message, the third SMS message includes first position information, and the fourth SMS message includes second position information; the first electronic device receives an operation for the track map control; and the first electronic device displays a track map, where the track map is used to display a track of the third electronic device from a first position to a second position. The second SMS session display interface may be the information sending interface 1200 shown in FIG. 12A to FIG. 12C. The track map may include the map 1211 and the movement track 1212 shown in FIG. 12D. For details, refer to the descriptions in FIG. 12A to FIG. 12D. Details are not described herein again.

In a possible implementation, the method may include: If the satellite communication connection is established, the first electronic device displays the home screen, where the home screen includes an icon of a first application, the first application is any one of the following: a call application, an SMS application, and an address book application, the icon of the first application displays the satellite communication identifier, and the satellite communication identifier indicates that the first application supports the satellite communication. The home screen may be the home screen 200 shown in FIG. 6B. For details, refer to the foregoing descriptions in FIG. 6A to FIG. 6G. Details are not described herein again.

In a possible implementation, after the first electronic device establishes the satellite communication connection to the satellite, the method may further include: if it is detected that the posture of the first electronic device is not aligned with the satellite, the first electronic device replaces second guide information on the second page with third indication information, where the third indication information indicates the user to adjust the posture of holding the first electronic device, to re-align the first electronic device with the satellite; the first electronic device detects that display duration of the third indication information is greater than first duration; and the first electronic device displays an exit prompt, where the exit prompt prompts that the satellite communication mode is to exit. The third indication information may be the text prompt 264 shown in FIG. 2J. The exit prompt may be the exit prompt box 270 shown in FIG. 2K. Herein, refer to the foregoing descriptions in FIG. 2J and FIG. 2K. Details are not described herein again.

In a possible implementation, the method may further include: When the first electronic device successfully establishes the satellite communication connection to the satellite, the first electronic device displays a first animation, and/or outputs first sound effect, and/or outputs a first vibration; and when the first electronic device disconnects the satellite communication connection from the satellite, the first electronic device displays a second animation, and/or outputs second sound effect, and/or outputs a second vibration. The first animation is different from the second animation, the first sound effect is different from the second sound effect, and a vibration frequency and/or a vibration loudness of the first vibration are/is different from a vibration frequency and/and a vibration loudness of the second vibration.

In this way, by using the satellite communication method provided in this embodiment of this application, when the electronic device does not camp on the cellular network, the electronic device may establish the satellite communication connection to the satellite, and the electronic device may make a call, answer a call, and receive and send an SMS message through the satellite communication connection. In this way, when the user is in an area that is not covered by the cellular network, the user of the electronic device can still contact another user. When the user is in a dangerous area, it is also convenient for the user to seek help from the another user through the satellite communication connection.

The implementations of this application may be randomly combined to achieve different technical effect.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A satellite communication method, wherein the method comprises:
receiving, by a first electronic device, a dialing operation performed by a user to make a call to a first contact, wherein the first electronic device does not camp on a cellular network, and the first electronic device establishes a satellite communication connection to a satellite; and
displaying, by the first electronic device, an in-call screen with the first contact in response to the dialing operation, wherein the in-call screen comprises a first indicator, related information of the first contact, and a hang-up control, the first indicator indicates satellite signal strength and a status of the connection between the first electronic device and the satellite, the related information of the first contact comprises one or more of the following: a name of the first contact, a phone number of the first contact, and a home position of the phone number of the first contact, and the hang-up control is configured to end the call between the first electronic device and a second electronic device of the first contact.

2. The method according to claim 1, wherein the in-call screen further comprises a position sending control, and the position sending control is configured to send position information of the first electronic device to the second electronic device.

3. The method according to claim 1 or 2, wherein the in-call screen comprises a first card or a first capsule, the first card comprises the first indicator and first prompt information, the first prompt information prompts the user to maintain or adjust a current posture of holding the first electronic device, and the first capsule comprises the first indicator.

4. The method according to claim 3, wherein the first prompt information comprises a first text prompt and a first graphic prompt;
the first text prompt comprises text information prompting the user to maintain or adjust the current posture of holding the first electronic device, and/or text information indicating a current status of the connection between the first electronic device and the satellite; and
the first graphic prompt comprises one or more of the following: an azimuth angle guide icon, an azimuth angle sector area, a pitch angle guide icon, and a pitch angle circular area, the azimuth angle guide icon and the azimuth angle sector area indicate the user to maintain or adjust a current azimuth angle at which the first electronic device is held, and the pitch angle guide icon and the pitch angle circular area indicate the user to maintain and adjust a current pitch angle at which the first electronic device is held.

5. The method according to claim 4, wherein the method further comprises:
when the first card is displayed on the in-call screen, receiving, by the first electronic device, an operation for the first card, and displaying, by the first electronic device, the first capsule and stopping displaying the first card; or
when the first capsule is displayed on the in-call screen, receiving, by the first electronic device, an operation for the first capsule, and displaying, by the first electronic device, the first card and stopping displaying the first capsule.

6. The method according to any one of claims 1 to 5, wherein the in-call screen further comprises first information, and the first information prompts the user that the first electronic device makes the call to the second electronic device through the satellite communication connection.

7. The method according to any one of claims 2 to 6, wherein after displaying, by the first electronic device, the in-call screen with the first contact in response to the dialing operation, the method further comprises:
receiving, by the first electronic device, an operation for the position sending control, and displaying, by the electronic device, a first pop-up box, wherein the first pop-up box comprises the position information of the first electronic device and a sending control; and
receiving, by the first electronic device, an operation for the sending control, and sending, by the first electronic device, the position information to the second electronic device.

8. The method according to any one of claims 1 to 7, wherein before receiving, by the first electronic device, the dialing operation performed by the user to make the call to the first contact, the method further comprises:
displaying, by the first electronic device, a first dialing interface, wherein the first dialing interface comprises the first card or the first capsule, the first dialing interface further comprises a first dialing control, the first dialing control displays a satellite communication identifier, and the satellite communication identifier prompts the user that the first electronic device supports a call made through the satellite communication connection; and
receiving, by the first electronic device, the dialing operation performed by the user to make the call to the first contact comprises:
receiving, by the first electronic device, an operation for the first dialing control in the first dialing interface, or receiving, by the first electronic device in the first dialing interface, the dialing operation for making the call to the first contact.

9. The method according to claim 8, wherein before displaying, by the first electronic device, the first dialing interface, the method comprises:
displaying, by the first electronic device, a second dialing interface, wherein the second dialing interface comprises a second dialing control and a first prompt box, the second dialing control does not comprise the satellite communication identifier, the first prompt box prompts the user that a mobile network of the first electronic device is unavailable and establishment of a connection to the satellite for satellite communication is supported, the first prompt box comprises a satellite communication setting control, and the first electronic device does not camp on the cellular network, and does not establish the communication connection to the satellite; and
receiving, by the first electronic device, an operation for the satellite communication setting control, and displaying, by the first electronic device, a satellite communication setting interface, wherein the satellite communication setting interface comprises a first switch, and the first switch is configured to enable a satellite communication function of the first electronic device.

10. The method according to claim 9, wherein after receiving, by the first electronic device, the operation for the satellite communication setting control, and displaying, by the first electronic device, the satellite communication setting interface, the method comprises:
receiving, by the first electronic device, an operation for the first switch; displaying, by the first electronic device, a first page, wherein the first page comprises first indication information, and the first indication information indicates the user to adjust a posture of holding the first electronic device; and if a posture in which the user holds the first electronic device is aligned with the satellite, establishing, by the first electronic device, the satellite communication connection to the satellite; and
displaying, by the first electronic device, a second page when the first electronic device establishes the communication connection to the satellite, wherein the second page indicates that the satellite communication connection has been established, the second page comprises a strength indicator and second indication information, the strength indicator indicates strength of a satellite signal received by the first electronic device, and if the posture of the first electronic device is aligned with the satellite, the second indication information indicates the user to maintain the current posture of holding the first electronic device.

11. The method according to claim 10, wherein the second page further comprises a phone application icon, and the phone application icon indicates that the first electronic device supports a call made through the satellite communication connection; and
after displaying, by the first electronic device, the second page when the first electronic device establishes the communication connection to the satellite, the method further comprises:
receiving, by the first electronic device, an operation for the phone application icon, and displaying, by the first electronic device, the first dialing interface.

12. The method according to any one of claims 1 to 11, wherein a drop-down status bar of a home screen of the first electronic device comprises a satellite communication switch, and the satellite communication switch is configured to enable the satellite communication function of the first electronic device.

13. The method according to any one of claims 1 to 12, wherein a setting interface of the first electronic device comprises a control configured to enable the satellite communication function of the first electronic device.

14. The method according to any one of claims 1 to 13, wherein the method further comprises:
displaying, by the first electronic device, a first SMS session display interface, wherein the first SMS session display interface comprises the first indicator, a plurality of SMS messages sent by the first electronic device to the first contact, and sending statuses of the plurality of SMS messages, the plurality of SMS messages comprise a first SMS message and a second SMS message, the sending statuses of the plurality of SMS messages comprise a first state and a second state, the first state indicates that the first SMS message is being sent, and the second state indicates that the second SMS message is waiting to be sent.

15. The method according to claim 14, wherein the first SMS session display interface further comprises the first card or the first capsule.

16. The method according to claim 15, wherein the method further comprises:
displaying, by the first electronic device, a second SMS session display interface, wherein a plurality of received SMS messages that are sent by a third electronic device of a second contact and that comprise position information, and a track map control are displayed in the second SMS session display interface, the plurality of SMS messages comprising the position information comprise a third SMS message and a fourth SMS message, the third SMS message comprises first position information, and the fourth SMS message comprises second position information; and
receiving, by the first electronic device, an operation for the track map control, and displaying, by the first electronic device, a track map, wherein the track map is used to display a track of the third electronic device from a first position to the second position.

17. The method according to any one of claims 1 to 16, wherein the method further comprises:
if the satellite communication connection is established, displaying, by the first electronic device, the home screen, wherein the home screen comprises an icon of a first application, and the first application is any one of the following: a call application, an SMS application, and an address book application, wherein
the icon of the first application displays the satellite communication identifier, and the satellite communication identifier indicates that the first application supports satellite communication.

18. The method according to any one of claims 1 to 17, wherein the method further comprises:
if the satellite communication connection is established, receiving, by the first electronic device, a call request initiated by the third electronic device;
displaying, by the first electronic device, an incoming call screen in response to the call request, wherein the first prompt information, a call answering control, and related information of the second contact are displayed on the incoming call screen, and the related information of the second contact comprises one or more of the following: a name of the second contact, a phone number of the second contact, and a home position of the phone number of the second contact; and
in response to an operation performed by the user on the call answering control, making, by the first electronic device through the satellite communication connection, a call to the third electronic device corresponding to the second contact.

19. The method according to claim 10, wherein after establishing, by the first electronic device, the satellite communication connection to the satellite, the method further comprises:
if the first electronic device detects that the posture of the first electronic device is not aligned with the satellite, replacing the second indication information on the second page with third indication information, wherein the third indication information indicates the user to adjust the posture of holding the first electronic device, to re-align the first electronic device with the satellite;
detecting, by the first electronic device, that display duration of the third indication information is greater than first duration; and
displaying, by the first electronic device, an exit prompt, wherein the exit prompt prompts that the satellite communication mode is to exit.

20. The method according to any one of claims 1 to 19, wherein a video call control configured to request a video call is not displayed on the in-call screen.

21. The method according to any one of claims 1 to 20, wherein the phone application icon comprises the satellite communication identifier.

22. The method according to any one of claims 1 to 21, wherein the second page further comprises an SMS application icon, and the SMS application icon indicates that the first electronic device supports sending and receiving of an SMS message through the satellite communication connection.

23. The method according to claim 22, wherein the SMS application icon comprises the satellite communication identifier.

24. The method according to claim 18, wherein the call answering control comprises the satellite communication identifier, and the satellite communication identifier indicates that the first electronic device supports receiving of the call request through the satellite communication connection.

25. The method according to any one of claims 1 to 24, wherein the method further comprises:
when the first electronic device successfully establishes the satellite communication connection to the satellite, displaying, by the first electronic device, a first animation, and/or outputting first sound effect, and/or outputting a first vibration; and
when the first electronic device disconnects the satellite communication connection from the satellite, displaying, by the first electronic device, a second animation, and/or outputting second sound effect, and/or outputting a second vibration, wherein the first animation is different from the second animation, the first sound effect is different from the second sound effect, and a vibration frequency and/or a vibration loudness of the first vibration are/is different from a vibration frequency and/or a vibration loudness of the second vibration.

26. A satellite communication method, wherein the method comprises:
after establishing a satellite communication connection, receiving, by the first electronic device, a call request initiated by a second electronic device, wherein the first electronic device does not camp on a cellular network;
displaying, by the first electronic device, an incoming call screen in response to the call request, wherein the incoming call screen displays an incoming call answering control, a first indicator, and related information of a second contact corresponding to the second electronic device, the incoming call answering control comprises a satellite communication identifier, the satellite communication identifier indicates that the first electronic device supports a call made through the satellite communication connection, the first indicator indicates satellite signal strength and a status of the connection between the first electronic device and a satellite, and the related information of the second contact comprises one or more of the following: a name of the second contact, a phone number of the second contact, and a home position of the phone number of the second contact; and
receiving, by the first electronic device, an operation performed by a user on the incoming call answering control, and making, by the first electronic device, a call to the second electronic device through the satellite communication connection.

27. The method according to claim 26, wherein the incoming call screen comprises a first card or a first capsule, the first card comprises the first indicator and first prompt information, the first prompt information prompts the user to maintain or adjust a current posture of holding the first electronic device, and the first capsule comprises the first indicator.

28. The method according to claim 27, wherein the method further comprises:
when the first card is displayed on the incoming call screen, receiving, by the first electronic device, an operation for the first card, and displaying, by the first electronic device, the first capsule and stopping displaying the first card; or
when the first capsule is displayed on the incoming call screen, receiving, by the first electronic device, an operation for the first capsule, and displaying, by the first electronic device, the first card and stopping displaying the first capsule.

29. A satellite communication method, wherein the method comprises:
displaying, by the first electronic device, a first dialing interface, wherein the first dialing interface displays a first dialing control, a first indicator, and a dial, the first indicator indicates satellite signal strength and a status of a connection between the first electronic device and a satellite, the first dialing control comprises a satellite communication identifier, the first electronic device does not camp on a cellular network, and the first electronic device establishes the satellite communication connection to the satellite; and
receiving, by the first electronic device, an operation that a user inputs a first number on the dial, wherein the first dialing interface displays the first number, and the first dialing interface does not display a video calling control configured to request a video call.

30. The method according to claim 29, wherein before displaying, by the first electronic device, the first dialing interface, the method further comprises:
displaying, by the first electronic device, a second dialing interface, wherein the second dialing interface comprises a second dialing control and a first prompt box, the second dialing control does not comprise the satellite communication identifier, the first prompt box prompts the user that a mobile network of the first electronic device is unavailable and establishment of a connection to the satellite for satellite communication is supported, the first prompt box comprises a satellite communication setting control, and the first electronic device does not camp on the cellular network, and does not establish the communication connection to the satellite; and
receiving, by the first electronic device, an operation for the satellite communication setting control, and displaying, by the first electronic device, a satellite communication setting interface, wherein the satellite communication setting interface comprises a first switch, and the first switch is configured to enable a satellite communication function of the first electronic device.

31. The method according to claim 29, wherein before displaying, by the first electronic device, the first dialing interface, the method further comprises:
displaying, by the first electronic device, a second dialing interface, wherein the second dialing interface displays the dial;
receiving, by the first electronic device, the operation that the user inputs the first number on the dial, wherein the first dialing interface displays the first number and the video calling control.

32. An electronic device, wherein the electronic device is a first electronic device and comprises one or more processors and one or more memories, the one or more memories are coupled to the one or more processors, the one or more memories are configured to store computer program code, the computer program code comprises computer instructions, and when the one or more processors execute the computer instructions, the first electronic device is enabled to perform the method according to any one of claims 1 to 31.

33. A computer-readable storage medium, comprising computer instructions, wherein when the computer instructions are run on an electronic device, the electronic device is enabled to perform the method according to any one of claims 1 to 31.
